# EUROPÄISCHE PATENTSCHRIFT

(11) **EP 4 011 756 B1**
(45) Veröffentlichungstag und Bekanntmachung des Hinweises auf die Patenterteilung: **25.06.2025**
(21) Anmeldenummer: 21020604.1
(22) Anmeldetag: 30.11.2021
(51) Int. Cl.: B62M 9/12

(54) **FAHRRAD-RITZEL MIT NUR EINEM ABGABE- ODER FANGZAHN PRO SCHALTUNGSUNTERSTÜTZENDER STIRNSEITIGER VERTIEFUNG UND MIT EINEM STABILISIERUNGSZAHN IM BEREICH DER VERTIEFUNG**
BICYCLE SPROCKET WITH ONLY ONE DELIVERY OR CATCH TOOTH PER SWITCH-SUPPORTING FRONT-SIDE RECESS AND WITH A STABILIZING TOOTH IN THE AREA OF THE RECESS
PIGNON DE BICYCLETTE DOTÉ D'UNE SEULE DENT DE TRANSMISSION OU DE PRISE PAR CAVITÉ AVANT DE SUPPORT DE CHANGEMENT DE VITESSE ET DOTÉ D'UNE DENT DE STABILISATION DANS LA ZONE DE LA CAVITÉ

(30) Priorität: 30.11.2020 DE 102020131699; 29.11.2021 DE 102021131186
(43) Veröffentlichungstag der Anmeldung: 15.06.2022
(73) Patentinhaber: SRAM Deutschland GmbH, 97424 Schweinfurt (DE)
(72) Erfinder: Heyna, Sebastian, 97456 Dittelbrunn-OT Hambach (DE); Kommer, Pierre, 97421 Schweinfurt (DE); Puls, Arndt, 97421 Schweinfurt (DE); Rohmer, Jakob, 97074 Würzburg (DE); Vonend, Andreas, 97421 Schweinfurt (DE); Buechner, Sven, 97421 Schweinfurt (DE); Büttner, Alex, 97421 Schweinfurt (DE)

(56) Entgegenhaltungen:
- EP-A1- 3 009 339
- DE-A1- 102019 209 454

## Beschreibung

Die vorliegende Erfindung betrifft ein Fahrrad-Ritzel für eine Ritzelkassette. Das Ritzel weist einen Ritzelgrundkörper auf, welcher sich um eine virtuelle Ritzelachse erstreckt, um die das Ritzel im bestimmungsgemäßen Betrieb an einem Fahrrad drehbar ist. Die Ritzelachse definiert dabei eine axiale Richtung, zu ihr orthogonale radiale Richtungen und eine um sie umlaufende Umfangsrichtung. Das Ritzel weist außerdem eine Mehrzahl von in Umfangsrichtung mit Abstand voneinander angeordnete Ritzelzähne für einen Eingriff mit einer Fahrrad-Rollenkette auf. Das Ritzel bezieht sich dabei auf einen Eingriff mit einer Fahrrad-Rollenkette üblicher, bekannter Struktur, welche längs ihrer Ketten-Umlaufbahn in an sich bekannter Weise alternierend aufeinander folgende Innenlaschen- und Außenlaschen-Kettenglieder aufweist. Die Fahrrad-Rollenkette ist nachfolgend auch nur vereinfacht als "Fahrradkette" oder "Kette" bezeichnet.

Der Einfachheit halber sind nachfolgend Ritzel mit ungeradzahligen Zähnezahlen auch als "ungeradzahlige Ritzel" und dementsprechend Ritzel mit geradzahligen Zähnezahlen als "geradzahlige Ritzel" bezeichnet.

Das Ritzel ist dazu ausgebildet, derart an einem Fahrrad angeordnet zu werden, dass eine axial nach außen weisende äußere Stirnseite des Ritzels während einer durch das Ritzel angetriebenen Vorwärtsfahrt des Fahrrads bei axialer Draufsicht auf die äußere Stirnseite im Uhrzeigersinn dreht, und dass eine der äußeren Stirnseite entgegengesetzte, nach axial innen weisende innere Stirnseite bei axialer Draufsicht auf die innere Stirnseite im Gegenuhrzeigersinn dreht. An einem betriebsbereit montierten Fahrrad würde die äußere Stirnseite nach außen, also von einer zur Ritzelachse orthogonalen Fahrradlängsmittelebene weg, weisen und die innere Stirnseite würde nach innen zu der Fahrradlängsmittelebene hin weisen. Da einem Fachmann, welcher ein Ritzel betrachtet, aufgrund der konstruktiven Gestaltung des Ritzels unmittelbar und eindeutig klar ist, wie das Ritzel am Fahrrad anzuordnen ist, wird diese Beschreibung einer axialen Orientierung des Ritzels und seiner Bestandteile oder/und Abschnitte in der vorliegenden Anmeldung zur Beschreibung des Ritzels genutzt.

Die Ritzelzähne stehen vom Ritzelgrundkörper nach radial außen ab. Wenigstens eine Mehrzahl von Ritzelzähnen weist jeweils eine axial nach außen weisende, zum Anlageeingriff mit einer Innenfläche einer ersten Kettenlasche ausgebildete äußere Zahnkontaktfläche und eine axial nach innen weisende, zum Anlageeingriff mit einer Innenfläche einer der ersten Kettenlasche axial gegenüberliegenden zweiten Kettenlasche ausgebildete innere Zahnkontaktfläche auf.

Derartige Fahrrad-Ritzel, oder nachfolgend nur kurz "Ritzel" sind im Stand der Technik hinlänglich bekannt. Sie sind beispielsweise in der US 2017/0029066 A1, der DE 10 2016 007 725 A1, der EP 3 202 654 A1 und der DE 10 2017 220 674 A1 offenbart.

Dabei ist das Umlegen der Kette nach innen von einem axial benachbarten kleineren Ritzel (herunterschalten), welches gemäß der zuvor erläuterten Nomenklatur dem Fahrrad-Ritzel außen benachbart ist, sowie das Umlegen der Kette vom Fahrrad-Ritzel nach außen auf das benachbarte kleinere Ritzel (hochschalten) eine Aufgabe, welche Fachleute stets beschäftigt. Ziel ist es, die Kette möglichst sanft, ruckfrei und präzise zwischen dem hier diskutierten Ritzel und dem axial benachbarten kleineren Ritzel umzulegen. Die Präzision des Umlegens der Kette umfasst dabei die Randbedingung, dass die Kette nur in jeweils einem vorbestimmten Umfangsbereich vom Ritzel nach außen abgehen oder/und von außen kommend auf das Ritzel aufgehen soll. Diese Aufgabe ist umso schwieriger zu lösen, je dichter eine Mehrzahl von Ritzeln in einer Ritzelkassette axial aufeinanderfolgend gepackt ist.

Dokument EP3009339A1 zeigt die Präambel der Ansprüche 1 und 2.

Das Umlegen erfolgt an der Hinterachse in an sich bekannter Weise durch ein hinteres Schaltwerk, welches einen axial verlagerbaren Umwerfer mit einer Kettenführungsrolle und einer Kettenspannrolle aufweist. Die Kettenführungsrolle wird in der Regel mittels Betätigung durch den Fahrradfahrer komplanar mit einem Ziel-Ritzel angeordnet, auf welches die Fahrrad-Rollenkette umgelegt werden soll. Durch das Umlegen der Kette von einem größeren Ausgangs-Ritzel auf ein axial benachbartes kleineres Ziel-Ritzel beim Hochschalten wird Kettenlänge frei, die nicht länger durch einen Zahneingriff mit dem Ritzel gebunden ist. Beim Herunterschalten wird zunächst freie Kettenlänge durch den Eingriff mit dem größeren Ziel-Ritzel gebunden. Die gegen Federvorspannung in der Erstreckungsebene der Kettenführungsrolle verlagerbare Kettenspannrolle sorgt für eine Aufnahme bzw. Abgabe derartiger Kettenlängenunterschiede und sorgt somit für eine ausreichende Spannung der Kette.

Für ein möglichst präzises Hochschalten der Kette vom Ritzel in Richtung nach außen auf das axial benachbarte kleinere Ritzel kann das Ritzel längs eines Abschnitts seines Umfangs im Bereich des Ritzelgrundkörpers und der Ritzelzähne wenigstens einen Hochschaltbereich mit einer axialen Hochschalt-Vertiefungsformation in seiner äußeren Stirnfläche aufweisen, wobei der Hochschaltbereich dazu ausgebildet und angeordnet ist, an dem im Antriebsdrehsinn um die Ritzelachse rotierenden Ritzel einen Eingriffswechsel der Fahrrad-Rollenkette vom Ritzel auf ein auf der Seite der äußeren Stirnfläche gelegenes kleineres Ritzels zu gestatten. Auch derartige Hochschalt-Vertiefungsformationen sind aus dem oben genannten Stand der Technik bereits bekannt. Die Hochschalt-Vertiefungsformation ermöglicht der Fahrradkette, bereits nach einer verhältnismäßig geringen Axialbewegung den Eingriff der Ritzelzähne zwischen Laschen ihrer Kettenglieder zu beenden und sich axial außen neben den Ritzelzähnen nach radial innen zum durchmesserkleineren Ritzel zu bewegen bzw. abzusteigen. Die Hochschalt-Vertiefungsformation bildet somit einen Aufnahmeraum für die absteigende Kette, welche am selben Ritzel ohne entsprechende Hochschalt-Vertiefungsformation über dasselbe Kettenlängenstück hinweg um die Vertiefungsabmessung stärker axial ausgelenkt werden müsste. Die Hochschalt-Vertiefungsformation ermöglicht die Einhaltung der für ein sanftes Hochschalten wichtigen Tangentialbedingung, die Fachleuten bekannt ist.

Für ein möglichst präzises Hochschalten der Kette vom Ritzel in Richtung nach außen auf das benachbarte kleinere Ritzel ist der Hochschalt-Vertiefungsformation wenigstens ein Abgabezahn zugeordnet. Der wenigstens eine Abgabezahn ist durch seine Gestalt, seinen Anordnungsort und seine Orientierung dazu ausgebildet, im Zusammenwirken mit der Hochschalt-Vertiefungsformation während eines Hochschaltvorgangs der letzte Zahn des Ritzels zu sein, der zwischen aufeinander zu weisende Innenflächen eines Laschenpaares eines Kettengliedes der Fahrrad-Rollenkette eingreift.

Dann, wenn einem Hochschaltbereich und damit einer Hochschalt-Vertiefungsformation mehr als ein Abgabezahn zugeordnet ist, folgen diese mehreren Abgabezähne in Umfangsrichtung unmittelbar aufeinander. Gemäß einer Ausführungsform der vorliegenden Erfindung können einem Hochschaltbereich und dessen Hochschalt-Vertiefungsformation zwei Abgabezähne zugeordnet sein. Da ein Abgabezahn aufgrund der beim Hochschalten erforderlichen axialen Bewegung der Fahrradkette nach außen zum nächstkleineren Ritzel hin als tatsächlich letzter mit der Fahrradkette eingreifender Zahn in ein Außenlaschen-Kettenglied der Fahrradkette eingreift, kommt einer von zwei in Umfangsrichtung unmittelbar benachbarten Abgabezähnen bei einem Hochschaltvorgang sicher mit einem Außenlaschen-Kettenglied in Eingriff und kann so die Kette nach außen abgeben.

Wenn in der nachfolgenden Beschreibung auf den wenigstens einen Abgabezahn Bezug genommen wird, so ist damit im Falle von mehreren Abgabezähnen der entgegen der Antriebsdrehrichtung äußerste Abgabezahn eines Hochschaltbereichs bezeichnet.

Gemäß einer weiteren bevorzugten Ausführungsform der vorliegenden Erfindung kann einem Hochschaltbereich und dessen Hochschalt-Vertiefungsformation genau ein Abgabezahn zugeordnet sein. Dies ist vor allen Dingen dann hilfreich und vorteilhaft, wenn eine Fahrradkette vom Ritzel mit definierter Relativstellung ihrer Kettengliedfolge aus abwechselnd aufeinanderfolgenden Innenlaschen- und Außenlaschen-Kettengliedern relativ zum abgebenden Ritzel nach außen an das nächstkleinere Ritzel abgegeben werden soll. Dann, wenn einem Hochschaltbereich und dessen Hochschalt-Vertiefungsformation nur genau ein Abgabezahn zugeordnet ist, ist dieser einzige Abgabezahn sowohl der unten genannte entgegen der Antriebsdrehrichtung als auch der unten genannte in Antriebsdrehrichtung äußerste Abgabezahn seines Hochschaltbereichs.

Alternativ oder bevorzugt zusätzlich kann das Ritzel für ein möglichst präzises Herunterschalten von einem außen benachbarten durchmesserkleineren Ritzel nach innen auf das Ritzel längs eines Abschnitts seines Umfangs im Bereich des Ritzelgrundkörpers und der Ritzelzähne einen Herunterschaltbereich mit einer axialen Herunterschalt-Vertiefungsformation in seiner äußeren Stirnfläche aufweisen, wobei der Herunterschaltbereich dazu ausgebildet und angeordnet ist, an dem im Antriebsdrehsinn um die Ritzelachse rotierenden Ritzel einen Eingriffswechsel der Fahrrad-Rollenkette von einem auf der Seite der äußeren Stirnfläche gelegenen kleineren Ritzel auf das Ritzel zu gestatten. Auch derartige Herunterschalt-Vertiefungsformationen sind aus dem oben genannten Stand der Technik auf der äußeren Stirnseite des Ritzels bekannt. Es gilt mutatis mutandis das oben zum Hochschalten Gesagte entsprechend: die Herunterschalt-Vertiefungsformation gestattet eine kollisionsfreie axiale Annäherung der Fahrradkette von außen zum Ritzel hin über eine Einhüllende der äußeren Stirnseite des Ritzels hinaus. Die Fahrradkette kann daher beim Herunterschalten in die Herunterschalt-Vertiefungsformation axial eindringen, was ein Fangen der Kette am Ritzel erleichtert.

Für ein möglichst präzises Schalten ist der Herunterschalt-Vertiefungsformation wenigstens ein Fangzahn zugeordnet. Der wenigstens eine Fangzahn ist durch seine Gestalt, seinen Anordnungsort und seine Orientierung dazu ausgebildet, im Zusammenwirken mit der Herunterschalt-Vertiefungsformation während eines Herunterschaltvorgangs der erste Zahn des Ritzels zu sein, der zwischen aufeinander zu weisende Innenflächen eines Laschenpaares eines Kettengliedes der Fahrrad-Rollenkette eingreift.

Dann, wenn einem Herunterschaltbereich und damit einer Herunterschalt-Vertiefungsformation mehr als ein Fangzahn zugeordnet ist, folgen diese mehreren Fangzähne in Umfangsrichtung unmittelbar aufeinander. Gemäß einer Ausführungsform der vorliegenden Erfindung können einem Herunterschaltbereich und dessen Herunterschalt-Vertiefungsformation zwei Fangzähne zugeordnet sein. Da ein Fangzahn aufgrund der beim Herunterschalten erforderlichen axialen Annäherung der Fahrradkette vom nächstkleineren Ritzel nach innen zum aufnehmenden Ritzel hin als tatsächlich erster mit der Fahrradkette eingreifender Zahn in ein Außenlaschen-Kettenglied der Fahrradkette eingreift, kommt einer von zwei in Umfangsrichtung unmittelbar benachbarten Fangzähnen bei einem Herunterschaltvorgang sicher mit einem Außenlaschen-Kettenglied in Eingriff und kann so die Kette zum Eingriff mit dem Ritzel fangen.

Wenn in der nachfolgenden Beschreibung auf den wenigstens einen Fangzahn Bezug genommen wird, so ist damit im Falle von mehreren Fangzähnen der in Antriebsdrehrichtung äußerste Fangzahn eines Herunterschaltbereichs bezeichnet.

Gemäß einer weiteren bevorzugten Ausführungsform der vorliegenden Erfindung kann einem Herunterschaltbereich und dessen Herunterschalt-Vertiefungsformation genau ein Fangzahn zugeordnet sein. Dies ist vor allen Dingen dann hilfreich und vorteilhaft, wenn eine Fahrradkette vom Ritzel mit definierter Relativstellung ihrer Kettengliedfolge aus abwechselnd aufeinanderfolgenden Innenlaschen- und Außenlaschen-Kettengliedern relativ zum Ritzel gefangen werden soll. Dann, wenn einem Herunterschaltbereich und dessen Herunterschalt-Vertiefungsformation nur genau ein Fangzahn zugeordnet ist, ist dieser einzige Fangzahn sowohl der unten genannte in Antriebsdrehrichtung als auch der unten genannte entgegen der Antriebsdrehrichtung äußerste Fangzahn seines Herunterschaltbereichs.

Da die Außenlaschen von Außenlaschen-Kettengliedern einer Fahrradkette die Innenlaschen von Innenlaschen-Kettengliedern zwischen sich aufnehmen, weisen Innenlaschen-Kettenglieder eine geringere für den Eingriff eines Ritzelzahns zur Verfügung stehende lichte Weite auf als Außenlaschen-Kettenglieder. Das Ritzel weist eine Mehrzahl von Innenlaschen-Ritzelzähnen auf, welche jeweils aufgrund ihrer axialen Abmessung für einen Eingriff mit einem Innenlaschen-Kettenglied der Fahrrad-Rollenkette ausgebildet sind. Dies schließt den Fall ein, dass jeder Ritzelzahn des Ritzels für einen Eingriff mit einem Innenlaschen-Kettenglied ausgebildet und somit ein Innenlaschen-Ritzelzahn ist.

Als weiteres Hilfsmittel zur Beschreibung des vorliegenden Ritzels kann ein Bezugszahn dienen, von welchem das Ritzel bevorzugt wenigstens einen aufweist. Der Bezugszahn ist dabei derjenige wenigstens eine Innenlaschen-Ritzelzahn, welcher unter den Innenlaschen-Ritzelzähnen die größte axiale Kettenführungsabmessung aufweist. Dabei weist der Bezugszahn eine äußere Zahnkontaktfläche als eine äußere Zahnkontakt-Bezugsfläche auf. Die äußere Zahnkontakt-Bezugsfläche definiert eine axiale Bezugsposition. Die äußere Zahnkontakt-Bezugsfläche ist vorzugsweise außerhalb einer Vertiefungsformation gelegen, also nicht vertieft.

Eine Zahnkontaktfläche, ebenso wie die Zahnkontakt-Bezugsfläche des Bezugszahns, ist dabei eine Fläche, welche zum Anlageeingriff mit einer zum Eingriffsraum zwischen den Kettenlaschen eines Kettenglieds hinweisenden und der Zahnkontaktfläche axial benachbarten Innenfläche einer Kettenlasche lediglich ausgebildet ist. Dies bedeutet, es ist derjenige Flächenabschnitt des Ritzelzahns, welcher radial in einem Bereich angeordnet ist, dem beim bestimmungsgemäßen Eingriff mit der Fahrrad-Rollenkette durch Einragen in den Eingriffsraum zwischen zwei Kettenlaschen axial eine Kettenlasche benachbart ist und welcher innerhalb dieses radialen Bereichs axial am weitesten zur benachbarten Kettenlasche hin vorsteht. Die äußere Zahnkontaktfläche steht dabei axial nach außen am weitesten vor, die innere Zahnkontaktfläche axial nach innen. Die Kettenführungsabmessung eines Ritzelzahns ist der axiale Abstand zwischen der äußeren und der inneren Zahnkontaktfläche des Ritzelzahns.

Bevorzugt ist eine Zahnkontaktfläche mit radialem Abstand vom jeweiligen Zahnkopf nach innen gelegen und mit radialem Abstand vom Fußkreis des Ritzels nach radial außen gelegen. Davon ausgehend, dass sich ein Zahnkopf ausgehend vom Fußkreis des Ritzels nach radial außen erstreckt, befindet sich die Zahnkontaktfläche bevorzugt in einem Bereich von 20 % bis 80 % der Zahnhöhe, ausgehend vom Fußkreis, besonders bevorzugt in einem Bereich von 30 bis 75 % der Zahnhöhe, noch stärker bevorzugt in einem Bereich von 40 bis 70 % der Zahnhöhe. Hierdurch können verzerrende Einflüsse von im Bereich des Zahnfußes axial auskragenden Rampenformationen sowie von im Bereich des Zahnkopfes gebildeten Abweisflächen und sonstigen Facettenflächen bei der Bestimmung der Zahnkontaktfläche und ihrer axialen Position längs der Ritzelachse vermieden werden. Dies gilt für die innere wie für die äußere Zahnkontaktfläche.

Die innere und die äußere Zahnkontaktfläche ein und desselben Zahns können in radialer Richtung und in Umfangsrichtung zueinander versetzt angeordnet sein, d. h. sie müssen nicht auf einer gemeinsamen axialen Verbindungsgerade liegen, wenngleich dies bevorzugt ist. Aus diesem Grunde können die Zahnbreite als die axiale Abmessung eines Zahns längs einer zur Ritzelachse parallelen Messstrecke und die Kettenführungsabmessung für ein und denselben Zahn verschieden sein. Die Kettenführungsabmessung als der axiale Abstand zwischen innerer und äußerer Zahnkontaktfläche ist ein Maß für das axiale Bewegungsspiel, das ein vom Ritzelzahn in Eingriff genommenes Kettenglied am Ritzelzahn hat. In der Regel ist das axiale Bewegungsspiel die lichte Weite zwischen den Innenflächen der Kettenlaschen des Kettenglieds, abzüglich der Kettenführungsabmessung des in Eingriff nehmenden Zahns.

Ob eine Zahnkontaktfläche während eines Eintauchens des Zahns in den Eingriffsraum zwischen zwei parallele Kettenlaschen eines Kettenglieds tatsächlich in Anlagekontakt mit einer Innenfläche der axial benachbarten Kettenlasche gelangt oder nicht, hängt von zahlreichen weiteren Umständen ab, wie beispielsweise der Eingriffssituation zwischen in Umfangsrichtung neben dem betrachteten Ritzelzahn gelegenen weiteren Ritzelzähnen und der Fahrradkette.

In der Regel ist während eines Eintauchens eines Ritzelzahns in den axial zwischen zwei Kettenlaschen und in Umfangsrichtung zwischen zwei Kettenrollen begrenzten Eingriffsraum eines Kettenglieds der Kette von einer inneren und einer äußeren Zahnkontaktfläche des Ritzelzahns ohnehin nur eine Zahnkontaktfläche aus innerer und äußerer Zahnkontaktfläche gleichzeitig mit einer Innenfläche einer der beiden axial benachbarten Kettenlasche in Anlage, da üblicherweise die Kettenführungsabmessung des Ritzelzahns geringer ist als die lichte Weite des Kettenglieds, in welches der Ritzelzahn eingreifen soll.

Die genannten Schaltfunktionszähne: Abgabezahn und Fangzahn, sind bevorzugt axial möglichst nahe an dem axial benachbarten kleineren Ritzel angeordnet und sind außerdem axial mit einer kleineren Kettenführungsabmessung als herkömmliche Ritzelzähne ausgebildet, um der Fahrradkette trotz Eingriffs des Abgabezahns bzw. des Fangzahns in den Eingriffsraum eines Kettenglieds eine axial möglichst weit nach außen verlagerte Stellung zu ermöglichen. Die Zahnkontaktfläche des wenigstens einen Abgabezahns, insbesondere des entgegen der Antriebsdrehrichtung äußersten Abgabezahns seines Hochschaltbereichs, oder/und des wenigstens einen Fangzahns, insbesondere des in Antriebsdrehrichtung äußersten Fangzahns seines Herunterschaltbereichs, kann daher die axial am weitesten außen liegende Zahnkontaktfläche des Ritzels sein. Dies soll nicht ausschließen, dass die Zahnkontaktflächen weiterer Zähne, wie etwa des wenigstens einen Bezugszahns an derselben Axialposition und damit genauso weit außen gelegen sind wie die Zahnkontaktfläche des wenigstens einen Abgabezahns, insbesondere des entgegen der Antriebsdrehrichtung äußersten Abgabezahns seines Hochschaltbereichs, oder/und des wenigstens einen Fangzahns, insbesondere des in Antriebsdrehrichtung äußersten Fangzahns seines Herunterschaltbereichs.

Entgegen der Antriebsdrehrichtung ist dem wenigstens einen Abgabezahn, insbesondere dem entgegen der Antriebsdrehrichtung äußersten Abgabezahn seines Hochschaltbereichs, wenigstens ein Ritzelzahn benachbart, welcher in der Hochschalt-Vertiefungsformation gelegen ist und dessen äußere Zahnkontaktfläche bezüglich der äußeren Zahnkontaktfläche des wenigstens einen Abgabezahns, insbesondere des entgegen der Antriebsdrehrichtung äußersten Abgabezahns seines Hochschaltbereichs, oder/und bezüglich der Zahnkontakt-Bezugsfläche wegen der Hochschalt-Vertiefungsformation zur inneren Stirnseite hin versetzt angeordnet ist. Ebenso ist dem wenigstens einen Fangzahn, insbesondere dem in Antriebsdrehrichtung äußersten Fangzahn seines Herunterschaltbereichs, in Antriebsdrehrichtung wenigstens ein Ritzelzahn benachbart, welcher in der Herunterschalt-Vertiefungsformation gelegen ist und dessen äußere Zahnkontaktfläche bezüglich der äußeren Zahnkontaktfläche des wenigstens einen Abgabezahns, insbesondere des entgegen der Antriebsdrehrichtung äußersten Abgabezahns seines Hochschaltbereichs, oder/und bezüglich der Zahnkontakt-Bezugsfläche wegen der Herunterschalt-Vertiefungsformation zur inneren Stirnseite hin versetzt angeordnet ist.

Hieraus ergibt sich ein Umfangsabschnitt längs des Ritzelumfangs, in welchem die Fahrradkette trotz eines jeweiligen Eingriffs von Ritzelzähnen in den Eingriffsraum von Kettengliedern der Fahrradkette axial signifikanten Bewegungsspielraum hat. Dieser Bewegungsspielraum kann unter ungünstigen Betriebsbedingungen zu einem unerwünschten Absteigen der Kette vom Ritzel nach außen führen. Erwünscht soll die Kette beim Hochschalten im Hochschaltbereich, insbesondere im Bereich der Hochschalt-Vertiefungsformation vom Ritzel absteigen. Aufgrund des beschriebenen axialen Bewegungsspielraums kann die Kette beispielsweise dann, wenn der Umwerfer bei einer unvorteilhaften Drehstellung des Ritzels zum Hochschalten nach außen bewegt wird, außerhalb des Hochschaltbereichs absteigen, da die Kette wegen des umfangsabschnittsweise vergrößerten Bewegungsspiels axial nur schwach geführt ist.

Es ist Aufgabe der vorliegenden Erfindung, einem solchen unerwünschten Absteigen vorzubeugen bzw. ein solches unerwünschtes Absteigen zu verhindern.

Zur Lösung dieser Aufgabe ist gemäß der vorliegenden Erfindung an dem hier vorstehend beschriebenen Ritzel wenigstens ein Stabilisierungszahn vorgesehen, welcher aufgrund seiner Gestalt, seines Anordnungsorts und seiner Orientierung die Kette im Eingriff mit dem Ritzel derart stabilisiert, dass unabhängig vom Zeitpunkt der Betätigung eines Umwerfers während einer Ritzeldrehung um die Ritzelachse die vom Ritzel in Eingriff genommene Kette nur im Bereich der Hochschalt-Vertiefungsformation vom Ritzel nach außen absteigt.

Sofern sowohl der oben genannte wenigstens eine der Hochschalt-Vertiefungsformation zugeordnete Abgabezahn als auch der wenigstens eine der Herunterschalt-Vertiefungsformation zugeordnete Fangzahn am Ritzel realisiert sind, befindet sich der wenigstens eine Stabilisierungszahn in einem Umfangsabschnitt, welcher ausgehend vom wenigstens einen Fangzahn, insbesondere von dem in Antriebsdrehrichtung äußersten Fangzahn seines Herunterschaltbereichs, in Antriebsdrehrichtung bis zum wenigstens einen Abgabezahn reicht.

Im Falle einer Ausbildung des oben beschriebenen wenigstens einen der Hochschalt-Vertiefungsformation zugeordneten Abgabezahns kann zur Stabilisierung der Kette im Eingriff mit dem Ritzel im Umfangserstreckungsbereich der Hochschalt-Vertiefungsformation ein abgabeseitiger Stabilisierungszahn angeordnet sein. Der abgabeseitige Stabilisierungszahn weist gemäß einer ersten Ausführungsform des abgabeseitigen Stabilisierungszahns eine innere Zahnkontaktfläche auf, welche einen größeren axialen Abstand von der axialen Bezugsposition hat als eine innere Zahnkontaktfläche des Bezugszahns. Bevorzugt ist im Umfangserstreckungsbereich der Hochschalt-Vertiefungsformation nur genau ein abgabeseitiger Stabilisierungszahn angeordnet.

Dadurch, dass die innere Zahnkontaktfläche des abgabeseitigen Stabilisierungszahns weiter von der axialen Bezugsposition entfernt ist als die innere Zahnkontaktfläche des Bezugszahns - das ist zur Erinnerung jener Zahn, der unter den Innenlaschen-Ritzelzähnen die größte Kettenführungsabmessung aufweist, und dadurch, dass die äußere Zahnkontaktfläche des abgabeseitigen Stabilisierungszahns aufgrund von dessen Anordnung im Bereich der Hochschalt-Vertiefungsformation ohnehin bezüglich der äußeren Zahnkontakt-Bezugsfläche oder/und bezüglich der Zahnkontaktfläche des wenigstens einen Abgabezahns, insbesondere des entgegen der Antriebsdrehrichtung äußersten Abgabezahns seines Hochschaltbereichs, nach innen versetzt ist, kann die innere Zahnkontaktfläche des abgabeseitigen Stabilisierungszahns während dessen Eingriff mit einem Kettenglied in Anlagekontakt mit einer Innenfläche einer Kettenlasche des Kettenglieds gelangen, sodass der abgabeseitige Stabilisierungszahn die Fahrradkette in einem Umfangsbereich nach innen drängen kann, in dessen Umgebung die Fahrradkette ansonsten axiales Bewegungsspiel nach außen aufweist. Insofern kann der abgabeseitige Stabilisierungszahn dann, wenn kein Schaltvorgang gewünscht ist, durch seine weiter nach innen versetzte innere Zahnkontaktfläche dem axialen Bewegungsspiel der Kette nach außen entgegenwirken und dieses begrenzen.

Alternativ oder bevorzugt zusätzlich kann im Falle einer Ausbildung des wenigstens einen der Herunterschalt-Vertiefungsformation zugeordneten Fangzahns im Umfangserstreckungsbereich der Herunterschalt-Vertiefungsformation ein aufnahmeseitiger Stabilisierungszahn angeordnet sein. Dieser wirkt im Bereich der Herunterschalt-Vertiefungsformation so, wie der abgabeseitige Stabilisierungszahn im Bereich der Hochschalt-Vertiefungsformation wirkt. Daher weist der aufnahmeseitige Stabilisierungszahn gemäß einer ersten Ausführungsform des aufnahmeseitigen Stabilisierungszahns eine innere Zahnkontaktfläche auf, die einen größeren axialen Abstand von der axialen Bezugsposition hat als die innere Zahnkontaktfläche des Bezugszahns. Bevorzugt ist im Umfangserstreckungsbereich der Herunterschalt-Vertiefungsformation nur genau ein aufnahmeseitiger Stabilisierungszahn angeordnet.

Der aufnahmeseitige Stabilisierungszahn weist aufgrund seiner Anordnung im Bereich der Herunterschalt-Vertiefungsformation eine bezüglich der äußeren Zahnkontakt-Bezugsfläche oder/und bezüglich der Zahnkontaktfläche des wenigstens einen Fangzahns, insbesondere des in Antriebsdrehrichtung äußersten Fangzahns seines Herunterschaltbereichs, nach innen versetzte äußere Zahnkontaktfläche auf und gelangt daher mit seiner äußeren Zahnkontaktfläche im normalen Eingriffsbetrieb des Ritzels ohne Schaltvorgang in der Regel ohnehin nicht in Anlageeingriff mit einer Innenfläche einer Kettenlasche eines Kettenglieds. Mit seiner inneren Zahnkontaktfläche, welche axial weiter von der äußeren Zahnkontakt-Bezugsfläche entfernt gelegen ist als die innere Zahnkontaktfläche des Bezugszahns, kann der aufnahmeseitige Stabilisierungszahn dagegen in Anlageeingriff mit einer Innenfläche einer Kettenlasche eines Kettenglieds gelangen. Somit kann der aufnahmeseitige Stabilisierungszahn, wie zuvor bereits für den abgabeseitigen Stabilisierungszahn erläutert, die Fahrradkette während eines Eingriffs nach innen drängen und so einem im Bereich der Herunterschalt-Vertiefungsformation vorhandenen axialen Bewegungsspiel der Fahrradkette nach außen dann, wenn kein Schaltvorgang gewünscht ist, entgegenwirken und das Bewegungsspiel begrenzen.

Der wenigstens eine Stabilisierungszahn drängt daher die Kette von der Vertiefungsformation, in deren Umfangserstreckungsbereich er sich befindet, weg in Richtung zur inneren Stirnfläche des Ritzels.

Da der abgabeseitige und der aufnahmeseitige Stabilisierungszahn im Umfangsbereich der jeweils zugeordneten Vertiefungsformation aus Hochschalt- und Herunterschalt-Vertiefungsformation angeordnet sind, stören sie einen zeitlich vorteilhaft durch axiale Bewegung des Umwerfers nach außen eingeleiteten Hochschaltvorgang nicht, können aber einen zeitlich unvorteilhaft, etwa unmittelbar nach Vorbeigang des Abgabezahns an der Kettenführungsrolle, eingeleiteten Hochschaltvorgang verzögern, bis sich erneut ein Abgabezahn des in Antriebsdrehrichtung drehenden Ritzels der Kettenführungsrolle nähert.

Als eine weitere positive technische Wirkung der Ausbildung des abgabeseitigen oder/und aufnahmeseitigen Stabilisierungszahns gemäß der oben beschriebenen ersten Ausführungsform ermöglicht die durch die beschriebene Anordnung der jeweiligen inneren Zahnkontaktfläche erzielte größere Kettenführungsabmessung des jeweiligen Stabilisierungszahns auch eine größere Zahnbreite, verglichen mit einer gewöhnlichen Anordnung der inneren Zahnkontaktfläche an der Axialposition der inneren Zahnkontaktfläche des Bezugszahns, sofern sich die äußere und die innere Zahnkontaktfläche, wie es bevorzugt ist, radial und in Umfangsrichtung am Stabilisierungszahn überlappen. Aufgrund der dann vergrößerten Zahnbreite weist ein erfindungsgemäßer Stabilisierungszahn eine erhöhte Festigkeit und damit unter einer vorgegebenen Belastung eine verringerte Verschleißneigung auf.

Die zuvor beschriebene erste Ausführungsform des abgabeseitigen oder/und aufnahmeseitigen Stabilisierungszahns kann grundsätzlich sowohl an einem geradzahligen Ritzel als auch an einem ungeradzahligen Ritzel Anwendung finden.

Für ungeradzahlige Ritzel, bei welchen vorrichtungsimmanent jeder Zahn in aufeinander folgenden Ritzelumdrehungen nacheinander abwechselnd mit unterschiedlichen Kettengliederarten: Innenlaschen-Kettenglieder und Außenlaschen-Kettenglieder, der Fahrradkette in Eingriff gelangt, ist folglich jeder Zahn ein Innenlaschen-Ritzelzahn. Auch an einem ungeradzahligen Ritzel kann ein Ritzelzahn mit der größten Kettenführungsabmessung als Bezugszahn zur Beschreibung der Gestalt des Stabilisierungszahns herangezogen werden.

Auch und gerade bei ungeradzahligen Ritzeln besteht das oben geschilderte Problem, wonach ein Auslösen eines Hochschaltvorgangs durch einen Fahrradfahrer zum Zeitpunkt einer für den ausgelösten Hochschaltvorgang unvorteilhaften Drehstellung des Ritzels zu einem unerwünschten Absteigen der Kette in einem dafür nicht vorgesehenen Sektor des Ritzels führen kann. In der Regel weist das ungeradzahlige Ritzel eine Mehrzahl von in Umfangsrichtung aufeinanderfolgenden Schaltbereichen aus je einem Herunterschaltbereich und dem nächsten in Antriebsdrehrichtung auf den Herunterschaltbereich folgenden Hochschaltbereich auf. In der Regel sind wenigstens zwei an unterschiedlichen Umfangsabschnitten ausgebildete Schaltbereiche derart ausgebildet, dass die jeweiligen Abgabezähne in den unterschiedlichen Hochschaltbereichen während eines Umlaufs des Ritzels mit unterschiedlichen Kettengliederarten in Eingriff gelangen. Entsprechendes gilt bevorzugt auch für den etwaig vorgesehenen wenigstens einen Fangzahn. Wird nun ein Hochschaltvorgang derart ausgelöst, dass ein Hochschaltbereich mit einem Abgabezahn, welcher augenblicklich mit einem Innenlaschen-Kettenglied in Eingriff ist oder im aktuellen Ritzelumlauf in Eingriff gelangt, als nächster Hochschaltbereich den Umwerfer passiert, so ist es vorteilhaft, wenn der Hochschaltvorgang durch den wenigstens einen Stabilisierungszahn verzögert wird, bis ein Hochschaltbereich den Umwerfer passiert, dessen Abgabezahn mit einem Außenlaschen-Kettenglied in Eingriff ist oder im aktuellen Ritzelumlauf in Eingriff gelangt.

Die obige Aufgabe kann daher alternativ oder zusätzlich zur ersten Ausführungsform auch gelöst werden durch eine zweite Ausführungsform eines Stabilisierungszahns, gemäß welcher der axiale Abstand der inneren Zahnkontaktfläche des im Umfangsbereich der Hochschalt-Vertiefungsformation angeordneten abgabeseitigen Stabilisierungszahns von der äußeren Zahnkontaktfläche des wenigstens einen Abgabezahns, insbesondere des entgegen der Antriebsdrehrichtung äußersten Abgabezahns seines Hochschaltbereichs, nicht kleiner ist als die größte Kettenführungsabmessung eines Innenlaschen-Ritzelzahns. Alternativ oder bevorzugt zusätzlich kann der axiale Abstand der inneren Zahnkontaktfläche des im Umfangsbereich der Herunterschalt-Vertiefungsformation angeordneten aufnahmeseitigen Stabilisierungszahns von der äußeren Zahnkontaktfläche des wenigstens einen Fangzahns, insbesondere des in Antriebsdrehrichtung äußersten Fangzahns seines Herunterschaltbereichs, nicht kleiner ausgebildet sein als die größte Kettenführungsabmessung eines Innenlaschen-Ritzelzahns. Der Innenlaschen-Ritzelzahn mit der größten Kettenführungsabmessung ist gemäß obiger Definition der oben genannte Bezugszahn.

Im Gegensatz zur ersten Ausführungsform eines Stabilisierungszahns, bei welcher es auf die relative Lage der inneren Zahnkontaktfläche des Stabilisierungszahns relativ zur inneren Zahnkontaktfläche des Bezugszahns als dem Innenlaschen-Ritzelzahn mit der größten Kettenführungsabmessung ankommt, bildet der Stabilisierungszahn der zweiten Ausführungsform gleichsam mit dem ihm durch Anordnung im selben Schaltfunktionsbereich aus Hochschaltbereich und Herunterschaltbereich zugeordneten Schaltfunktionszahn: Abgabezahn oder Fangzahn, insbesondere mit dem entgegen der Antriebsdrehrichtung äußersten Abgabezahn seines Hochschaltbereichs oder/und mit dem in Antriebsdrehrichtung äußersten Fangzahn seines Herunterschaltbereichs, eine ritzelzahnübergreifende Kettenführungsabmessung, welche jene des hier angewendeten Bezugszahns als dem Innenlaschen-Ritzelzahn mit der größten Kettenführungsabmessung nicht unterschreitet oder/und welche ritzelzahnübergreifende Kettenführungsabmessung bevorzugt die lichte axiale Weite eines Innenlaschen-Kettenglieds einer mit dem Ritzel in einer Antriebsanordnung eines Fahrrads kooperierenden Fahrradkette nicht unterschreitet, vorzugsweise zur verbesserten Stabilisierung der Fahrradkette an dem mit der Fahrradkette kämmenden Ritzel sogar überschreitet. Die zweite Ausführungsform des Stabilisierungszahns ist vor allem, aber nicht nur, vorteilhaft, wenn ein Ritzel nur Innenlaschen-Ritzelzähne aufweist, wie es bei ungeradzahligen Ritzeln der Fall ist. Im Gegensatz zum oben erwähnten Bezugszahn kommt es beim Innenlaschen-Ritzelzahn mit der größten Kettenführungsabmessung, der zur Gestaltung des Stabilisierungszahns der zweiten Ausführungsform heranzuziehen ist, nicht auf die Axialposition seiner äußeren Zahnkontaktfläche an. Diese kann bezüglich der Zahnkontaktfläche eines oder beider der Schaltfunktionszähne: Abgabezahn und Fangzahn, insbesondere des entgegen der Antriebsdrehrichtung äußersten Abgabezahns seines Hochschaltbereichs, oder/und des in Antriebsdrehrichtung äußersten Fangzahns seines Herunterschaltbereichs, nach innen versetzt angeordnet sein.

Bei einem Ritzel wie vorstehend beschrieben kann und vorzugsweise soll der wenigstens eine Stabilisierungszahn insbesondere dazu führen, dass die Kette auf dem Ritzel streckenweise, also entlang bestimmter Winkelbereiche des Ritzels, nicht mehr vollständig dem bekannten, üblichen Geradeauslauf auf dem Ritzel folgt.

Stattdessen kann die Kette se nicht nur während eines Schaltvorgangs, sondern auch beim normalen Lauf auf dem Ritzel (also ohne seitliche Auslenkung durch ein Schaltwerk mit dem Ziel des Wechsels auf ein anderes Ritzel) durch den wenigstens einen Stabilisierungszahn gezielt seitlich ausgelenkt werden, insbesondere in Richtung zum nächstgrößeren Ritzel, also in Richtung Inboardseite. Dies kann mit dem vorstehend beschriebenen Ziel erfolgen, unerwünschten Bewegungen der Kette nach außen, also in Richtung Outboardseite, an bestimmten Rotationspositionen auf dem Ritzel, beispielsweise im Bereich von Inboard-Schaltgassen bzw. Herunterschalt-Vertiefungsformationen des Ritzels anstelle wie vorgesehen im Bereich von Outboard-Schaltgassen bzw. Hochschalt-Vertiefungsformationen, und damit ggf. verbundenen Fehlschaltungen, entgegenzuwirken.

Auch der umgekehrte Fall, bei dem ein Stabilisierungszahn eine äußere Zahnkontaktfläche aufweist, die weiter außen liegt als die äußere Zahnkontaktfläche eines Bezugszahns, ist denkbar und wird von der Erfindung umfasst. Bei diesem umgekehrten Fall wird mit anderen Worten die Fahrradkette während des Eingriffs mit einem entsprechend ausgebildeten und angeordneten Stabilisierungszahn auf dem Ritzel über deren normalen, geraden Lauf auf dem Ritzel hinaus gezielt nach außen, also in Richtung Outboardseite abgelenkt, beispielsweise in solchen Winkelbereichen des Ritzels, in denen kein Schaltvorgang nach innen, also kein Herunterschalt-Schaltvorgang gewünscht ist, was insbesondere im Bereich von Outboard-Schaltgassen bzw. Hochschalt-Vertiefungsformationen des Ritzels und/oder des nächstgrößeren benachbarten Ritzels der Fall ist.

Diese Fälle bedeuten mit anderen Worten, dass die Kette aufgrund des wenigstens einen Stabilisierungszahns des Ritzels in zumindest geringfügigem Maße in einen gezielten und regelmäßigen horizontal schlangenlinienförmigen Bewegungsverlauf auf dem Ritzel gebracht wird, durch den beispielsweise die vorstehend beschriebenen Fehlschaltungen gezielt reduziert werden können.

Die Ritzelverzahnung mit dem wenigstens einen Stabilisierungszahn hat in solchen Fällen die besondere Eigenschaft, dass die Ritzelverzahnung, zumindest zwei benachbarte Zähne übergreifend betrachtet, breiter sein kann als der lichte Ketteninnenlaschenabstand, also breiter als die Ketteninnenlaschenweite. Mit anderen Worten ist in diesen Fällen eine zumindest zwei Nachbarzähne übergreifende Kettenführungsabmessung des Ritzels breiter als die Ketteninnenlaschenweite. Mit nochmals anderen Worten ist die Ritzelverzahnung, nachbarzahnübergreifend betrachtet, breiter als die Ketteninnenlaschenweite.

Eine "breiter als die Ketteninnenlaschenweite ausgeführte Ritzelverzahnung" klingt zunächst technisch unsinnig, da die Kette bei zumindest zwei benachbarten Zähnen, die breiter sind als die Ketteninnenlaschenweite, zumindest mit einer Ketteninnenlasche auf einem der beiden Zähne aufreiten und nicht mehr in das Ritzel eingreifen würde. In den vorliegend betrachteten Fällen sind jedoch nicht die zumindest zwei benachbarten Zähne jeder für sich genommen breiter als die Ketteninnenlaschenweite, sondern die Zahndicke ist nachbarzahnübergreifend, also zumindest zwei benachbarte Zähne übergreifend, breiter als die Ketteninnenlaschenweite, wobei von den beiden benachbarten Zähnen jedoch zumindest ein Zahn nicht breiter ist als die Ketteninnenlaschenweite. Auf diese Weise wird es möglich, dass es zu keinem Aufreiten der Kette auf einem etwa für die Ketteninnenlaschen zu dicken Zahn kommt, sondern dass die Kette stattdessen dem vorstehend beschriebenen, gezielt schlangenlinienförmigen Verlauf folgt.

Es sei ausdrücklich darauf hingewiesen, dass ein Stabilisierungszahn nur gemäß der ersten Ausführungsform oder nur gemäß der zweiten Ausführungsform oder sowohl gemäß der ersten als auch gemäß der zweiten Ausführungsform ausgebildet sein kann.

Bevorzugt ist der axiale Abstand der inneren Zahnkontaktfläche des abgabeseitigen Stabilisierungszahns von der äußeren Zahnkontaktfläche des wenigstens einen Abgabezahns, insbesondere des entgegen der Antriebsdrehrichtung äußersten Abgabezahns seines Hochschaltbereichs, größer als die größte Kettenführungsabmessung eines Innenlaschen-Ritzelzahns. Ebenso bevorzugt ist der axiale Abstand der inneren Zahnkontaktfläche des aufnahmeseitigen Stabilisierungszahns von der äußeren Zahnkontaktfläche des wenigstens einen Fangzahns, insbesondere des in Antriebsdrehrichtung äußersten Fangzahns seines Herunterschaltbereichs, größer als die größte Kettenführungsabmessung eines Innenlaschen-Ritzelzahns. Hierdurch wird die durch einen Stabilisierungszahn und den zugeordneten Schaltfunktionszahn gemeinsam gebildete Kettenführungsfähigkeit weiter erhöht.

Bevorzugt beträgt zur Erzielung einer lokal straffen Kettenführung im Bereich zwischen einem Stabilisierungszahn und dem ihm zugeordneten Schaltfunktionszahn der axiale Abstand der inneren Zahnkontaktfläche des Stabilisierungszahns von der äußeren Zahnkontaktfläche des zugeordneten Schaltfunktionszahns zwischen dem 0,90-Fachen und dem 1,05-Fachen der lichten Weite eines Innenlaschen-Kettenglieds der dem Ritzel für einen Eingriff im Antriebsbetrieb zugeordneten Fahrrad-Rollenkette. Zur effektiven Minderung einer axialen Kettenbeweglichkeit in Richtung nach außen dann, wenn der Hochschaltvorgang zum Zeitpunkt einer hierfür unvorteilhaften Drehstellung ausgelöst wird, ist der axiale Abstand der inneren Zahnkontaktfläche des Stabilisierungszahns von der äußeren Zahnkontaktfläche des ihm zugeordneten Schaltfunktionszahns bevorzugt nicht kleiner, besonders bevorzugt größer als die axiale lichte Weite eines Innenlaschen-Kettenglieds. Besonders vorteilhafte Kettenführungswirkungen zeigten sich in Versuchen für einen axialen Abstand der inneren Zahnkontaktfläche des Stabilisierungszahns von der äußeren Zahnkontaktfläche des ihm zugeordneten Schaltfunktionszahns, welcher das 1,004-Fache bis das 1,033-Fache der lichten Weite eines Innenlaschen-Kettenglieds beträgt.

Zur Vermeidung einer unerwünschten Schwächung des Ritzels sind die genannten Vertiefungsformationen in Umfangsrichtung möglichst kurz ausgebildet. Bevorzugt kann daher der abgabeseitige Stabilisierungszahn entgegen der Antriebsdrehrichtung unmittelbar dem wenigstens einen Abgabezahn, insbesondere dem entgegen der Antriebsdrehrichtung äußersten Abgabezahn seines Hochschaltbereichs, benachbart angeordnet sein. Dementsprechend kann aus der gleichen Erwägung der aufnahmeseitige Stabilisierungszahn in Antriebsdrehrichtung unmittelbar dem wenigstens einen Fangzahn, insbesondere dem in Antriebsdrehrichtung äußersten Fangzahn seines Herunterschaltbereichs, benachbart sein. Bei dieser Anordnung ist dann der abgabeseitige Stabilisierungszahn während eines Hochschaltvorgangs der erste Ritzelzahn, an welchem beide Kettenlaschen ein und desselben Kettenglieds axial außen vorbeigehen. Ebenso ist dann der aufnahmeseitige Stabilisierungszahn während eines Herunterschaltvorgangs der letzte Ritzelzahn, an welchem beide Kettenlaschen ein und desselben Kettenglieds axial außen vorbeigehen.

Bevorzugt ist der wenigstens eine Abgabezahn oder/und der wenigstens eine Fangzahn zum Eingriff mit einem Außenlaschen-Kettenglied ausgebildet, da dieses aufgrund seiner oben beschriebenen größeren lichten Weite bei axial nach außen abgehender bzw. axial von außen kommender Kette noch am Ritzel gehalten bzw. schon am Ritzel gefangen werden kann, obgleich die Kette selbst ihre axiale Position für einen Eingriff mit dem Ritzel nicht mehr bzw. noch nicht vollständig eingenommen hat.

Außerdem ist es für ein dem Außenlaschen-Kettenglied unmittelbar längs der Kettenumlaufbahn benachbartes Innenlaschen-Kettenglied aufgrund von dessen geringerer axialer Abmessung einfacher, axial außen am abgabeseitigen Stabilisierungszahn bzw. am aufnahmeseitigen Stabilisierungszahn vorbeizugehen.

Wie oben bereits geschildert wurde, ist eine äußere Zahnkontaktfläche des abgabeseitigen Stabilisierungszahns bezüglich der axialen Bezugsposition nach innen versetzt angeordnet. Sie hat einen größeren axialen Abstand von der axialen Bezugsposition als eine äußere Zahnkontaktfläche des wenigstens einen Abgabezahns, insbesondere dem entgegen der Antriebsdrehrichtung äußersten Abgabezahn seines Hochschaltbereichs, um beim Hochschalten ein Vorbeigehen der Fahrradkette axial außen neben dem Stabilisierungszahn zu ermöglichen. Alternativ oder zusätzlich ist eine äußere Zahnkontaktfläche des aufnahmeseitigen Stabilisierungszahns bezüglich der axialen Bezugsposition nach innen versetzt. Sie hat einen größeren axialen Abstand von der axialen Bezugsposition als eine äußere Zahnkontaktfläche des wenigstens einen Fangzahns, insbesondere des in Antriebsdrehrichtung äußersten Fangzahns seines Herunterschaltbereichs. Dadurch kann die Fahrradkette beim Herunterschalten axial außen am Stabilisierungszahn vorbeigehen.

Um einerseits der Kette für einen Schaltvorgang das oben genannte axiale Bewegungsspiel am Ritzel einzuräumen und um andererseits dieses axiale Bewegungsspiel bei gewöhnlichem Umlauf des Ritzels ohne Schaltvorgang zu begrenzen, kann eine innere Zahnkontaktfläche des abgabeseitigen Stabilisierungszahns einen größeren axialen Abstand von der axialen Bezugsposition aufweisen als eine innere Zahnkontaktfläche des wenigstens einen Abgabezahns, insbesondere des entgegen der Antriebsdrehrichtung äußersten Abgabezahns seines Hochschaltbereichs, oder/und kann eine innere Zahnkontaktfläche des aufnahmeseitigen Stabilisierungszahns einen größeren axialen Abstand von der axialen Bezugsposition aufweisen als eine innere Zahnkontaktfläche des wenigstens einen Fangzahns, insbesondere des in Antriebsdrehrichtung äußersten Fangzahns seines Herunterschaltbereichs.

Für eine wiederholbare Durchführung erfolgreicher Schaltvorgänge, und zwar für das Hochschalten ebenso wie für das Herunterschalten, ist eine axiale Beweglichkeit der noch bzw. schon in Eingriff mit dem Ritzel befindlichen Fahrradkette nach außen im Bereich der für einen Schaltvorgang jeweils entscheidenden Schaltfunktionszähne: Abgabezahn und Fangzahn, vorteilhaft. Daher kann im Falle einer Ausbildung des oben beschriebenen wenigstens einen Abgabezahns eines Hochschaltbereichs dem wenigstens einen Abgabezahn, insbesondere dem in Antriebsdrehrichtung äußersten Abgabezahn seines Hochschaltbereichs, in Antriebsdrehrichtung unmittelbar benachbart ein abgabeseitiger Mobilisierungszahn angeordnet sein, wobei der axiale Abstand einer inneren Zahnkontaktfläche des abgabeseitigen Mobilisierungszahns von der axialen Bezugsposition kleiner oder gleich dem axialen Abstand der inneren Zahnkontaktfläche des Bezugszahns von der axialen Bezugsposition ist. Bevorzugt ist der axiale Abstand der inneren Zahnkontaktfläche des abgabeseitigen Mobilisierungszahns von der axialen Bezugsposition kleiner als der axiale Abstand der inneren Zahnkontaktfläche des Bezugszahns von der axialen Bezugsposition. Der abgabeseitige Mobilisierungszahn, der beim Hochschalten einer der letzten mit der Kette in Eingriff stehende Ritzelzähne ist, bevorzugt der vorletzte mit der Kette in Eingriff stehende Ritzelzahn ist, ermöglicht der Fahrradkette eine Bewegung nach axial außen zum axial benachbarten kleineren Ziel-Ritzel des Hochschaltvorgangs. Die Kette kann sich somit über einen längeren Umfangsabschnitt nach axial außen bewegen, verglichen mit einem Ritzel ohne abgabeseitigen Mobilisierungszahn.

Bevorzugt ist der axiale Abstand der inneren Zahnkontaktfläche des abgabeseitigen Mobilisierungszahns von der axialen Bezugsposition auch kleiner als der axiale Abstand der inneren Zahnkontaktfläche des abgabeseitigen Stabilisierungszahns von der axialen Bezugsposition. Dann kann der abgabeseitige Stabilisierungszahn bei gewöhnlichem Eingriff des Ritzels mit der Kette ohne Schaltvorgang die Kette am Ritzel effektiv stabilisieren. Entgegen der Antriebsdrehrichtung folgt der abgabeseitige Stabilisierungszahn dann nämlich auf einen durch den abgabeseitigen Mobilisierungszahn und den wenigstens einen Abgabezahn gebildeten, sich über wenigstens zwei Zähne erstreckenden Umfangsabschnitt mit geringer Kettenführungsabmessung und damit mit schwacher axialer Führung der Kette am Ritzel.

Alternativ oder bevorzugt zusätzlich kann im Falle einer Ausbildung des oben beschriebenen wenigstens einen Fangzahns eines Herunterschaltbereichs dem wenigstens einen Fangzahn, insbesondere dem entgegen der Antriebsdrehrichtung äußersten Fangzahn seines Herunterschaltbereichs, entgegen der Antriebsdrehrichtung unmittelbar benachbart ein aufnahmeseitiger Mobilisierungszahn angeordnet sein, wobei der axiale Abstand einer inneren Zahnkontaktfläche des aufnahmeseitigen Mobilisierungszahns von der axialen Bezugsposition kleiner als der oder gleich dem axialen Abstand der inneren Zahnkontaktfläche des Bezugszahns von der axialen Bezugsposition ist. Bevorzugt ist der axiale Abstand der inneren Zahnkontaktfläche des aufnahmeseitigen Mobilisierungszahns von der axialen Bezugsposition kleiner als der axiale Abstand der inneren Zahnkontaktfläche des Bezugszahns von der axialen Bezugsposition. Der aufnahmeseitige Mobilisierungszahn, der beim Herunterschalten einer der ersten mit der Kette in Eingriff stehenden Ritzelzähne ist, bevorzugt der zweite mit der Kette in Eingriff stehende Ritzelzahn ist, ermöglicht der Fahrradkette ein Bewegungsspiel nach axial außen zum axial benachbarten kleineren Ausgangs-Ritzel des Herunterschaltvorgangs. Die Kette kann sich somit über einen längeren Umfangsabschnitt von axial außen nach axial innen bewegen, verglichen mit einem Ritzel ohne aufnahmeseitigen Mobilisierungszahn.

Bevorzugt ist der axiale Abstand der inneren Zahnkontaktfläche des aufnahmeseitigen Mobilisierungszahns von der axialen Bezugsposition auch kleiner als der axiale Abstand der inneren Zahnkontaktfläche des aufnahmeseitigen Stabilisierungszahns von der axialen Bezugsposition. Dies ermöglicht dem aufnahmeseitigen Stabilisierungszahn bei gewöhnlichem Eingriff des Ritzels mit der Kette ohne Schaltvorgang, die Kette am Ritzel effektiv zu stabilisieren. In Antriebsdrehrichtung eilt der aufnahmeseitige Stabilisierungszahn dann nämlich einem durch den aufnahmeseitigen Mobilisierungszahn und den wenigstens einen Fangzahn gebildeten, sich über wenigstens zwei Ritzelzähne erstreckenden Umfangsabschnitt mit geringer Kettenführungsabmessung und daher schwacher axialer Führung der Kette am Ritzel voraus.

Je länger die Umfangsabschnitte mit geringen Kettenführungsabmessungen sind, desto leichter kann die Verlagerung eines Umwerfers ein unerwünschtes Absteigen der Kette an einem dafür nicht beabsichtigten Umfangsbereich bewirken und desto vorteilhafter ist die Ausbildung des wenigstens einen Stabilisierungszahns.

Zur möglichst guten Stabilisierung der Kette auf dem Ritzel in einem Schaltbereich aus einem Herunterschaltbereich und dem in Antriebsdrehrichtung nächsten auf den Herunterschaltbereich folgenden Hochschaltbereich ist bevorzugt auch der axiale Abstand der inneren Zahnkontaktfläche des abgabeseitigen Stabilisierungszahns von der axialen Bezugsposition größer als der axiale Abstand der inneren Zahnkontaktfläche des aufnahmeseitigen Mobilisierungszahns von der axialen Bezugsposition oder/und ist der axiale Abstand der inneren Zahnkontaktfläche des aufnahmeseitigen Stabilisierungszahns von der axialen Bezugsposition größer als der axiale Abstand der inneren Zahnkontaktfläche des abgabeseitigen Mobilisierungszahns von der axialen Bezugsposition.

Das Ritzel kann mehr als einen Hochschaltbereich aufweisen, wobei vorzugsweise jeder Hochschaltbereich eine Hochschalt-Vertiefungsformation mit wenigstens einem, bevorzugt mit genau einem, der Hochschalt-Vertiefungsformation zugeordneten Abgabezahn aufweist. Ebenso kann das Ritzel mehr als einen Herunterschaltbereich mit einer Herunterschalt-Vertiefungsformation und mit wenigstens einem, bevorzugt mit genau einem, der Herunterschalt-Vertiefungsformation zugeordneten Fangzahn aufweisen. Eine Herunterschalt-Vertiefungsformation und eine dieser in Antriebsdrehrichtung nächstgelegene Hochschalt-Vertiefungsformation bilden einen gemeinsamen Schaltbereich. Die Herunterschalt-Vertiefungsformation und die dieser in Antriebsdrehrichtung nächstgelegene Hochschalt-Vertiefungsformation liegen bevorzugt zwischen einem Fangzahn, insbesondere dem in Antriebsdrehrichtung äußersten Fangzahn seines Herunterschaltbereichs, und dem ersten in Antriebsdrehrichtung auf den Fangzahn folgenden Abgabezahn.

Der wenigstens eine Abgabezahn, insbesondere der entgegen der Antriebsdrehrichtung äußerste Abgabezahn seines Hochschaltbereichs, folgt bevorzugt in Antriebsdrehrichtung unmittelbar auf die Hochschalt-Vertiefungsformation, so dass sich die Hochschalt-Vertiefungsformation wenigstens nicht vollständig, vorzugsweise überhaupt nicht, in die nach außen weisende Zahnfläche wenigstens eines Abgabezahns, insbesondere des in Antriebsdrehrichtung äußersten Abgabezahns seines Hochschaltbereichs erstreckt.

Wenigstens ein Teil der nach außen weisenden Zahnfläche des in Antriebsdrehrichtung äußersten Abgabezahns seines Hochschaltbereichs, vorzugsweise die gesamte nach außen weisende Zahnfläche des in Antriebsdrehrichtung äußersten Abgabezahns seines Hochschaltbereichs, ist von der Hochschalt-Vertiefungsformation unberührt.

Analog zum Abgabezahn folgt bevorzugt der wenigstens eine Fangzahn, insbesondere der in Antriebsdrehrichtung äußerste Fangzahn seines Herunterschaltbereichs, entgegen der Antriebsdrehrichtung unmittelbar auf die Herunterschalt-Vertiefungsformation, so dass sich die Herunterschalt-Vertiefungsformation wenigstens nicht vollständig, vorzugsweise überhaupt nicht, in die nach außen weisende Zahnfläche wenigstens eines Fangzahns, insbesondere des entgegen der Antriebsdrehrichtung äußersten Fangzahns seines Herunterschaltbereichs, erstreckt. Wenigstens ein Teil der nach außen weisenden Zahnfläche des entgegen der Antriebsdrehrichtung äußersten Fangzahns seines Herunterschaltbereichs, vorzugsweise die gesamte nach außen weisende Zahnfläche des entgegen der Antriebsdrehrichtung äußersten Fangzahns seines Herunterschaltbereichs, ist von der Herunterschalt-Vertiefungsformation unberührt.

Ein Ritzelzahn endet gemäß der Begriffsverwendung dieser Anmeldung radial innen am Fußkreis des Ritzels. Radial innerhalb des Fußkreises am Ritzelgrundkörper ausgebildete Formationen sind Formationen des Ritzelgrundkörpers und nicht des am gleichen Umfangsort ausgebildeten Ritzelzahns.

Der aufnahmeseitige oder der abgabeseitige Mobilisierungszahn, vorzugsweise der abgabeseitige Mobilisierungszahn, kann in einer Ausführungsform des Ritzels der Bezugszahn sein. Dann ist der axiale Abstand der inneren Zahnkontaktfläche des betroffenen Mobilisierungszahns von der axialen Bezugsposition der axiale Abstand der inneren Zahnkontaktfläche von der axialen Bezugsposition. Mit anderen Worten: dann ist die Kettenführungsabmessung des Mobilisierungszahns die Kettenführungsabmessung des Bezugszahns. Ein Mobilisierungszahn kann insbesondere dann Bezugszahn des Ritzels sein, wenn die Zähnezahl des Ritzels geradzahlig ist und das n-Fache der Zähnezahl einer Schaltstrecke vom aufnahmeseitigen Mobilisierungszahn bis zu dem in Antriebsdrehrichtung nächstgelegenen abgabeseitigen Mobilisierungszahn plus n Zähne beträgt, die Mobilisierungszähne eingeschlossen, und das Ritzel diese Strecke n mal enthält. n ist dabei eine ganze Zahl.

Da aus oben bereits genannten Gründen einer erleichterten Abgabe der Kette nach außen und eines erleichterten Fangens der von außen kommenden Kette sowohl der wenigstens eine Fangzahn als auch der wenigstens eine Abgabezahn zum Eingriff in ein Außenlaschen-Kettenglied ausgebildet sind, liegen in der Regel zwischen dem wenigstens einen Fangzahn, insbesondere dem in Antriebsdrehrichtung äußersten Fangzahn seines Herunterschaltbereichs, und dem in Antriebsdrehrichtung nächstgelegenen Abgabezahn eine ungerade Anzahl an Ritzelzähnen. Im Bestreben, die Schaltvorgänge unterstützenden Vertiefungsformationen, die zur Erfüllung ihrer Aufgabe eine gewisse Mindestlänge in Umfangsrichtung aufweisen müssen, möglichst kurz zu halten, liegen zwischen dem wenigstens einen Fangzahn, insbesondere dem in Antriebsdrehrichtung äußersten Fangzahn seines Herunterschaltbereichs, und dem entgegen der Antriebsdrehrichtung äußersten Abgabezahn seines Hochschaltbereichs in vielen Fällen drei oder fünf Ritzelzähne. Der entgegen der Antriebsdrehrichtung äußerste Abgabezahn seines Hochschaltbereichs ist dann in Antriebsdrehrichtung der vierte oder der sechste Zahn nach dem wenigstens einen Fangzahn, insbesondere nach dem in Antriebsdrehrichtung äußersten Fangzahn seines Herunterschaltbereichs. Sind ein aufnahmeseitiger und ein abgabeseitiger Mobilisierungszahn vorhanden, dann ist der abgabeseitige Mobilisierungszahn in diesen Fällen in Antriebsdrehrichtung bevorzugt der sechste oder der achte Ritzelzahn nach dem aufnahmeseitigen Mobilisierungszahn. Die oben genannte Schaltstrecke umfasst dann sieben oder neun Ritzelzähne. Ein Ritzel mit 24 Zähnen (24-T-Ritzel) kann dann aus drei derartigen Schaltstrecken plus drei Zähnen gebildet sein, so dass dann ein Mobilisierungszahn, vorzugsweise der abgabeseitige, Bezugszahn sein kann. Die Bildung des 24-T-Ritzels aus drei Schaltstrecken ist dann vorteilhaft, wenn dem 24-T-Ritzel außen ein ungeradzahliges Ritzel, etwa ein Ritzel mit 21 Zähnen (21-T-Ritzel) benachbart ist. Denn bei einem Eingriff der Kette mit einem ungeradzahligen Ritzel ändert sich für jeden Ritzelzahn des ungeradzahligen Ritzels mit jedem Umlauf die Art des in Eingriff genommenen Kettenglieds zwischen Außenlaschen-Kettenglied und Innenlaschen-Kettenglied. Da beim Herunterschalten vom 21-T- auf das 24-T-Ritzel die Zuordnung der Ritzelzähne des 21-T-Ritzels zu einer jeweiligen Kettengliederart unbestimmt ist, ist es zur Erzielung einer möglichst kurzen Schaltlatenz vorteilhaft, wenn am 24-T-Ritzel mehrere Schaltstrecken ausgebildet sind. Grundsätzlich ist in der vorliegenden Anmeldung ein Ritzel mit einer Anzahl z an Zähnen als "z-T-Ritzel" bezeichnet.

Zur Vereinfachung der Herstellung des Ritzels kann vorgesehen sein, dass die äußeren Zahnkontaktflächen von einer Mehrzahl von außerhalb einer Vertiefungsformation gelegenen Ritzelzähnen an der axialen Bezugsposition gelegen sind, einschließlich der Zahnkontaktfläche eines Abgabe- oder/und Fangzahns.

Eine Mehrzahl von, vorzugsweise alle an der axialen Bezugsposition gelegenen äußeren Zahnkontaktflächen sind bevorzugt orthogonal zur Ritzelachse ausgerichtet. Dies erleichtert eine hinsichtlich der Maßhaltigkeit vorteilhafte spanende Fertigung des in seiner Gestalt komplizierten Ritzels.

Bevorzugt kann eine Mehrzahl von, besonders bevorzugt können alle an der axialen Bezugsposition gelegenen inneren Zahnkontaktflächen orthogonal zur Ritzelachse ausgerichtet sein.

Zur Stabilisierung der Kette während eines Umlaufs am Ritzel ist es vorteilhaft, wenn die Kettenführungsabmessung des abgabeseitigen Stabilisierungszahns größer ist als die Kettenführungsabmessung des wenigstens einen Abgabezahns, insbesondere des entgegen der Antriebsdrehrichtung äußersten Abgabezahns seines Hochschaltbereichs. Alternativ oder bevorzugt zusätzlich kann die Kettenführungsabmessung des aufnahmeseitigen Stabilisierungszahns größer sein als die Kettenführungsabmessung des wenigstens einen Fangzahns, insbesondere des in Antriebsdrehrichtung äußersten Fangzahns seines Herunterschaltbereichs. Bevorzugt beträgt die Kettenführungsabmessung des abgabeseitigen Stabilisierungszahns das 1,1-Fache bis das 1,3-Fache, vorzugsweise das 1,12-Fache bis das 1,2-Fache, besonders bevorzugt das 1,13-Fache bis das 1,17-Fache, die genannten Faktoren-Grenzwerte eingeschlossen, der Kettenführungsabmessung des wenigstens einen Abgabezahns, insbesondere des entgegen der Antriebsdrehrichtung äußersten Abgabezahns seines Hochschaltbereichs. Alternativ oder bevorzugt zusätzlich beträgt die Kettenführungsabmessung des aufnahmeseitigen Stabilisierungszahns bevorzugt das 1,2-Fache bis das 1,6-Fache, vorzugsweise das 1,2-Fache bis das 1,5-Fache, besonders bevorzugt das 1,21-Fache bis das 1,45-Fache, die genannten Faktoren-Grenzwerte eingeschlossen, der Kettenführungsabmessung des wenigstens einen Fangzahns, insbesondere des in Antriebsdrehrichtung äußersten Fangzahns seines Herunterschaltbereichs. Diese Werte gelten allgemein für Ritzel, bevorzugt jedoch für Ritzel mit geradzahligen Zähnezahlen. Für Ritzel mit ungeradzahligen Zähnezahlen oder für Ritzel mit ausschließlich Innenlaschen-Ritzelzähnen kann die Kettenführungsabmessung des abgabeseitigen Stabilisierungszahns das 1,3-Fache bis das 1,7-Fache, vorzugsweise das 1,4-Fache bis das 1,6-Fache, besonders bevorzugt das 1,5-Fache bis das 1,6-Fache, die genannten Faktoren-Grenzwerte eingeschlossen, der Kettenführungsabmessung des wenigstens einen Abgabezahns, insbesondere des entgegen der Antriebsdrehrichtung äußersten Abgabezahns seines Hochschaltbereichs, betragen. Ebenso kann für Ritzel mit ungeradzahligen Zähnezahlen oder für Ritzel mit ausschließlich Innenlaschen-Ritzelzähnen die Kettenführungsabmessung des aufnahmeseitigen Stabilisierungszahns das 1,2-Fache bis das 1,6-Fache, vorzugsweise das 1,3-Fache bis das 1,5-Fache, besonders bevorzugt das 1,4-Fache bis das 1,5-Fache, die genannten Faktoren-Grenzwerte eingeschlossen, der Kettenführungsabmessung des wenigstens einen Fangzahns, insbesondere des in Antriebsdrehrichtung äußersten Fangzahns seines Herunterschaltbereichs, betragen.

Zur Stabilisierung der Kette während eines Umlaufs am Ritzel kann es außerdem vorteilhaft sein, wenn die Kettenführungsabmessung des abgabeseitigen Stabilisierungszahns größer ist als die Kettenführungsabmessung des abgabeseitigen Mobilisierungszahns. Alternativ oder bevorzugt zusätzlich kann die Kettenführungsabmessung des aufnahmeseitigen Stabilisierungszahns größer sein als die Kettenführungsabmessung des aufnahmeseitigen Mobilisierungszahns. Bevorzugt beträgt die Kettenführungsabmessung des abgabeseitigen Stabilisierungszahns das 0,8-Fache bis das 1,2-Fache, vorzugsweise das 0,85-Fache bis das 1,15-Fache, besonders bevorzugt das 0,88-Fache bis das 1,13-Fache, die genannten Faktoren-Grenzwerte eingeschlossen, der Kettenführungsabmessung des abgabeseitigen Mobilisierungszahns. Alternativ oder bevorzugt zusätzlich beträgt die Kettenführungsabmessung des aufnahmeseitigen Stabilisierungszahns gemäß einer vorteilhaften Weiterbildung das 1,0-Fache bis das 1,4-Fache, vorzugsweise das 1,0-Fache bis das 1,37-Fache, besonders bevorzugt das 1,0-Fache bis das 1,35-Fache, die genannten Faktoren-Grenzwerte eingeschlossen, der Kettenführungsabmessung des aufnahmeseitigen Mobilisierungszahns. Diese Werte gelten allgemein für Ritzel, bevorzugt jedoch für Ritzel mit geradzahligen Zähnezahlen. Für Ritzel mit ungeradzahligen Zähnezahlen oder für Ritzel mit ausschließlich Innenlaschen-Ritzelzähnen kann die Kettenführungsabmessung des abgabeseitigen Stabilisierungszahns das 1,3-Fache bis das 1,7-Fache, vorzugsweise das 1,4-Fache bis das 1,6-Fache, besonders bevorzugt das 1,5-Fache bis das 1,6-Fache, die genannten Faktoren-Grenzwerte eingeschlossen, der Kettenführungsabmessung des abgabeseitigen Mobilisierungszahns betragen. Ebenso kann für Ritzel mit ungeradzahligen Zähnezahlen oder für Ritzel mit ausschließlich Innenlaschen-Ritzelzähnen die Kettenführungsabmessung des aufnahmeseitigen Stabilisierungszahns das 1,2-Fache bis das 1,6-Fache, vorzugsweise das 1,3-Fache bis das 1,5-Fache, besonders bevorzugt das 1,4-Fache bis das 1,5-Fache, die genannten Faktoren-Grenzwerte eingeschlossen, der Kettenführungsabmessung des aufnahmeseitigen Mobilisierungszahns betragen.

Das oben genannte 21-T-Ritzel als ein bevorzugtes ungeradzahliges Ritzel kann drei Schaltbereiche mit jeweils sieben Ritzelzähnen aufweisen. Vorzugsweise sind an diesen Schaltbereichen der Fangzahn und der Abgabezahn die in Umfangsrichtung jeweils äußersten Zähne des Schaltbereichs. Der Fangzahn ist in der Regel entgegen der Antriebsdrehrichtung und der Abgabezahn in Antriebsdrehrichtung der äußerste Zahn des Schaltbereichs. Durch Aneinanderreihung der Schaltbereiche in Umfangsrichtung aneinander liegt dann in Antriebsdrehrichtung dem wenigstens einen Abgabezahn wenigstens ein Fangzahn benachbart. In diesem Fall kann der in Antriebsdrehrichtung äußerste Abgabezahn eines Schaltbereichs gleichzeitig der aufnahmeseitige Mobilisierungszahn des in Antriebsdrehrichtung benachbarten Schaltbereichs und kann der entgegen der Antriebsdrehrichtung äußerste Fangzahn eines Schaltbereichs der abgabeseitige Mobilisierungszahn des entgegen der Antriebsdrehrichtung benachbarten Schaltbereichs sein.

Da das Abgeben einer bereits in Eingriff mit dem Ritzel stehenden Kette nach außen häufig leichter zu erreichen ist als das Fangen einer sich dem Ritzel für einen künftigen Eingriff von außen annähernden Kette, kann zur Erzielung eines wiederholbaren Schalterfolgs mit möglichst geringer Einbuße an axialer Kettenführungsfähigkeit die Kettenführungsabmessung des wenigstens einen Abgabezahns, insbesondere des entgegen der Antriebsdrehrichtung äußersten Abgabezahns seines Hochschaltbereichs, größer sein als die Kettenführungsabmessung des wenigstens einen Fangzahns, insbesondere des in Antriebsdrehrichtung äußersten Fangzahns seines Herunterschaltbereichs. Somit kann für das Fangen der Kette am wenigstens einen Fangzahn deren axiales Bewegungsspiel am wenigstens einen Fangzahn größer sein als am wenigstens einen Abgabezahn. In konkreter Ausgestaltung hat es sich als vorteilhaft erwiesen, wenn die Kettenführungsabmessung des wenigstens einen Abgabezahns, insbesondere des entgegen der Antriebsdrehrichtung äußersten Abgabezahns seines Hochschaltbereichs, das 1,02-Fache bis das 1,15-Fache, vorzugsweise das 1,03-Fache bis das 1,12-Fache, besonders bevorzugt das 1,04-Fache bis das 1,11-Fache, die genannten Grenzwerte eingeschlossen, der Kettenführungsabmessung des wenigstens einen Fangzahns, insbesondere des in Antriebsdrehrichtung äußersten Fangzahns seines Herunterschaltbereichs, beträgt.

Da die Abgabesituation der Kette beim Hochschalten und die Aufnahmesituation der Kette beim Herunterschalten am Ritzel hinsichtlich des axialen Abstands der Kette vom Ritzel längs der Kettenumlaufbahn häufig nicht spiegelbildlich bezüglich einer die Ritzelachse enthaltenden Symmetrieebene ausgebildet sind, kann der axiale Abstand der äußeren Zahnkontaktfläche des abgabeseitigen Stabilisierungszahns von der axialen Bezugsposition nicht kleiner als der axiale Abstand der äußeren Zahnkontaktfläche des aufnahmeseitigen Stabilisierungszahns von der axialen Bezugsposition gewählt sein. Vorzugsweise ist der axiale Abstand der äußeren Zahnkontaktfläche des abgabeseitigen Stabilisierungszahns von der axialen Bezugsposition größer als der axiale Abstand der äußeren Zahnkontaktfläche des aufnahmeseitigen Stabilisierungszahns von der axialen Bezugsposition. Damit kann insbesondere der bevorzugten größeren Kettenführungsabmessung des wenigstens einen Abgabezahns, insbesondere des entgegen der Antriebsdrehrichtung äußersten Abgabezahns seines Hochschaltbereichs, verglichen mit jener des wenigstens einen Fangzahns, insbesondere des in Antriebsdrehrichtung äußersten Fangzahns seines Herunterschaltbereichs, Rechnung getragen werden.

Bevorzugt unterscheidet sich der axiale Abstand der inneren Zahnkontaktfläche des abgabeseitigen Stabilisierungszahns von der axialen Bezugsposition vom axialen Abstand der inneren Zahnkontaktfläche des aufnahmeseitigen Stabilisierungszahns von der axialen Bezugsposition um nicht mehr als 10 %, besonders bevorzugt um nicht mehr als 5 %, jeweils bezogen auf den größeren der beiden Abstände. Am stärksten bevorzugt unterscheiden sich die genannten Abstände nicht voneinander. So kann sichergestellt sein, dass sich die Fähigkeiten der beiden Stabilisierungszähne zur Kettenstabilisierung in dem Schaltbereich, in welchem die Stabilisierungszähne angeordnet sind, nicht allzu sehr unterscheiden. Eine Realisierung von unterschiedlichen axialen Abständen einmal der inneren Zahnkontaktfläche des abgabeseitigen Stabilisierungszahns und ein anderes Mal der inneren Zahnkontaktfläche des aufnahmeseitigen Stabilisierungszahns jeweils von der axialen Bezugsposition dient dazu, jedem Stabilisierungszahn eine maximal mögliche Dicke und damit eine maximal mögliche Verschleißfestigkeit zu verleihen. Die Fähigkeit zur Kettenstabilisierung ist bestimmt durch die Fähigkeit eines Stabilisierungszahns, dem durch andere Ritzelzähne, wie etwa dem wenigstens einen Fangzahn, dem wenigstens einen Abgabezahn oder gegebenenfalls einem oder mehreren Mobilisierungszähnen, der Fahrradkette eingeräumten axialen Bewegungsspiel bei einem herkömmlichen Umlauf der Kette ohne einen Hochschaltvorgang im Bereich der Hochschalt- und der Herunterschalt-Vertiefungsformation entgegenzuwirken. Hierfür ist die axiale Lage der inneren Zahnkontaktfläche ein maßgebliches Kriterium.

Heutige Ritzel werden in der Regel nicht losgelöst von mit ihnen zusammenwirkenden Fahrradketten angeboten. Üblicherweise werden Ritzel bzw.

Ritzelkassetten gemeinsam mit einer passenden Fahrradkette als System konstruiert und angeboten. Dies ist bei räumlich stark verdichteten Hinterrad-Ritzelkassetten mit 10, 11, 12 oder mehr Ritzeln nicht anders möglich, um ein möglichst reibungsloses Funktionieren einer aus dem Ritzel bzw. einer das Ritzel aufweisenden Ritzelkassette und einer mit dem Ritzel bzw. mit der Ritzelkassette zusammenwirkenden Fahrradkette gebildeten Antriebsanordnung sicherzustellen. Daher steht mit der Konstruktion des Ritzels bzw. mit der Konstruktion der das Ritzel aufweisenden Ritzelkassette auch die Konstruktion der zugehörigen Fahrradkette fest. Jeder Fachmann kann für ein gegebenes Ritzel oder eine gegebene das Ritzel aufweisende Ritzelkassette die zugehörige Fahrradkette und deren Abmessungen problemlos ermitteln.

Zur eindeutigen Zuordnung der Fahrrad-Rollenkette hinsichtlich der alternierenden Folge unterschiedlicher Kettengliederarten zu den Ritzelzähnen des Ritzels kann ein geradzahliges Ritzel wenigstens einen Außenlaschen-Ritzelzahn aufweisen, dessen Kettenführungsabmessung größer ist als die lichte Weite eines Innenlaschen-Kettenglieds und kleiner ist als die lichte Weite eines Außenlaschen-Kettenglieds der dem Ritzel zugeordneten Fahrrad-Rollenkette. Dann kann und wird dieser Außenlaschen-Ritzelzahn bei jedem Eingriff mit der Fahrradkette nur in den Eingriffsraum eines Außenlaschen-Kettenglieds eingreifen. Nähert sich diesem Außenlaschen-Ritzelzahn ein Innenlaschen-Kettenglied, in das der Außenlaschen-Ritzelzahn aufgrund seiner Kettenführungsabmessung nicht bzw. nicht vollständig eingreifen kann, kann die Kette über den Kopf des Außenlaschen-Ritzelzahns längs der Kettenumlaufbahn reiten, bis ein Außenlaschen-Kettenglied mit dem Außenlaschen-Ritzelzahn in eine einen Eingriff ermöglichende Relativlage gelangt. Zur Unterstützung dieser Relativorientierungswirkung des Ritzels weist es bevorzugt eine Mehrzahl von Außenlaschen-Ritzelzähnen auf, wobei zwischen jedem Paar von Außenlaschen-Ritzelzähnen eine ungerade Anzahl an Ritzelzähnen angeordnet ist. Zwischen zwei in Umfangsrichtung hintereinander angeordneten Außenlaschen-Ritzelzähnen befindet sich also wenigstens ein Innenlaschen-Ritzelzahn.

Wie oben bereits geschildert, ist dann, wenn das Ritzel ein geradzahliges Ritzel ist, der wenigstens eine, bevorzugt der einzige, Fangzahn eines Herunterschaltbereichs oder/und der wenigstens eine, bevorzugt der einzige, Abgabezahn eines Hochschaltbereichs bevorzugt derart am Ritzel angeordnet, dass aufgrund des wenigstens einen am Ritzel ausgebildeten Außenlaschen-Ritzelzahns und der dadurch bewirkten eindeutigen Relativorientierung der Kette mit ihrer alternierenden Folge an Kettengliederarten relativ zu den Ritzelzähnen der wenigstens eine, bevorzugt der einzige, Fangzahn oder/und der wenigstens eine, bevorzugt der einzige, Abgabezahn zum Eingriff mit Außenlaschen-Kettengliedern angeordnet ist. Bevorzugt ist der abgabeseitige oder/und der aufnahmeseitige Stabilisierungszahn jeweils ein Innenlaschen-Ritzelzahn. Ebenso bevorzugt ist der etwaig vorgesehene abgabeseitige oder/und aufnahmeseitige Mobilisierungszahn jeweils ein Innenlaschen-Ritzelzahn.

Bevorzugt ist das Ritzel Bestandteil einer Ritzelkassette mit einer Mehrzahl von koaxialen Ritzeln mit jeweils unterschiedlicher Zähnezahl, welche als die Ritzelkassette gemeinsam schlupffrei um eine gemeinsame virtuelle Ritzelachse drehbar an einem Fahrrad, insbesondere an einer Hinterradnabe eines Fahrrads, anordenbar sind. Dann, wenn in der Ritzelkassette einem Ritzel außen ein weiteres Ritzel axial benachbart ist, weist das der äußeren Stirnseite des einen Ritzels axial gegenüberliegende weitere Ritzel eine kleinere Zähnezahl auf als das eine Ritzel. Bevorzugt weist die Ritzelkassette mit wenigstens einem wie oben beschrieben ausgebildeten Ritzel insgesamt zehn, elf, zwölf, dreizehn oder vierzehn Ritzel auf. Besonders bevorzugt weist die Ritzelkassette zwölf Ritzel auf. Gemäß einer besonders vorteilhaften Ausführungsform einer solchen Zwölffach-Ritzelkassette weisen kleinere axial unmittelbar benachbarte Ritzel der Zwölffach-Ritzelkassette einen Zähnezahlunterschied von zwei auf, weisen weniger kleine axial unmittelbar benachbarte Ritzel der Zwölffach-Ritzelkassette einen Zähnezahlunterschied von drei auf, weisen größere axial unmittelbar benachbarte Ritzel der Zwölffach-Ritzelkassette einen Zähnezahlunterschied von vier auf und weisen noch größere axial unmittelbar benachbarte Ritzel der Zwölffach-Ritzelkassette einen Zähnezahlunterschied von sechs auf. Das größte Ritzel weist bevorzugt acht Zähne mehr auf als sein axiales Nachbarritzel. Die Zähnezahlen einer bevorzugten Ritzelfolge der Ritzelkassette sind 10-12-14-16-18-21-24-28-32-38-44-52. Bevorzugt ist wenigstens die Hälfte der Ritzel der Ritzelkassette wie oben beschrieben ausgebildet, besonders bevorzugt sind wenigstens zwei Drittel der Ritzel wie oben beschrieben ausgebildet.

Für diese bevorzugte Ritzelkassette haben sich die nachfolgend angegebenen axialen Abstände von äußerer Zahnkontaktfläche eines außerhalb einer an der äußeren Stirnfläche ausgebildeten Vertiefungsformation gelegenen Zahns eines größeren Ritzels zur äußeren Zahnkontaktfläche eines außerhalb einer an der äußeren Stirnfläche ausgebildeten Vertiefungsformation gelegenen Zahns des axial benachbarten nächstkleineren Ritzels als vorteilhaft herausgestellt. Alternativ oder bevorzugt zusätzlich haben sich die folgenden axialen Abstände zwischen den äußeren Stirnflächen axial benachbarter Ritzel als vorteilhaft herausgestellt:
Zwischen dem 52-T-Ritzel und dem 44-T-Ritzel: 3,60 mm bis 3,70 mm, bevorzugt 3,65 mm. Zwischen dem 44-T-Ritzel und dem 38-T-Ritzel: 3,65 mm bis 3,75 mm, bevorzugt 3,70 mm. Zwischen dem 38-T-Ritzel und dem 32-T-Ritzel: 3,60 mm bis 3,70 mm, bevorzugt 3,65 mm. Zwischen dem 32-T-Ritzel und dem 28-T-Ritzel: 3,70 mm bis 3,80 mm, bevorzugt 3,75 mm. Zwischen dem 28-T-Ritzel und dem 24-T-Ritzel: 3,70 mm bis 3,80 mm, bevorzugt 3,75 mm. Zwischen dem 24-T-Ritzel und dem 21-T-Ritzel: 3,85 mm bis 3,95 mm, bevorzugt 3,90 mm. Zwischen dem 21-T-Ritzel und dem 18-T-Ritzel: 3,75 mm bis 3,85 mm, bevorzugt 3,80 mm. Zwischen dem 18-T-Ritzel und dem 16-T-Ritzel: 3,65 mm bis 3,75 mm, bevorzugt 3,70 mm. Zwischen dem 16-T-Ritzel und dem 14-T-Ritzel: 3,65 mm bis 3,75 mm, bevorzugt 3,70 mm. Zwischen dem 14-T-Ritzel und dem 12-T-Ritzel: 3,85 mm bis 3,95 mm, bevorzugt 3,90 mm.

Bevorzugt ist der Abstand zwischen dem 24-T- und dem 21-T-Ritzel der betragsmäßig größte Abstand zwischen benachbarten Ritzeln vom 52-T-Ritzel bis zum 12-T-Ritzel der Kassette. Der Abstand zwischen dem 14-T- und dem 12-T-Ritzel kann betragsmäßig genauso groß sein wie zwischen dem 24-T- und dem 21-T-Ritzel, aber nicht größer.

Der Abstand zwischen dem 21-T-Ritzel und dem 18-T-Ritzel ist bevorzugt der zweitgrößte zwischen benachbarten Ritzeln vom 52-T-Ritzel bis zum 12-T-Ritzel der Kassette.

Bevorzugt weist wenigstens eine Ritzelpaarung aus 44-T/38-T, 18-T/16-T und 16-T/14-T den betragsmäßig drittgrößten Abstand zwischen benachbarten Ritzeln vom 52-T-Ritzel bis zum 12-T-Ritzel auf, wobei besonders bevorzugt die drei genannten Ritzelpaarungen jeweils einen gleichgroßen Abstand aufweisen.

Wenigstens eine Ritzelpaarung aus 52-T/44-T und 38-T/32-T weist den kleinsten Abstand zwischen benachbarten Ritzeln vom 52-T-Ritzel bis zum 12-T-Ritzel auf, wobei besonders bevorzugt die beiden genannten Ritzelpaarungen jeweils einen gleichgroßen Abstand aufweisen.

Zwischen dem 12-T-Ritzel und dem 10-T-Ritzel besteht bevorzugt zwischen der äußeren Zahnkontaktfläche eines außerhalb einer an der äußeren Stirnfläche ausgebildeten Vertiefungsformation gelegenen Ritzelzahns des 12-T-Ritzels zur äußeren Zahnkontaktfläche eines außerhalb einer an der äußeren Stirnfläche ausgebildeten Vertiefungsformation gelegenen Innenlaschen-Ritzelzahns des 10-T-Ritzels ein axialer Abstand von 3,75 mm bis 3,85 mm, bevorzugt 3,80 mm.

Zwischen dem 12-T-Ritzel und dem 10-T-Ritzel besteht bevorzugt zwischen der äußeren Zahnkontaktfläche eines außerhalb einer an der äußeren Stirnfläche ausgebildeten Vertiefungsformation gelegenen Ritzelzahns des 12-T-Ritzels zur äußeren Zahnkontaktfläche eines außerhalb einer an der äußeren Stirnfläche ausgebildeten Vertiefungsformation gelegenen Außenlaschen-Ritzelzahns des 10-T-Ritzels ein axialer Abstand von 4,55 mm bis 4,65 mm, bevorzugt 4,60 mm.

An der Mehrfach-Ritzelkassette sind einander axial benachbarte Ritzel durch Verbindungsmittel miteinander verbunden. Bevorzugt umfassen die Verbindungsmittel Stege, welche ausgehend vom größeren von zwei axial benachbarten Ritzeln nach radial innen und nach axial außen vorstehen. In einer die Ritzelachse enthaltenden Schnittebene weisen derartige Stege einen grobschematisch L-förmigen Querschnitt auf. Bevorzugt sind die Stege einstückig mit dem axial benachbarten kleineren Ritzel ausgebildet, beispielsweise durch spanende Bearbeitung aus dem Vollen. Es soll jedoch nicht ausgeschlossen sein, dass der Steg nur nach radial innen verläuft und der axiale Abstand zwischen dem benachbarten nächstkleineren Ritzel und dem Steg durch einen Niet oder durch ein ähnliches Verbindungsmittel überbrückt wird, welches gleichzeitig die mechanische Verbindung zwischen den beiden axial benachbarten Ritzel herstellt.

Dabei kann vorgesehen sein, dass ab einem bestimmten Ritzel nach axial innen zu größeren Ritzeln hin axial benachbarte Ritzel durch weniger Stege miteinander verbunden sind als jedes einzelne der beiden miteinander verbundenen benachbarten Ritzel Zähne aufweist. Bei größeren geradzahligen Ritzeln ist es vorteilhaft, wenn ein Steg als Verbindungsmittel nur an jedem zweiten Zahn des kleineren der axial benachbarten Ritzel ausgebildet ist. Dann mündet eine körperliche Verbindung des größeren Ritzels am kleineren Ritzel in den Ritzelgrundkörper an einer Stelle, an welcher sich am kleineren Ritzel ein Zahn befindet, auf den die Kette im Eingriff mit dem kleineren Ritzel Kraft überträgt.

Ist das kleinere von zwei axial benachbarten Ritzeln ein ungeradzahliges Ritzel, dann mündet bevorzugt am Umfangsort eines jeden Zahns des kleineren Ritzels ein Verbindungssteg in den Ritzelgrundkörper des kleineren Ritzels.

Am Beispiel der oben bevorzugt genannten Zwölffach-Ritzelkassette sind bevorzugt die drei größten Ritzel als Einzelritzel ausgebildet und durch Niete oder andere Verbindungsmittel miteinander oder/und mit dem größten Ritzel verbunden. Die restlichen neun Ritzel sind bevorzugt einstückig als Ritzeldom ausgebildet. Von diesen sind das zweitgrößte Ritzel des Ritzeldoms mit dem größten und ist das drittgrößte Ritzel des Ritzeldoms mit dem zweitgrößten jeweils über Verbindungsstege einstückig verbunden, wobei jeweils nur halb so viele Stege ausgebildet sind, wie das kleinere der beiden unmittelbar miteinander verbundenen Ritzel Zähne aufweist. Dabei mündet jeder Steg in den Ritzelgrundkörper des jeweils kleineren axial benachbarten Ritzels an einem Umfangsort, an welchem das kleinere Ritzel einen Zahn aufweist.

Die einstückige Verbindung des drittgrößten Ritzels des Ritzeldoms mit dem viertgrößten und jede weitere Verbindung eines Ritzels mit dem axial benachbarten nächstkleineren Ritzel ist bevorzugt wenigstens bis zum siebtgrößten Ritzel derart ausgeführt, dass ein Verbindungssteg an jedem Umfangsort eines Zahns des kleineren Ritzels in dessen Ritzelgrundkörper mündet. Am Beispiel der Zwölffach-Ritzelkassette ist das größte Ritzel des einstückigen Ritzeldoms das viertgrößte Ritzel der Ritzelkassette und ist das siebtgrößte Ritzel des Ritzeldoms das zehntgrößte Ritzel bzw. das drittkleinste Ritzel der Ritzelkassette.

Die beiden kleinsten Ritzel der Ritzelkassette und des Ritzeldoms können topfartig ohne Durchbrechungen oder zur Verringerung des Kassettengewichts mit einer Mehrzahl von Durchbrechungen, etwa einer Durchbrechung an jedem zweiten Zahn, einstückig mit der übrigen Ritzelkassette verbunden sein. Bevorzugt ist das zweitkleinste Ritzel mit einer Durchbrechung an jedem zweiten Zahn in einer ansonsten massiven topfförmigen Konstruktion mit dem drittkleinsten Ritzel einstückig verbunden und ebenso bevorzugt ist das kleinste Ritzel über eine massive topfförmige Konstruktion mit dem zweitkleinsten Ritzel einstückig verbunden.

Ein derartiger Ritzeldom stellt ausreichend mechanische Festigkeit zur Übertragung der im Fahrbetrieb auftretenden Kräfte und Drehmomente bei gleichzeitig möglichst geringem Gewicht bereit.

Dort, wo ein Verbindungssteg nur an dem Umfangsort eines jeden zweiten Zahns des kleineren Ritzels mündet, ist die mechanische Festigkeit der so verbundenen Ritzelpaarung kleiner als wenn ein Verbindungssteg am Umfangsort eines jeden Zahns in den Ritzelgrundkörper des kleineren Ritzels münden würde. Dies kann das kleinere Ritzel im Umfangsbereich seiner Hochschalt- oder/und der Herunterschalt-Vertiefungsformationen aufgrund der dort verringerten Materialstärke in seiner Steifigkeit und Festigkeit unerwünscht schwächen.

Zum Ausgleich für eine solche Schwächung an einem kleineren Ritzel kann dort, wo eine Vertiefungsformation sich in dem Bereich zwischen zwei Verbindungsstegen zur Verbindung mit dem axial benachbarten nächst größeren Ritzel erstreckt, am Ritzelgrundkörper ein in Umfangsrichtung verlaufender Axialvorsprung ausgebildet sein, welcher bevorzugt über wenigstens drei Viertel, besonders bevorzugt über den gesamten Abstand zweier in den ihn ausbildenden Ritzelgrundkörper einmündender Verbindungsstege hinweg verläuft. Bevorzugt kragt der Axialvorsprung axial 80 bis 120 % der Kettenführungsabmessung eines im Bereich einer Vertiefungsformation im Umfangsbereich zwischen zwei Verbindungsstegen angeordneten Zahns vom Ritzelgrundkörper in Richtung zum axial benachbarten nächst größeren Ritzel aus, mit dem die Verbindungsstege das betrachtete kleinere Ritzel einstückig verbinden.

Grundsätzlich kann auch an Umfangsbereichen ohne Vertiefungsformation ein solcher Axialvorsprung zur Aussteifung eines Ritzels ausgebildet sein. Bevorzugt sind an Umfangsbereichen ohne Vertiefungsformation jedoch keine aussteifenden Axialvorsprünge ausgebildet, da dort in der Regel der Ritzelgrundkörper ausreichend dick und damit ausreichend fest und steifer ausgebildet ist.

Die vorliegende Erfindung betrifft auch eine Antriebsanordnung, umfassend ein Fahrrad-Ritzel, wie es oben beschrieben und weitergebildet ist, insbesondere eine vorstehend beschriebene Ritzelkassette mit wenigstens einem wie oben beschrieben ausgebildeten Ritzel, und eine Fahrrad-Rollenkette, wobei die Fahrrad-Rollenkette längs ihrer Umlaufbahn alternierend Innenlaschen-Kettenglieder, mit einer geringeren lichten Weite zwischen ihren parallelen Innenlaschen, und Außenlaschen-Kettenglieder, mit einer größeren lichten Weite zwischen ihren parallelen Außenlaschen, aufweist.

Zur Erleichterung eines Schaltvorgangs kann an einem um eine Ritzelachse drehbaren Ritzel - und zwar unabhängig davon, ob es, wie es bevorzugt ist, gemäß der obigen Beschreibung ausgebildet ist oder lediglich einen Ritzelgrundkörper mit davon nach radial außen abstehenden Ritzelzähnen aufweist - ein Zahnzwischenraum zwischen zwei in Umfangsrichtung aufeinander folgenden Zähnen sich radial nach weiter innen erstrecken als die Mehrheit der Zahnzwischenräume, deren der Ritzelachse radial nächstgelegener Ort ihres jeweiligen Zahngrunds den Fußkreis des Ritzels definiert. Dadurch kann auch bei der gewünscht kurzen Übergangsstrecke zwischen dem bei einem Schaltvorgang die Kette abgebenden und dem die Kette aufnehmenden Ritzel eine Schaltbedingung eingehalten werden, wonach zwischen dem Abgabezahn des abgebenden Ritzels und dem Fangzahn des aufnehmenden Ritzels ein Kettenabschnitt mit der Länge eines ganzzahligen Vielfaches der Kettenteilung verlaufen muss.

Ein derartiger Schalt-Zahnzwischenraum, dessen den Zahnzwischenraum begrenzende Rollenanlagefläche den Fußkreis des Ritzels nach radial innen unterschreitet, kann beim herkömmlichen Eingriff des Ritzels mit der Kette ohne Schaltvorgang zu Problemen, wie Geräuschentwicklung oder/und verstärktem Verschleiß, führen.

Um im herkömmlichen Eingriff des Ritzels mit der Kette die genannten unerwünschten Effekte zu vermeiden, kann im Bereich der lasttragenden Flanke des den Schalt-Zahnzwischenraum in Antriebsdrehrichtung des Ritzels und damit in Antriebsumlaufrichtung der Kette begrenzenden Zahns eine Hilfsflankenformation mit einer konkaven Teil-Rollenanlagefläche ausgebildet sein, welche an der entgegen die Antriebsdrehrichtung des Ritzels weisenden Seite des den Schalt-Zahnzwischenraum in Antriebsdrehrichtung begrenzenden Zahns in den Schalt-Zahnzwischenraum hinein vorsteht.

Bevorzugt steht die Hilfsflankenformation unter Bildung eines Scheitelabschnitts in den Schalt-Zahnzwischenraum hinein vor. Vom Zahnkopf oder einem dem Zahnkopf näher gelegenen Bereich verläuft eine radial äußere Antriebs-Rollenanlagefläche an der lasttragenden Zahnflanke nach radial innen in Richtung zur Ritzelachse und in Umfangsrichtung entgegen der Antriebsdrehrichtung zum Scheitelabschnitt. Bevorzugt verläuft vom Scheitelabschnitt nach radial innen und ebenso in Umfangsrichtung entgegen der Antriebsdrehrichtung eine Schalt-Rollenanlagefläche zum Zahngrund im Bereich der Umfangsmitte des Schalt-Zahnzwischenraums. Zur Vermeidung von scharfen Kanten und Sprüngen schmiegt sich die Schalt-Rollenanlagefläche an ihrem der Umfangsmitte des Schalt-Zahnzwischenraums näher gelegenen Endbereich bevorzugt in die Fläche des Zahngrunds ein.

Während eines Schaltvorgangs kann dann eine Rolle der Fahrradkette an der radial weiter innen gelegenen Schalt-Rollenanlagefläche anliegen, so dass die oben geschilderte Schaltbedingung gut erfüllt ist. Während eines herkömmlichen Eingriffsbetriebs ohne Schaltvorgang kann dagegen die Rolle der Fahrradkette an der radial weiter außen gelegenen Antriebs-Rollenanlagefläche anliegen, so dass die Rollenachsen aller in Zahnzwischenräumen des Ritzels angeordneten Rollen der Fahrradkette auf einer Teilkreisbahn um die Ritzelachse angeordnet sind, und zwar selbst dann, wenn der vereinzelt ausgebildete Schalt-Zahnzwischenraum eigentlich radialen Bewegungsraum nach radial innen bereitstellt. Der Scheitelabschnitt bildet dabei eine Art Scheidenase, welche eine in Anlage an die lasttragende Flanke des betreffenden Zahns gelangende Rolle aufgrund der Kettenspannung im Last- bzw. Zugtrum der Kette wenigstens in Richtung nach radial innen nicht überwinden kann. Ist die Rolle in Anlage an der Antriebs-Rollenanlagefläche, bleibt sie in Anlage an dieser.

Der Scheitelabschnitt, der bevorzugt ein zur Ritzelachse paralleler Linienabschnitt ist, der aber auch durch eine, insbesondere konvexe, Scheitelfläche gebildet sein kann, befindet sich bevorzugt in radialer Richtung näher bei der Radialkoordinate des Zahngrunds des Schalt-Zahnzwischenraums als bei der Radialkoordinate des Zahnkopfs des den Schalt-Zahnzwischenraum in Antriebsdrehrichtung begrenzenden Zahns. Bezogen auf den radialen Abstand des Zahnkopfes des den Schalt-Zahnzwischenraum in Antriebsdrehrichtung begrenzenden Zahns vom Zahngrund des Schalt-Zahnzwischenraums befindet sich der Scheitelabschnitt bevorzugt wenigstens 10 %, besonders bevorzugt wenigstens 15 % und noch stärker bevorzugt wenigstens 19 % dieses Abstands vom Zahngrund entfernt. Gleichzeitig befindet sich der Scheitelabschnitt bevorzugt nicht mehr als 45 %, besonders bevorzugt nicht mehr als 40 % und noch stärker bevorzugt nicht mehr als 35 % dieses Abstands vom Zahngrund entfernt.

Bevorzugt erstreckt sich die Hilfsflankenformation nicht über die gesamte axiale Breite der lasttragenden Flanke des den Schalt-Zahnzwischenraum in Antriebsdrehrichtung des Ritzels begrenzenden Zahns. Dadurch kann Platz zur Aufnahme einer Kettenlasche geschaffen werden, welche die während eines Schaltvorgangs an der Schalt-Rollenanlagefläche anliegende Kettenrolle trägt. Daher ist die Hilfsflankenformation bevorzugt näher bei der inneren Zahnkontaktfläche des den Schalt-Zahnzwischenraum in Antriebsdrehrichtung des Ritzels begrenzenden Zahns gelegen als bei dessen äußerer Zahnkontaktfläche. Bevorzugt verläuft die Hilfsflankenformation ausgehend von der inneren Zahnkontaktfläche axial in Richtung zur äußeren Zahnkontaktfläche hin.

Aufgrund der Funktion des Schalt-Zahnzwischenraums ist der die Hilfsflankenformation tragende Zahn ein dem wenigstens einen, bevorzugt dem einzigen Fangzahn seines Herunterschaltbereichs, in Antriebsdrehrichtung unmittelbar vorauseilender Zahn, insbesondere ein aufnahmeseitiger Stabilisierungszahn.

Wenngleich oben auf eine spanende Fertigung eines Ritzels oder einer Ritzelanordnung, wie etwa eines Ritzeldoms oder einer Ritzelkassette, hingewiesen wurde, ist dies nicht das einzig anwendbare Fertigungsverfahren. Ein Ritzel, welches gemäß der vorstehend beschriebenen technischen Lehre ausgestaltet ist, kann alternativ oder zusätzlich zu spanender Bearbeitung spanlos umformend hergestellt sein, beispielsweise durch Stanzen und anschließendes Biegen oder/und Prägen oder/und Tiefziehen bzw. durch ein kombiniertes Stanz-Prägeverfahren, gegebenenfalls in Kombination mit einem Tiefziehverfahren.

Ein Vorteil einer spanlos umformenden Herstellung eines Ritzels, nachfolgend auch nur kurz als "Umformen" bezeichnet, und damit auch mehrerer oder besonders bevorzugt aller Ritzel einer Ritzelanordnung liegt in der dadurch begründeten Möglichkeit einer weiteren Gewichtseinsparung. Durch umformende Herstellung eines Ritzels kann nämlich ein Grundmaterial-Rohling, etwa ein Metallblech-Rohling bzw. eine Metallblechscheibe, verwendet werden, welcher dünner als die maximal benötigte oder auch die minimal benötigte Kettenführungsabmessung ist. Denn es ist möglich, bei der umformenden Herstellung des Ritzels Material in Dickenrichtung des Metallblech-Rohlings zu verlagern. Dadurch kann beispielsweise ein Flächenbereich in einer in Dickenrichtung weisenden Außenfläche eines späteren Ritzelzahns in Dickenrichtung in Richtung von der Außenfläche weg verlagert werden. Dadurch entsteht in der genannten Außenfläche eine Vertiefung und in der gegenüberliegenden Außenfläche, aufgrund der Materialverlagerung, ein Vorsprung. Damit wird an keiner Stelle des Zahns eine Materialverdickung erreicht. Dennoch kann die Kettenführungsabmessung, wie sie oben definiert ist, über die Dicke des Rohmaterials hinaus vergrößert werden. Denn auf der einen Seite des Zahns bildet der die erzeugte Vertiefung umgebende Flächenbereich die Zahnkontaktfläche und auf der gegenüberliegenden Seite des Zahns bildet die axiale Außenfläche des erzeugten Vorsprungs die Zahnkontaktfläche. Bei Betrachtung einer axialen Projektion des umgeformten Zahns überlappen sich die beiden Zahnkontaktflächen auf den unterschiedlichen axialen Außenseiten des Zahns bevorzugt nicht, können jedoch ausgehend von der Dicke des Metall- bzw. Grundmaterial-Rohlings, also Ritzelrohlings, im Rahmen der Dehn- und Streckgrenzen des Grundmaterials einen Zahn mit größerer Kettenführungsabmessung als der Dicke des Grundmaterials bilden.

Diese durch Umformen erzielbare Kettenführungsabmessung, welche größer als die Dicke des Grundmaterials ist, wird vorteilhaft in einer bevorzugten Ausführungsform nicht nur zur Bildung der oben beschriebenen Außenlaschen-Ritzelzähne, sondern auch zur Bildung von Innenlaschen-Ritzelzähnen angewendet. Dies ist vor allem von Bedeutung für ungeradzahlige Ritzel, welche aufgrund der oben geschilderten Betriebssituation nur Innenlaschen-Ritzelzähne aufweisen können. Auch diese ungeradzahligen Ritzel können daher aus einem Grundmaterial-Rohling gebildet sein, dessen Dickenabmessung gleich groß ist wie oder kleiner ist als die Kettenführungsabmessung wenigstens einiger seiner Ritzelzähne. Folglich können auch ungeradzahlige Ritzel mit einem die Dicke des Grundmaterial-Rohlings wenigstens abschnittsweise aufweisenden Ritzelgrundkörper innerhalb des Fußkreises des ungeradzahligen Ritzels ausgebildet sein, welcher keine größere oder sogar eine geringere Dickenabmessung aufweist als die Kettenführungsabmessung wenigstens einiger seiner Ritzelzähne.

Somit kann die von der Anmelderin unter den Markennamen "T-Sync^{™}" und "X-Sync^{™}" verwendete Technologie zur Synchronisierung des Eingriffs von Ritzelzähnen an geradzahligen Ritzeln mit stets gleichartigen Kettengliedern:
Innenlaschen- oder Außenlaschen-Kettengliedern, ohne Einschränkung auch an Ritzeln eingesetzt werden, welche durch spanloses Umformen, insbesondere nur durch spanloses Umformen, hergestellt sind. Gemäß den genannten Technologien "T-Sync^{™}" und "X-Sync^{™}" wird jeder zweite Zahn eines geradzahligen Ritzels mit einer Kettenführungsabmessung ausgebildet, welche einen Eingriff des Zahns in einen Zwischenraum zwischen zwei Außenlaschen eines Außenlaschen-Kettenglieds gestattet, welche jedoch größer ist als die lichte Weite zwischen zwei Innenlaschen eines Innenlaschen-Kettenglieds. Bei der Technologie "T-Sync^{™}" wird an den Außenlaschen-Ritzelzähnen die zusätzliche Kettenführungsabmessung ausschließlich auf einer Seite, in der Regel auf der zur vertikalen Längsmittelebene des die Ritzel tragenden Fahrrads hinweisenden Innenseite, erzielt. Bei der Technologie "X-Sync^{™}" weisen die Außenlaschen-Ritzelzähne, verglichen mit den Innenlaschen-Ritzelzähnen geringerer Kettenführungsabmessung, sowohl auf der Außen- als auch auf der Innenseite axiale Vorsprünge auf, um die höhere Kettenführungsabmessung bezüglich der Innenlaschen-Ritzelzähnen zu erzielen.

Die Ausgestaltung eines Ritzels, insbesondere eines ungeradzahligen Ritzels, mit einem Ritzelgrundkörper, dessen Dicke nicht größer oder sogar geringer ist als die Kettenführungsabmessung wenigstens von einigen, am ungeradzahligen Ritzel bevorzugt von allen, Ritzelzähnen, ermöglicht einen zusätzlichen Spielraum in der axialen Anordnung eines solchen Ritzels innerhalb einer Mehrzahl von Ritzeln, wie einer Ritzelkassette. So kann das Ritzel durch Verwendung von axialen Abstandselementen abhängig von der axialen Dicke der Abstandselemente innerhalb der Ritzelkassette in einem axialen Bereich angeordnet werden, welcher in axialer Richtung eine größere Abmessung aufweist als die Dicke des Ritzelgrundkörpers. Dies ermöglicht oder erleichtert die Anordnung von Ritzeln mit unterschiedlichen axialen Abständen zwischen äußeren Zahnkontaktflächen außerhalb von Vertiefungsbereichen gelegener Ritzelzähne bzw. von vertiefungsfreien äußeren axialen Stirnflächen axial benachbarter Ritzeln. Diese vertiefungsfreien äußeren axialen Stirnflächen der Ritzel sind in der Regel wenigstens radial innerhalb des jeweiligen Fußkreises eines Ritzels gelegen. Es soll jedoch nicht ausgeschlossen sein, dass sich eine vertiefungsfreie äußere axiale Stirnfläche eines Ritzels bis in einen Zahn, gegebenenfalls sogar bis zum Zahnkopf erstreckt.

Da der Ritzelgrundkörper von spanlos umgeformten Ritzeln im Wesentlichen eine einheitliche Dicke aufweist, welche jener des Ritzelrohlings entspricht, ist auch an spanlos umgeformten Ritzeln die Frage der Bauteilsteifigkeit der häufig als radial innen materiallose Ritzelringe ausgebildeten Ritzel von großer Bedeutung. Zusätzlich oder, und das ist vorliegend bevorzugt, alternativ zu der oben geschilderten lokalen Aussteifung durch einen Axialvorsprung kann ein Ritzel, insbesondere ein spanlos umgeformtes Ritzel, aber grundsätzlich auch ein spanend gefertigtes Ritzel, durch Ausbilden lokaler Radialvorsprünge bzw. lokaler radialer Verdickungen am Ritzel lokal ausgesteift werden. Der Vorteil einer lokalen radialen Aussteifung durch eine lokale radiale Verdickung liegt darin, dass das Ritzel nach wie vor aus einem verhältnismäßig dünnen Ritzelrohling hergestellt werden kann, ohne an Steifigkeit einzubüßen und ohne axiale Vorsprünge auszubilden. Die Stirnseiten der Ritzelgrundkörper können somit eben sein.

Grundsätzlich besteht die Möglichkeit, durch derartige radiale Verdickungen axiale Materialausnehmungen oder Materialverdrängungen an den Stirnseiten von Ritzeln auszugleichen. Dies bedeutet, dass dort, wo das Ritzel durch Ausbildung stirnseitiger Vertiefungen in Hochschalt- und Herunterschaltbereichen axial dünner ausgebildet ist und dadurch lokal an Bauteilsteifigkeit einbüßt, diese Steifigkeitseinbuße durch eine radiale Materialanhäufung ausgeglichen werden kann. Die radiale Materialanhäufung erfolgt bevorzugt am Ritzelgrundkörper nach radial innen zur Ritzelachse hin, um durch die radiale Materialanhäufung die definierte Zahngeometrie nicht zu stören.

Abseits von axialen Materialausnehmungen und Materialverdrängungen, wie etwa den genannten Vertiefungen in den Schaltbereichen, kann eine lokale radiale Materialanhäufung bzw. Verdickung, ebenso wie der oben genannte lokal aussteifende Axialvorsprung, auch an Umfangsabschnitten angeordnet bzw. ausgebildet sein, welche zumindest radial innerhalb des Fußkreises keinerlei axiale Vertiefung aufweisen. Dabei kann beispielsweise ein Umfangsbereich in unmittelbarer Umfangsnähe oder/und im Umfangserstreckungsbereich eines wenigstens bei einem Schaltvorgang mechanisch höher als reguläre Zähne belasteten Schaltfunktionszahns, wie beispielsweise Fangzahn, Abgabezahn, Mobilisierungszahn oder/und Stabilisierungszahn mit einer radialen Verdickung ausgebildet sein. Die radiale Verdickung des Ritzelgrundkörpers, insbesondere radial innerhalb des Fußkreises eines Ritzels, ist dabei im Zweifel im Vergleich zu der radialen Dicke desselben Ritzelgrundkörpers im Umfangserstreckungsbereich bzw. in unmittelbarer Umfangsnähe zu einem regulären Zahn ohne besondere Schaltfunktion festzustellen.

Als unmittelbare Umfangsnähe eines Zahns gilt der einem Zahn in Umfangsrichtung beiderseits benachbarte Zahnzwischenraum.

Die lokale radiale Verdickung zur lokalen Aussteifung eines Ritzels ist bevorzugt in Umfangsrichtung mit Abstand von einer Verbindungsformation, wie einem im bestimmungsgemäßen Betrieb des Ritzels von einem Verbindungsstift oder Verbindungsniet durchsetzten Verbindungsloch angeordnet. Die Ausbildung eines Verbindungslochs oder auch eines Verbindungstifts oder Verbindungsstegs radial innerhalb des Fußkreises eines Ritzels erfordert stets ausreichend Material des Ritzelgrundkörpers, um die Verbindungsformation ausbilden zu können. Die vorliegend diskutierte lokale radiale Verdickung befindet sich bevorzugt in einem Umfangsabstand von einer Verbindungsformation, insbesondere einem Verbindungsloch, welcher größer ist als der Durchmesser des Verbindungsloches selbst. Dann kann die lokale radiale Verdickung als technisch von der Verbindungsformation unabhängige singuläre lokale Aussteifung angesehen werden.

An einem Ritzel ist bevorzugt an einer Mehrzahl von Ritzelzähnen, besonders bevorzugt auf mehr als 70 % der Ritzelzähne, noch stärker bevorzugt an jedem Ritzelzahn, eine Zahnkontaktfläche auf wenigstens einer Seite, besonders bevorzugt auf beiden Seiten durch spanloses Umformen, noch stärker bevorzugt nur durch spanloses Umformen, eines Zahnabschnitts und dadurch Verlagern seiner Außenfläche in axiale Richtung gebildet. Die axiale Verlagerung der Außenfläche kann dabei eine Verlagerung der Außenfläche als eine Art überstehende Auskragung axial von einer Stirnfläche des Ritzels und von dem die Stirnfläche tragenden Ritzelgrundkörper weg oder als eine Art vertiefende Einprägung in den Ritzelgrundkörper hinein bzw. in Richtung auf den Ritzelgrundkörper zu sein. Dies gilt grundsätzlich für geradzahlige und ungeradzahlige Ritzel, besonders jedoch für ungeradzahlige Ritzel.

Da in der Regel gewünscht ist, eine möglichst gute Kettenführung bereits zu einem möglichst frühen Zeitpunkt des Eingriffs eines Zahns mit der Fahrradkette zu erreichen, weisen in der Regel an wenigstens einer Mehrzahl von Ritzelzähnen die durch Umformung erzeugte Vertiefung auf einer axialen Seite des Ritzels bzw. des Zahns, bevorzugt auf der Außenseite, und der auf der entgegengesetzten axialen Seite des Ritzels bzw. des Zahns, bevorzugt auf der Innenseite, erzeugte Vorsprung eine größere Abmessung in radialer Richtung als in Umfangsrichtung auf. So kann bereits bei unvollständigem Eintauchen des Ritzelzahns in den Eingriffsraum eines Kettenglieds das axiale Bewegungsspiel der Fahrradkette gering gehalten und damit die Kette axial geführt werden.

Es kann zur Stabilisierung der Fahrradkette im Fahrbetrieb vorteilhaft sein, eine Rampe an manchen Zähnen, wie etwa an wenigstens einem Abgabezahn oder/und an wenigstens einem Fangzahn auszubilden. Ebenso kann es zur Erzielung einer noch stärker stabilisierenden Wirkung besonders bevorzugt sein, an einem Mobilisierungszahn, welcher einem mit einer Rampe versehenen Abgabezahn benachbart ist oder/und an einem Mobilisierungszahn, welcher einem mit einer Rampe versehenen Fangzahn benachbart ist, ebenfalls eine Rampe vorzusehen.

Eine solche stabilisierende Rampe bildet eine radiale und axiale Stufe auf der vom jeweiligen nächstkleineren Ritzel wegweisenden, also inneren Zahnfläche des die Rampe aufweisenden Zahns. Eine solche stabilisierende Rampe bildet eine nach radial außen, also von der Ritzelachse weg weisende Rampenfläche aus, auf welcher sich nach radial innen weisende Randflächen der Fahrradkette abstützen können. Die in axiale Richtung, also nach axial innen zum nächst größeren benachbarten Ritzel, weisende Außenfläche der Rampe kann Zahnkontaktfläche sein, die beim vollständigen Zahneingriff mit der Kette wirksam ist. Dann verhält sich der mit der Rampe versehene Zahn im herkömmlichen Antriebsbetrieb ohne Schaltvorgang hinsichtlich der axialen Kettenführung wie ein rampenfreier Zahn. Die in radiale Richtung nach außen weisende Rampenfläche kann bei einem an dem jeweiligen Ritzel beginnenden oder endenden Eingriff mit der Fahrradkette als Aufreitfläche für die Kette wirksam sein. Die nach radial außen weisende Rampenfläche dient genauer beim Hochschalten oder Herunterschalten der Kette als Aufreitfläche für innere, also näher bei der vertikalen Längsmittelebene des das Ritzel tragenden Fahrrads gelegene, Laschen von Kettengliedern der Fahrradkette. Durch die nach radial außen weisende Rampenfläche kann die Fahrradkette bei einem Hochschaltvorgang möglichst optimal radial positioniert werden, um so die für ein sanftes Hochschalten hilfreiche Tangentialbedingung möglichst gut einzuhalten. Je nach den an einer konkreten Ritzelpaarung herrschenden konstruktiven Abmessungsverhältnissen kann durch Ausbildung der nach radial außen weisenden Rampenfläche an einem für den jeweiligen Hochschaltbereich passenden radialen Ort das Hochschaltverhalten individuell optimiert sein. In gleicher Weise kann durch die nach radial außen weisende Rampenfläche die Fahrradkette bei einem Herunterschaltvorgang möglichst optimal radial positioniert werden, um so die für ein sanftes Herunterschalten hilfreiche Tangentialbedingung möglichst gut einzuhalten. Je nach den an einer konkreten Ritzelpaarung herrschenden konstruktiven Abmessungsverhältnissen kann durch Ausbildung der nach radial außen weisenden Rampenfläche an einem für den jeweiligen Herunterschaltbereich passenden radialen Ort das Herunterschaltverhalten individuell optimiert sein.

Durch derartige Rampen wird die Kette in besonderer Weise beim kämmenden Eingriff mit dem größten Ritzel stabilisiert.

Beim Rückwärtstreten unter Ausnutzung des üblicherweise vorhandenen Freilaufs an der Hinterradnabe kann unter gewissen Umständen der Schräglauf der Kette destabilisierend auf den kämmenden Eingriff des Ritzels mit der Fahrradkette wirken. Dabei kann es insbesondere in den Bereichen der frontseitigen Stirnfläche, in welchen eine Hochschalt- oder Herunterschalt-Vertiefungsformation angeordnet ist, zum unerwünschten Abspringen der Kette bzw. unerwünschten Kettenüberlauf auf das nächstkleinere Ritzel kommen.

Da somit an größeren Ritzeln, etwa an den größeren 40 % der Ritzel einer Ritzelkassette, besonders die Abgabezähne und die ihnen etwaig benachbarten Mobilisierungszähne aufgrund ihrer Ausgestaltung ein Umlegen der Kette zum nächstkleineren Ritzel hin, zu welchem der Schräglauf wirkt, unterstützen, ist bevorzugt dort eine Rampe ausgebildet. In besonderem Maß betrifft das Problem des Kettenschräglaufs beim Rückwärtstreten die schaltrelevanten Zähne eines Herunterschaltbereichs. Daher sind bevorzugt am Fangzahn und an dessen Mobilisierungszahn Rampen ausgebildet, um die Kette zu stabilisieren. Die beschriebene Rampe wirkt insbesondere stabilisierend, da sie dafür sorgt, dass der betroffene Zahn nicht über seine gesamte Zahnhöhe axial mit geringerer Dicke ausgebildet ist, sondern nur im radial äußersten Abschnitt vom Zahnkopf bis zur radial nach außen weisenden Rampenfläche. Die radial innerhalb derselben angeordnete nach axial innen weisende Rampenfläche des betroffenen Zahns kann in der oben beschriebenen Weise während eines schaltungsfreien Ketteneingriffs die Kette aufgrund seiner im Vergleich zu den übrigen Zähnen desselben Ritzels, welche zum Eingriff mit gleichartigen Kettengliedern ausgebildet sind, unveränderten Kettenführungsabmessung axial genau führen.

Die genannte wenigstens eine Rampe hält nicht nur die Kette selbst im Falle eines sehr ungünstigen Wirkens des Kettenschräglaufs zum vorderen Kettenblatt am Ritzel, sondern unterstützt auch das Schalten der Kette herunter auf das größere, insbesondere auf das größte, Ritzel bzw. hoch vom größeren, insbesondere größten, Ritzel auf das nächstkleinere Ritzel. Die wenigstens eine Rampe, bevorzugt die Mehrzahl von Rampen, schafft nämlich die Möglichkeit, dass die Kette stabil und mit körperlicher Führung auch in einer radial weiter außen gelegenen Position am Ritzel in den schaltrelevanten Bereichen: Hochschaltbereich und Herunterschaltbereich, eines Ritzels gehalten werden kann, als dies bei einem herkömmlichen Zahneingriff eines Zahns ohne derartige Rampe der Fall wäre, bei welchem der rampenfreie Zahn, wie etwa Fangzahn, Abgabezahn oder ein ihnen jeweils benachbarter Mobilisierungszahn, radial vollständig in die Zwischenräume der Kettenglieder eingreift.

Somit stabilisieren die genannten Rampen die Kette gegen den in der Regel unvermeidlichen Kettenschräglauf zum vorderen Kettenblatt, wenn die Kettenführungsrolle des Umwerfers zum Halten der Kette auf dem größeren Ritzel komplanar mit dem Ritzel ausgerichtet ist und der Kettenschräglauf gegen ein Halten der Kette am Ritzel wirkt. Weiter unterstützen die Rampen ein Umlegen der Kette, wenn die Kettenführungsrolle des Umwerfers mit dem zukünftig kettenführenden Ritzel komplanar ausgerichtet ist, während die Kette noch auf dem aktuell kettenführenden Ritzel in Eingriff ist.

Die genannten Rampen können auch an kleineren Ritzeln als dem größten Ritzel ausgebildet sein, solange der Kettenschräglauf am Ritzel eine Wirkkomponente nach außen aufweist. Die Rampen sind bevorzugt jeweils auf der vom nächstkleineren Ritzel wegweisenden Seite des jeweiligen Ritzels ausgebildet. Da jedoch der Kettenschräglauf zu den mittelgroßen Ritzeln einer Ritzelkassette hin betragsmäßig abnimmt, sind die Rampen besonders bevorzugt an den zwei, drei oder vier größten Ritzeln ausgebildet, welche zwischen der Kettenlinie und der FahrradLängsmittelebene gelegen sind.

Auch eine zuvor beschriebene Rampe kann vorteilhaft durch Umformen ausgebildet werden. Wiederum kann Material eines Zahnbereichs hierzu umformend lokal in Dickenrichtung des Zahns verschoben werden, bevorzugt von der Außenseite zur Innenseite, auf der die Rampe ausgebildet werden soll. Auch durch diese lokale Materialverlagerung kann auf der Außenseite eines rampentragenden Zahns lokal eine Vertiefung und auf der entgegengesetzten Innenseite ein Vorsprung gebildet werden. Der Vorsprung stellt mit seiner axialen Außenfläche als einer Zahnkontaktfläche eine Kettenführungsabmessung bereit und mit seiner nach radial außen weisenden Fläche die oben genannte Rampenfläche.

Im Gegensatz zu herkömmlichen Zähnen sind an mit Rampen versehenen Zähnen die Vertiefung auf der Außenseite und der Vorsprung auf der Innenseite bevorzugt in radialer Richtung mit einer kürzeren Abmessung ausgebildet als in Umfangsrichtung.

Die umformende Herstellung von Ritzeln, insbesondere mit Grundmaterial, dessen Dicke gleich oder geringer ist als die durch Umformen an den Ritzelzähnen erzielte Kettenführungsabmessung, ermöglicht außerdem die Verlagerung von äußeren Zahnkontaktflächen nach außen über eine äußere Stirnfläche des Ritzels hinaus und ermöglicht eine Verlagerung von inneren Zahnkontaktflächen nach innen über eine innere Stirnfläche des Ritzels hinaus.

Somit können die äußeren Zahnkontaktflächen von Schaltfunktionszähnen axial über die äußere Stirnfläche des sie tragenden Ritzels, bzw. Ritzelgrundkörpers, vorstehen oder/und können die inneren Zahnkontaktflächen von Stabilisierungszähnen axial nach innen über die innere Stirnfläche des sie tragenden Ritzels, bzw. Ritzelgrundkörpers, vorstehen.

Grundsätzlich können auch Zahnkontaktflächen von anderen Zähnen über eine Stirnfläche des sie tragenden Ritzels hinaus vorstehen. Bei den angesprochenen Schaltfunktionszähnen und den Stabilisierungszähnen spielt die Lage der äußeren bzw. der inneren Zahnkontaktflächen jedoch die oben beschriebene besondere Rolle.

Weiterhin erleichtert die spanlose Umformung eine Erzeugung schräger Zahnkontaktflächen, was mit spanender Fertigung nicht oder nur mit unverhältnismäßig hohem Aufwand zu erzielen ist. Bevorzugt weist daher ein durch spanloses Umformen hergestelltes Ritzel wenigstens einen Zahn auf, dessen in axiale Richtung weisende Außenfläche, insbesondere dessen Zahnkontaktfläche, um eine zur radialen Richtung parallele erste Neigeachse oder/und um eine zur radialen Richtung und zur axialen Richtung orthogonale zweite Neigeachse relativ zu einer zur Ritzelachse orthogonalen Bezugsebene geneigt ist. Die zweite Neigeachse verläuft in der Regel in Richtung einer Tangente an eine um die Ritzelachse umlaufende Umfangsrichtung.

Die vorliegende Erfindung wird nachfolgend anhand der beiliegenden Zeichnungen näher erläutert. Es stellt dar:
- Fig. 1: eine erfindungsgemäße Fahrrad-Hinterradritzelkassette bei Bezugsbetrachtung längs der Ritzelachse, wobei zunehmend größere Ritzel mit zunehmendem Abstand vom Betrachter angeordnet sind,
- Fig. 1A: die Ritzelkassette von Figur 1 mit Blickrichtung orthogonal zur Ritzelachse,
- Fig. 1B: die Ritzelkassette von Figur 1 mit entgegengesetzter Blickrichtung von der Längsmittelebene weg,
- Fig. 2A: eine Fahrrad-Hinterradritzelpaarung der Ritzelkassette der Figuren 1 bis 1B mit einem kleineren Ritzel mit 16 Zähnen und einem größeren Ritzel mit 18 Zähnen bei Bezugsbetrachtung,
- Fig. 2B: die Fahrrad-Hinterradritzelpaarung von Figur 2A in entgegengesetzter Richtung betrachtet,
- Fig. 3: eine Fahrrad-Hinterradritzelpaarung der Ritzelkassette der Figuren 1 bis 1B mit einem kleineren Ritzel mit 18 Zähnen und mit einem größeren Ritzel mit 21 Zähnen bei Bezugsbetrachtung, wobei die Hinterradritzelpaarung zu einer Übergangs-Ritzelgruppe mit insgesamt drei Ritzeln gehört,
- Fig. 4: eine Fahrrad-Hinterradritzelpaarung der Ritzelkassette der Figuren 1 bis 1B mit einem kleineren Ritzel mit 21 Zähnen und mit einem größeren Ritzel mit 24 Zähnen bei Bezugsbetrachtung, wobei die Hinterradritzelpaarung zu der Übergangs-Ritzelgruppe mit insgesamt drei Ritzeln gehört,
- Fig. 5: die Fahrrad-Hinterradritzelpaarung von Figur 4 mit einer Fahrradkette, welche mit dem größeren Ritzel im Eingriff ist und herunter auf das kleinere Ritzel geschaltet wird,
- Fig. 6: eine Fahrrad-Hinterradritzelpaarung der Ritzelkassette der Figuren 1 bis 1B mit einem kleineren Ritzel mit 24 Zähnen und einem größeren Ritzel mit 28 Zähnen,
- Fig. 7: das größte Ritzel der Ritzelkassette der Figuren 1 bis 1B bei Bezugsbetrachtung,
- Fig. 7A: das Ritzel von Figur 7 mit einer Betrachtungsrichtung orthogonal zur Ritzelachse,
- Fig. 7B: das Ritzel von Figur 7 bei Betrachtung längs der Ritzelachse mit Blickrichtung von der Fahrrad-Längsmittelebene weg, und
- Fig. 8: ein mit der Ritzelkassette der Figuren 1 bis 1B ausgestattetes Fahrrad.
- Fig. 9: eine grobschematische Darstellung einer Abwicklung des Ritzels 18 aus der Ritzelkassette von Figur 1 bis 1B,
- Fig. 10: eine grobschematische Darstellung einer Abwicklung des Ritzels 20 aus der Ritzelkassette von Figur 1 bis 1B,
- Fig. 11: eine grobschematische Darstellung einer Abwicklung des Ritzels 22 aus der Ritzelkassette von Figur 1 bis 1B,
- Fig. 12: eine grobschematische Darstellung einer Abwicklung des Ritzels 24 aus der Ritzelkassette von Figur 1 bis 1B,
- Fig. 13: eine schematische perspektivische Detailansicht eines Schalt-Zahnzwischenraums am Ritzel 22 mit radial der Ritzelachse stärker angenähertem Zahngrund,
- Fig. 14: eine schematische Rückansicht des Ritzeldoms mit den einstückig verbundenen Ritzeln 10 bis 26 der Ritzelkassette von Figur 1 bis 1B,
- Fig. 15: eine schematische Detail-Rückansicht auf das Ritzel 24 der Ritzelkassette von Figur 1 bis 1B, mit dessen Verbindung zum nächst größeren Ritzel 26,
- Fig. 16: eine schematische Detail-Schnittansicht entlang der zur Zeichenebene von Figur 15 orthogonalen Schnittebene XVI-XVI, und
- Fig. 17: eine schematische Detail-Schnittansicht entlang der zur Zeichenebene von Figur 15 orthogonalen Schnittebene XVII-XVII.
- Fig. 18A: einen Umfangsschnitt durch den Zahnkopf einer alternativen, durch spanloses Umformen hergestellten Ausführungsform des abgabeseitigen Stabilisierungszahns 39* der Figuren 18B und 18C einer durch spanloses Umformen eines Ritzelrohlings aus Metallblech hergestellten alternativen Ausführungsform des ungeradzahligen Ritzels 20* mit 21 Zähnen, in einer zylindrischen Schnittfläche XVIII A von Fig. 18B und 18C mit der Ritzelachse als Zylinderachse,
- Fig. 18B: eine perspektivische Ansicht der Außenseite des durch spanloses Umformen hergestellten alternativen abgabeseitigen Stabilisierungszahns 39* am Ritzel 20* von Figur 18A,
- Fig. 18C: eine perspektivische Ansicht der Innenseite des durch spanloses Umformen hergestellten alternativen Stabilisierungszahns 39* am Ritzel 20* der Figuren 18A und 18B,
- Fig. 19A: einen Umfangsschnitt durch den Zahnkopf einer alternativen, durch spanloses Umformen hergestellten Ausführungsform des dem abgabeseitigen Stabilisierungszahn 39* entgegen der Antriebsdrehrichtung D benachbarten Zahns 41* der Figuren 19B und 19C der durch spanloses Umformen eines Ritzelrohlings aus Metallblech hergestellten alternativen Ausführungsform des ungeradzahligen Ritzels 20* mit 21 Zähnen, in einer zylindrischen Schnittfläche XIX A von Fig. 19B und 19C mit der Ritzelachse als Zylinderachse,
- Fig. 19B: eine perspektivische Ansicht der Außenseite des durch spanloses Umformen hergestellten alternativen Zahns 41* am Ritzel 20* von Figur 19A,
- Fig. 19C: eine perspektivische Ansicht der Innenseite des durch spanloses Umformen hergestellten alternativen Zahns 41* am Ritzel 20* der Figuren 19A und 19B,
- Fig. 20A: einen Umfangsschnitt durch den Zahnkopf einer alternativen, durch spanloses Umformen hergestellten Ausführungsform des Bezugszahns B* der Figuren 20B und 20C der durch spanloses Umformen eines Ritzelrohlings aus Metallblech hergestellten alternativen Ausführungsform des ungeradzahligen Ritzels 20* mit 21 Zähnen, in einer zylindrischen Schnittfläche XX A von Fig. 20B und 20C mit der Ritzelachse als Zylinderachse,
- Fig. 20B: eine perspektivische Ansicht der Außenseite des durch spanloses Umformen hergestellten alternativen Bezugszahns B* am Ritzel 20* von Figur 20A,
- Fig. 20C: eine perspektivische Ansicht der Innenseite des durch spanloses Umformen hergestellten alternativen Bezugszahns B* am Ritzel 20* der Figuren 20A und 20B,
- Fig. 21A: einen Umfangsschnitt durch den Zahnkopf einer alternativen, durch spanloses Umformen hergestellten Ausführungsform des zwischen dem aufnahmeseitigen Stabilisierungszahn 45* und dem Bezugszahn B* gelegenen Zahns 47* der Figuren 20B und 20C der durch spanloses Umformen eines Ritzelrohlings aus Metallblech hergestellten alternativen Ausführungsform des ungeradzahligen Ritzels 20* mit 21 Zähnen, in einer zylindrischen Schnittfläche XXI A von Fig. 21B und 21C mit der Ritzelachse als Zylinderachse,
- Fig. 21B: eine perspektivische Ansicht der Außenseite des durch spanloses Umformen hergestellten alternativen Zahns 47* am Ritzel 20* der Figur 21A,
- Fig. 21C: eine perspektivische Ansicht der Innenseite des durch spanloses Umformen hergestellten alternativen Zahns 47* am Ritzel 20* der Figuren 21A und 21B,
- Fig. 22A: einen Umfangsschnitt durch den Zahnkopf einer alternativen, durch spanloses Umformen hergestellten Ausführungsform des aufnahmeseitigen Stabilisierungszahns 45* der Figuren 20B und 20C der durch spanloses Umformen eines Ritzelrohlings aus Metallblech hergestellten alternativen Ausführungsform des ungeradzahligen Ritzels 20* mit 21 Zähnen, in einer zylindrischen Schnittfläche XXII A von Fig. 22B und 22C mit der Ritzelachse als Zylinderachse,
- Fig. 22B: eine perspektivische Ansicht der Außenseite des durch spanloses Umformen hergestellten alternativen aufnahmeseitigen Stabilisierungszahns 45* am Ritzel 20* der Figur 22A,
- Fig. 22C: eine perspektivische Ansicht der Innenseite des durch spanloses Umformen hergestellten alternativen aufnahmeseitigen Stabilisierungszahns 45* am Ritzel 20* der Figuren 22A und 22B,
- Fig. 22D: eine Draufsicht auf die Außenseite eines Umfangsabschnitts des durch spanloses Umformen hergestellten Ritzels 20* mit 21 Zähnen, wobei der Umfangsabschnitt die Zähne der Figuren 18A bis 22C aufweist,
- Fig. 22E: eine Draufsicht auf die Innenseite des Umfangsabschnitts von Fig. 22D,
- Fig. 23A: eine perspektivische Ansicht der Außenseite eines Hochschaltbereichs 34* eines alternativ durch spanlose Formgebung hergestellten Ritzels 28* mit 38 Zähnen, wobei der Hochschaltbereich 34* im Umfangsbereich XXIII von Fig. 25 gelegen ist,
- Fig. 23B: eine perspektivische Ansicht der Innenseite des Hochschaltbereichs 34* von Figur 23A, wobei der Hochschaltbereich 34* im Umfangsbereich XXIII von Fig. 25 gelegen ist,
- Fig. 24A: eine perspektivische Ansicht der Außenseite eines Herunterschaltbereichs 40* des hergestellten Ritzels 28* von Figur 23A und 23B, wobei der Herunterschaltbereich 40* im Umfangsbereich XXIV von Fig. 25 gelegen ist,
- Fig. 24B: eine perspektivische Ansicht der Innenseite des Herunterschaltbereichs 40* von Figur 24A, wobei der Herunterschaltbereich 40* im Umfangsbereich XXIV von Fig. 25 gelegen ist,
- Fig. 25: eine Draufsicht auf die Außenseite des durch spanloses Umformen hergestellten Ritzels 28* mit 38 Zähnen der Figuren 23A bis 24B,
- Fig. 26A: eine perspektivische Ansicht der Außenseite eines an der Stelle XXVI in Fig. 25 gelegenen, durch spanloses Umformen hergestellten weiteren aufnahmeseitigen Stabilisierungszahns 45*, an einer durch spanloses Umformen eines Ritzelrohlings aus Metallblech hergestellten alternativen Ausführungsform des geradzahligen Ritzels 28* mit 38 Zähnen,
- Fig. 26B: eine perspektivische Ansicht der Innenseite des durch spanloses Umformen hergestellten weiteren aufnahmeseitigen Stabilisierungszahns 45* von Fig. 26A,
- Fig. 26C: einen Umfangsschnitt durch den Zahnkopf des alternativen, durch spanloses Umformen hergestellten aufnahmeseitigen Stabilisierungszahns 45* der Figuren 26A und 26B, in einer zylindrischen Schnittfläche XXVI C von Fig. 26A und 26B mit der Ritzelachse als Zylinderachse,
- Fig. 26D: einen Querschnitt durch den aufnahmeseitigen Stabilisierungszahn 45* der Figuren 26A bis 26C in einer die Ritzelachse R enthaltenden Schnittebene XXVI D von Fig. 26A und 26B,
- Fig. 27A: eine perspektivische Ansicht der Außenseite des an der Stelle XXVII in Fig. 25 gelegenen durch spanloses Umformen hergestellten weiteren Fangzahns 44*,
- Fig. 27B: eine perspektivische Ansicht der Innenseite des durch spanloses Umformen hergestellten weiteren Fangzahns 44* von Fig. 27A,
- Fig. 27C: einen Querschnitt durch den weiteren Fangzahn 44* von Fig. 27A und 27B in einer die Ritzelachse R enthaltenden Schnittebene XXVII C von Fig. 27A und 27B,
- Fig. 28A: eine perspektivische Ansicht der Innenseiten zweier koaxial übereinander liegender gleicher Ritzel 20* als Ritzel 20₁* und 20₂* in einer für eine Wärmebehandlung vorbereiteten relativ zueinander rotatorisch um die gemeinsame Ritzelachse R um eine Zahnteilung versetzten Anordnung,
- Fig. 28B: eine Draufsicht auf die Innenseite eines Umfangsabschnitts einer Zahnreihe der Ritzel 20₁* und 20₂* von Fig. 28B,
- Fig. 29: für die Ritzelkassette der Figuren 1 bis 7B und 18A bis 22C: ein Diagramm mit Ritzelabständen, gemessen über die jeweils äußeren Stirnflächen der Ritzel, sowie mit Kettenführungsabmessungen der Bezugszähne der jeweiligen Ritzel,
- Fig. 30A: eine perspektivische Ansicht der Ritzelkassette der Figuren 1 bis 1B, montiert auf einer Locktube, mit einer ersten Ausführungsform einer Kennzeichnung eines Referenzritzels zur Verwendung in Einstellvorgängen,
- Fig. 30B: eine perspektivische Ansicht der Ritzelkassette der Figuren 1 bis 1B, montiert auf einer Locktube, mit einer zweiten Ausführungsform einer Kennzeichnung eines Referenzritzels zur Verwendung in Einstellvorgängen,
- Fig. 30C: eine perspektivische Ansicht der Ritzelkassette der Figuren 1 bis 1B, montiert auf einer Locktube, mit einer dritten Ausführungsform einer Kennzeichnung eines Referenzritzels zur Verwendung in Einstellvorgängen,
- Fig. 30D: eine perspektivische Ansicht der Ritzelkassette der Figuren 1 bis 1B, montiert auf einer Locktube, mit einer vierten Ausführungsform einer Kennzeichnung eines Referenzritzels zur Verwendung in Einstellvorgängen, und
- Fig. 30E: eine perspektivische Ansicht der Ritzelkassette der Figuren 1 bis 1B, montiert auf einer Locktube, mit einer vierten Ausführungsform einer Kennzeichnung eines Referenzritzels zur Verwendung in Einstellvorgängen,

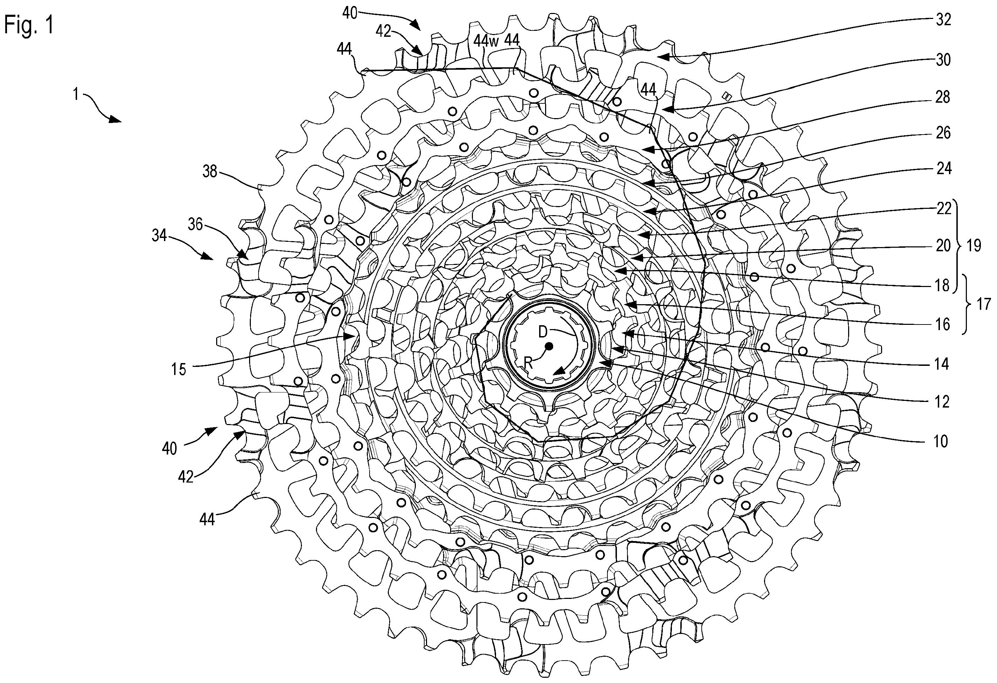

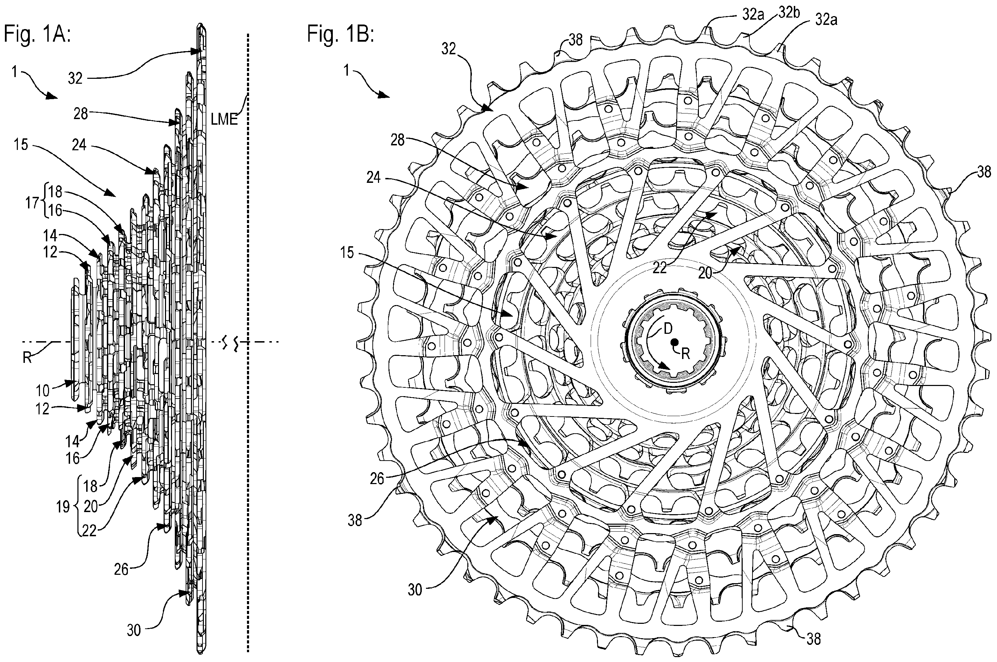

In Figur 1 ist eine bevorzugte erfindungsgemäße Ausführungsform einer Fahrrad-Hinterradritzelkassette mit zwölf koaxialen, schlupffrei zur gemeinsamen Drehung um die zur Zeichenebene von Figur 1 orthogonale Ritzelachse R miteinander verbundenen Ritzeln allgemein mit 1 bezeichnet.

Die Betrachtung der Ritzelkassette 1 in Figur 1 entspricht der Bezugsbetrachtung der vorliegenden Anmeldung, d. h. mit Blickrichtung längs der Ritzelachse R, wobei das kleinste Ritzel dem Betrachter von Figur 1 am nächsten gelegen ist und das größte Ritzel vom Betrachter von Figur 1 am weitesten entfernt gelegen ist.

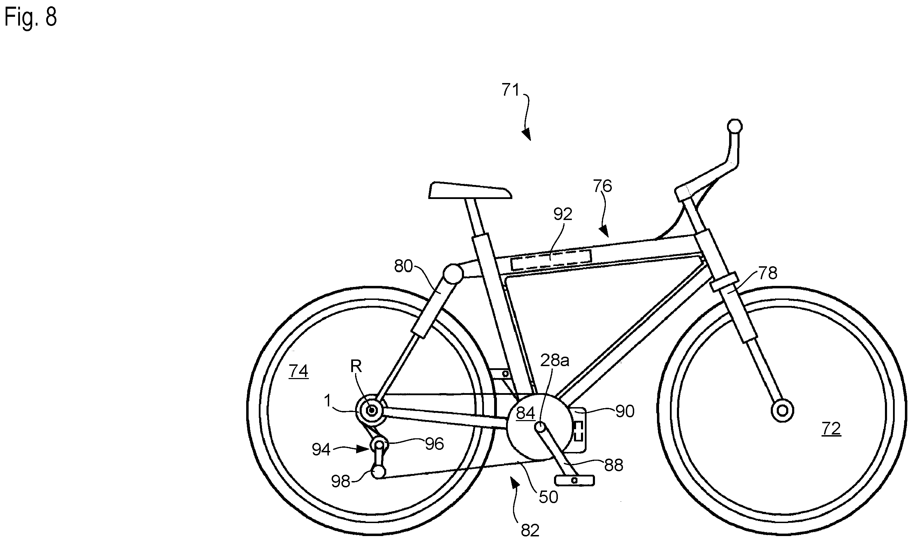

Der Pfeil D zeigt die Antriebsdrehrichtung des Ritzels 18 im Antriebsbetrieb an dem in Figur 8 gezeigten Fahrrad 70 an.

Die Zähnezahl-Abstufung der Ritzelkassette 1 von Figur 1 beträgt: 10-12-14-16-18-21-24-28-32-38-44-52. Die Ritzelkassette 1 umfasst also ein kleinstes Ritzel 10 mit zehn Zähnen, ein diesem axial benachbartes Ritzel 12 mit 12 Zähnen, ein nächstgrößeres Ritzel 14 mit 14 Zähnen, ein wiederum nächstgrößeres Ritzel 16 mit 16 Zähnen, und ein diesem axial benachbartes Ritzel 18 mit 18 Zähnen.

Das dem Ritzel 18 benachbarte nächstgrößere Ritzel 20 ist ein Übergangsritzel mit 21 Zähnen. Auf dieses folgt ein Ritzel 22 mit 24 Zähnen, ein Ritzel 24 mit 28 Zähnen, ein Ritzel 26 mit 32 Zähnen, ein Ritzel 28 mit 38 Zähnen, ein Ritzel 30 mit 44 Zähnen und schließlich als größtes Ritzel ein Ritzel 32 mit 52 Zähnen.

Die beiden axial dem einzigen ungeradzahligen Übergangsritzel 20 in der Ritzelkassette 1 benachbarten Ritzel 18 und 22 bilden gemeinsam mit dem Übergangsritzel 20 eine Übergangs-Ritzelgruppe 19.

Zur Erleichterung von Schaltvorgängen zwischen axial benachbarten Ritzeln weisen die Ritzel, mit Ausnahme des kleinsten Ritzels 10, jeweils wenigstens einen Hochschaltbereich 34 mit einer Hochschalt-Vertiefungsformation 36 und bevorzugt genau einem Abgabezahn 38 auf und weisen jeweils wenigstens einen Herunterschaltbereich 40 mit einer Herunterschalt-Vertiefungsformation 42 und bevorzugt genau einem Fangzahn 44 auf.

Der besseren Übersichtlichkeit wegen ist in Figur 1 nur das größte Ritzel 32 mit 52 Zähnen mit Bezugszeichen für den Hochschaltbereich 34 mit der Hochschalt-Vertiefungsformation 36 und dem Abgabezahn 38 sowie für den Herunterschaltbereich 40 mit der Herunterschalt-Vertiefungsformation 42 und dem Fangzahn 44 versehen.

Die Bereiche: Hochschaltbereich 34 und Herunterschaltbereich 40, beziehen sich stets auf dasjenige Ritzel, an dem die Bereiche ausgebildet sind. Dies bedeutet, der Hochschaltbereich 34 erleichtert ein Umlegen einer Fahrradkette von dem den Hochschaltbereich 34 tragenden Ritzel auf das axial benachbarte nächstkleinere Ritzel und der Herunterschaltbereich 40 erleichtert ein Umlegen der Fahrradkette von dem nächstkleineren Ritzel auf das den Herunterschaltbereich 40 tragende Ritzel.

Die Vertiefungsformationen 36 und 42 gestatten die axiale Annäherung der Fahrradkette an das die jeweiligen Vertiefungsformationen tragende Ritzel, da insbesondere Außenlaschen in die als axiale stirnseitige Ausnehmungen gestalteten Vertiefungsformationen axial eintauchen können. Ohne Ausbildung von Vertiefungsformationen an den genannten Stellen würden die Außenlaschen der Fahrradkette mit der Stirnseite des Ritzels kollidieren, was die axiale Annäherung der Fahrradkette an die die Vertiefungsformationen aufweisende Stirnseite begrenzen würde.

Die Vertiefungsformationen 36 und 42 können mehrere unterschiedliche Flächenfacetten aufweisen, welche relativ zueinander eine unterschiedliche Position bezüglich der Ritzelachse R oder/und eine unterschiedliche Neigung aufweisen können. Dadurch kann erreicht werden, dass die Fahrradkette nur mit einer vorbestimmten Relativstellung bezüglich ihrer Außenlaschen und Innenlaschen in die Vertiefungsformationen 36 oder 42 eintauchen kann und bei um eine Kettenteilung in Kettenumlaufrichtung versetzter Relativstellung von einer Flächenfacette axial abgewiesen wird. Die Flächenfacette kann derart ausgebildet sein, dass sie in den Zwischenraum zwischen zwei in Kettenumlaufrichtung aufeinander folgenden Außenlaschen zu einer zwischen den Außenlaschen gelegenen Innenlasche hin eindringen kann, jedoch eine zwischen zwei Innenlaschen gelegene Außenlasche körperlich axial von dem sie tragenden Ritzel weg abweist.

Fangzähne 44 der einzelnen Ritzel der Hinterradkassette 1 liegen bei Bezugsbetrachtung der Hinterradkassette 1 auf einer sich im Gegenuhrzeigersinn nach radial außen drehenden Wendel 44w.

In Figur 1A ist die Ritzelkassette 1 mit Blickrichtung orthogonal zur Ritzelachse R dargestellt. Zur Erläuterung ist die zuvor bereits erwähnte zur Ritzelachse R orthogonale Längsmittelebene LME des die Ritzelkassette 1 tragenden Fahrrads strichliniert dargestellt. Der tatsächliche Abstand zwischen der Längsmittelebene LME und der Ritzelkassette 1 ist größer als in der verkürzten Darstellung von Figur 1A.

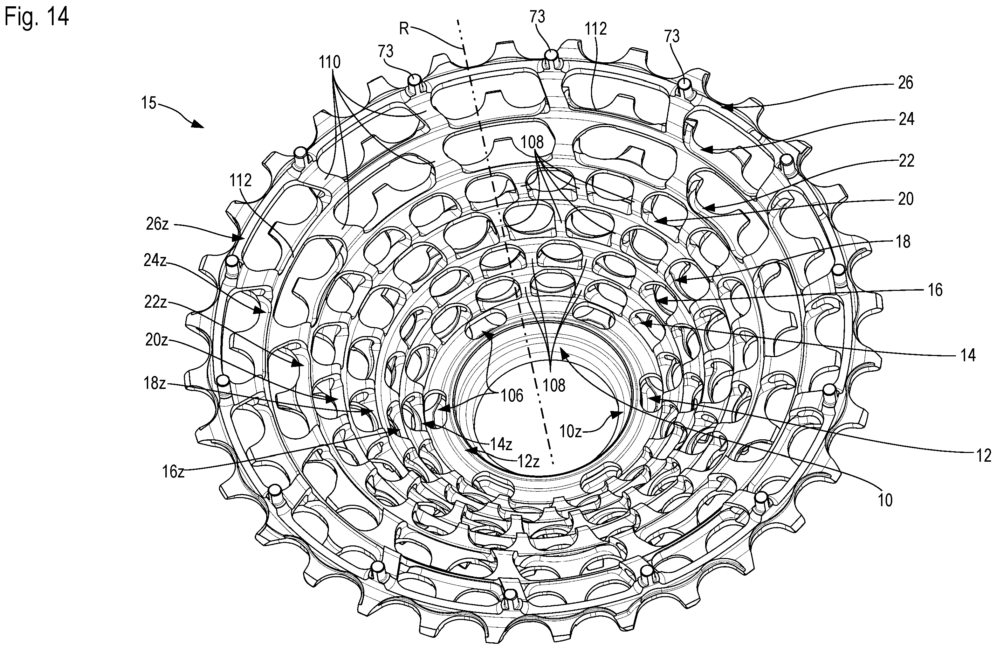

Die Ritzel 10 bis 26 sind bevorzugt einstückig als ein sogenannter Ritzeldom 15 ausgebildet, beispielsweise durch spanendes Bearbeiten aus dem Vollen. Abweichend hiervon können alternativ die beiden kleinsten Ritzel 10 und 12 als einzelne Ritzel ausgebildet sein. Die beiden kleinsten Ritzel 10 und 12 können dann über eine Nutmutter mit dem Ritzeldom 15 der Ritzel 14 bis 26 verbunden sein. Die drei größten Ritzel 28, 30 und 32 sind jeweils als einzelnes Ritzel ausgebildet und sind jeweils mit dem größten Ritzel 32 zur gemeinsamen Drehung verbunden. Der Ritzeldom 15 kann in an sich bekannter Weise mit Stiften 73 (s. Fig. 14) oder Nieten oder stoffschlüssig mit den Streben des Ritzels 32 zur Übertragung von Drehmoment verbunden sein.

Der axiale Abstand zwischen den einander unmittelbar benachbarten Ritzeln ist in der Regel kleiner als die Zahnhöhe eines regulär geformten Zahns der Ritzel. Der geringe axiale Abstand zwischen den einzelnen Ritzeln erfordert eine sehr schmale Kette und eine äußerst präzise Gestaltung der verzahnten Umfangsbereiche der einzelnen Ritzel.

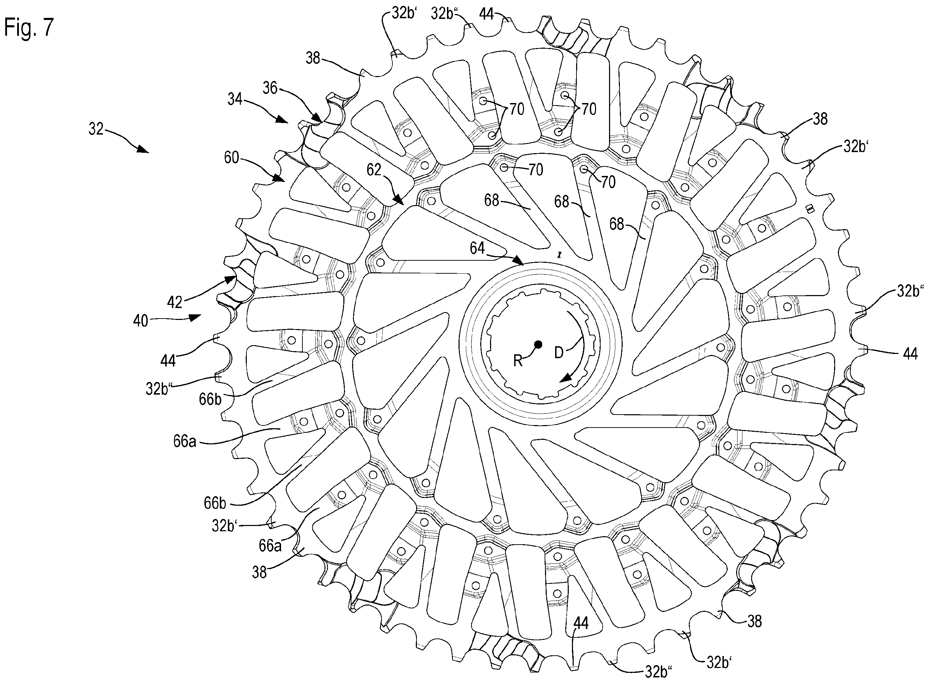

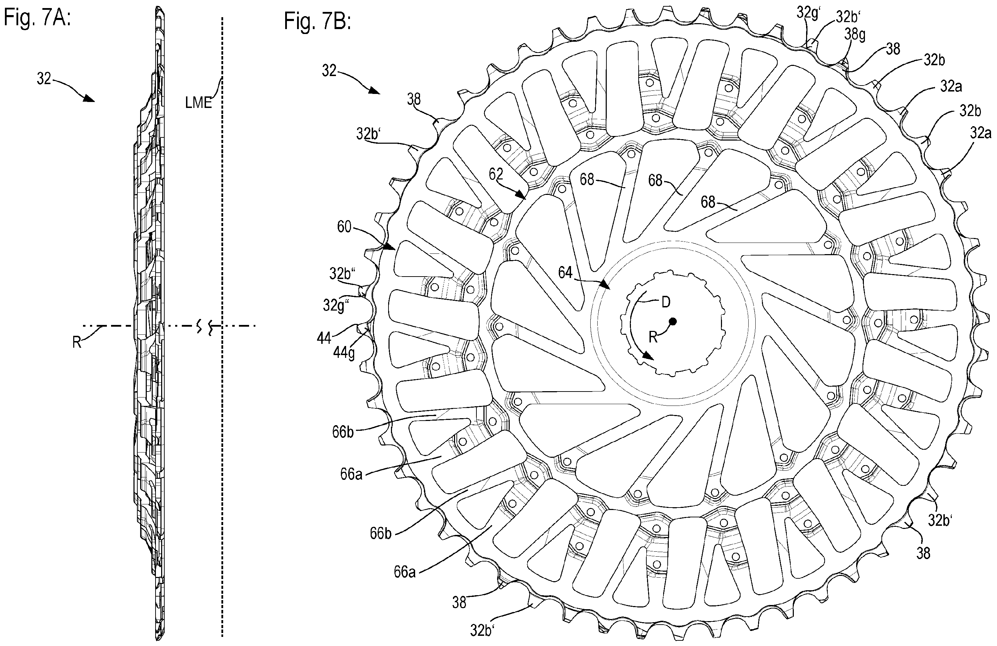

Figur 1B zeigt die Ritzelkassette 1 von innen, also von der Längsmittelebene LME aus längs der Ritzelachse R betrachtet. Soweit die kleineren Ritzel durch die zwischen den Streben des größten Ritzels 32 gebildeten Durchgänge hindurch erkennbar sind, sind sie mit Bezugszeichen bezeichnet. Ansonsten wird zur weiteren Beschreibung des größten Ritzels auf die unten folgende Erläuterung der Figuren 7 bis 7B verwiesen.

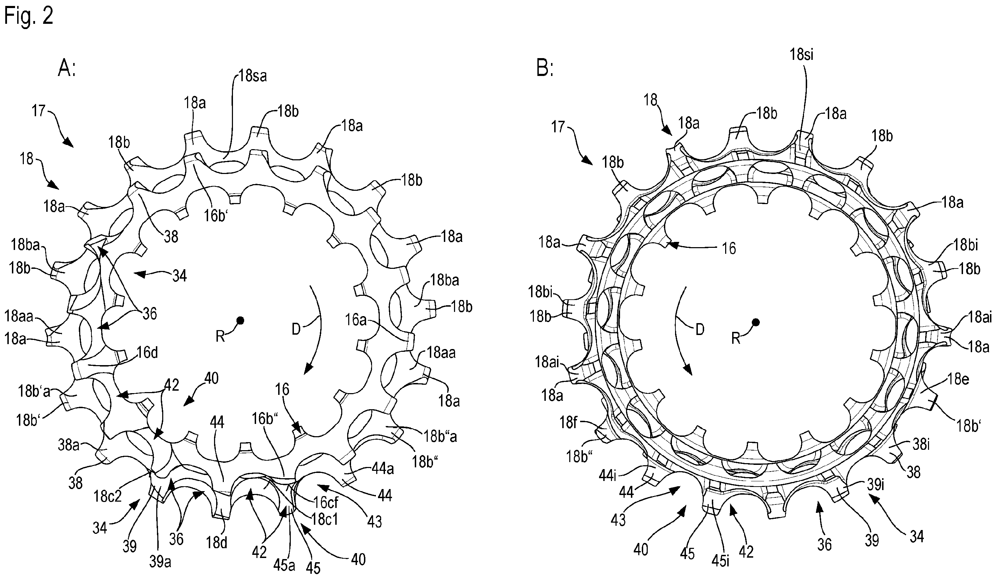

In den Figuren 2A und 2B ist eine Fahrrad-Hinterradritzelpaarung 17 dargestellt, und zwar in Figur 2A in Bezugsbetrachtung von außen und in Figur 2B in entgegengesetzter axialer Richtung von innen betrachtet, also derart, dass das größere Ritzel 18 dem Betrachter von Figur 2B näher gelegen ist als das kleinere Ritzel 16.

Das Ritzel 18 ist, ebenso wie die Ritzel 10, 12, 14 und 16, als geradzahliges Ritzel bevorzugt als Synchronisierungsritzel mit dickeren Zähnen 18a und mit dünneren Zähnen 18b ausgebildet. Die axiale Dicke, genauer die Kettenführungsabmessung, der der dickeren Außenlaschen-Ritzelzähne 18a ist dabei derart gewählt, dass sie nur in den Eingriffsraum eines Außenlaschen-Kettenglieds passen, jedoch betragsmäßig größer ist als der Abstand zwischen zwei parallelen Innenlaschen eines Innenlaschen-Kettenglieds. Eine Fahrradkette kann daher in Bezug auf Ihre Folge von längs der Kettenumlaufbahn alternierenden Kettengliederarten nur in genau einer Relativausrichtung mit dem Ritzel 18 kämmen, nämlich dann, wenn den Außenlaschen-Ritzelzähnen 18a Außenlaschen-Kettenglieder zugeordnet sind. Wegen der geraden Anzahl an Kettengliedern in einem Fahrradkettenumlauf und wegen der geraden Anzahl an Zähnen des Ritzels 18 bleibt eine einmal hergestellte Zuordnung eines Zahns zu einer Kettengliederart während der gesamten Eingriffsdauer des Ritzels 18 mit der Kette über alle Ritzelumläufe hinweg erhalten. Gleiches gilt bevorzugt für die übrigen geradzahligen Ritzel 10, 12, 14, 16, 22, 24, 26, 28, 30 und 32 der Ritzelkassette 1.

Wie die Ritzel 12, 14 und 16 weist auch das Ritzel 18 nur genau einen Hochschaltbereich 34 mit genau einer Hochschalt-Vertiefungsformation 36 und mit genau einem Abgabezahn 38 auf. Das Ritzel 18 weist außerdem nur genau einen Herunterschaltbereich 40 mit genau einer Herunterschalt-Vertiefungsformation 42 und mit genau einem Fangzahn 44 auf. Der Abgabezahn 38 ist bei Bezugsbetrachtung der erste in Antriebsdrehrichtung D auf die die Hochschalt-Vertiefungsformation 36 folgende Zahn, welcher nicht an seiner zum kleineren Ritzel 16 hinweisenden Zahnfläche durch die Hochschalt-Vertiefungsformation 36 verändert ist. Der Abgabezahn 38 ist also in Antriebsdrehrichtung D der erste Zahn, zu dem sich die Hochschalt-Vertiefungsformation 36 nicht mehr erstreckt.

Der Herunterschaltbereich 40 hat in Antriebsdrehrichtung D einen kürzeren Abstand zum Hochschaltbereich 34 als entgegen der Antriebsdrehrichtung D. Die einzige Herunterschalt-Vertiefungsausnehmung 42 erstreckt sich entgegen der Antriebsdrehrichtung D nicht mehr bis zum einzigen Fangzahn 38, der folglich der erste von der Herunterschalt-Vertiefungsausnehmung 42 nicht mehr in seiner Gestalt veränderte Zahn ist, der entgegen der Antriebsdrehrichtung D auf die Herunterschalt-Vertiefungsausnehmung 42 folgt.

Am Ritzel 18 sind besonders vorteilhaft für die Verschleißfestigkeit des Ritzels 18 ausgehend vom Fangzahn 44 in Antriebsdrehrichtung D zwischen dem Fangzahn 44 und dem Abgabezahn 38 nur drei Zähne vorhanden. Ausgehend vom Abgabezahn 38 sind in Antriebsdrehrichtung D zwischen dem Abgabezahn 38 und dem Fangzahn 44 13 Zähne vorhanden, was der Zähnezahl des Ritzels 18 minus 5 entspricht.

An dem mittleren Zahn der drei in Antriebsdrehrichtung D zwischen dem Fangzahn 44 und dem Abgabezahn 38 gelegenen Zähne ist eine Abweisfläche 18d ausgebildet, welche sowohl Teil der Herunterschalt-Vertiefungsformation 42 als auch Teil der Hochschalt-Vertiefungsformation 36 ist. Die Abweisfläche 18d, die gegenüber der äußeren Stirnfläche des Ritzels 18 nach innen vertieft, jedoch gegenüber ihren in Umfangsrichtung benachbarten Ausnehmungsabschnitten erhöht ist und axial vorsteht, ist dazu ausgebildet, in den Zwischenraum zwischen zwei Außenlaschen einer Fahrradkette einzugreifen. Sollte beim Schaltvorgang, aus welchen Gründen auch immer, an der Stelle der Abweisfläche 18d keine Innenlasche sondern eine Außenlasche gelegen sein, wird die Kette körperlich durch Anlage der Außenlasche an der Abweisfläche 18d an einer für ein Umlegen der Kette notwendigen axialen Annäherung an die Stirnfläche des Ritzels 18 gehindert und die Kette somit abgewiesen.

In der Rückansicht des Ritzels 18 in Figur 2B erkennt man, dass der dem Abgabezahn 38 in der Antriebsdrehrichtung D benachbarte dünne Zahn 18b auf seiner vom kleineren Ritzel 16 abgewandten Zahnfläche eine Ausnehmungsfläche 18e aufweist, welche diesen speziellen dünnen Zahn 18b als abgabeseitigen Mobilisierungszahn 18b' eines Hochschaltvorgangs ausbildet, der einem von ihm in Eingriff genommenen Innenlaschen-Kettenglied einer Fahrradkette mehr axiales Bewegungsspiel lässt als ein gewöhnlicher dünner Zahn 18b.

Ebenso erkennt man in Figur 2B, dass der dem Fangzahn 44 entgegen der Antriebsdrehrichtung D benachbarte dünne Zahn 18b auf seiner vom kleineren Ritzel 16 abgewandten Zahnfläche eine Ausnehmungsfläche 18f aufweist, welche diesen speziellen dünnen Zahn 18b als aufnahmeseitigen Mobilisierungszahn 18b" eines Herunterschaltvorgangs ausbildet, der einem von ihm in Eingriff genommenen Innenlaschen-Kettenglied mehr axiales Bewegungsspiel lässt als ein gewöhnlicher dünner Zahn 18b.

Der Hochschalt-Mobilisierungszahn 18b' unterstützt somit durch das von ihm der Fahrradkette eingeräumte Bewegungsspiel einen Hochschaltvorgang. Der Herunterschalt-Mobilisierungszahn 18b" unterstützt einen Herunterschaltvorgang.

Von den 13 in Antriebsdrehrichtung D zwischen dem Abgabezahn 38 und dem Fangzahn 44 gelegenen Zähnen sind die jeweils dem Abgabezahn 38 bzw. dem Fangzahn 44 unmittelbar benachbarten Zähne also als Mobilisierungszähne 18b' bzw. 18b" ausgebildet. Die übrigen Zähne sind zur sicheren Führung der Kette am Ritzel 18 während eines kämmenden Eingriffs in der oben beschriebenen Weise als dicke Außenlaschen-Ritzelzähne 18a und dünne Innenlaschen-Ritzelzähne 18b ausgebildet.

Der bei Bezugsbetrachtung hinter dem Zahn 16b" des Ritzels 16 liegende Zahn 45 des Ritzels 18 weist an seiner zum kleineren Ritzel 16 hinweisenden Zahnfläche eine Abweisfläche 45a auf, die Teil der Herunterschalt-Vertiefungsausnehmung 42 des Herunterschaltbereichs 40 ist. An dieser Abweisfläche 45a kann ein Innenlaschen-Kettenglied auf der dem kleineren Ritzel 16 zugewandten äußeren Seite des Ritzels 18 zum Fangzahn 44 des Ritzels 18 hin vorbeigehen, ein Außenlaschen-Kettenglied jedoch nicht.

Die Abweisfläche 45a endet radial innen an einer Rampe 18c1, welche eine nach radial außen weisende, bevorzugt ebenfalls konvex gekrümmte Abstützfläche aufweist, die gegenüber der Abweisfläche 45a axial vorsteht. Der Kettenschräglauf bei Ketteneingriff mit den axial außerhalb der Kettenlinie liegenden Ritzeln 16 und 18 unterstützt die Anlage der Innenlasche an der Abweisfläche 45a und an der Rampe 18c1, denn an außerhalb der Kettenlinie gelegenen Ritzeln bewirkt der Kettenschräglauf eine Kraft am eingreifenden Ritzel nach axial innen.

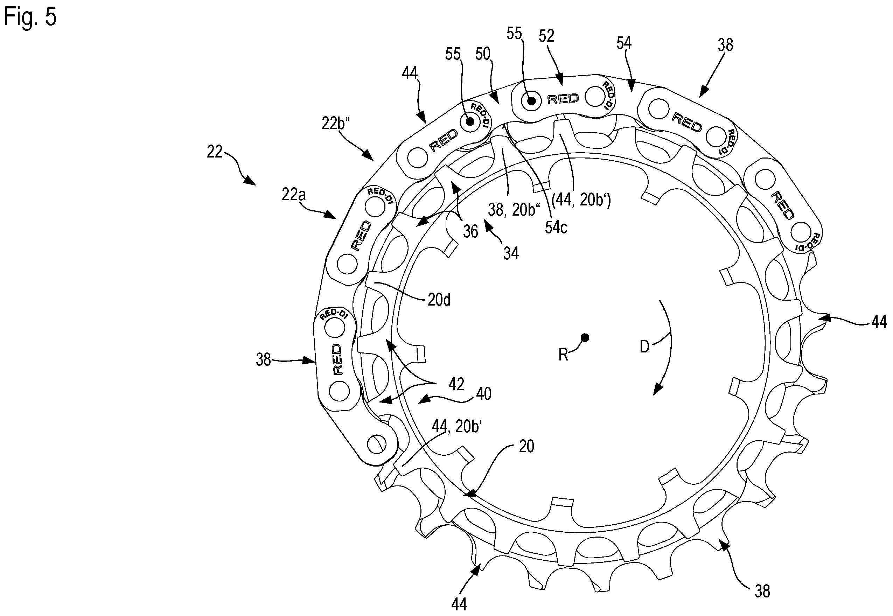

Beim Herunterschalten der Kette vom Ritzel 16 auf das Ritzel 18 kann sich ein nach radial innen weisender innerer Rand 54c (siehe Fig. 5) einer Innenlasche eines Innenlaschen-Kettenglieds 54 (s. Fig. 5) körperlich einmal auf der Kopffläche 16cf des Zahns 16b" und einmal auf der Rampe 18c1 des axial hinter dem Zahn 16b" gelegenen Zahns 45 abstützen. Der innere Rand 54c ist zwischen den Kettenrollenachsen 55 (s. Fig. 5) konkav geformt. Für eine möglichst flächige und sichere Abstützung ist daher die Kopffläche 16cf konvex geformt, wobei das in Antriebsdrehrichtung D vorauseilende Ende der Kopffläche 16cf radial weiter innen gelegen ist als das nachlaufende Ende der Kopffläche 16cf. Bevorzugt ist die konvexe Gestalt der Kopffläche 16cf komplementär zum konkaven inneren Rand 54c der Kette 50 ausgebildet.

Der dem Fangzahn 44 des Ritzels 18 in Antriebsdrehrichtung D vorauseilende Zahnzwischenraum 43 ist als Schalt-Zahnzwischenraum nach radial innen vergrößert, um beim Herunterschalten auf das Ritzel 18 der dem Fangzahn 44 unmittelbar vorauseilenden Kettenrolle Bewegungsraum nach radial innen zu geben.

Die Ritzel 12, 14, 16 und 18 sollen jeweils nur im Hochschaltbereich 36 vom jeweils größeren Ritzel zum jeweils axial benachbarten nächstkleineren Ritzel hochschalten. Dies bedeutet, an jedem Ritzel 12, 14, 16 und 18 wird die Kette nur an genau einer Stelle vom größeren Ritzel auf das nächstkleinere umgelegt, und zwar so, dass der jeweilige Abgabezahn 38 der letzte Zahn des größeren Ritzels ist, der mit der Kette noch in Eingriff ist. Entgegen der Antriebsdrehrichtung D auf den Abgabezahn 38 folgende Kettenglieder gleiten seitlich an den dem Abgabezahn 38 entgegen der Antriebsdrehrichtung D folgenden Zähnen vorbei und nutzen dabei die jeweilige Hochschalt-Vertiefungsformation 36 als Bewegungsraum aus.

Ebenso soll an den Ritzeln 12, 14, 16 und 18 jeweils nur an einer Stelle die Kette vom kleineren zum größeren Ritzel umgelegt werden, und zwar stets nur so, dass der Fangzahn 44 des größeren Ritzels der erste Zahn des größeren Ritzels ist, welcher zwischen zwei Laschen, in der Regel Außenlaschen, eines Kettenglieds eingreift. Die in Antriebsdrehrichtung D dem Fangzahn 44 vorauseilenden Kettenglieder nähern sich unter Ausnutzung der Herunterschalt-Vertiefungsformation 42 dem jeweils größeren Ritzel an, sodass das dem Fangzahn 44 zugeordnete Außenlaschen-Kettenglied axial in dessen Eingriffsbereich gelangen kann.

Wird der Schaltbefehl durch den Fahrradfahrer so gegeben, dass am in Antriebsdrehrichtung D rotierenden größeren Ritzel der jeweilige relevante Schaltfunktionszahn: Abgabezahn 38 oder Fangzahn 44, gerade den Schaltbereich am Hinterrad passiert hat, findet der eingeleitete Schaltvorgang in der nächsten Ritzelumdrehung statt, wenn der Abgabezahn 38 oder der Fangzahn 44 wieder in den für die Ausführung eines Schaltvorgangs relevanten Winkelbereich bzw. Schaltbereich relativ zum Umwerfer gelangt. Die Schaltlatenz sowohl für das Herunterschalten als auch für das Hochschalten an den Ritzeln 10, 12, 14, 16 und 18 beträgt maximal eine Ritzelumdrehung, was von Fahrradfahrern üblicherweise toleriert wird. Höhere Schaltlatenzen werden erfahrungsgemäß nicht mehr toleriert, sondern als Fehlfunktion wahrgenommen.

Der entgegen der Antriebsdrehrichtung D dem einzigen Abgabezahn 38 des Hochschaltbereichs 34 benachbarte Zahn 39, welcher die zur Hochschalt-Vertiefungsformation 36 gehörende und daher nach innen, vom Betrachter der Figur 2A weg versetzte äußere Zahnkontaktfläche 39a aufweist, ist ein abgabeseitiger Stabilisierungszahn. Der in Antriebsdrehrichtung D dem einzigen Fangzahn 44 des Herunterschaltbereichs 40 benachbarte Zahn 45, welcher die zur Herunterschalt-Vertiefungsformation 42 gehörende und daher nach innen, vom Betrachter der Figur 2A weg versetzte Abweisfläche 45a als äußere Zahnkontaktfläche aufweist, ist ein aufnahmeseitiger Stabilisierungszahn.

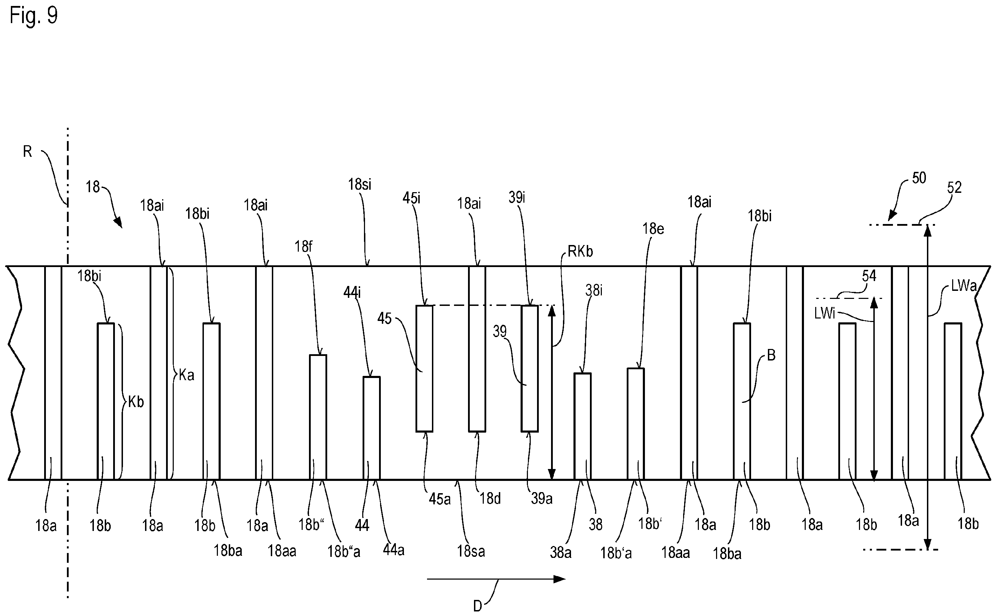

In Figur 9 ist eine grobschematische Abwicklung des Ritzels 18 gezeigt. Die zur Ritzelachse R vorteilhaft orthogonalen Stirnflächen, also die äußere Stirnfläche 18sa und die innere Stirnfläche 18si, sind orthogonal zur Zeichenebene der Figur 9 orientiert. Ritzelzähne sind lediglich grobschematisch durch Rechtecke symbolisiert, um deren axiale Abmessungen relativ zueinander darstellen zu können.

Herkömmliche Außenlaschen-Ritzelzähne 18a weisen eine äußere Zahnkontaktfläche 18aa und eine innere Zahnkontaktfläche 18ai auf. Ebenso weisen herkömmliche Innenlaschen-Ritzelzähne 18b eine äußere Zahnkontaktfläche 18ba und eine innere Zahnkontaktfläche 18bi auf.

Der Abgabezahn 38 weist eine äußere Zahnkontaktfläche 38a und eine innere Zahnkontaktfläche 38i auf. Ebenso weist der Fangzahn 44 eine äußere Zahnkontaktfläche 44a und eine innere Zahnkontaktfläche 44i auf.

Der abgabeseitige Mobilisierungszahn 18b' weist eine äußere Zahnkontaktfläche 18b'a und die Fläche 18e als innere Zahnkontaktfläche auf. Der aufnahmeseitige Mobilisierungszahn 18b" weist eine äußere Zahnkontaktfläche 18b"a und die Fläche 18f als innere Zahnkontaktfläche auf.

Der abgabeseitige Stabilisierungszahn 39 weist die äußere Zahnkontaktfläche 39a und die innere Zahnkontaktfläche 39i auf. Der aufnahmeseitige Stabilisierungszahn 45 weist die Abweisfläche 45a als äußere Zahnkontaktfläche auf und weist eine innere Zahnkontaktfläche 45i auf.

Eine Kettenführungsabmessung K ist der axiale Abstand zwischen der äußeren Zahnkontaktfläche und der inneren Zahnkontaktfläche eines Zahns. Die Kettenführungsabmessung Ka eines Außenlaschen-Ritzelzahns 18a ist deshalb, wie in Figur 9 dargestellt, größer als die Kettenführungsabmessung Kb eines Innenlaschen-Ritzelzahns 18b. Der besseren Übersichtlichkeit halber sind nicht für alle Zähne des Ritzels 18 in Figur 9 die Kettenführungsabmessungen eingetragen.

Zur Beschreibung der relativen Lagen und Ausdehnungen in axialer Richtung der Ritzelzähne zueinander wird am Ritzel 18 ein Bezugszahn ausgewählt. Es handelt sich dabei um einen Innenlaschen-Ritzelzahn 18b, welcher außerhalb der Schaltstrecke, beginnend mit einschließlich dem aufnahmeseitigen Mobilisierungszahn 18b", in Antriebsdrehrichtung D bis einschließlich zum abgabeseitigen Mobilisierungszahn 18b' reicht, gelegen ist und deshalb als Standard-Innenlaschen-Ritzelzahn 18b ausgebildet ist. Es handelt sich dabei um die Innenlaschen-Ritzelzähne 18b, welche die größte Kettenführungsabmessung Kb aller Innenlaschen-Ritzelzähne des Ritzels 18 aufweisen. Von diesen Innenlaschen-Ritzelzähnen 18b weist das Ritzel 18 insgesamt fünf Stück auf. Jeder von diesen kann Bezugszahn B sein.

Die äußere Zahnkontaktfläche 18ba des Bezugszahns B definiert als Zahnkontakt-Bezugsfläche eine axiale Bezugsposition. Diese liegt im dargestellten Beispiel in der Ebene der äußeren Stirnfläche 18sa des Ritzels 18. Auch die äußeren Zahnkontaktflächen 38a und 44a des Abgabezahns 38 bzw. des Fangzahns 44 sowie die äußeren Zahnkontaktflächen 18b'a und 18b"a des abgabeseitigen Mobilisierungszahns 18b' bzw. des aufnahmeseitigen Mobilisierungszahns 18b" liegen bevorzugt in der Ebene der äußeren Stirnfläche 18sa des Ritzels 18 und somit an der gleichen Bezugsposition wie der Bezugszahn B.

Die innere Zahnkontaktfläche 39i und 45i des abgabeseitigen Stabilisierungszahns 39 bzw. des aufnahmeseitigen Stabilisierungszahns 45 axial liegen weiter von der axialen Bezugsposition entfernt als die innere Zahnkontaktfläche 18bi des Bezugszahns B. Die inneren Zahnkontaktflächen 39i und 45i befinden sich im dargestellten Beispiel an derselben Axialposition.

Zum Vergleich sind in Figur 9 die lichte Weite LWi der Innenlaschen-Kettenglieder 54 und die lichte Weite LWa der Außenlaschen-Kettenglieder 52 der Kette 50 dargestellt. Der axiale Abstand der inneren Zahnkontaktflächen 39i und 45i von der axialen Bezugsposition ist geringer als die lichte Weite LWi, sodass der abgabeseitige Stabilisierungszahn 39 und der aufnahmeseitige Stabilisierungszahn 45 jeweils dem Ort ihrer Anordnung entsprechend Innenlaschen-Ritzelzähne sind.

Im dargestellten Beispiel des Ritzels 18 ist der axiale Abstand der inneren Zahnkontaktfläche 18e des abgabeseitigen Mobilisierungszahn 18b' von der axialen Bezugsposition, also im vorliegenden Beispiel die Kettenführungsabmessung des abgabeseitigen Mobilisierungszahn 18b', größer als der axiale Abstand der inneren Zahnkontaktfläche 38i des Abgabezahns 38 von der axialen Bezugsposition und damit im vorliegenden Beispiel größer als die Kettenführungsabmessung des Abgabezahns 38.

Der axiale Abstand der inneren Zahnkontaktfläche 38i von der axialen Bezugsposition ist wiederum größer als der axiale Abstand der inneren Zahnkontaktfläche 44i des Fangzahns 44 von der axialen Bezugsposition und somit im vorliegenden Beispiel größer als die Kettenführungsabmessung des Fangzahns 44.

Der axiale Abstand der inneren Zahnkontaktfläche 18f des aufnahmeseitigen Mobilisierungszahns 18b" von der axialen Bezugsposition und damit im vorliegenden Beispiel die Kettenführungsabmessung des aufnahmeseitigen Mobilisierungszahns 18b" ist größer als der axiale Abstand der inneren Zahnkontaktfläche 18e des abgabeseitigen Mobilisierungszahns 18b' von der axialen Bezugsposition.

Aufgrund der Hochschalt-Vertiefungsausnehmung 36 sowie aufgrund der Herunterschalt-Vertiefungsausnehmung 42 sind die äußeren Zahnkontaktflächen 39a, 45a und 18d des abgabeseitigen Stabilisierungszahns 39, des aufnahmeseitigen Stabilisierungszahns 45 und des zwischen diesen gelegenen Außenlaschen-Ritzelzahns von der axialen Bezugsposition nach innen zur inneren Stirnfläche 18si des Ritzels 18 hin versetzt angeordnet. Die Kettenführungsabmessung der beiden Stabilisierungszähne 39 und 45 ist daher im dargestellten Beispiel kürzer als die Kettenführungsabmessung Kb des Bezugszahns B, wenngleich die axialen Abstände ihrer inneren Zahnkontaktflächen 39i und 45i von der axialen Bezugsposition jeweils größer als der axiale Abstand der inneren Zahnkontaktfläche 18bi von der axialen Bezugsposition sind.

Im Bereich des Abgabezahns 38 sowie des abgabeseitigen Mobilisierungszahns 18b' hat die Kette 50 im Eingriff mit dem Ritzel 18 großes axiales Bewegungsspiel, damit die Kette 50 während eines Hochschaltvorgangs vom Umwerfer 94 (s. Fig. 8) axial nach außen zum benachbarten Ritzel 16 umgelegt werden kann.

Ebenso ist die Kette 50 im Eingriff mit dem Ritzel 18 im Bereich des Fangzahns 44 und des aufnahmeseitigen Mobilisierungszahns 18b" axial mit größerem Bewegungsspiel geführt, um ein Fangen der Kette 50 beim Herunterschalten vom axial außen benachbarten Ritzel 16 auf das Ritzel 18 zu erleichtern.

Dann, wenn kein Schaltvorgang der Kette 50 vom Ritzel 18 nach außen weg erfolgen soll stabilisieren die Stabilisierungszähne 39 und 45 aufgrund der Lage ihrer inneren Zahnkontaktflächen 39i und 45i die Kette im Eingriff mit dem Ritzel 18, indem sie das an den Zähnen 18b', 38, 44 und 18b" gewährte axiale Bewegungsspiel einschränken. Insbesondere der Abgabezahn 38 und der Fangzahn 44 als Außenlaschen-Ritzelzähne gewähren ein besonders großes axiales Bewegungsspiel.

Das Ritzel 18 ist kleinstes von drei Ritzeln 18, 20 und 22 einer Übergangs-Ritzelgruppe 19, die mit dem Ritzel 20 das einzige ungeradzahlige Ritzel der Hinterradkassette 1 aufweist.

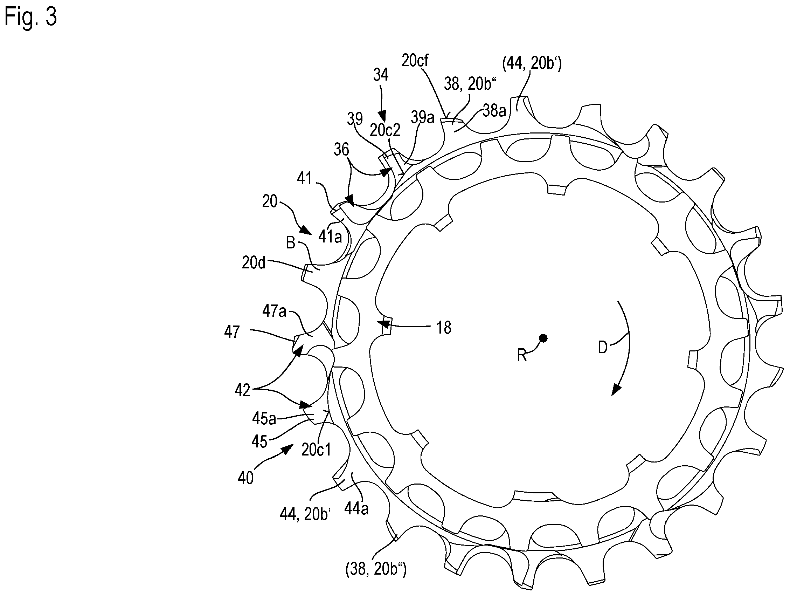

In Figur 3 ist in Bezugsbetrachtung die kleinere Ritzelpaarung der Ritzel 20 und 18 der Übergangs-Ritzelgruppe 19 gezeigt.

Gleiche Bezugszeichen und gleiche Kleinbuchstaben hinter einem Bezugszeichen am Ritzel 20 bezeichnen funktionsgleiche Bauteile oder Bauteilabschnitte der Ritzel 16 oder 18, die dort mit gleichen Bezugszeichen oder/und gegebenenfalls mit gleichen Kleinbuchstaben bezeichnet sind.

Ein Problem liegt dabei darin, dass jedem Zahn des geradzahligen Ritzels 18 für die gesamte Dauer des kämmenden Eingriffs des Ritzels 18 mit der Fahrradkette dieselbe Kettengliederart zum Eingriff zwischen den jeweiligen Laschen des jeweiligen Kettenglieds zugeordnet ist.

Auf dem ungeradzahligen Ritzel 20 mit 21 Zähnen ändert sich jedoch mit jedem Umlauf die einem Zahn zum formschlüssigen Eingriff zugeordnete Kettengliederart. Dennoch soll die Kette vom ungeradzahligen Ritzel 20 hinsichtlich der Relativlage der Kettengliederabfolge sowohl beim Hochschalten definiert an das Ritzel 18 als auch beim Herunterschalten definiert an das Ritzel 22 übergeben werden. An den geradzahligen Ritzeln 20 und 22 soll nicht der Zufall darüber entscheiden, ob ein Zahn mit einem Außenlaschen-Kettenglied oder einem Innenlaschen-Kettenglied in Eingriff ist, sondern es soll durch entsprechende Ausbildung der Übergangs-Ritzelgruppe 19 für ein definiertes Umlegen der Kette gesorgt werden.

Das Übergangsritzel 20 weist hierfür drei identische Umfangsabschnitte mit jeweils sieben Zähnen auf, die aufeinander folgend den gesamten Umfang des Übergangsritzels 20 bilden. Wiederum weist jeder der drei Umfangsabschnitte nur genau einen Abgabezahn 38 und nur genau einen Fangzahn 44 auf. Ebenso weist jeder der drei Umfangsabschnitte nur genau einen Hochschaltbereich 34 mit genau einer Hochschalt-Vertiefungsformation 36 und nur genau einen Herunterschaltbereich 40 mit genau einer Herunterschalt-Vertiefungsformation 36 auf. Durch die Aneinanderreihung der drei Umfangsabschnitte ist die Schaltlatenz des Übergangsritzels 20 sehr kurz. Zwischen dem Fangzahn 44 und dem Abgabezahn 38 befinden sich in Antriebsdrehrichtung D fünf Zähne am Ritzel 20. Zwischen zwei Abgabezähnen 38, bzw. zwischen zwei Fangzähnen 44 befinden sich in Umfangsrichtung des Ritzels 20 sechs Zähne. Somit wird dann, wenn einem Fangzahn 44 des Ritzels 20 bei einem Herunterschaltvorgang vom Ritzel 18, aus welchen Gründen auch immer, unerwünschterweise eine Innenlasche angenähert wird und es daher zu keinem Formschlusseingriff des Fangzahns 44 mit der Fahrradkette kommt, dem entgegen der Antriebsdrehrichtung D nächsten Fangzahn 44 des Ritzels 20 eine Außenlasche und somit ein Außenlaschen-Kettenglied unter Ausnutzung des durch die Herunterschalt-Vertiefungsformation 42 bereitgestellten Bewegungsraums angenähert, welches der Fangzahn 44 fangen kann.

Für den Hochschaltvorgang und den Abgabezahn 38 des Ritzels 20 gilt mutatis mutandis das gleiche. Befindet sich unmittelbar nach einem Einleiten des Hochschaltvorgangs durch den Fahrradfahrer ein Innenlaschen-Kettenglied im Formschlusseingriff mit dem Abgabezahn 38, verbleibt die Fahrradkette noch am Ritzel 20 bis der entgegen der Antriebsdrehrichtung D nächste Abgabezahn 38 mit einem Außenlaschen-Kettenglied in Eingriff ist und die Fahrradkette dann unter Ausnutzung des von der Hochschalt-Vertiefungsformation 36 eingeräumten Bewegungsraums auf das kleinere Ritzel 18 umgelegt werden kann.

Der Fangzahn 44 und der Abgabezahn 38 sind äußerst vorteilhaft so angeordnet, dass bei Aneinanderreihung der drei identischen Umfangsabschnitte der Abgabezahn 38 und der Fangzahn 44 unmittelbare Nachbarn sind. Da die Zähne 38 und 44 als Abgabezahn bzw. Fangzahn ohnehin besonders ausgebildet sind, und in der Regel eine geringere Kettenführungsabmessung aufweisen und nahe bei dem benachbarten kleineren Ritzel 18 angeordnet sind, wirken die Zähne 38 und 44 nicht nur als Abgabezahn 38 bzw. Fangzahn 44, sondern bildet der Abgabezahn 38 für den Fangzahn 44 einen aufnahmeseitigen Mobilisierungszahn 20b" und bildet der Fangzahn 44 für den Abgabezahn 38 einen abgabeseitigen Mobilisierungszahn 20b'.

Durch diese Doppelfunktion von Abgabezahn 38 und Fangzahn 44 jeweils auch als Mobilisierungszahn 20b" bzw. 20b' werden trotz Aneinanderreihung von drei Umfangsabschnitten mit jeweils wenigstens zwei veränderten und dadurch in ihrer Festigkeit geschwächten Zähnen 38 und 44 keine zusätzlichen strukturellen Zahnschwächungen durch Ausbildung gesonderter Mobilisierungszähne erforderlich, was insgesamt zu einem stabilen und verschleißfesten Übergangsritzel 20 führt.

Wie bei dem zuvor diskutierten Ritzel 18 ist auch am Ritzel 20 dem Abgabezahn 38 entgegen der Antriebsdrehrichtung D ein abgabeseitiger Stabilisierungszahn 39 benachbart. Ebenso ist dem Fangzahn 44 in Antriebsdrehrichtung D ein aufnahmeseitiger Stabilisierungszahn 45 benachbart. Dem abgabeseitigen Stabilisierungszahn 39 entgegen der Antriebsdrehrichtung D benachbart ist ein Zahn 41, dessen äußere Zahnkontaktfläche durch die Hochschalt-Vertiefungsformation 36 ausgenommen ist.

Dem aufnahmeseitigen Stabilisierungszahn 45 in Antriebsdrehrichtung D benachbart ist ein Zahn 47, dessen äußere Zahnkontaktfläche durch die Herunterschalt-Vertiefungsformation 42 ausgenommen ist. Zwischen den Zähnen 41 und 47 befindet sich der Bezugszahn B, welcher in der Gruppe von sieben Zähnen, die ausgehend vom Fangzahn 44, einschließlich desselben, in Antriebsdrehrichtung D bis zum Abgabezahn 38, einschließlich desselben, reicht, derjenige Zahn ist, hier insbesondere Innenlaschen-Ritzelzahn ist, welcher die betragsmäßig größte Kettenführungsabmessung aufweist.

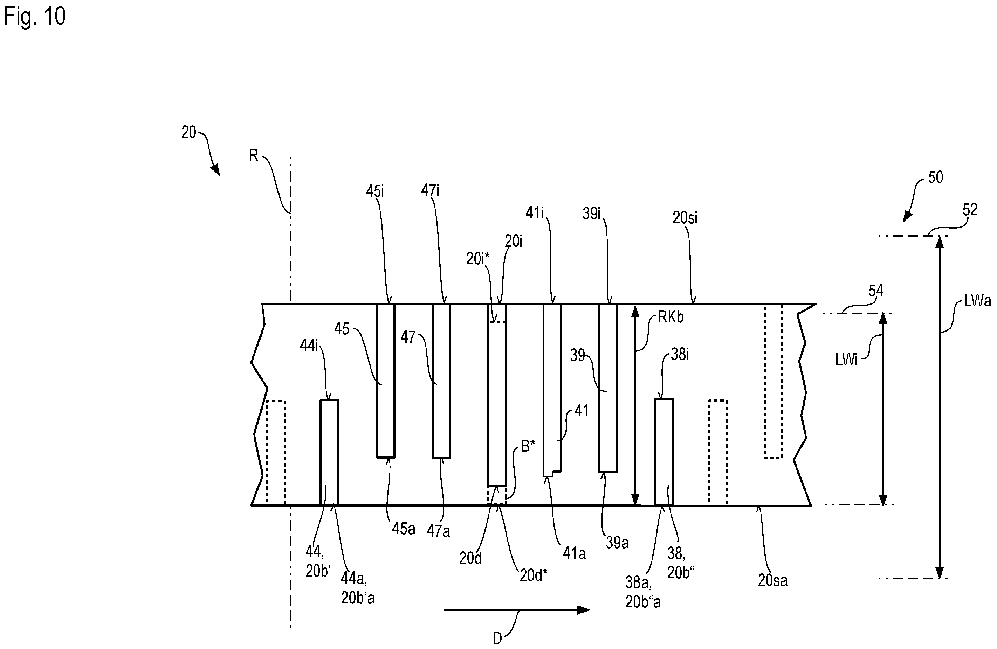

In Figur 10 ist eine der Figur 9 entsprechende Abwicklung der Ritzelzahnstruktur des Übergangsritzels 20 grobschematisch dargestellt. Da sich die oben genannte Gruppe von sieben Zähnen vom Fangzahn 44 in Antriebsdrehrichtung D bis zum Abgabezahn 38 am Umfang des Ritzels 20 dreimal wiederholt, reicht es aus, lediglich das sich wiederholende Grundmuster von sieben Zähnen darzustellen. Wie in Figur 3 zu erkennen ist, folgt in Antriebsdrehrichtung D auf den Abgabezahn 38 der Fangzahn 44 der nächsten Siebenergruppe.

Da das Ritzel 20 nur Innenlaschen-Ritzelzähne aufweist, kann das Ritzel 20 axial dünner ausgebildet sein als das zuvor diskutierte Ritzel 18, das auch Außenlaschen-Ritzelzähne 18a aufweist. Im vorliegenden Ausführungsbeispiel ist der axiale Abstand der inneren Stirnfläche 20si von der äußeren Stirnfläche 20sa geringfügig größer als die lichte Weite LWi der Innenlaschen-Kettenglieder 54 der mit der Ritzelkassette 1 zusammenwirkenden Fahrrad-Rollenkette 50. Im vorliegenden Beispiel ist der axiale Abstand der Stirnflächen 20si und 20sa voneinander um etwa 2 % größer als die lichte Weite LWi der Innenlaschen-Kettenglieder 54. Die Kettenführungsabmessung eines jeden Zahns des Ritzels 20 ist jedoch kleiner als die lichte Weite LWi.

Die in Figur 10 ebenso wie in Figur 9 nur schematisch angedeutete Kette 50 ist im Bereich der in Umfangsrichtung unmittelbar aufeinanderfolgenden Schaltfunktionszähne: Fangzahn 44 und Abgabezahn 38, aufgrund von deren verhältnismäßig kleiner Kettenführungsabmessung axial sehr schwach geführt. Im dargestellten Beispiel ist die Kettenführungsabmessung des Fangzahns 44 und des Abgabezahns 38 betragsmäßig gleich groß und nur unwesentlich, etwa 1,5 bis 4 % bezogen auf die lichte Weite LWi, größer als die halbe lichte Weite des Innenlaschen-Kettenglieds 54.

Um eine zu einem unvorteilhaften Zeitpunkt ausgelöste axiale Bewegung der Kette 50 nach außen im Bereich der unmittelbar aufeinanderfolgenden Schaltfunktionszähne 38 und 44 vermeiden zu können, ist der Zahn 39 als abgabeseitiger Stabilisierungszahn ausgebildet. An dem ausschließlich aus Innenlaschen-Ritzelzähnen gebildeten Ritzel 20 steht wegen der axial dünneren Ausbildung des Ritzels 20 weniger axialer Gestaltungsspielraum für die konstruktive Ausführung von Ritzelzähnen zur Verfügung als am dickeren Ritzel 18.

Vorliegend bildet der Ritzelzahn 39 gemeinsam mit dem ihm in Antriebsdrehrichtung D benachbarten Abgabezahn 38 eine zahnübergreifende gemeinsame Kettenführungsabmessung, gebildet aus dem axialen Abstand zwischen der inneren Zahnkontaktfläche 39i des abgabeseitigen Stabilisierungszahns 39 und der äußeren Zahnkontaktfläche 38a des Abgabezahns 38. Bevorzugt ist diese zahnübergreifende gemeinsame Kettenführungsabmessung betragsmäßig größer als die lichte Weite LWi. Dies ist technisch ohne weiteres möglich, da einer der beiden unmittelbar aufeinanderfolgenden Zähne 38 und 39 aufgrund der üblichen konstruktiven Struktur einer Fahrradkette während eines Eingriffs des Ritzels mit der Kette in den Eingriffsraum eines Außenlaschen-Kettenglieds 52 eingreift. Die zahnübergreifende gemeinsame Kettenführungsabmessung ist ebenfalls bevorzugt kleiner als die lichte Weite LWa eines Außenlaschen-Kettenglieds 52.

In jedem Fall ist die zahnübergreifende gemeinsame Kettenführungsabmessung von Abgabezahn 38 und abgabeseitigem Stabilisierungszahn 39 betragsmäßig größer als die betragsmäßig größte Kettenführungsabmessung eines Innenlaschen-Ritzelzahns des Ritzels 20. Dies ist im dargestellten Ausführungsbeispiel der mit durchgezogener Linie als Bezugszahn B gekennzeichnete Ritzelzahn, welcher in Umfangsrichtung gleich weit vom Abgabezahn 38 wie vom Fangzahn 44 entfernt gelegen ist.

Für den Fangzahn 44 und den ihm zugeordneten aufnahmeseitigen Stabilisierungszahn 45 gilt das oben zum Abgabezahn 38 und zum abgabeseitigen Stabilisierungszahn 39 Gesagte entsprechend. Auch der aufnahmeseitige Stabilisierungszahn 45 und der Fangzahn 44 bilden eine zahnübergreifende gemeinsame Kettenführungsabmessung, welche größer ist als die Kettenführungsabmessung des Bezugszahns B und welche betragsmäßig gleich groß ist wie die zahnübergreifende gemeinsame Kettenführungsabmessung der Zähne 38 und 39.

Da das Fangen der Kette am Fangzahn 44 beim Herunterschalten auf das Ritzel 20 schwieriger wiederholbar zu erreichen ist als das Abgeben der Kette am Abgabezahn 38 beim Hochschalten der Kette vom Ritzel 20 nach außen, ist der axiale Abstand der äußeren Zahnkontaktfläche 45a des aufnahmeseitigen Stabilisierungszahns 45 von der äußeren Zahnkontaktfläche 44a des Fangzahns 44 betragsmäßig größer als der axiale Abstand der äußeren Zahnkontaktfläche 39a des abgabeseitigen Stabilisierungszahns 39 von der äußeren Zahnkontaktfläche 38a des Abgabezahns 38. So ist im Herunterschaltbereich 40 in Antriebsdrehrichtung D dem Fangzahn 44 vorauseilend ein größerer Bewegungsraum zur axialen Annäherungsbewegung der Kette an das Ritzel 20 geschaffen als in dem dem Abgabezahn 38 nachlaufenden Bereich zur Abgabe der Kette nach axial außen.

Bevorzugt sind die äußeren Zahnkontaktflächen 38a und 44a des Abgabezahns 38 bzw. des Fangzahns 44 orthogonal zur Ritzelachse R orientiert und sind bevorzugt komplanar mit der ebenfalls vorzugsweise zur Ritzelachse R orthogonal orientierten äußeren Stirnfläche 20sa ausgebildet.

Vorzugsweise sind die inneren Zahnkontaktflächen 45i, 47i, 20i, 41i und 39i aller innerhalb der Umfangserstreckungen der Herunterschalt-Vertiefungsformation 42 und der Hochschalt-Vertiefungsformation 36 gelegenen Ritzelzähne 45, 47, B, 41 und 39 orthogonal zur Ritzelachse R orientiert und weiter bevorzugt komplanar mit der vorzugsweise ebenfalls zur Ritzelachse R orthogonal orientierten inneren Stirnfläche 20si ausgebildet.

Zur weiteren Erleichterung des Fangens einer Fahrradkette 50 beim Herunterschalten von außen auf das Ritzel 20 liegt die äußere Zahnkontaktfläche 47a des dem aufnahmeseitigen Stabilisierungszahn 45 in Antriebsdrehrichtung D benachbarten Ritzelzahns 47 an der gleichen Axialposition wie die äußere Zahnkontaktfläche 45a des aufnahmeseitigen Stabilisierungszahns 45. Sie ist axial weiter von der Axialposition der äußeren Zahnfläche 44a des Fangzahns 44 nach innen versetzt angeordnet als die äußere Zahnkontaktfläche 41a des dem abgabeseitigen Stabilisierungszahn 39 entgegen der Antriebsdrehrichtung D benachbarten Ritzelzahns 41 von der äußeren Zahnkontaktfläche 38a des Abgabezahns 38 nach innen versetzt angeordnet ist. Hierdurch wird auf der Abgabeseite, also im Umfangserstreckungsbereich der Hochschalt-Vertiefungsformation 36, eine bessere axiale Kettenführung erzielt als auf der Aufnahmeseite, also im Umfangserstreckungsbereich der Herunterschalt-Vertiefungsformation 42. Die Abgabeseite ist daher durch Reduzierung von Kettenführungsabmessungen hinsichtlich ihrer axialen Kettenführungsrolle nur insoweit geschwächt als dies zur Verwirklichung eines Hochschaltvorgangs notwendig ist. Daher ist die äußere Zahnkontaktfläche 41a bezüglich der äußeren Zahnkontaktfläche 39a nach außen versetzt.

Die Stabilisierungszähne 39 und 45 in Figur 10 stellen in Bezug auf den mit durchgezogener Linie dargestellten Bezugszahn B Stabilisierungszähne nur der in der Beschreibungseinleitung genannten zweiten Ausführungsform dar. Denn die inneren Zahnkontaktflächen 39i bzw. 45i des abgabeseitigen Stabilisierungszahns 39 bzw. des aufnahmeseitigen Stabilisierungszahns 45 sind axial nicht weiter von der axialen Bezugsposition entfernt ist als die innere Zahnkontaktfläche 20i des Bezugszahns B, sondern gleich weit die diese.

Allerdings bilden die Stabilisierungszähne 39 und 45 mit dem ihm durch Anordnung im selben Schaltfunktionsbereich aus Hochschaltbereich 34 und Herunterschaltbereich 40 zugeordneten Schaltfunktionszahn: Abgabezahn 38 bzw. Fangzahn 44, eine ritzelzahnübergreifende axiale Kettenführungsabmessung RKb, welche jene des hier angewendeten Bezugszahns B als dem Innenlaschen-Ritzelzahn mit der größten Kettenführungsabmessung Kb nicht nur nicht unterschreitet, sondern sogar überschreitet. Bevorzugt unterschreitet diese ritzelzahnübergreifende Kettenführungsabmessung RKb die lichte axiale Weite LWi eines Innenlaschen-Kettenglieds einer mit dem Ritzel 20 in einer Antriebsanordnung eines Fahrrads kooperierenden Fahrradkette nicht. Besonders bevorzugt überschreitet sie die lichte axiale Weite LWi zur verbesserten Stabilisierung der Fahrradkette an dem mit der Fahrradkette kämmenden Ritzel 20 sogar. Die ritzelzahnübergreifende axiale Kettenführungsabmessung entspricht als abgabeseitige ritzelzahnübergreifende Kettenführungsabmessung dem axialen Abstand der inneren Zahnkontaktfläche 39i des abgabeseitigen Stabilisierungszahns 39 von der äußeren Zahnkontaktfläche 38a des Abgabezahns 38. Sie entspricht als aufnahmeseitige ritzelzahnübergreifende Kettenführungsabmessung dem axialen Abstand der inneren Zahnkontaktfläche 45i des aufnahmeseitigen Stabilisierungszahns 45 von der äußeren Zahnkontaktfläche 44a des Fangzahns 44. Abgabeseitige und aufnahmeseitige ritzelzahnübergreifende Kettenführungsabmessung sind im dargestellten Ausführungsbeispiel gleich groß.

In Figur 10 ist strichliniert ein alternativer Bezugszahn B* dargestellt, welcher die gleiche Kettenführungsabmessung aufweist wie der vorstehend diskutierte Bezugszahn B des Ritzels 20, jedoch verglichen mit diesem axial zur äußeren Stirnfläche 20sa hin versetzt angeordnet ist. Der axiale Versatz kann des alternativen Bezugszahns B* relativ zum Bezugszahn B kann beispielhaft zwischen 0,1 und 0,3 mm, vorzugsweise 0,2 mm betragen. Die Kettenführungsbreite beider Bezugszähne B und B* ist im dargestellten Ausführungsbeispiel betragsmäßig gleich. Dementsprechend ist die innere Zahnkontakt-Bezugsfläche 20i* des alternativen Bezugszahns B* in Richtung zur äußeren Stirnfläche 20sa hin mit axialem Abstand von den inneren Zahnkontaktflächen 45i, 47i, 39i und 38i angeordnet. Der axiale Abstand jeder dieser Zahnkontaktflächen zur äußeren Zahnkontakt-Bezugsfläche 20d* des alternativen Bezugszahns B* ist daher größer als der axiale Abstand der innere Zahnkontakt-Bezugsfläche 20i* zur äußeren Zahnkontakt-Bezugsfläche 20d*.

Somit sind die Stabilisierungszähne 39 und 45 in Figur 10 in Bezug auf den strichliniert dargestellten Bezugszahn B* jeweils Stabilisierungszähne auch der in der Beschreibungseinleitung genannten ersten Ausführungsform.

Der alternative Bezugszahn B* kann besonders vorteilhaft durch spanloses Umformen gebildet sein, etwa wenn das Ritzel 20 als spanlos umgeformtes Ritzel 20* gebildet ist, ist jedoch nicht auf diese Herstellungsart beschränkt. Der alternative Bezugszahn B* kann auch durch spanende Formgebung hergestellt sein.

Da in den detailliert dargestellten Ausführungsbeispielen der Ritzel 18, 22 und 24 in den Figuren 9, 11 und 12 die äußeren Zahnkontaktflächen 38a der jeweiligen Abgabezähne 38 sowie die äußeren Zahnkontaktflächen 44a der jeweiligen Fangzähne 44 in einer gemeinsamen Ebene mit der äußeren Zahnkontakt-Bezugsfläche des jeweiligen Bezugszahns B liegen, sind die Stabilisierungszähne 39 und 45 der Ritzel 18, 22 und 24 nicht nur Stabilisierungszähne der in der Beschreibungseinleitung genannten ersten Ausführungsform, sondern auch der zweiten Ausführungsform (siehe hierzu die ritzelzahnübergreifende Kettenführungsabmessung RKb in den Figuren 9, 11 und 12).

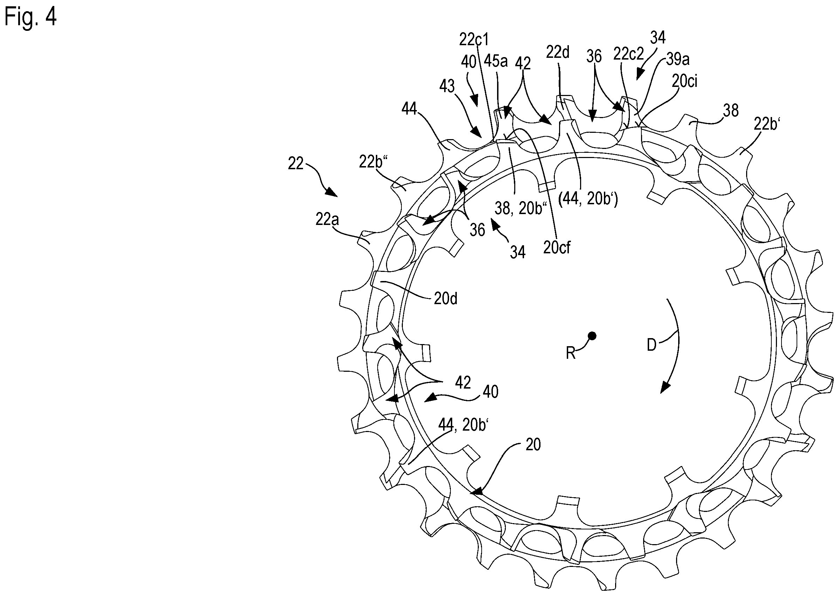

In Figur 4 ist in Bezugsbetrachtung die größere Ritzelpaarung der Übergangs-Ritzelgruppe 19 mit dem 24-T-Ritzel 22 und dem 21-T-Ritzel 20 dargestellt.

Auch hier kommt es darauf an, die Fahrradkette vom ungeradzahligen Ritzel 20 mit eindeutiger Relativanordnung der Kettengliederabfolge auf das größere Ritzel 22 umzulegen.

Gleiche Bezugszeichen und gleiche Kleinbuchstaben hinter einem Bezugszeichen am Ritzel 22 bezeichnen funktionsgleiche Bauteile oder Bauteilabschnitte der Ritzel 16, 18 oder 20, die dort mit gleichen Bezugszeichen oder/und gegebenenfalls mit gleichen Kleinbuchstaben bezeichnet sind.

Das 24-T-Ritzel 22 weist ebenfalls drei identische Umfangsabschnitte auf, welche in Umfangsrichtung aufeinander folgend den vollständigen Umfang des Ritzels 22 bilden. Jeder Umfangsabschnitt weist daher acht Zähne auf. In Figur 4 ist der Einfachheit halber nur genau ein Umfangsabschnitt des Ritzels 22 mit Bezugszeichen versehen. Der Umfangsabschnitt umfasst die sieben Zähne der Schaltstrecke, die von einschließlich dem aufnahmeseitigen Mobilisierungszahn 22b" in Antriebsdrehrichtung D bis zu einschließlich dem abgabeseitigen Mobilisierungszahn 22b' reicht, plus einem herkömmlichen Außenlaschen-Ritzelzahn 22a.

In Antriebsdrehrichtung D am äußersten Ende des Umfangsabschnitts befindet sich der abgabeseitige Mobilisierungszahn 22b' für den ihm entgegen der Antriebsdrehrichtung D benachbarten Abgabezahn 38. Weiter entgegen der Antriebsdrehrichtung D folgen auf den Abgabezahn 38 drei Zähne, an welchen die Hochschalt-Vertiefungsformation 36 und die Herunterschalt-Vertiefungsformation 42 ausgebildet sind, wobei am mittleren Zahn der drei Zähne eine Abweisfläche 22d ausgebildet ist.

Auf die drei Zähne folgt entgegen der Antriebsdrehrichtung D der Fangzahn 44, welchem entgegen der Antriebsdrehrichtung D wiederum sein aufnahmeseitiger Mobilisierungszahn 22b" benachbart ist. Entgegen der Antriebsdrehrichtung D am äußersten Ende des Umfangsabschnitts befindet sich ein regulärer Zahn des Ritzels 22, welcher beispielhaft als dicker Außenlaschen-Ritzelzahn 22a derart ausgebildet ist, dass er nur mit einem Außenlaschen-Kettenglied 54 in Eingriff gelangen kann.

Zwar sind hier Mobilisierungszähne 22b' und 22b" zusätzlich zu einem Abgabezahn 38 und einem Fangzahn 44 ausgebildet, jedoch sind auf einem Raum von nur drei Zähnen beide Vertiefungsformationen 36 und 42 für das Herunterschalten und für das Hochschalten ausgebildet, sodass insgesamt eine moderate strukturelle Schwächung durch Materialabnahme am Ritzel 22 realisiert ist und das Ritzel 22 insgesamt eine hohe Stabilität und Verschleißfestigkeit aufweist. Je größer ein Ritzel ist, desto geringer fallen die Ausbildungen von Vertiefungsformationen und dergleichen als strukturelle Schwächung der Festigkeit des Ritzels ins Gewicht.

Wenngleich aufgrund der unvorhersagbaren Umdrehungszahl des Ritzels 20 unbekannt ist, in welcher Relativlage bezüglich der Kettengliederabfolge die Fahrradkette vom Ritzel 20 beim Herunterschalten an das Ritzel 22 übergeben wird, wird derjenige Fangzahn 44, dem ein Außenlaschen-Kettenglied angenähert wird, die Kette durch Formschlusseingriff mit dem Kettenglied fangen und so für einen Herunterschaltvorgang sorgen. Dies ist spätestens der zweite Fangzahn 44, der relativ zu dem den Schaltvorgang bewirkenden Umwerfer 94 (s. Fig. 8) in eine für den ausgelösten Schaltvorgang relevante Drehstellung gelangt.

Ebenso wird die Kette pro Umfangsabschnitt des Ritzels 22 nur genau von einem einzigen Zahn, nämlich dem Abgabezahn 38 als dem letzten eingreifenden Zahn an das kleinere Ritzel 20 übergeben. Da dem Abgabezahn 38 am Ritzel 22 stets ein Außenlaschen-Kettenglied zugeordnet ist, erfolgt ein Hochschaltvorgang vom Ritzel 22 auf das Ritzel 20 am nächsten den Schaltbereich des Umwerfers 94 passierenden Abgabezahn 38. Dies bedeutet eine sehr kurze Schaltlatenz von nur einer Drittelumdrehung und, wegen der Ausbildung nur eines Zahns als Abgabezahn 38 pro Umfangsabschnitt, eine geringste mögliche Schwächung des Ritzels 22.

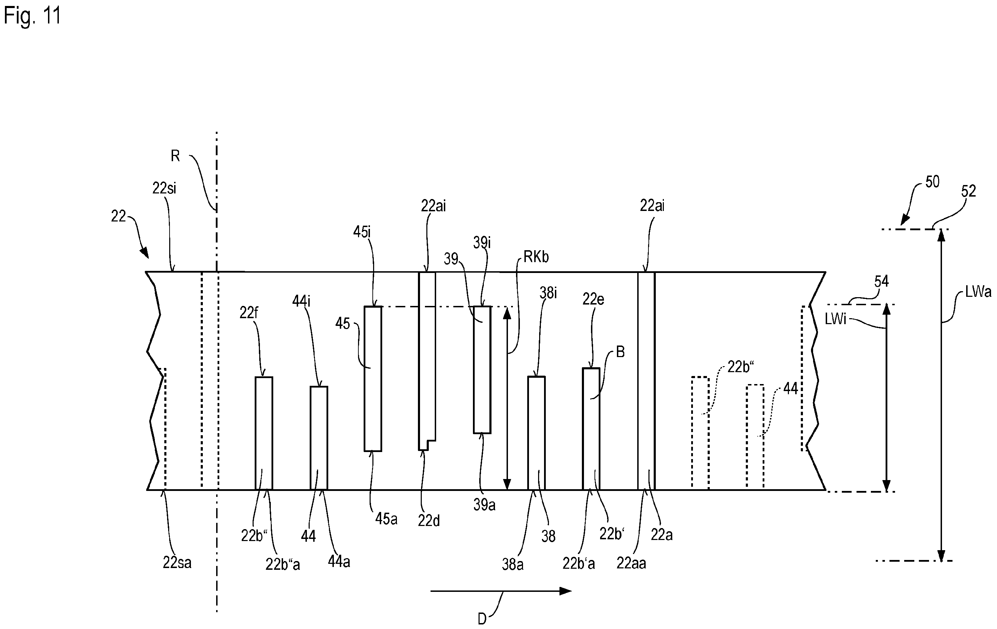

Figur 11 zeigt eine grobschematische Abwicklung einer Schaltstrecke des Ritzels 22, so wie Figur 10 eine Schaltstrecke des Ritzels 20 zeigt.

Aufgrund der drei in Umfangsrichtung aufeinanderfolgenden Schaltstrecken mit jeweils sieben Zähnen verbleiben am Ritzel 22 lediglich drei herkömmliche Zähne 22a, deren äußere und innere Zahnkontaktfläche axial nicht eigens zur Erfüllung von Schaltfunktionen angeordnet und ausgebildet sind. Dabei handelt es sich um Außenlaschen-Ritzelzähne 22a, welche aufgrund ihrer Kettenführungsabmessung nur in ein Außenlaschen-Kettenglied 52, nicht jedoch in ein Innenlaschen-Kettenglied 54 eingreifen können. Bezugszahn als der Innenlaschen-Ritzelzahn mit der größten Kettenführungsabmessung ist daher am Ritzel 22 der abgabeseitige Mobilisierungszahn 22b'. Die axiale Bezugsposition ist daher definiert durch die Axialposition der äußeren Zahnkontaktfläche 22b'a des abgabeseitigen Mobilisierungszahns 22b'.

Die äußeren Zahnkontaktflächen 22b'a, 22b"a, 38a, 44a und 22aa der beiden Mobilisierungszähne 22b' und 22b", des Abgabezahns 38, des Fangzahns 44 und des herkömmlichen Außenlaschen-Ritzelzahns 22a befinden sich im dargestellten Ausführungsbeispiel auf ein und derselben axialen Position, die bevorzugt auch die axiale Position der äußeren Stirnfläche 22sa des Ritzels 22 ist. Wiederum sind bevorzugt die äußeren Zahnkontaktflächen 22b'a, 22b"a, 38a, 44a und 22aa sowie die äußere Stirnfläche 22sa des Ritzelgrundkörpers des Ritzels 22 orthogonal zur Ritzelachse R orientiert. Gleiches gilt für die bevorzugt an derselben Axialposition gelegenen inneren Zahnkontaktflächen 22ai der herkömmlichen Außenlaschen-Ritzelzähne 22a und der inneren Stirnfläche 22si des Ritzels 22, welche ebenfalls bevorzugt orthogonal zur Ritzelachse R orientiert sind.

Die zweitgrößte Kettenführungsabmessung der Schaltstrecke weisen im dargestellten Ausführungsbeispiel der Abgabezahn 38 und der aufnahmeseitige Mobilisierungszahn 22b" auf, wobei hier zu beachten ist, dass der Abgabezahn 38 aufgrund der Ausbildung der Außenlaschen-Ritzelzähne 22a am Ritzel 22 zum Eingriff nur mit einem Außenlaschen-Kettenglied 52 vorgesehen ist, während der aufnahmeseitige Mobilisierungszahn 22b" zum Eingriff nur mit einem Innenlaschen-Kettenglied 54 vorgesehen ist.

Die kleinste Kettenführungsabmessung in der Schaltstrecke weist der Fangzahn 44 auf, um möglichst ungehindert in ein Außenlaschen-Kettenglied 52 der Kette 50 während eines Herunterschaltvorgangs eingreifen zu können.

Folglich liegt die innere Zahnkontaktfläche 44i näher bei der axialen Bezugsposition als die innere Zahnkontaktfläche 22f des aufnahmeseitigen Mobilisierungszahns 22b" und als die innere Zahnkontaktfläche 38i des Abgabezahns 38. Die letztgenannten inneren Zahnkontaktflächen 22f und 38i liegen wiederum näher bei der axialen Bezugsposition als die innere Zahnkontaktfläche 22e des als Bezugszahn B dienenden abgabeseitigen Mobilisierungszahns 22b'.

Die inneren Zahnkontaktflächen 39i und 45i des abgabeseitigen Stabilisierungszahns 39 bzw. des aufnahmeseitigen Stabilisierungszahns 45 liegen von der axialen Bezugsposition axial weiter entfernt als die äußere Zahnkontaktfläche 22e des Bezugszahns B.

Im dargestellten Ausführungsbeispiel liegen die vorzugsweise orthogonal zur Ritzelachse R orientierten inneren Zahnkontaktflächen 39i und 45i komplanar an einer gemeinsamen Axialposition längs der Ritzelachse R, wobei deren axialer Abstand von der axialen Bezugsposition geringer ist als die lichte Weite LWi der mit dem Ritzel 22 zusammenwirkenden Fahrradkette 50. Anders als bei den vorhergehenden Ritzeln 18 und 20 ist die äußere Zahnkontaktfläche 39a des abgabeseitigen Stabilisierungszahns 39 axial weiter von der axialen Bezugsposition und von der ebenfalls an der axialen Bezugsposition liegenden äußeren Zahnkontaktfläche 38a des Abgabezahns 38 entfernt als die korrespondierende äußere Zahnkontaktfläche 45a des aufnahmeseitigen Stabilisierungszahns 45 von der äußeren Zahnkontaktfläche 44a des Fangzahns 44 axial entfernt gelegen ist. Die Kettenführungsabmessung des abgabeseitigen Stabilisierungszahns 39 ist daher am Ritzel 22 kürzer als die Kettenführungsabmessung des aufnahmeseitigen Stabilisierungszahns 45.

Die zahnübergreifende gemeinsame Kettenführungsabmessung, die ein Stabilisierungszahn 39 oder 45 mit seinem als Nachbarzahn zugeordneten Schaltfunktionszahn 38 bzw. 44 bildet, also der axiale Abstand einer äußeren Zahnkontaktfläche eines Schaltfunktionszahns von der inneren Zahnkontaktfläche des dem Schaltfunktionszahn zugeordneten Stabilisierungszahns, ist größer als die Kettenführungsabmessung des Bezugszahns in Gestalt des Innenlaschen-Ritzelzahns des Ritzels 22 mit der größten Kettenführungsabmessung.

Die Bedingung, dass eine zahnübergreifende gemeinsame Kettenführungsabmessung, die ein Stabilisierungszahn mit seinem räumlich durch Nachbarschaft zugeordneten Schaltfunktionszahn: Abgabezahn oder Fangzahn, bildet, größer ist als die Kettenführungsabmessung des Innenlaschen-Ritzelzahns des betreffenden Ritzels mit der größten Kettenführungsabmessung ist allgemein insbesondere immer dann einfach zu erfüllen, wenn die äußere Zahnkontaktfläche des zugehörigen Schaltfunktionszahns an der gleichen Axialposition wie die äußere Zahnkontakt-Bezugsfläche oder sogar axial weiter außen liegt.

Im vorliegend diskutierten Ausführungsbeispiel weisen auch die Zahnpaare aus abgabeseitigen Stabilisierungszahn 39 und Abgabezahn 38 sowie aus aufnahmeseitigen Stabilisierungszahn 45 und Fangzahn 44 am Ritzel 18 eine größere zahnübergreifende gemeinsame Kettenführungsabmessung auf als der Bezugszahn B des Ritzels 18.

Der radial innere Zahngrund des Schalt-Zahnzwischenraums 43, welcher in Antriebsdrehrichtung D dem Fangzahn 44 und entgegen der Antriebsdrehrichtung dem aufnahmeseitigen Stabilisierungszahn 45 unmittelbar benachbart ist, befindet sich radial näher bei der Ritzelachse R als die Zahngründe der übrigen Zahnzwischenräume. Durch den so für eine Kettenrolle eingeräumten Bewegungsweg nach radial innen kann der Umlegeweg, den die Fahrradkette beim Umlegen vom kleineren Ritzel 20 auf das größere Ritzel 22 nimmt, so angepasst werden, dass seine Länge ein ganzzahliges Vielfaches der Kettenteilung ist. Dies ist Randbedingung für einen Schaltvorgang zwischen zwei Ritzeln.

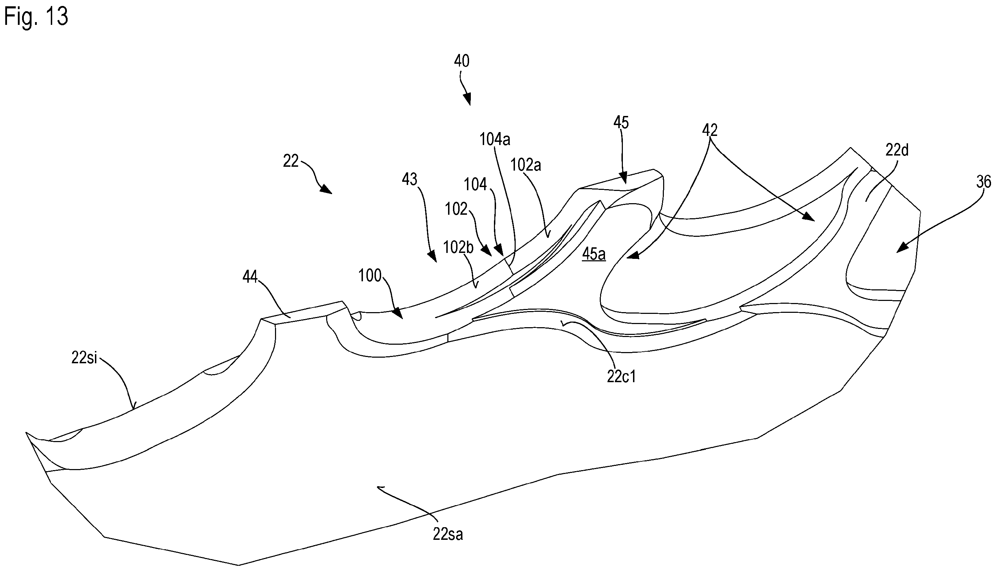

In Figur 13 ist der Bereich des Schalt-Zahnzwischenraums 43 am Zahn 22 perspektivisch vergrößert dargestellt. Der Schalt-Zahnzwischenraum 43 ist durch seine Rollenanlagefläche 100 begrenzt. Die Rollenanlagefläche 100 ist zur Anlage einer Rolle der Fahrradkette 50 beim Herunterschalten vom nächst kleineren Ritzel 20 auf das Ritzel 22 sowie beim herkömmlichen Eingriff der Fahrrad-Rollenkette 50 mit dem Ritzel 22 ohne Schaltvorgang ausgebildet.

Ausgehend von der inneren Stirnfläche 22si des Ritzels 22 erstreckt sich in der näher beim aufnahmeseitigen Stabilisierungszahn 45 gelegenen Umfangshälfte des Schalt-Zahnzwischenraums 43 eine Hilfsflankenformation 102, im dargestellten Beispiel über etwa die Hälfte der axialen Abmessung der Rollenanlagefläche 100. Die Hilfsflankenformation 102 reicht axial nicht bis zur äußeren Stirnfläche 22sa des Ritzels 22. Axial neben der Hilfsflankenformation 102 befindet sich beispielsweise ein durch die Hilfsflankenformation 102 unverändert gebliebener Teil der Rollenanlagefläche 100 sowie ein Abschnitt der Rampe 22c1.

Die Hilfsflankenformation 102 umfasst eine radial weiter außen liegende Antriebs-Rollenanlagefläche 102a und eine radial weiter innen gelegene Schalt-Rollenanlagefläche 102b. Die Antriebs-Rollenanlagefläche 102a dient als Anlagefläche für eine Kettenrolle der Fahrradkette 50 bei herkömmlichem Eingriffsbetrieb ohne Schaltvorgang. Die Schalt-Rollenanlagefläche 102b dient als Anlagefläche für dieselbe Kettenrolle der Fahrradkette 50 beim Herunterschalten vom axial benachbarten kleineren Ritzel 20 auf das Ritzel 22.

Da jede der beiden konkaven Teil-Rollenanlageflächen 102a und 102b der Hilfsflankenformation 102 einen kleineren Krümmungsradius aufweist als die von der Hilfsflankenformation 102 freie Rollenanlagefläche 100 des Schalt-Zahnzwischenraums 43, ragt die Antriebs-Rollenanlagefläche 102a mit zunehmenden Verlauf radial vom Zahnkopf des aufnahmeseitigen Stabilisierungszahns 45 weg in den Schalt-Zahnzwischenraum 43 vor. Ebenso ragt die Schalt-Rollenanlagefläche 102b mit zunehmenden Verlauf ausgehend von einem in einem Umfangsmittenbereich des Schalt-Zahnzwischenraums 43 zwischen dem Fangzahn 44 und dem aufnahmeseitigen Stabilisierungszahn 45 gelegenen Zahngrund zum aufnahmeseitigen Stabilisierungszahn 45 hin in den Schalt-Zahnzwischenraum 43 hinein. Die beiden Teil-Rollenanlageflächen 102a und 102b treffen sich an einem Scheitelabschnitt 104, welcher im dargestellten Beispiel eine parallel zur Ritzelachse R verlaufende Scheitellinie 104a ist.

Der Scheitelabschnitt 104 bildet eine Art Scheidenase, welche wie eine Rastnase in den Schalt-Zahnzwischenraum 43 einragt und die in den Schalt-Zahnzwischenraum 43 eingreifende Kettenrolle abhängig vom Betriebsvorgang: Herunterschalten oder herkömmlicher Eingriffsbetrieb, zur Anlage entweder an die Antriebs-Rollenanlagefläche 102a oder an die Schalt-Rollenanlagefläche 102b drängt und einen Übergang des Anlageeingriffs der Kettenrolle wenigstens von der Antriebs-Rollenanlagefläche 102a zur Schalt-Rollenanlagefläche 102b auch unter unterstützendem Einfluss der Kettenspannung im Zugtrum der Fahrradkette 50, zu dem die in den Schalt-Zahnzwischenraum 43 eingreifende Kettenrolle gehört, verhindert.

Somit kann die Rolle der herkömmlich mit dem Ritzel 22 in Eingriff stehenden Fahrradkette trotz der radial tieferen Ausbildung des Schalt-Zahnzwischenraums 43, verglichen mit den übrigen Zahnzwischenräumen des Ritzels 22, in definierter Lage an der Lastflanke des aufnahmeseitigen Stabilisierungszahns 45 anliegen, sodass an diesem Anlageeingriff keine störenden Geräusche und kein erhöhter Verschleiß auftritt.

Durch die Ausbildung der Hilfsflankenformation 102 axial derart, dass sie nicht bis zur äußeren Stirnfläche 22sa und auch nicht bis zur äußeren Zahnkontaktfläche 45a des aufnahmeseitigen Stabilisierungszahns 45 reicht, stört der Scheitelbereich 104 beim Herunterschalten nicht. Der die äußere Zahnkontaktfläche 45a ausbildende axial äußere Abschnitt des aufnahmeseitigen Stabilisierungszahns 45 kann zwischen zwei Außenlaschen der Fahrradkette 50 axial eingreifen und mit der Zahnkontaktfläche 45a in Anlage an die Außenfläche einer Innenlasche der Fahrradkette 50 gelangen. Im axialen Bereich zwischen der äußeren Zahnkontaktfläche 45a und der Hilfsflankenformation kann dann ein Abschnitt einer Außenlasche des Außenlaschen-Kettenglieds aufgenommen sein, welches vom Fangzahn 44 gefangen wird und in dessen Eingriffsraum der Fangzahn 44 als erster Zahn des Ritzels 22 beim Herunterschalten eingreift.

An der größeren Ritzelpaarung der Übergangs-Ritzelgruppe 19 ist auch eine Abstützung beider Innenlaschen eines Innenlaschen-Kettengliedes beim Hochschalten vom Ritzel 22 auf das Ritzel 20 möglich, nämlich für die axial weiter außen liegende Innenlasche auf der Kopffläche 20ci und für die axial weiter innen liegende Innenlasche auf der Rampe 22c2, welche die Abweisfläche 39a nach radial innen begrenzt. Die Kopffläche 20ci ist zur möglichst flächigen Abstützung eines konkaven inneren Randes 54c einer Innenlasche konvex ausgebildet, wobei jedoch das in Antriebsdrehrichtung vorauseilende Ende der Kopffläche 20ci radial weiter außen angeordnet ist als das nachlaufende Ende der Kopffläche 20ci.

In Figur 5 ist beispielhaft dargestellt, wie eine Fahrradkette 50 aus einer Folge von Außenlaschen-Kettengliedern 52 und Innenlaschen-Kettengliedern 54 aus dem kämmenden Eingriff mit dem Ritzel 22 auf das kleinere Ritzel 20 hochgeschaltet wird. Zu erkennen ist, dass der Abgabezahn 38 der letzte mit der Fahrradkette 50 eingreifende Zahn des Ritzels 22 ist.

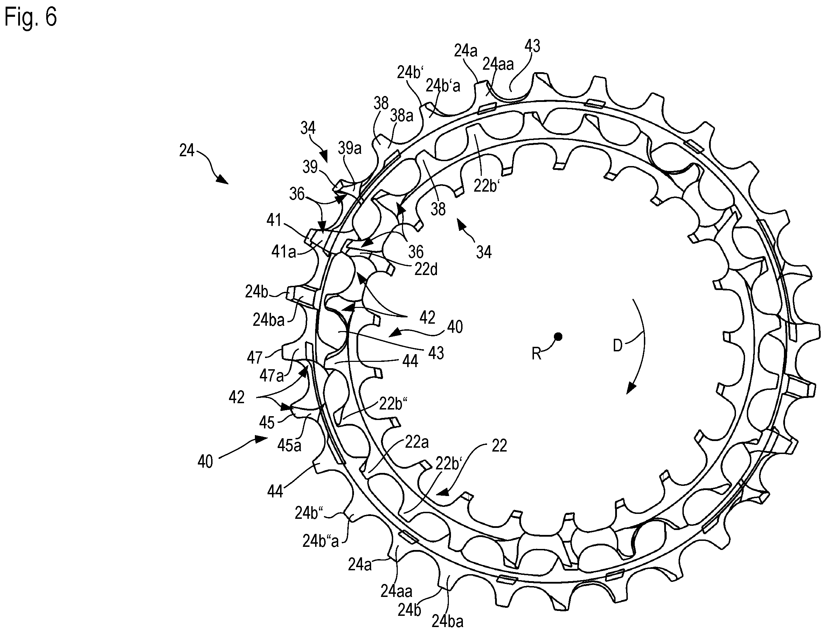

Lediglich beispielhaft ist in Figur 6 eine Ritzelpaarung aus dem 28-T-Ritzel 24 und dem zuvor diskutierten 24-T-Ritzel 22 dargestellt. Das Ritzel 22 wurde oben bereits diskutiert. Das Ritzel 24 weist längs seines Umfangs zwei Hochschaltbereiche 34 und zwei Herunterschaltbereiche 40 auf, wobei in gleiche Richtung schaltende Bereiche 34 bzw. 40 einander diametral am Ritzel 24 gegenüberliegen.

Gleiche Bezugszeichen und gleiche Kleinbuchstaben hinter einem Bezugszeichen am Ritzel 24 bezeichnen funktionsgleiche Bauteile oder Bauteilabschnitte der Ritzel 16, 18, 20 oder 22, die dort mit gleichen Bezugszeichen oder/und gegebenenfalls mit gleichen Kleinbuchstaben bezeichnet sind.

Auch das Ritzel 24 weist Schalt-Zahnzwischenräume 43 mit nach radial innen zur Ritzelachse R hin versetztem Zahngrund auf. Diese Schalt-Zahnzwischenräume 43 spielen jedoch keine Rolle für ein Umlegen der Kette zwischen den benachbarten Ritzeln 24 und 22, sondern für ein Umlegen der Fahrradkette zwischen dem Ritzel 24 und dem nächst größeren Ritzel 26.

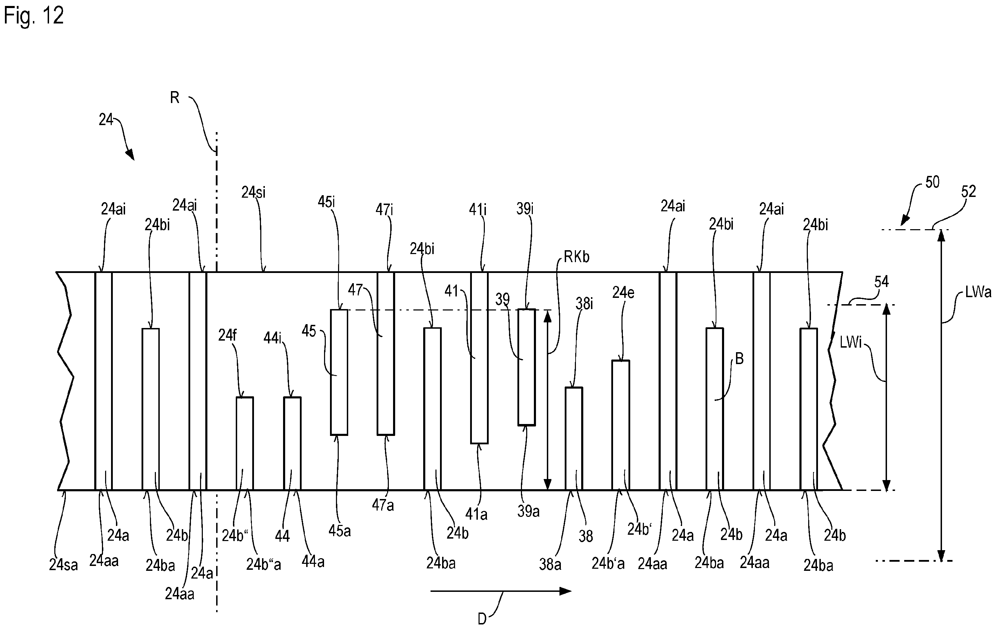

In Figur 12 ist eine grobschematische Abwicklung der neun Zähne umfassenden Schaltstrecke ausgehend von einschließlich dem aufnahmeseitigen Mobilisierungszahn 24b" in Antriebsdrehrichtung D bis einschließlich zum abgabeseitigen Mobilisierungszahn 24b' sowie mit die Schaltstrecke beidseitig einrahmenden herkömmlichen gleichartigen Innenlaschen-Ritzelzähnen 24b und Außenlaschen-Ritzelzähnen 24a gezeigt. Bezugszahn B ist im Grunde jeder beliebige herkömmliche Innenlaschen-Ritzelzahn 24b, denn ein solcher weist die größte Kettenführungsabmessung unter den Innenlaschen-Ritzelzähnen 24b des Ritzels 24 auf.

Wiederum sind bevorzugt die äußere Stirnfläche 24sa und die innere Stirnfläche 24si des Ritzels 24 zueinander parallel und zur Ritzelachse R orthogonal. Auch die in Figur 12 angezeigten Zahnkontaktflächen sind bevorzugt orthogonal zur Ritzelachse R orientiert.

Alle äußeren Zahnkontaktflächen 24aa, 24ba, 24b'a, 24b"a, 44a und 38a der herkömmlichen Außenlaschen-Ritzelzähne 24a, der herkömmlichen Innenlaschen-Ritzelzähne 24b, der Mobilisierungszähne 24b' und 24b", des Fangzahns 44 bzw. des Abgabezahns 38 befinden sich an ein und derselben Axialposition, die wegen der Gemeinsamkeit mit der Axialposition der äußeren Zahnkontakt-Bezugsfläche 24ba auch die axiale Bezugsposition ist.

Die inneren Zahnkontaktflächen 39i und 45i des abgabeseitigen Stabilisierungszahns 39 bzw. des aufnahmeseitigen Stabilisierungszahns 45 befinden sich axial weiter von der axialen Bezugsposition entfernt als die innere Zahnkontaktfläche 24bi des Bezugszahns B in Gestalt eines herkömmlichen Innenlaschen-Ritzelzahns 24b. Der axiale Abstand der inneren Zahnkontaktflächen 39i und 45i von der axialen Bezugsposition ist jedoch jeweils geringfügig, etwa um zwischen 5 % und 6 % bezogen auf die lichte Weite LWi, kleiner als die lichte Weite LWi eines Innenlaschen-Kettenglieds 54.

Wiederum ist die zahnübergreifende gemeinsame Kettenführungsabmessung, welche ein Stabilisierungszahn und sein ihm benachbarter Schaltfunktionszahn aus Abgabezahn und Fangzahn gemeinsam bilden, größer als die Kettenführungsabmessung des Bezugszahns B.

Die Kettenführungsabmessungen des Fangzahns 44 und des ihm benachbarten aufnahmeseitigen Mobilisierungszahns 24b" sind im dargestellten Ausführungsbeispiel gleich.

Die äußeren Zahnkontaktflächen 45a und 47a des aufnahmeseitigen Stabilisierungszahns 45 bzw, des ihm in Antriebsdrehrichtung D benachbarten Zahns 47 liegen auf einer gemeinsamen Axialposition und sind damit axial gleich weit von der axialen Bezugsposition entfernt.

Auf der Abgabeseite ist die Kettenführungsabmessung des abgabeseitigen Mobilisierungszahns 24b' größer als jene des Abgabezahns 38, welche wiederum größer ist als die Kettenführungsabmessung des Fangzahns 44 und des aufnahmeseitigen Mobilisierungszahns 24b". Aus der oben genannten identischen Axialposition der äußeren Zahnkontaktflächen der genannten Zähne und den genannten Kettenführungsabmessungen ergibt sich qualitativ die relative Lage der inneren Zahnkontaktflächen der genannten Zähne zueinander.

Die äußere Zahnkontaktfläche 39a des abgabeseitigen Stabilisierungszahns 39 liegt weiter von der axialen Bezugsposition entfernt als die äußere Zahnkontaktfläche 45a des aufnahmeseitigen Stabilisierungszahns 45.

Die äußere Zahnkontaktfläche 41a des dem abgabeseitigen Stabilisierungszahns 39 entgegen der Antriebsdrehrichtung D benachbarten Außenlaschen-Ritzelzahns 41 liegt näher bei der axialen Bezugsposition als die äußeren Zahnkontaktflächen 45a und 47a.

Die Ritzel 18, 20, 22 und 24 wurden nur beispielhaft zur Beschreibung ausgewählt. Die an den Ritzeln 18, 20, 22 und 24 beschriebenen Merkmale können auch an beliebigen weiteren Ritzeln der Ritzelkassette 1 ausgebildet sein.

In Figur 7 ist das größte Ritzel 32 losgelöst von den übrigen Ritzeln 10 bis 30 in Bezugsbetrachtung dargestellt. Das Ritzel 32 umfasst einen Zahnkranz 60, einen Zwischenkranz 62 und einen radial inneren Keilkranz 64 zur Übertragung von Drehmoment auf einen nicht dargestellten, aber Fachleuten ohne weiteres bekannten Antreiber oder auf einen zwischen dem Keilkranz 64 und dem Antreiber angeordneten Adapter. Das mit dem radial inneren Profil des Keilkranzes 64 wechselwirkende Keilprofil des Adapters oder Antreibers ist komplementär zum radial inneren Keilprofil des Keilkranzes 64 ausgebildet. Radial äußere Streben 66a und 66b verbinden den Zahnkranz 60 drehmomentübertragend mit dem Zwischenkranz 62. Radial innere Streben 68 verbinden den Zwischenkranz mit dem Keilkranz 64.

Zur Vermeidung von unerwünschter Biegeverformung der Streben 66b und 68 sind diese derart angeordnet, dass ihre radial inneren Strebenenden den radial äußeren in Antriebsdrehrichtung D vorauseilen. Die Streben 66a sind in Umfangsrichtung breiter ausgebildet als die Streben 66b.

Befestigungsöffnungen 70 zeigen an, wo der Ritzeldom 15 aus den einstückig miteinander verbundenen Ritzeln 10 bis 26 sowie die als einzelne Ritzel ausgebildeten Ritzel 28 und 30 mit Verbindungsmitteln wie Stifte, Niete, Schrauben und dergleichen drehmomentübertragend mit dem größten Ritzel 32 verbunden werden.

Die Befestigungslöcher 70 sind zum einen radial möglichst weit außen angeordnet, jedoch ohne den Eingriff von Ritzelzähnen mit der Fahrradkette zu stören, und sind zum anderen in möglichst stabilen Bereichen des Ritzels 32 ausgebildet. Daher sind die Befestigungslöcher 70 vornehmlich in den breiteren radial äußeren Streben 66a sowie nahe der Verbindungsstellen des Zwischenkranzes 62 mit den radial inneren Streben 68 ausgebildet.

In Figur 7A ist eine Ansicht des größten Ritzels 32 mit Blickrichtung orthogonal zur Ritzelachse R dargestellt. Dort ist erkennbar, dass das Ritzel 32 in radial näher bei der Ritzelachse R gelegenen Bereichen nach außen, also von der Längsmittelebene LME weg, gekröpft ausgebildet ist. Hierdurch wird an dem radial innerhalb des Keilkranzes 64 gelegenen Antreiber möglichst wenig axialer Bauraum zur Aufnahme der Zwölffach-Ritzelkassette 1 benötigt. Außerdem wird so das Ritzel 32 gegen Biegemomente versteift, welche durch den Kettenschräglauf auf das größte Ritzel 32 wirken. Das Ritzel 32 und der mit diesem verbundene Ritzeldom 15 versteifen sich gegenseitig.

Die Ritzelkassette 1 ist derart ausgebildet, dass alle kleineren Ritzel 10 bis 26, 28 und 30 ihr Drehmoment unmittelbar auf das Ritzel 32 übertragen, welches das vom Fahrer oder vom Elektromotor mittels der Fahrradkette 50 zur Ritzelkassette 1 übertragene Drehmoment über den zuvor genannten Antreiber auf die Hinterradnabe überträgt.

Wie auf der zur Längsmittelebene LME hinweisenden Seite des Ritzels 32, auf welche der Betrachter der Figur 7B blickt, zu erkennen ist, sind auch am größten Ritzel 32 dickere Außenlaschen-Ritzelzähne 32a und dünnere Innenlaschen-Ritzelzähne 32b in Umfangsrichtung alternierend aufeinanderfolgend ausgebildet. Die Ausnehmungen an den in axiale Richtung weisenden Zahnflächen zur Ausbildung dünner Zähne 32b sind ausschließlich auf der vom nächstkleineren Ritzel 30 wegweisenden Seite des größeren Ritzels 32 ausgebildet.

Gleiche Bezugszeichen und gleiche Kleinbuchstaben hinter einem Bezugszeichen am Ritzel 32 bezeichnen funktionsgleiche Bauteile oder Bauteilabschnitte der Ritzel 16, 18, 20, 22 oder 24, die dort mit gleichen Bezugszeichen oder/und gegebenenfalls mit gleichen Kleinbuchstaben bezeichnet sind.

In Figur 7B ist außerdem eine Ausbildung von Rampen an manchen Abgabezähnen 38, an manchen Fangzähnen 44 sowie an den den rampenbildenden Abgabezähnen 38 und Fangzähnen 44 benachbarten Mobilisierungszähnen 32b' und 32b" gezeigt. Die Rampen sind mit dem Bezugszeichen des jeweiligen Zahns und dem Kleinbuchstaben g gekennzeichnet. An den Mobilisierungszähnen sind die Rampen durch gleiche Apostrophierung wie die zugehörigen Mobilisierungszähne gekennzeichnet.

Die Rampen 38g, 32g', 44g und 32g" bilden eine radiale und axiale Stufe der vom nächstkleineren Ritzel 30 wegweisenden Zahnfläche der zugehörigen Zähne 38, 32b', 44 und 32b". Die Rampen 38g, 32g', 44g und 32g" bilden eine nach radial außen, also von der Ritzelachse R weg, weisende Rampenfläche aus, auf welcher sich nach radial innen weisende Randflächen der Fahrradkette 50 abstützen können.

Durch diese Rampen 38g, 32g', 44g und 32g" wird die Kette 50 in besonderer Weise beim kämmenden Eingriff mit dem größten Ritzel 32 stabilisiert.

Beim Rückwärtstreten unter Ausnutzung des üblicherweise vorhandenen Freilaufs an der Hinterradnabe kann unter gewissen Umständen der Schräglauf der Kette destabilisierend auf den kämmenden Eingriff des Ritzels 32 mit der Fahrradkette 50 wirken. Da besonders die Abgabezähne 38 und die ihnen benachbarten Mobilisierungszähne 32b' aufgrund ihrer Ausgestaltung ein Umlegen der Kette zum nächstkleineren Ritzel 30 hin, zu welchem der Schräglauf wirkt, unterstützen, ist vor allen Dingen dort eine Rampe ausgebildet. Auch an den schaltrelevanten Zähnen eines Herunterschaltbereichs, also am Fangzahn 44 und an dessen Mobilisierungszahn 32b" sind Rampen ausgebildet, um die Kette 50 zu stabilisieren.

Die genannten Rampen halten nicht nur die Kette selbst im Falle eines sehr ungünstigen Wirkens des Kettenschräglaufs zum vorderen Kettenblatt am Ritzel 32, sondern unterstützen auch das Schalten der Kette 50 herunter auf das größere Ritzel 32 bzw. hoch vom größeren Ritzel 32 auf das nächstkleinere Ritzel 30. Die Rampen bilden nämlich die Möglichkeit, dass die Kette stabil und mit körperlicher Führung auch in einer radial weiter außen gelegenen Position am Ritzel 32 in den schaltrelevanten Bereichen: Hochschaltbereich 34 und Herunterschaltbereich 40, gehalten werden kann, als dies bei einem herkömmlichen Zahneingriff der Fall wäre, bei welchem der Fangzahn 44, der Abgabezahn 38 oder die ihnen benachbarten Mobilisierungszähne 32b" bzw. 32b' radial vollständig in die Zwischenräume der Kettenglieder eingreifen.

Somit stabilisieren die Rampen die Kette 50 gegen den Kettenschräglauf zum vorderen Kettenblatt, wenn die Kettenführungsrolle des Umwerfers zum Halten der Kette auf dem größeren Ritzel 32 komplanar mit dem Ritzel 32 ausgerichtet ist und der Kettenschräglauf gegen ein Halten der Kette 50 am Ritzel 32 wirkt. Weiter unterstützen die Rampen ein Umlegen der Kette 50, wenn die Kettenführungsrolle des Umwerfers mit dem zukünftig kettenführenden Ritzel komplanar ausgerichtet ist, während die Kette 50 noch auf dem aktuell kettenführenden Ritzel in Eingriff ist.

Die gezeigten Rampen können auch an den Ritzeln 30, 28, 26 usw. ausgebildet sein, und zwar bevorzugt jeweils auf der vom nächstkleineren Ritzel wegweisenden Seite des jeweiligen Ritzels. Da jedoch der Kettenschräglauf zu den mittelgroßen Ritzeln der Ritzelkassette 1 hin betragsmäßig abnimmt, sind die Rampen besonders an den größeren Ritzeln 32, 30 und auch 28 von Bedeutung, welche zwischen der Kettenlinie und der Fahrrad-Längsmittelebene LME gelegen sind.

In Figur 14 ist der einstückig gefertigte Ritzeldom 15 in einer schematischen perspektivischen Ansicht von innen gezeigt. Zu erkennen ist, dass das kleinste Ritzel 10 an einem axial endseitigen massiven ring- bzw. topfförmigen Abschnitt des Ritzeldoms 15 ausgebildet ist. Das nächst größere Ritzel 12 ist ebenfalls an einem überwiegend ring- bzw. topfförmigen Abschnitt des Ritzeldoms 15 ausgebildet, wobei jedoch im Bereich eines jeden zweiten Zahns des Ritzels 12 die ring- bzw. topfförmige lokale Struktur des Ritzeldoms 15 durchbrechende Öffnungen 106 ausgebildet sind.

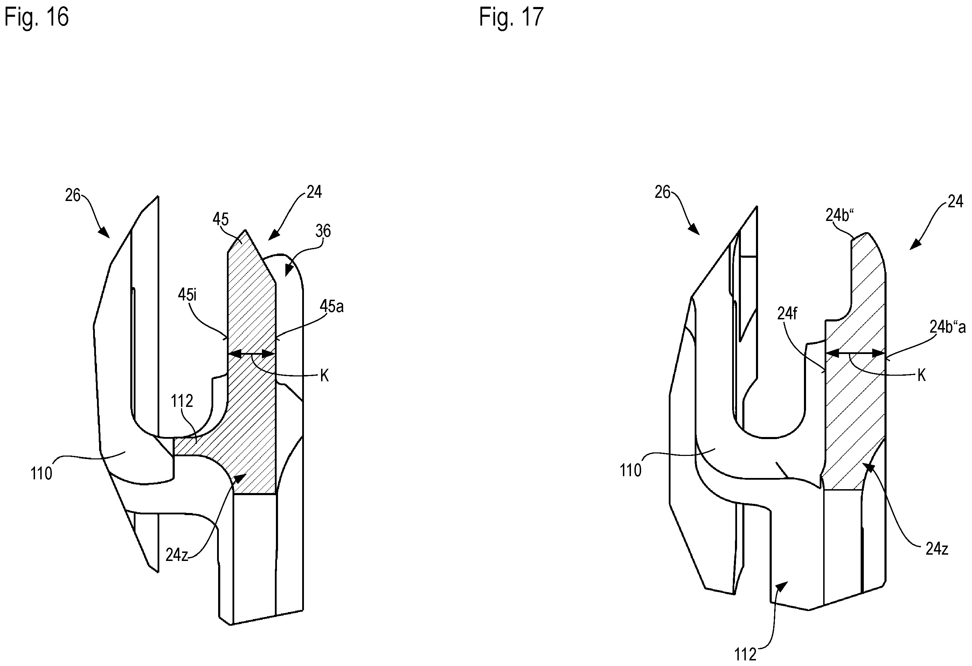

Die Ritzel 14 bis 22 sind über Verbindungsstege bzw. nur kurz "Stege" 108 miteinander verbunden, und zwar derart, dass am jeweils kleineren von zwei unmittelbar miteinander verbundenen, axial benachbarten Ritzeln jeder Steg 108 an der Umfangsposition eines Zahns des kleineren Ritzels in dessen Ritzelgrundkörper 14z, 16z, 18z, 20z und 22z mündet. Jedem Zahn eines kleineren Ritzels liegt dabei an seiner Umfangsposition ein Verbindungssteg 108 axial gegenüber, welcher das kleinere Ritzel mit dem axial benachbarten nächstgrößeren Ritzel verbindet. Die Verbindungsstege 108 weisen in einer zur Ritzelachse R orthogonalen Schnittebene einen grobschematisch L-förmigen Querschnitt auf (vergleiche Stege 110 in den Figuren 16 und 17).

Die drei größten Ritzel 22, 24 und 26 des Ritzeldoms sind untereinander ebenfalls mit Stegen 110 verbunden. Die Stege 110, die in Umfangsrichtung breiter ausgeführt sind als die Stege 108 der vorgenannten Ritzel 14 bis 22, sind an jeder Ritzelpaarung 26-24 und 24-22 in ihrer Anzahl geringer als die Zähnezahl eines jeden Ritzels, welche sie miteinander verbinden.

Genauer weist eine Ritzelpaarung 26-24 und 24-22 bevorzugt genau halb so viele Stege 110 auf, wie das kleinere der durch die Verbindungsstege 110 miteinander verbundenen Ritzel Zähne aufweist. Die Verbindungsstege 110 sind, ebenso wie die zuvor beschriebenen Stege 108, aus Gründen höherer Stabilität des Ritzeldoms 15 jeweils am Umfangsort eines Ritzelzahns des kleineren der miteinander verbundenen Ritzel angeordnet und kragen dort axial vom Ritzelgrundkörper des kleineren Ritzels axial aus. Allerdings ist nur an jedem zweiten Zahn des kleineren der miteinander verbundenen Ritzel 22, 24 und 26 jeweils ein Steg 110 angeordnet.

An denjenigen zwischen zwei Stegen 110 gelegenen Umfangsbereichen insbesondere der Ritzel 22 und 24, an welchen eine Hochschalt-Vertiefungsformation 36 oder eine Herunterschalt-Vertiefungsformation 42 ausgebildet ist, kann zur lokalen Versteifung des durch die Vertiefungsformation geschwächten Umfangsbereichs ein Axialvorsprung 112 am Ritzelgrundkörper 22z bzw. 24z ausgebildet sein, welcher sich über einen Umfangsbereich erstreckt und axial vom Ritzelgrundkörper 22z und 24z auskragt. Bevorzugt reicht der Axialvorsprung 112 in Umfangsrichtung von einem Steg 110 bis zu dem in Umfangsrichtung benachbarten Steg 110.

Der Axialvorsprung 112 kann auch nur am Ritzel 24 ausgebildet sein.

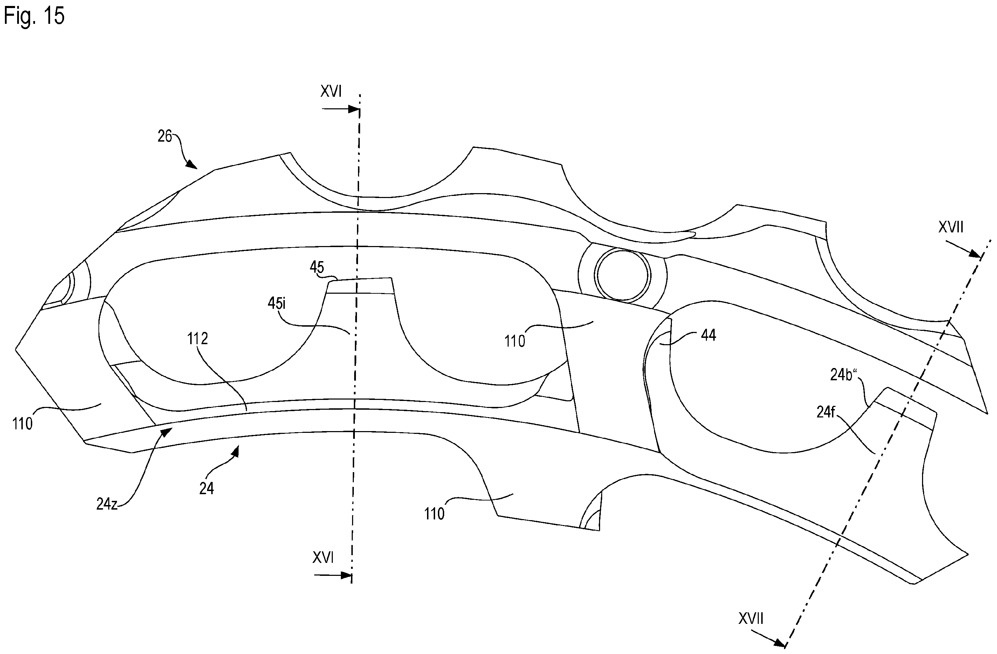

Die vorstehend beschriebene lokale Aussteifung ist in den Figuren 15 bis 17 am Beispiel des Ritzels 24 dargestellt.

Im Bereich des durch die Herunterschalt-Vertiefungsformation 36 an seiner Außenseite geschwächten aufnahmeseitigen Stabilisierungszahns 45 ist, wie in den Figuren 15 und 16 gezeigt ist, ein Axialvorsprung 112 am Ritzelgrundkörper 24z ausgebildet, welcher bevorzugt vollständig zwischen den Verbindungsstegen 110 verläuft und die Verbindungsstege in Umfangsrichtung miteinander verbindet, die in Umfangsrichtung beiderseits des aufnahmeseitigen Stabilisierungszahns 45 diesem nächstgelegen sind.

Der aufnahmeseitige Mobilisierungszahn 24b" weist eine derartige Dickenreduktion und damit Schwächung an seiner Außenseite nicht auf (s. Fig. 17), weshalb im Umfangsbereich des aufnahmeseitigen Mobilisierungszahns 24b" kein Axialvorsprung 112 ausgebildet ist.

Der Axialvorsprung 112 erstreckt sich in axialer Richtung über etwa 80 % bis 120 % der Kettenführungsabmessung K des aufnahmeseitigen Stabilisierungszahns 45.

In Figur 8 ist ein mit einer erfindungsgemäßen Ritzelkassette 1 versehenes Fahrrad grobschematisch dargestellt und allgemein mit 71 bezeichnet. Ein Vorderrad 72 und ein Hinterrad 74 sind an einem Fahrradrahmen 76 um jeweilige zur Zeichenebene der Figur 8 orthogonale Radachsen drehbar befestigt. Das Vorderrad 72 kann über eine gefederte Gabel 78 mit dem Fahrradrahmen 76 verbunden sein. Auch das Hinterrad 74 kann über eine gefederte Aufhängung 80 mit dem Fahrradrahmen 76 verbunden sein.

Das Hinterrad 74 ist über eine Antriebsbaugruppe 82, umfassend ein einzelnes vorderes Kettenblatt 24 und die in Figur 8 lediglich grobschematisch dargestellte Fahrrad-Hinterradritzelkassette 1, antreibbar. Das Antriebsdrehmoment kann über Tretkurbeln 88 und eine mit diesen verbundene Tretkurbelwelle 88a auf das vordere Kettenblatt 84 und von diesem mittels der Fahrradkette 50 über die Ritzelkassette 1 auf das Hinterrad 74 übertragen werden. Zur Unterstützung eines die Tretkurbeln 88 mit Muskelkraft antreibenden Fahrradfahrers kann ein unterstützender Elektromotor 90 am Fahrradrahmen 76 derart angeordnet sein, dass auch dieser sein unterstützendes Antriebsdrehmoment über die Tretkurbelwelle 88a zum vorderen Kettenblatt 84 hin überträgt. Zwischen der Tretkurbelwelle 88a und dem Kettenblatt 84 kann ein Getriebe, insbesondere Planetengetriebe, vorgesehen sein. Das Übertragungsverhältnis des Getriebes ist bei der Berechnung der wirksamen Zähnezahl des Kettenblatts 84 zu berücksichtigen. Die tatsächliche Zähnezahl des Kettenblatts 84 ist dabei mit dem Faktor zu multiplizieren, mit welchem das Getriebe ein in es eingeleitetes Drehmoment zu seiner Abtriebsseite hin überträgt. Eine Erhöhung des Drehmoments durch das Getriebe führt somit zu einer gegenüber der tatsächlichen Zähnezahl erhöhten wirksamen Zähnezahl des Kettenblatts 84 und umgekehrt.

Eine Batterie 92 als Energiespeicher für den unterstützenden Elektromotor 90 kann im oder am Rahmen 76 vorgesehen sein.

Die Fahrradkette 50 kann in an sich bekannter Weise durch ein Schaltwerk mit einem Umwerfer 94 mit einem vom Fahrer auszuwählenden Ritzel aus der Mehrzahl von Ritzeln 10 bis 32 der Ritzelkassette 1 zur Drehmomentübertragung auf das Hinterrad 74 in kämmenden Eingriff gebracht werden. Der Umwerfer 94 weist eine der Ritzelkassette 1 nächstgelegene Kettenführungsrolle 96 und eine Spannrolle 98 auf.

Sowohl das Muskel-Drehmoment des Fahrradfahrers wie auch das unterstützende Drehmoment des Elektromotors 90 werden am Beispielfahrrad 71 über die Hinterradritzelkassette 1 zum Hinterrad 74 übertragen. Der Elektromotor 90 hat somit die Wirkung, als ob der Fahrradfahrer eine um die Unterstützungsleistung des Elektromotors 90 erhöhte Tretleistung abrufen könnte.

Da das beispielhaft gezeigte Fahrrad 71 über genau ein vorderes Kettenblatt 84 verfügt, ist der gesamte Gangbereich des Fahrrads 71 durch die Ritzelkassette 1 realisiert.

Nachfolgend wird ein alternatives Ritzel 20* beschrieben, welches durch spanloses Umformen hergestellt ist. Die für Zähne des spanlos hergestellten Ritzel 20* beschriebenen Ausgestaltungen treffen auch für Zähne anderer Ritzel der oben diskutierten Hinterradritzelkassette zu, welche ebenfalls spanlos durch Umformen hergestellt sein können.

Gleiche und funktionsgleiche Ritzel und Ritzelabschnitte, wie etwa Ritzelzähne oder/und stirnseitige Vertiefungen, an der oben beschriebenen Hinterradritzelkassette 1 sind nachfolgend in Bezug auf spanlos hergestellte Ritzel und Ritzelabschnitte mit gleichen Bezugszeichen versehen, jedoch mit einem nachgestellten "*". Nachfolgend wird auf die spanlos hergestellten Ritzel und Ritzelabschnitte nur insofern eingegangen, als sich deren Gestalt ganz oder nur abschnittsweise in besonderer Weise aus der spanlosen Formgebung ergibt. Ansonsten wird zur Beschreibung der spanlos hergestellten Ritzel und Ritzelabschnitte, auch wenn sie im Detail in ihrer Gestalt von funktionsgleichen Abschnitten der in den Figuren 1 bis 17 dargestellten Ritzel geringfügig, aber nicht funktionsverändernd, abweichen, auf die obige Beschreibung verwiesen, die auch für die spanlos hergestellten Ritzel und Ritzelabschnitte gilt.

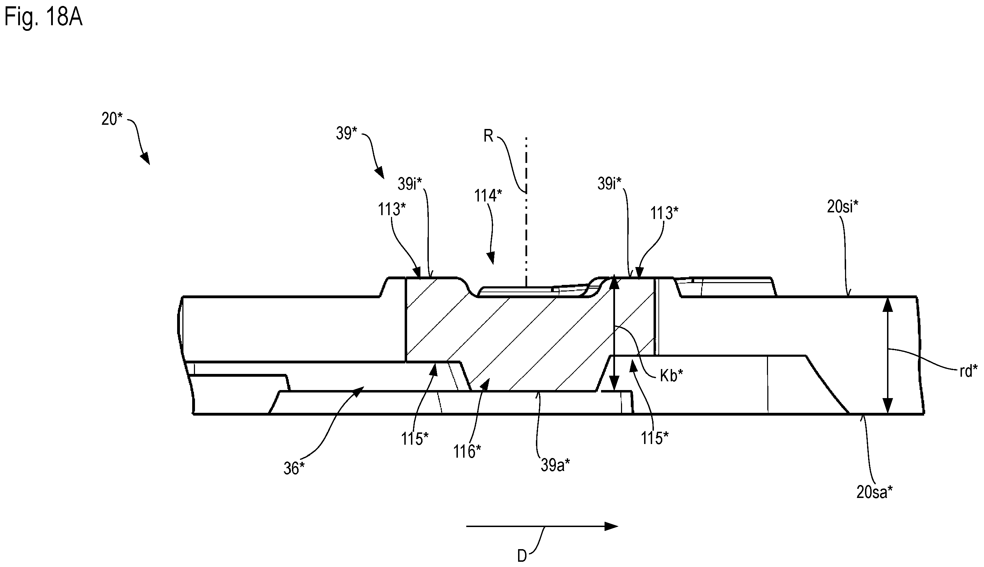

In den Fig. 18A bis 18C ist ein spanlos durch Stanzen und Umformen erzeugter abgabeseitiger Stabilisierungszahn 39* dargestellt, welcher an einem durch spanlose Formgebung hergestellten ungeradzahligen Ritzel 20* mit 21 Zähnen ausgebildet ist. Alle Zähne des Ritzels 20* sind durch spanlose Formgebung hergestellt. Es soll grundsätzlich nicht ausgeschlossen sein, dass durch spanlose Formgebung hergestellte Ritzel spanend nachbearbeitet werden. Für eine effiziente Herstellung, insbesondere Massenfertigung, ist jedoch eine Herstellung eines Ritzels entweder spanlos oder spanend vom Ritzelrohling bis zum fertigen Ritzel bevorzugt.

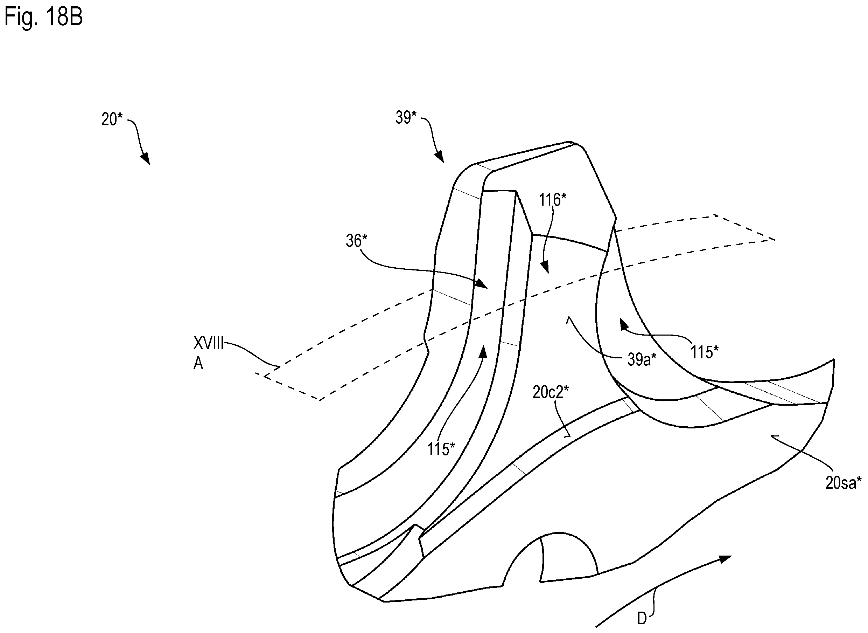

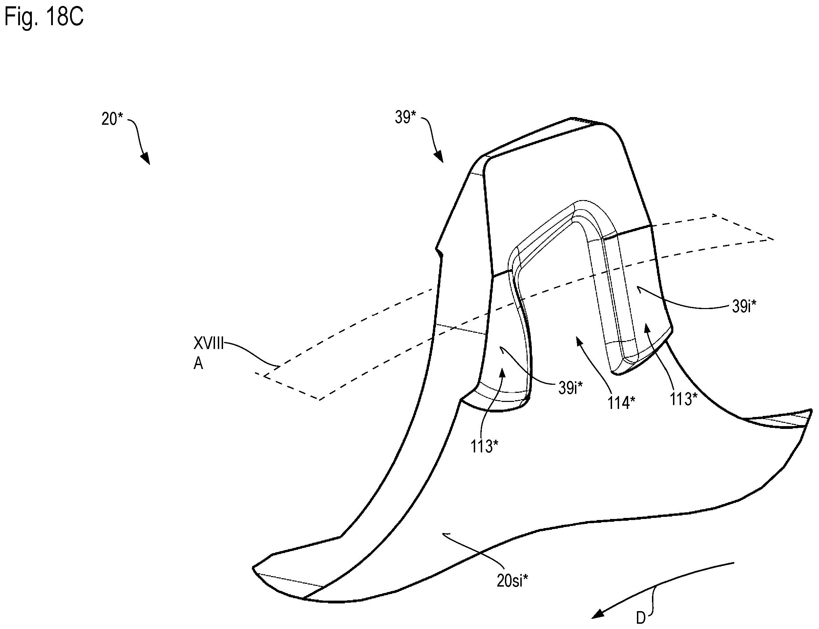

Figur 18A zeigt eine Schnittansicht des Zahns 39* in der sich zylindrisch um die Ritzelachse R als der Zylinderachse erstreckenden Schnittfläche XVIII der Figuren 18B und 18C bei Blickrichtung nach radial innen zur Ritzelachse R hin.

Die innere Stirnseite 20si* des Ritzels 20* zeigt eine erste unverformte ebene Außenfläche des ursprünglichen Ritzelrohlings aus Metallblech, insbesondere aus Stahlblech, an. Ebenso zeigt die äußere Stirnseite 20sa* eine unverformte ebene zweite Außenfläche des ursprünglichen Ritzelrohlings an. Die beiden unverformten Außenflächen des ursprünglichen Ritzelrohlings bilden nun die Stirnseiten 20si* und 20sa* des spanlos geformten Ritzels 20*. Die ursprüngliche Dickenabmessung des Rohlings ist mit dem Doppelpfeil rd* gekennzeichnet.

Die innere Zahnkontaktfläche 39i ist in der Schnittebene XVIII in zwei in Umfangsrichtung voneinander getrennte und mit Abstand voneinander angeordnete Abschnitte unterteilt. Da im tatsächlichen spanlosen Herstellungsverfahren Material in einem Tiefziehprozess in der Regel in Dickenrichtung des Ritzelrohlings von der späteren Außenseite zur späteren Innenseite des Ritzels gedrückt und verlagert wird, ist jeder Teil der inneren Zahnkontaktfläche 39i* als in axiale Richtung weisende axiale Stirnfläche eines Vorsprungs 113* ausgebildet. Die beiden Vorsprünge 113* sind jeweils an einem in Antriebsdrehrichtung D vorauseilenden und einem nachlaufenden Rand des abgabeseitigen Stabilisierungszahns 39* ausgebildet. Dementsprechend ist in Antriebsdrehrichtung D zwischen den beiden Vorsprüngen 113* zwangsläufig eine Vertiefung 114* ausgebildet. Die tatsächliche Verformungsarbeit wird während des Herstellungsverfahrens jedoch hauptsächlich im Bereich der Vorsprünge 113* geleistet.

Den Vorsprüngen 113* auf der Innenseite des Ritzels 20* bzw. des abgabeseitigen Stabilisierungszahns 39* liegt auf der Außenseite des Ritzels 20* bzw. des abgabeseitigen Stabilisierungszahns 39* je eine Vertiefung 115* gegenüber, welche komplementär zu den Vorsprüngen 113* ausgebildet sind. Längs der Antriebsdrehachse D zwischen den Vertiefungen 115* ist auf der Außenseite des abgabeseitigen Stabilisierungszahns 39* ein zur Vertiefung 114* auf der Innenseite komplementärer Vorsprung 116* ausgebildet.

Die Vertiefung 114* auf der Innenseite des Ritzels 20* bzw. des abgabeseitigen Stabilisierungszahns 39* ist durch Verformung des ursprünglichen Rohmaterials in Dickenrichtung über die die innere Stirnseite 20si* bildende Außenfläche des Ritzelrohlings hinaus gebildet.

Der Abstand von der äußeren Zahnkontaktfläche 39a* zur inneren Zahnkontaktfläche 39i* bildet, wie bei dem zuvor diskutierten Ausführungsbeispiel auch, die Kettenführungsabmessung, die eine Kettenführungsabmessung Kb* ist, da es sich bei dem abgabeseitigen Stabilisierungszahn 39* des ungeradzahligen Ritzels 20*, wie bei jedem anderen Zahn des ungeradzahligen Ritzels 20* auch, um einen Innenlaschen-Ritzelzahn handelt, welcher zum Eingriff in den Eingriffsraum eines Innenlaschen-Kettenglieds der Fahrradkette ausgebildet ist.

Wie in Figur 18A zu erkennen ist, kann der abgabeseitige Stabilisierungszahn 39* sowohl in den Bereichen, in welchen die innere Zahnkontaktfläche 39i* ausgebildet ist, als auch in den im Wesentlichen zu diesen Bereichen komplementären Bereichen, in welchen die äußere Zahnkontaktfläche 39a* ausgebildet ist, jeweils eine geringere Dicke als die ursprüngliche Rohmaterialdicke aufweisen. Dies kann zu einer vorteilhaften Kaltverfestigung des abgabeseitigen Stabilisierungszahns 39* und damit zu einer reduzierten Verschleißanfälligkeit führen. Dennoch kann die Kettenführungsabmessung Kb* betragsmäßig gleich groß oder sogar größer sein als die Dicke des abgabeseitigen Stabilisierungszahns 39* in der betrachteten Schnittfläche. Im dargestellten Ausführungsbeispiel entspricht die Kettenführungsabmessung Kb* etwa der Dickenabmessung des ursprünglichen Rohmaterials. Die Kettenführungsabmessung Kb* kann durch entsprechende Umformung jedoch sogar größer als die ursprüngliche Rohmaterialdicke ausgeführt sein.

Die bereits in der Hochschalt-Vertiefungsformation 36* gelegene äußere Zahnkontaktfläche 39a* unterstützt beim Hochschalten das Umlegen der Fahrradkette auf das axial benachbarte nächst kleinere Ritzel, da die äußere Zahnkontaktfläche 39a* als Stirnfläche des Vorsprungs 116* die außen beim Hochschalten am abgabeseitigen Stabilisierungszahn 39* vorbeigehende Fahrradkette nach axial außen verlagert.

Durch die Ausbildung der Vertiefung bzw. Ausnehmung 114* kann Material des Ritzels 20* innerhalb des zu dessen Herstellung verwendeten Gesenks durch plastisches Fließen verlagert werden, was die zur Umformung des Rohlings zu dem Ritzel 20* benötigten Umformkräfte insgesamt verhältnismäßig gering hält, jedenfalls geringer als wenn durch die Umformung eine Verdichtung des Rohmaterials erzielt werden sollte.

Die Vertiefung 115*, in der Summe ihrer beiden Abschnitte, auf der Außenseite des Ritzels 20* sowie der komplementäre Vorsprung 113*, ebenso in der Summe seiner beiden Abschnitte, auf der Innenseite des Ritzels 20* weisen in radialer Richtung eine größere Abmessung auf, vorzugsweise wenigstens das Doppelte oder mehr, als in Umfangsrichtung. Hierdurch kann gewährleistet werden, dass ein durch den abgabeseitigen Stabilisierungszahn 39* in Eingriff genommenes Kettenglied der Fahrradkette über einen möglichst langen radialen Weg des Kettenglieds relativ zum abgabeseitigen Stabilisierungszahn 39* mit möglichst geringem Spaltmaß axial geführt ist.

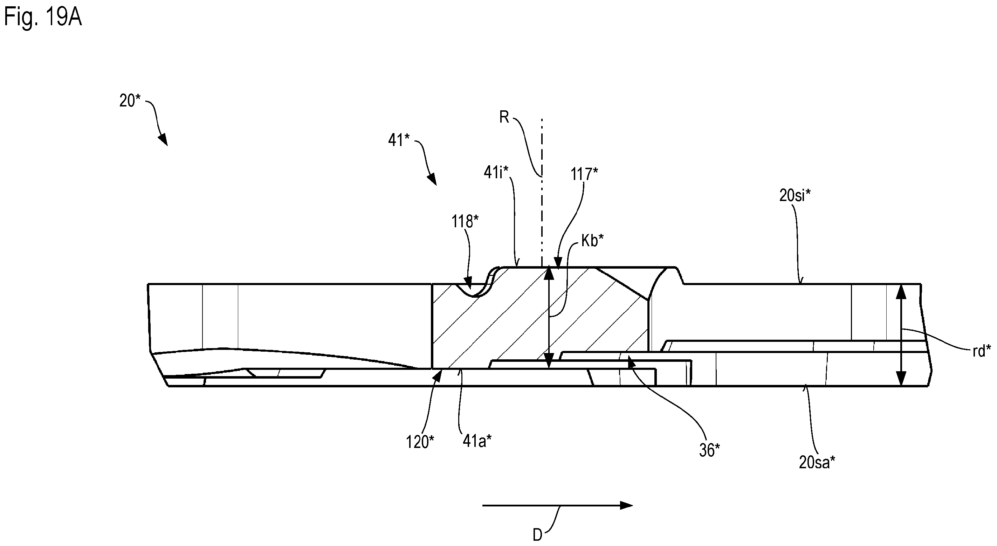

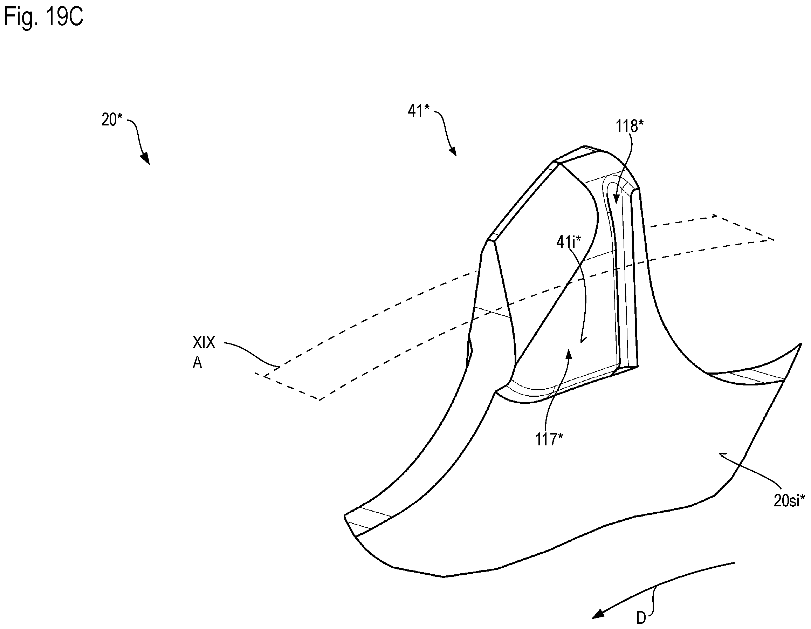

In den Figuren 19A bis 19C ist in gleicher Weise wie zuvor in den Figuren 18A bis 18C der entgegen der Antriebsdrehrichtung D auf den abgabeseitigen Stabilisierungszahn 39* folgende Zahn 41* als spanlos umgeformter Zahn dargestellt. Wiederum ist die innere Zahnkontaktfläche 41i* als innere Stirnseite eines Vorsprungs 117* auf der Innenseite des Ritzels 20* über die innere Stirnseite 20i* des Ritzels 20* hinaus verlagert. Dabei ist am Zahn 41* auf dessen Innenseite eine nutartige Vertiefung 118* ausgebildet, welche ausweislich der Figur 19C einen geradlinigen radialen Verlauf mit längs ihrem radialen Verlauf im Wesentlichen konstanter Breite in Umfangsrichtung und stufenfreiem Vertiefungsgrund aufweist. Durch diese Gestaltung wird Material von der Vertiefung 118* zur Außenseite des Ritzels gedrückt, um die zur Kettenführung wichtige Hochschalt-Vertiefungsformation 36* auf der Außenseite möglichst gut und mit optimaler Konturenschärfe ausformen zu können. Diese Vertiefung unterstützt eine Verdrängung von Material des Ritzelrohlings im Bereich der äußeren Zahnkontaktfläche 41a* zu der Formation 120* hin. Die Formation 120*, obwohl sie die äußere Zahnkontaktfläche 41a* als deren äußere Stirnseite bildet, ist fertigungstechnisch bezüglich des Ritzelrohlings eine Vertiefung, denn die Formation 120* ist gegen über der ursprünglichen Außenseite des Ritzelrohlings, die am fertigen Ritzel 20* die äußere Stirnseite 20sa* des Ritzels 20* bildet, in das Material des Ritzelrohlings hinein verlagert, also vertieft.

Auch am Zahn 41* ist die Kettenführungsabmessung Kb* etwa so groß wie die Rohmaterialdicke rd*. Durch plastisches Fließen beim Umformen könnte die Kettenführungsabmessung Kb*, wie für jeden anderen Zahn des spanlos umgeformten Ritzels 20* kleiner, gleich oder auch größer als die Rohmaterialdicke ausgestaltet sein.

Auf der Außenseite des Zahns 41* sind die gestuften Ausnehmungen der Hochschalt-Vertiefungsformation 36* zu erkennen, welche sich entgegen der Antriebsdrehrichtung D vom zuvor beschriebenen abgabeseitigen Stabilisierungszahn 39* bis zum Zahn 41* und sogar über den Zahn 41* hinaus erstreckt, da auch die äußere Zahnkontaktfläche 41a* Teil der Hochschalt-Vertiefungsformation 36* ist.

Die Vertiefung 120* auf der Außenseite des Ritzels 20* sowie der Vorsprung 117* auf der Innenseite des Ritzels 20* weisen in radialer Richtung eine größere Abmessung auf, vorzugsweise wenigstens das Doppelte oder mehr, als in Umfangsrichtung. Hierdurch kann gewährleistet werden, dass ein durch den Zahn 41* in Eingriff genommenes Kettenglied der Fahrradkette über einen möglichst langen radialen Weg des Kettenglieds relativ zum Zahn 41* mit möglichst geringem Spaltmaß axial geführt ist.

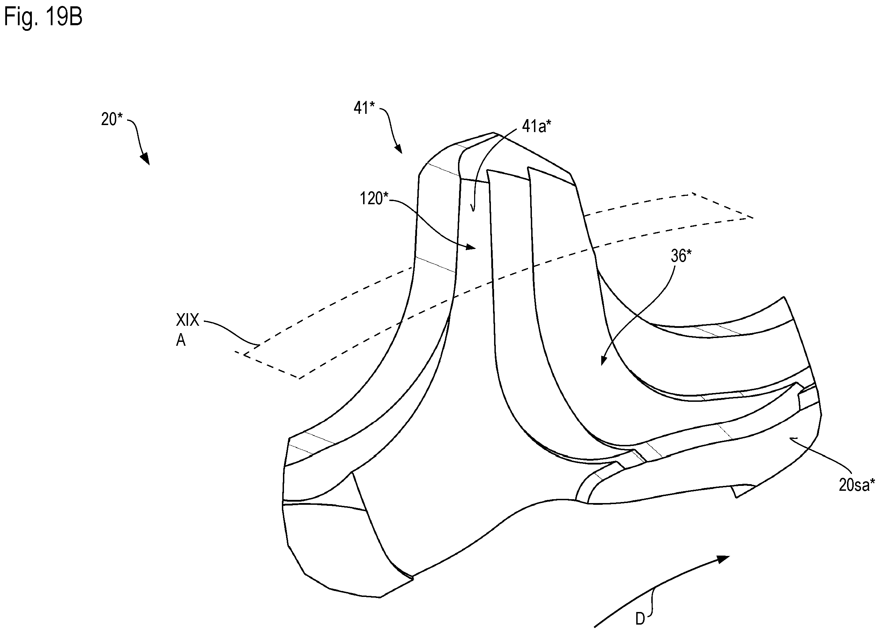

Die zylindrische Schnittfläche, in welcher der in Umfangsrichtung geschnittene Zahn 41* in Figur 19A mit Blick in Richtung zur Ritzelachse R hin betrachtet wird, ist in den Figuren 19B und 19C mit XIX bezeichnet.

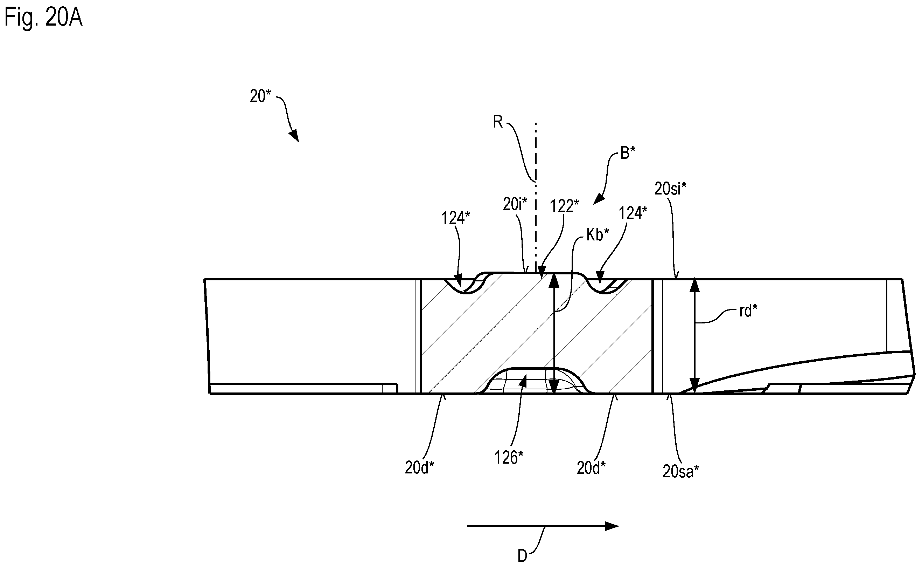

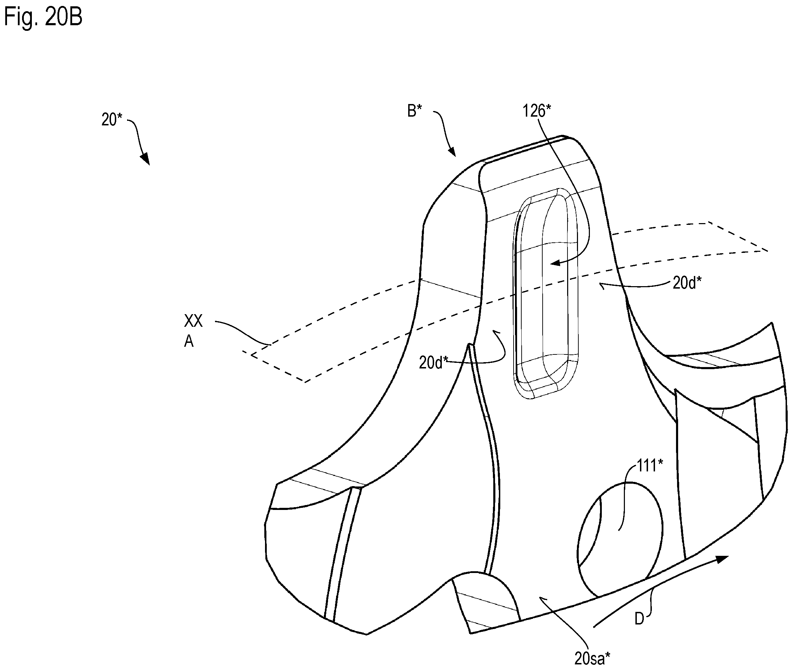

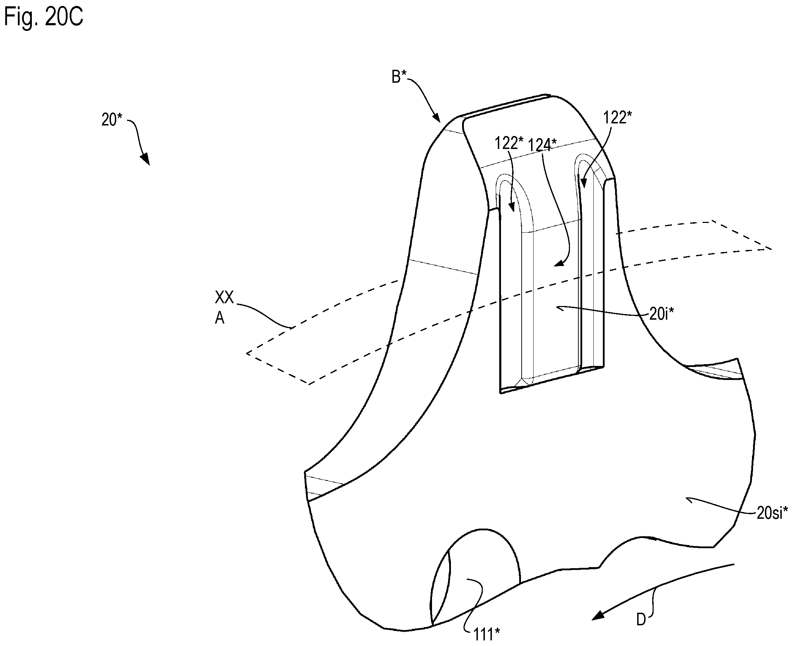

In den Figuren 20A bis 20C ist in gleicher Weise wie zuvor in den Figuren 18A bis 18C bzw. 19A bis 19C der entgegen der Antriebsdrehrichtung D auf den Zahn 41* folgende Bezugszahn B* als spanlos umgeformter Zahn dargestellt. Die Schnittfläche, in welcher der in Umfangsrichtung geschnittene Zahn B* in Figur 20A mit Blick in Richtung zur Ritzelachse R hin betrachtet wird, ist in den Figuren 20B und 20C mit XX bezeichnet.

Der Bezugszahn B* ist definitionsgemäß derjenige Innenlaschen-Ritzelzahn mit der betragsmäßig größten Kettenführungsabmessung Kb*. Die innere Zahnkontaktfläche 20i* ist gebildet durch die Stirnfläche eines Vorsprungs 122*. Die innere Zahnkontaktfläche 20i* ist, wie bei den zuvor diskutierten Zähnen 39* und 41* auch, axial über die innere Stirnfläche 20si* hinaus verlagert.

Der Vorsprung 122* ist in Umfangsrichtung, also längs der Antriebsdrehrichtung D, beiderseits von einer Vertiefung bzw. Ausnehmung 124* eingefasst, welche gestattet, Material aus dem Bereich der Vertiefungen 124* zur Bildung des Vorsprungs 122* durch plastisches Fließen mit besonders guter Formgenauigkeit bzw. Konturenschärfe zu verlagern.

Dem Vorsprung 122* auf der Innenseite des Ritzels 20* steht eine Vertiefung 126* auf der Außenseite des Ritzels 20* axial gegenüber, welche die Bildung des Vorsprungs 122* unterstützt. Durch die Bildung der Vertiefung 126* verdrängtes Material des Bezugszahns B* wurde durch plastisches Fließen in den Vorsprung 122* verlagert.

Die äußere Zahnkontaktfläche 20d* ist wenigstens längs der Antriebsdrehrichtung D beiderseits der Vertiefung 126* ausgebildet. Sie kann die Vertiefung 126* auch vollständig umgeben.

Die Vertiefung 126* auf der Außenseite des Ritzels 20* sowie der komplementäre Vorsprung 122* auf der Innenseite des Ritzels 20* weisen in radialer Richtung eine größere Abmessung auf, vorzugsweise wenigstens das Doppelte oder mehr, als in Umfangsrichtung. Hierdurch kann gewährleistet werden, dass ein durch den Bezugszahn B* in Eingriff genommenes Kettenglied der Fahrradkette über einen möglichst langen radialen Weg des Kettenglieds relativ zum Bezugszahn B* mit möglichst geringem Spaltmaß axial geführt ist.

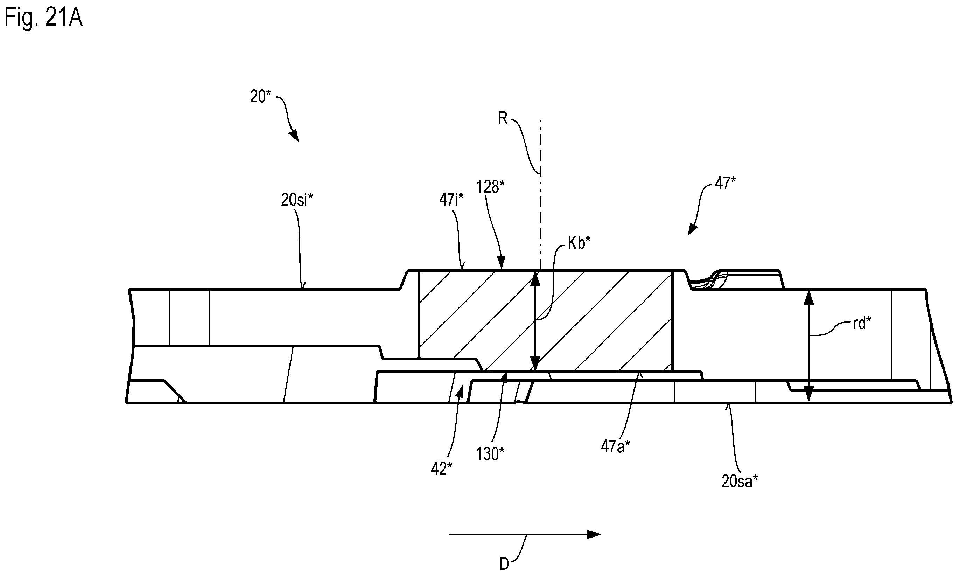

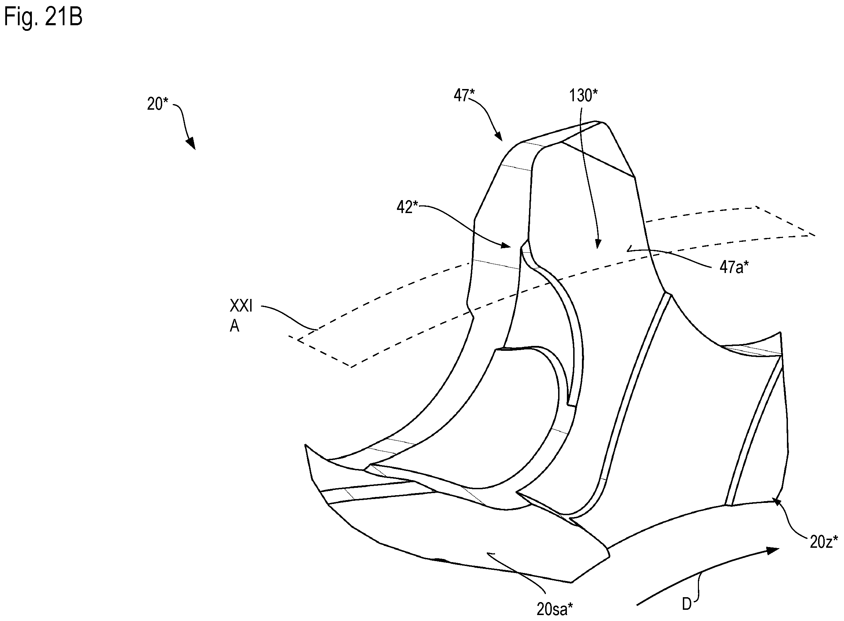

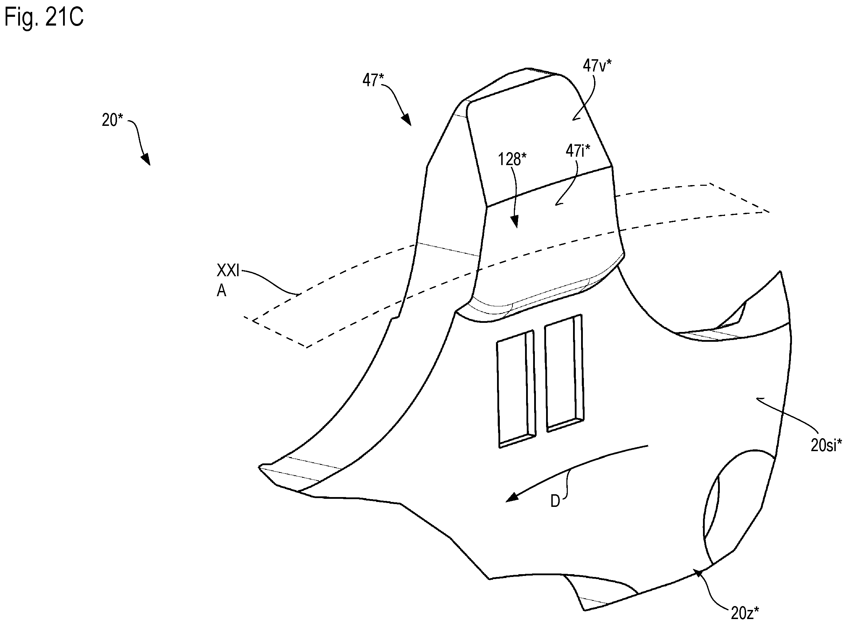

In den Figuren 21A bis 21C ist in gleicher Weise wie zuvor in den Figuren 18A bis 18C bzw. 19A bis 19C bzw. 20A bis 20C der entgegen der Antriebsdrehrichtung D auf den Bezugszahn B* folgende Zahn 47* als spanlos umgeformter Zahn dargestellt. Die Schnittfläche, in welcher der in Umfangsrichtung geschnittene Zahn 47* in Figur 21A mit Blick Richtung zur Ritzelachse R hin betrachtet wird, ist in den Figuren 21B und 21C mit XXI bezeichnet.

Auch am Zahn 47* ist die innere Zahnkontaktfläche 47i* als Stirnfläche eines über die durch die frühere Außenfläche des umgeformten Ritzelrohlings vorstehenden axialen Vorsprungs 128* gebildet.

Dem Vorsprung 128* auf der Innenseite des Ritzels 20* steht eine Vertiefung 130* auf der Außenseite des Ritzels 20* gegenüber. Die durch die axiale Stirnseite der Vertiefung 130* gebildete äußere Zahnkontaktfläche 47a* ist bereits Teil einer Herunterschalt-Vertiefungsformation 42*, welche sich als axiale Vertiefung in der äußeren Stirnseite 20si* entgegen der Antriebsdrehrichtung D erstreckt.

Anders als bei den zuvor beschriebenen Zähnen des durch spanloses Umformen hergestellten Ritzels 20* erstreckt sich die innere Zahnkontaktfläche 47i* des Zahns 47* im Wesentlichen über dessen gesamte Umfangserstreckung.

Die innere Zahnkontaktfläche 47i* ist durch die Ausbildung einer inneren Schrägfläche 47v* am Zahnkopf in radialer Richtung verkürzt. Die auf der äußeren Stirnseite 20sa* des Ritzels 20* ausgebildete äußere Zahnkontaktfläche 47a* ist wie die zuvor diskutierten äußeren Zahnkontaktflächen der Zähne 39*, 41* und B* in radialer Richtung mit größerer Abmessung, vorzugsweise das Doppelte oder mehr, ausgebildet als in Umfangsrichtung.

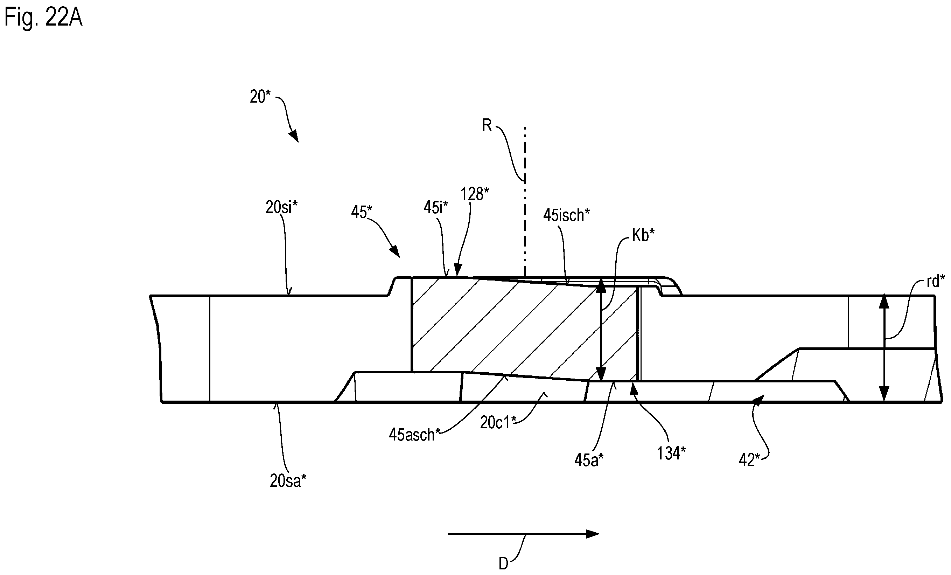

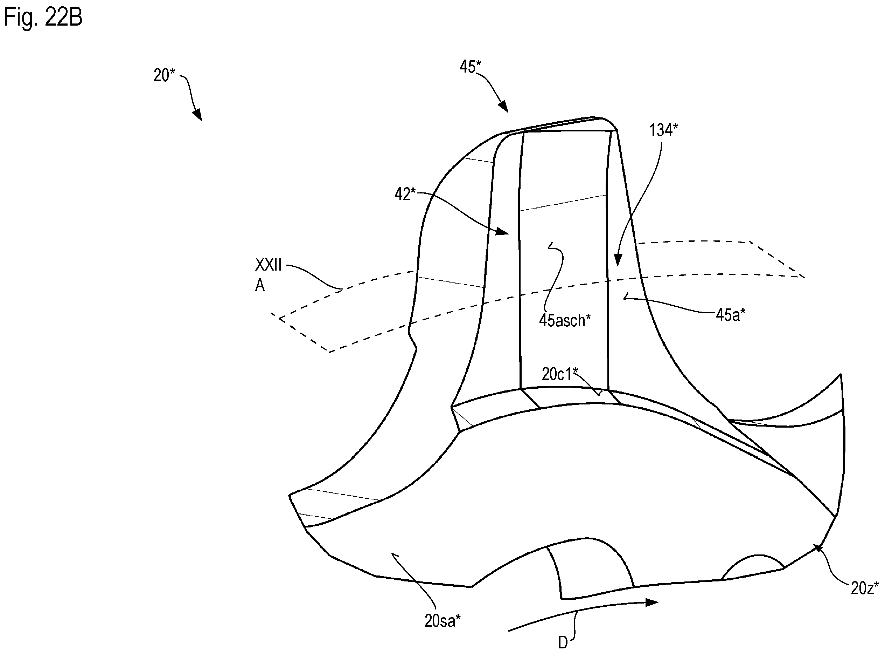

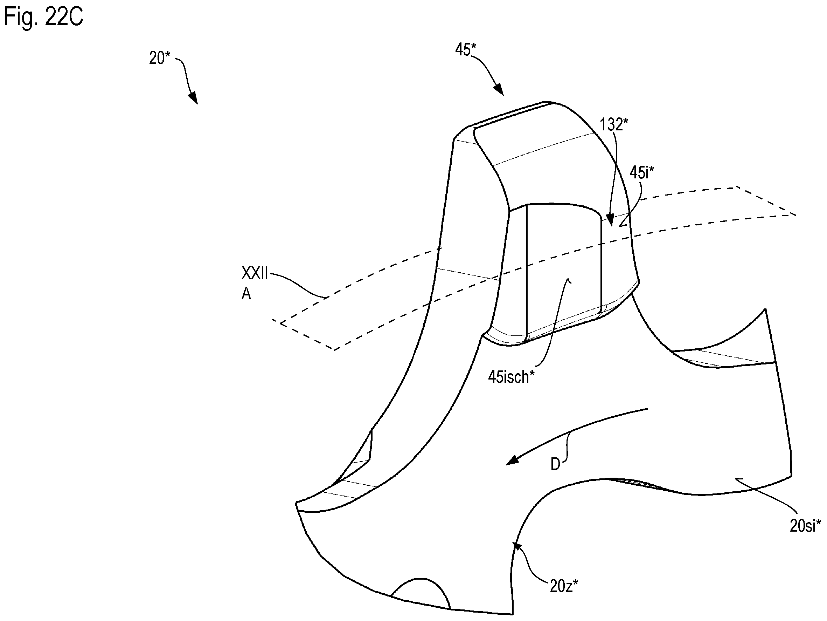

In den Figuren 22A bis 22C ist in gleicher Weise wie zuvor in den Figuren 18A bis 18C bzw. 19A bis 19C bzw. 20A bis 20C bzw. 21A bis 21C der entgegen der Antriebsdrehrichtung D auf den Zahn 47* folgende aufnahmeseitige Stabilisierungszahn 45* als spanlos umgeformter Zahn dargestellt. Die Schnittfläche, in welcher der in Umfangsrichtung geschnittene aufnahmeseitige Stabilisierungszahn 45* in Figur 22A mit Blick Richtung zur Ritzelachse R hin betrachtet wird, ist in den Figuren 22B und 22C mit XXII bezeichnet.

Die innere Zahnkontaktfläche 45i* ist als Stirnfläche eines Vorsprungs 132 ausgebildet. Die auf der entgegengesetzten Seite gelegene äußere Zahnkontaktfläche 45a* ist als Stirnfläche einer Vertiefung 134 ausgebildet. Die Vertiefung 134 ist Teil der Herunterschalt-Vertiefungsformation 42*, welche sich über die Breite des aufnahmeseitigen Stabilisierungszahns 45* in Umfangsrichtung erstreckt.

Den Zahnkontaktflächen: innere Zahnkontaktfläche 45i* und äußere Zahnkontaktfläche 45a*, ist jeweils eine Schrägfläche 45isch* auf der Innenseite des aufnahmeseitigen Stabilisierungszahns 45* sowie eine Schrägfläche 45asch* auf der Außenseite des aufnahmeseitigen Stabilisierungszahns 45*in Umfangsrichtung benachbart. Die beiden Schrägflächen 45isch* und 45asch* sind um eine zur radialen Richtung parallele Neigeachse geneigt. Diese Schrägflächen 45isch* und 45asch* können besonders vorteilhaft durch spanlose Formgebung erzeugt werden. Ihre Erzeugung durch ein spanendes Verfahren wäre ungleich aufwendiger.

Die Schrägflächen 45isch* und 45asch* sind im dargestellten Ausführungsbeispiel zueinander parallel, können jedoch auch abweichend hiervon relativ zueinander orientiert sein.

Während die innere Zahnkontaktfläche 45i*, wie bereits zuvor am Zahn 47* diskutiert, durch eine Schrägfläche am Zahnkopf radial verkürzt ist, zeigt die äußere Zahnkontaktfläche 45a* eine erheblich längere radiale Abmessung als eine Abmessung in Umfangsrichtung. Auch die radial verkürzte innere Zahnkontaktfläche 45i* weist immer noch eine betragsmäßig größere Abmessung in radialer Richtung auf als in Umfangsrichtung.

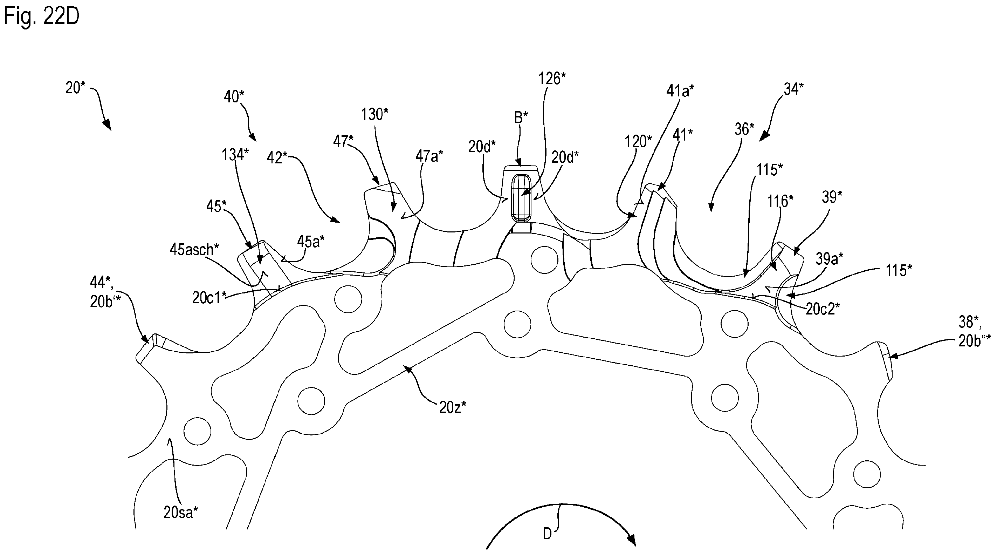

Figur 22D zeigt eine Draufsicht auf die Außenseite jenes Umfangsabschnitts des durch spanloses Umformen hergestellten Ritzels 20*, welcher einen Hochschaltbereich 34* und einen Herunterschaltbereich 40* mit den Zähnen 38*, 39*, 41*, B*, 47*, 45* und 44* aufweist, von welchen die Zähne 39*, 41*, B*, 47* und 45* in den Figuren 18A bis 22C gezeigt sind.

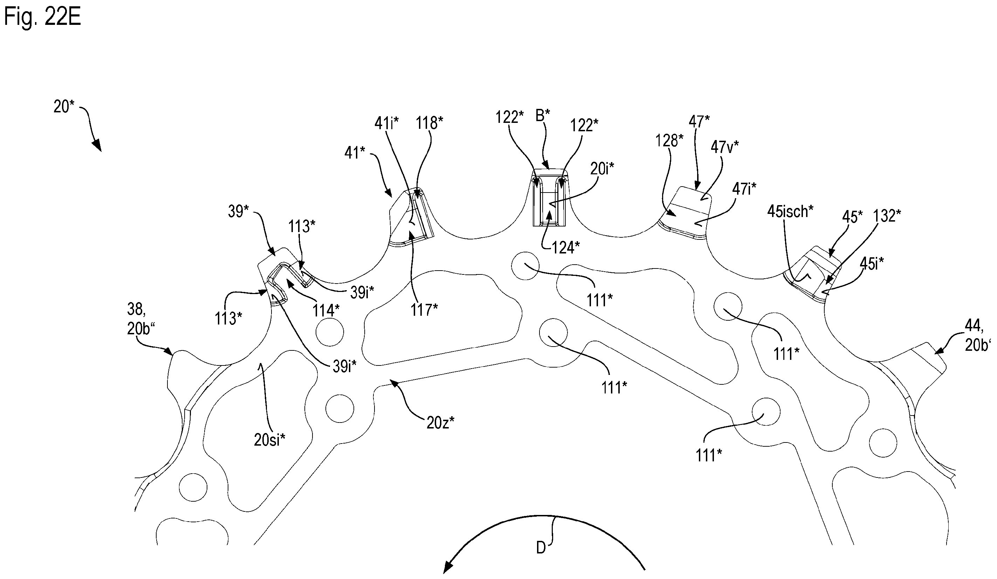

Figur 22E zeigt eine Draufsicht auf die Innenseite des Umfangsabschnitts von Figur 22D.

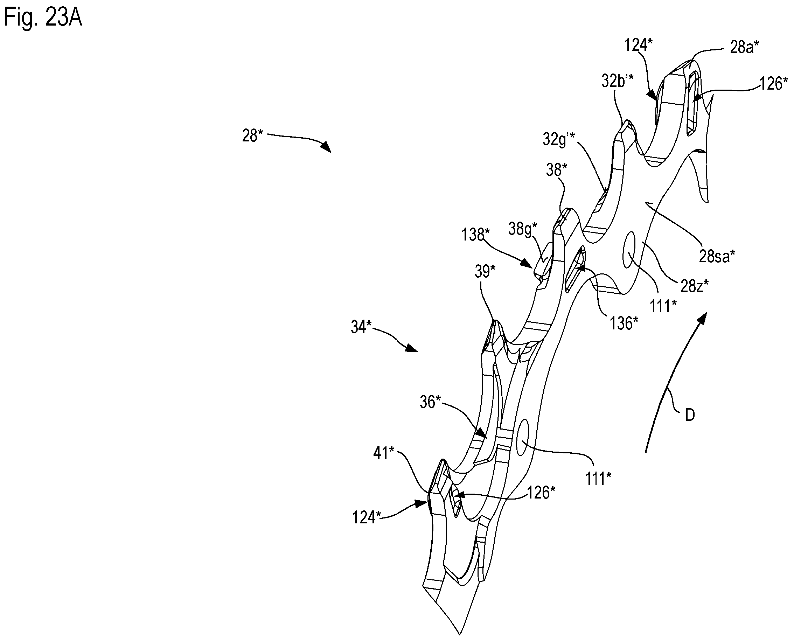

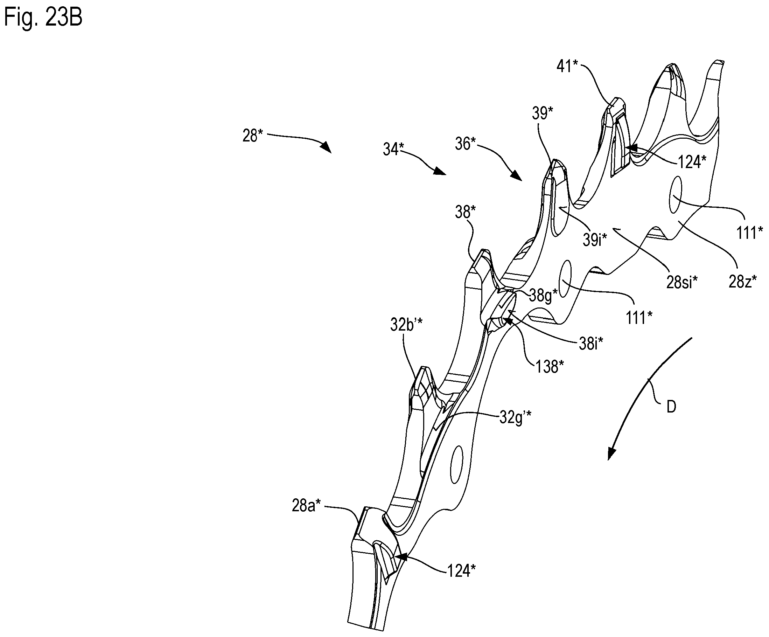

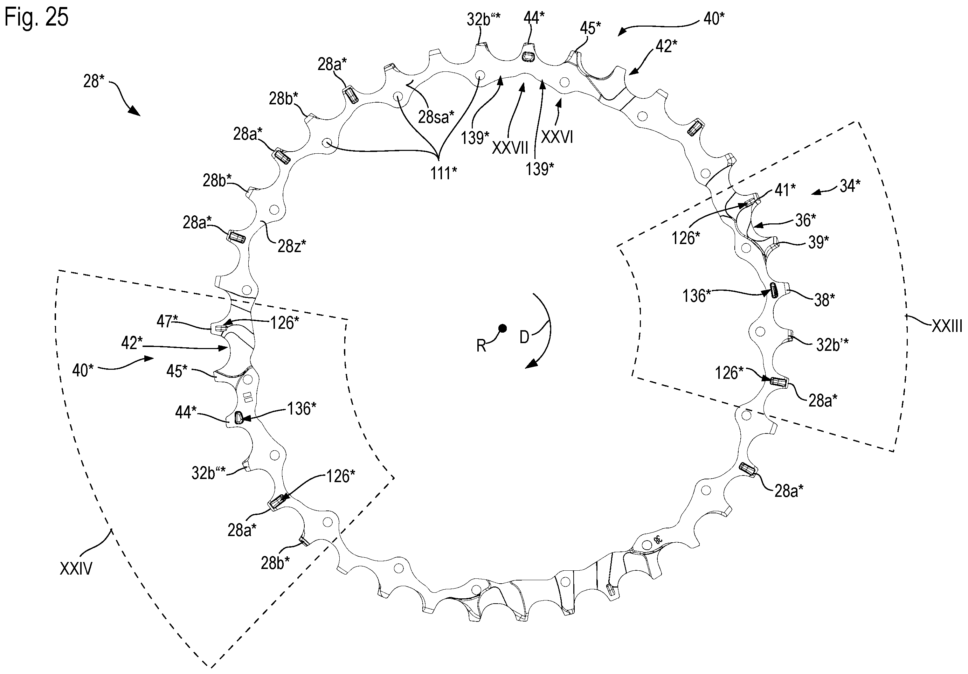

In Figur 23A ist ein einen Hochschaltbereich 34* aufweisender Ausschnitt des alternativ durch spanlose Formgebung hergestellten Ritzels 28* dargestellt. Der Betrachter von Figur 23A blickt auf die Außenseite bzw. die äußere Stirnseite 28sa* des Ritzels 28*. Der Hochschaltbereich 34* der Figuren 23A und 23B ist in dem in Figur 25 mit XXIII bezeichneten Bereich gelegen.

Wie zuvor gilt auch für die Figuren 23A bis 24B, dass gleiche und funktionsgleiche Bauteile und Bauteilabschnitte wie oben mit gleichen Bezugszeichen versehen sind, jedoch unter Zusatz eines "*", um die Bauteile und Bauteilabschnitte als durch spanlose Formgebung hergestellt zu kennzeichnen. Zur Beschreibung der gleichen und funktionsgleiche Bauteile und Bauteilabschnitte wird daher auf die obige Beschreibung verwiesen, welche auch für die spanlos hergestellten Bauteile und Bauteilabschnitte des Ritzels 28* gilt. Nachfolgend werden die Figuren 23A bis 24B nur insofern beschrieben werden, als sich durch die spanlose Formgebung des Ritzels 28* Besonderheiten ergeben.

In Figur 23A und 23B ist auf der Innenseite 28si* des Ritzels 28* eine oben beschriebene Rampe 38g* des Abgabezahns 38* und eine Rampe 32g'* des abgabeseitigen Mobilisierungszahns 32b'* dargestellt. Die Rampe 38g* kragt dabei in axiale Richtung weiter aus als die Rampe 32g'* des abgabeseitigen Mobilisierungszahns 32b'. Dies liegt daran, dass an dem geradzahligen Ritzel 28* der Abgabezahn 38* ein zum Eingriff mit einem Außenlaschen-Kettenglied ausgebildeter Zahn mit größerer axialer Abmessung ist und der unmittelbar benachbarte abgabeseitige Mobilisierungszahn 32b' ein zum Eingriff mit einem Innenlaschen-Kettenglied ausgebildeter Zahn mit kleinerer axialer Abmessung ist.

Wie bereits oben am Beispiel der Figuren 20A bis 20C für das ungeradzahlige spanlos geformte Ritzel 22* gezeigt, wird auch am Ritzel 28* eine Kettenführungsabmessung durch lokale Verformung des betroffenen Zahns in axialer Richtung eingestellt. Ein Außenlaschen-Ritzelzahn 28a* weist beispielsweise auf seiner Außenseite eine oben bereits erläuterte axiale Vertiefung 126* auf, welcher auf der Innenseite ein axialer Vorsprung 124* entspricht.

Sowohl die Vertiefung 126* wie auch der auf der entgegengesetzten Seite etwa komplementäre Vorsprung 124* weisen aus den oben bereits genannten Gründen eine größere Abmessung in radialer Richtung auf als in Umfangsrichtung.

Die Rampe 38g* auf der vom benachbarten nächstkleineren Ritzel abgewandten Innenseite des Ritzels 28* ist spanlos durch den axialen Vorsprung 138* gebildet, dessen Erzeugung auf der dem benachbarten nächstkleineren Ritzel zugewandten Außenseite des Ritzels 28* zu einer Vertiefung 136* geführt hat.

Der die Rampe 38g* ausbildende Vorsprung 138* bildet an seiner in axiale Richtung weisenden Stirnseite die innere Zahnkontaktfläche 38i* des Abgabezahns 38*.

Sowohl die der Rampe 38g* zugeordnete Vertiefung 136* als auch der sie ausbildende Vorsprung 138* weisen abweichend von spanlos geformten Zähnen, die keine Rampe auf der Innenseite ausbilden, eine größere Abmessung in Umfangsrichtung als in radialer Richtung auf.

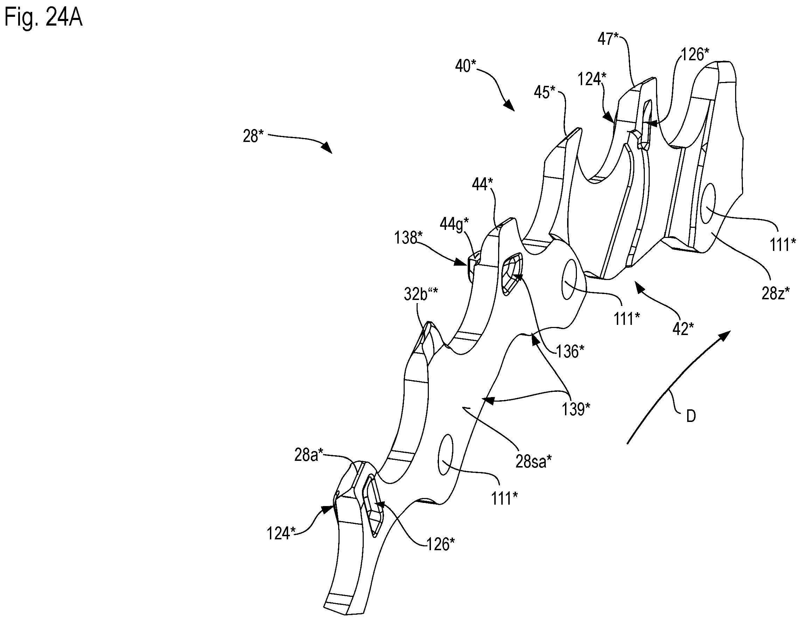

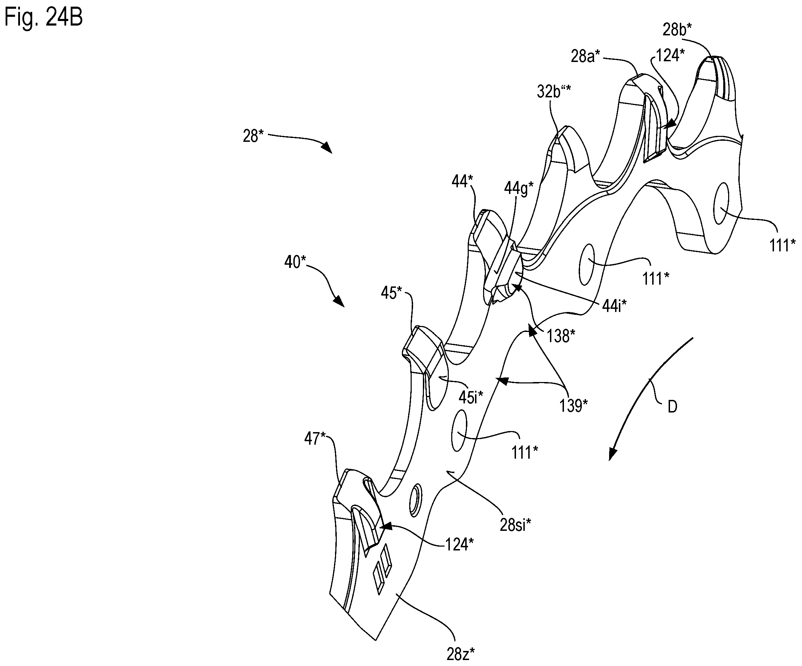

In den Figuren 24A und 24B ist analog zu den Figuren 23A und 23B ein Herunterschaltbereich 40* des Ritzels 28* gezeigt. Figur 24A zeigt einen Blick auf die äußere Stirnfläche 28sa* des Ritzels 28* und Figur 24B zeigt einen Blick auf dessen innere Stirnfläche 28si*. Der Herunterschaltbereich 40* der Figuren 24A und 24B ist in dem in Figur 25 mit XXIV bezeichneten Bereich gelegen.

Am Fangzahn 44* des Herunterschaltbereichs 40* im Rahmen XXIV ist auf der Innenseite des Ritzels 28* bzw. des Fangzahns 44* eine Rampe 44g* ausgebildet. Auch sie wurde durch spanlose Formgebung gebildet, indem Material in Dickenrichtung eines im Wesentlichen ebenen Ritzelrohlings von der späteren Außenseite zur späteren Innenseite des dabei gebildeten Ritzels 28* verlagert wurde.

Für die Rampe 44g* des Fangzahns 44* gilt das oben für die Rampe 38g* des Abgabezahns 38* Gesagte mutatis mutandis, nämlich dass die der Rampe 44g* zugeordnete Vertiefung 136* auf der Außenseite des Ritzels 28* bzw. des Fangzahns 44* und der sie ausbildende Vorsprung 138* auf der entgegengesetzten Innenseite eine größere Abmessung in Umfangsrichtung aufweisen als in radialer Richtung.

In Figur 25 ist das durch spanloses Umformen hergestelltes Ritzel 28* mit 38 Zähnen in der Draufsicht dargestellt. Der Betrachter von Figur 25 blickt auf die Außenseite des Ritzels 28*.

Das Ritzel 28* weist nicht nur den Herunterschaltbereich 40* im Rahmen XXIV von Figur 25 auf, sondern weist in Figur 25 im Bereich zwischen 12 Uhr und 1 Uhr einen weiteren Herunterschaltbereich 40* auf, welcher konstruktiv abweichend von dem im Rahmen XXIV gelegenen Herunterschaltbereich 40* ausgebildet ist.

Figur 25 zeigt am Ritzel 28* ausgebildete Verbindungsformationen 111* in Gestalt von Verbindungsöffnungen, welche im betriebsbereiten Zustand des Ritzels 28* zur Verbindung des Ritzels 28* mit einem benachbarten Ritzel anderer Zähnezahl von einem Verbindungsstift oder Verbindungniet (nicht dargestellt) durchsetzt sind. In der oben beschriebenen Ausführungsform wird die axiale Verbindung durch die beschriebenen Verbindungsstege 110 erzielt. Der besseren Übersichtlichkeit wegen sind in Figur 25 nur drei Verbindungsformationen 111* im Umfangsbereich von etwa 10 Uhr bis 12 Uhr mit Bezugszeichen versehen. Die übrigen Verbindungsformationen sind jedoch gleichartig ausgebildet und ohne weiteres erkennbar.

Wie man in Figur 25 erkennen kann, ist das Ritzel im Bereich des nachfolgend erläuterten weiteren Fangzahns 44* auf etwa 12 Uhr beiderseits in Umfangsrichtung mit einer lokalen radialen Materialanhäufung und damit mit einer lokalen radialen Aussteifung 139* ausgebildet. Erkennbar weist der Ritzelgrundkörper 28z* in Umfangsrichtung beiderseits des weiteren Fangzahns 44* eine größere radiale Dicke auf als etwa beiderseits eines gewöhnlichen Außenlaschen-Ritzelzahns 28a* ohne Schaltfunktion, wie sie im Umfangsbereich von etwa 10 Uhr bis 12 Uhr abgebildet sind.

Weitere lokale radiale Verdickungen sind im Umfangsbereich der Hochschalt-Vertiefungsformationen 36* und der Herunterschalt-Vertiefungsformationen 42* ausgebildet, um die durch die genannten Vertiefungen 36* bzw. 42* bewirkte axiale Ausdünnung des Ritzelgrundkörpers 28z* durch radiale Materialanhäufung zu kompensieren und einen Steifigkeitsverlust des Ritzels 28* in diesem Umfangsbereich zu vermeiden.

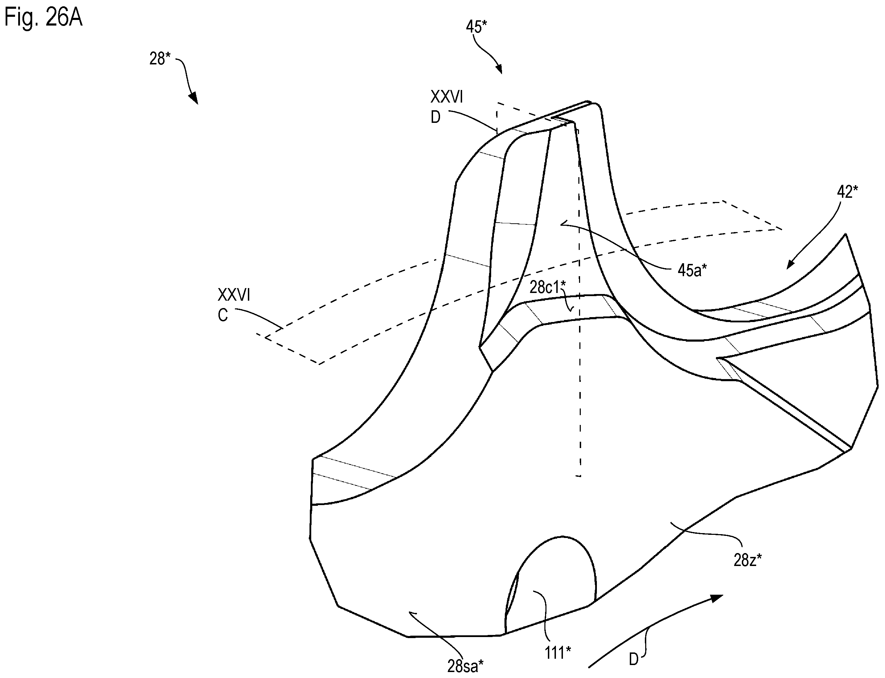

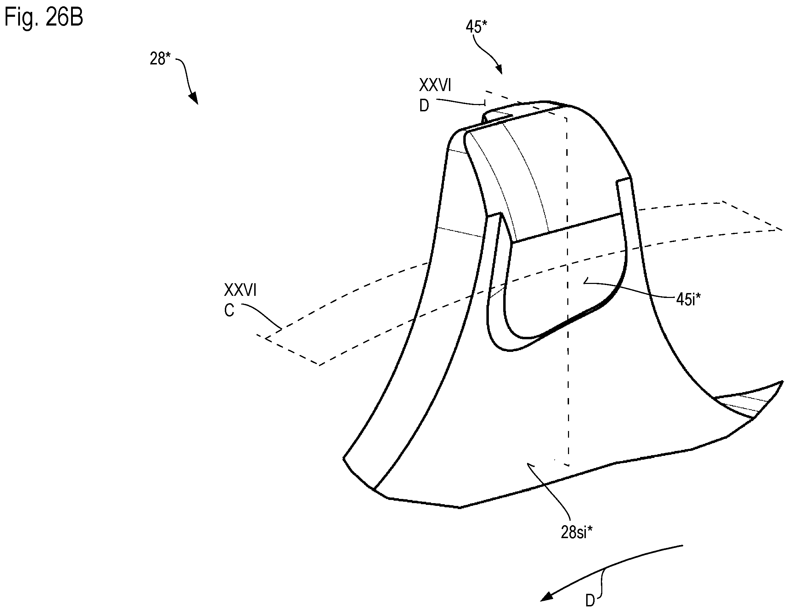

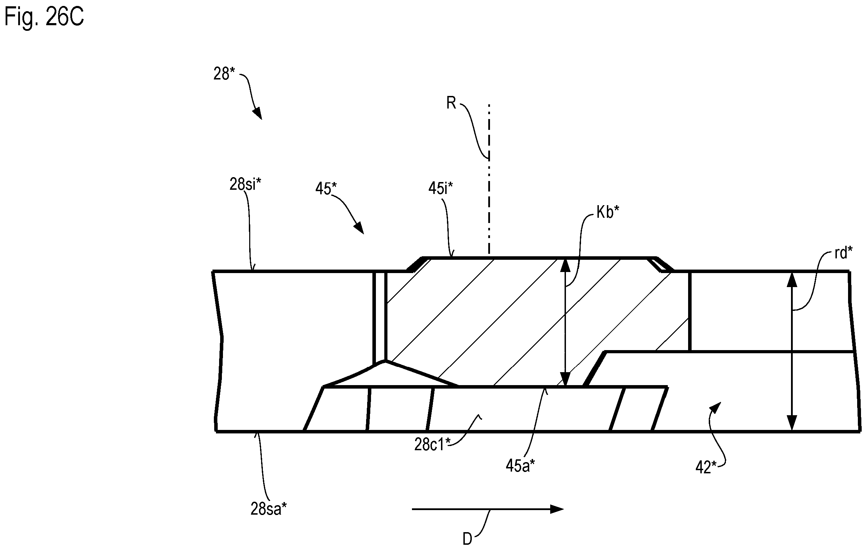

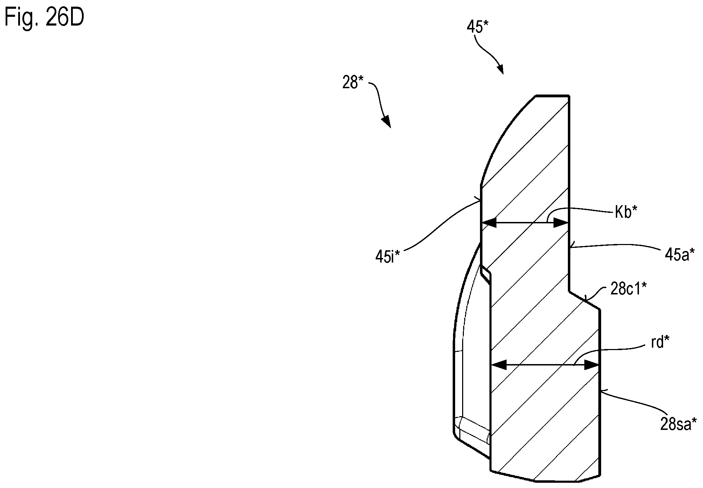

Die Figuren 26A bis 26D zeigen den in Figur 25 an der mit XXVI bezeichneten Stelle gelegenen aufnahmeseitigen Stabilisierungszahn 45*, und zwar zeigt Figur 26A in perspektivischer Ansicht dessen Außenseite, Figur 26B in perspektivischer Ansicht dessen Innenseite, Figur 26C einen Umfangsschnitt längs der zylindrischen Schnittfläche XXVI C in den Figuren 26A und 26B, wobei die Ritzelachse R die Zylinderachse der Schnittfläche XXVI C ist, und Figur 26D einen Querschnitt längs der die Ritzelachse R enthaltenden Schnittebene XXVI D in den Figuren 26A und 26B.

Gleiche und funktionsgleiche Bauteile und Bauteilabschnitte wie an den zuvor beschriebenen aufnahmeseitigen Stabilisierungszähnen 45 und 45* sind in den Figuren 26A bis 26D mit gleichen Bezugszeichen versehen, wobei der hinzugefügte "*" die Herstellung des aufnahmeseitigen Stabilisierungszahns 45* durch spanloses Umformen kennzeichnet.

Wie bei den zuvor beschriebenen aufnahmeseitigen Stabilisierungszähnen 45 bzw. 45* weist auch der in den Figuren 26A bis 26D gezeigte weitere aufnahmeseitige Stabilisierungszahn 45* auf seiner Außenseite eine Rampe 28c1* auf, welche nach radial innen eine Abweisfläche 45a* als die äußere Zahnkontaktfläche des weiteren aufnahmeseitigen Stabilisierungszahns 45* begrenzt.

Die Rampe 28c1* ist gegenüber der Abweisfläche 45a* axial abgesetzt. Die Rampe 28c1 weist eine nach radial außenweisende konvex gekrümmte Auflagefläche auf, auf welcher ein radial innerer Rand einer näher bei der vertikalen Längsmittelebene des das Ritzel 28* tragenden Fahrrads gelegenen Kettenlasche eines Innenlaschen-Kettenglieds während eines Herunterschaltvorgangs vom benachbarten nächstkleineren Ritzel mit 36 Zähnen auf das Ritzel 28* aufliegen kann. Somit kann die Kette auf der Rampe 28c1* aufreiten. Der weitere aufnahmeseitige Stabilisierungszahn 45* ist auch mit einer sogenannten "Half-Link"-Kette kompatibel.

Die innere Zahnkontaktfläche 45i* steht axial über die innere Stirnfläche 28si* des Ritzels 28* vor und stabilisiert so im Eingriff mit einem Innenlaschen-Kettenglied die Fahrradkette, in dem der weitere aufnahmeseitige Stabilisierungszahn 45* die Kette im Herunterschaltbereich 40* mit seiner axial nach innen vorstehenden inneren Zahnkontaktfläche 45i* nach axial innen verlagert.

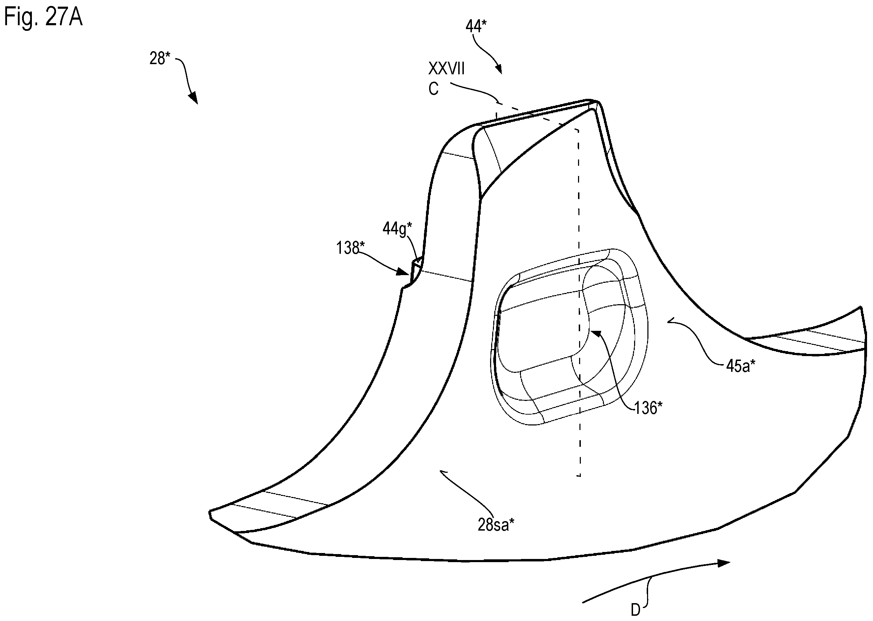

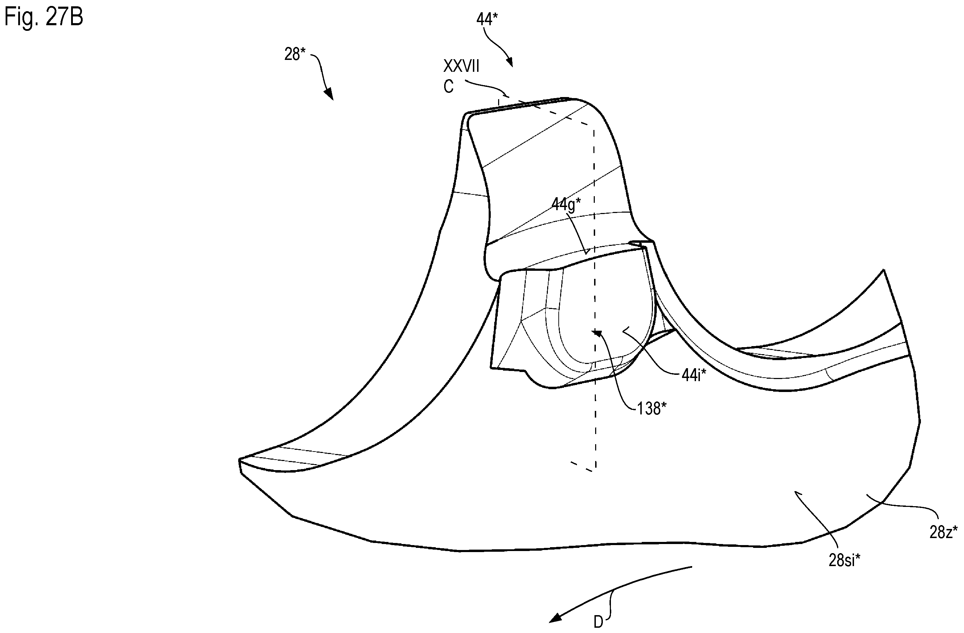

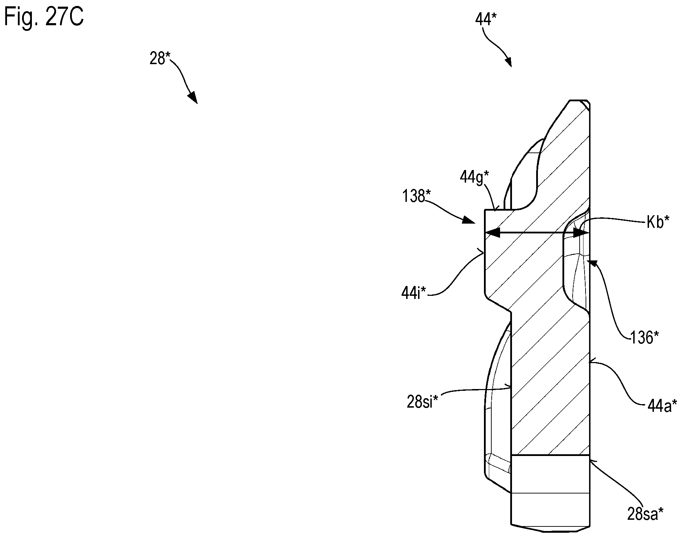

In den Figuren 27A bis 27C ist ein weiterer Fangzahn 44* im Detail dargestellt, welcher sich in Figur 25 am Ritzel 28* an der Stelle XXVII befindet. Figur 27A zeigt eine perspektivische Ansicht der Außenseite des weiteren Fangzahns 44*, Figur 27B zeigt eine perspektivische Ansicht von dessen Innenseite und Figur 27C zeigt einen Umfangsschnitt längs einer zylindrischen Schnittfläche XXVII C in den Figuren 27A und 27B. Die Ritzelachse R des Ritzels 28* ist Zylinderachse der Schnittfläche XXVII C.

Der weitere Fangzahn 44* unterscheidet sich von dem oben bereits beschriebenen Fangzahn 44* im Wesentlichen nur durch Anfasungen im Bereich des Zahnkopfes. Wie beim Zuvor beschriebenen Fangzahn 44* ist die innere Zahnkontaktfläche 44i* als Stirnfläche eines Vorsprungs 138* ausgebildet. Der Vorsprung 138* ist spanlos durch eine axiale Materialverlagerung gebildet. Auf der Außenseite des Ritzels 28* ist daher am Ort des innenseitigen Vorsprungs 138* eine Vertiefung 136* ausgebildet.

Auch am weiteren Fangzahn 44* ist die oben bereits ausführlich beschriebene Rampe 44g* ausgebildet, auf deren axial nach außen weisender Fläche sich eine näher bei der vertikalen Längsmittelebene des das Ritzel 28* tragenden Fahrrads gelegene Außenlasche der Fahrradkette mit ihrem radial inneren Rand während eines Herunterschaltvorgangs abstützen kann.

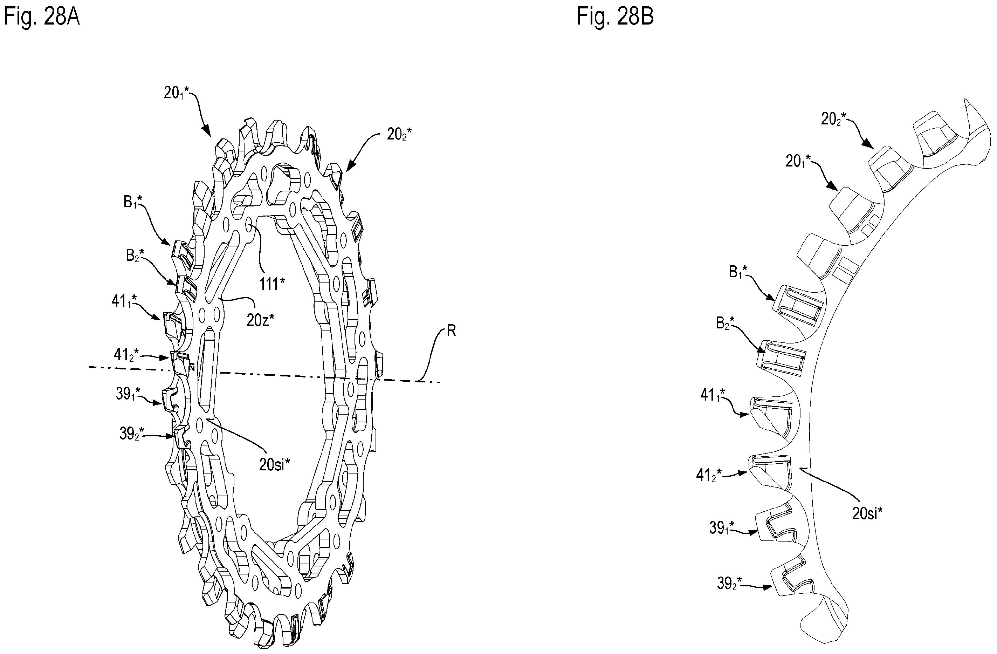

Figur 28A zeigt in perspektivischer Darstellung zwei bezüglich ihrer Ritzelachse R koaxial übereinander gelegte Ritzel 20*, die zu einer Wärmebehandlung vorgesehen sind. In besonders vorteilhafter Weise sind an dem Ritzel 20*, wie auch an den anderen spanlos umgeformten Ritzeln der Ritzelkassette, alle axial bezüglich der jeweiligen Stirnseite 20si* und 20sa* vorstehenden Vorsprünge, wie etwa die oben bezeichneten Vorsprünge 138*, radial außerhalb des Fußkreises des betreffenden Ritzels ausgebildet. Aus diesem Grunde können zwei oder mehr spanlos umgeformte Ritzel gleicher Zähnezahl trotz der Ausbildung von axialen Vorsprüngen koaxial dicht gepackt mit flächig aneinander anliegenden Stirnseiten 20si* und 20sa* um eine halbe Zahnteilung bzw. Kettenteilung relativ zueinander verdreht angeordnet werden. Die Vorsprünge eines Ritzels liegen dann in den Zahnzwischenräumen des benachbarten Ritzels. Figur 28B zeigt die Situation koaxial übereinander gelegter, axial gleich ausgerichteter Ritzel am Beispiel von Zahnreihen der Ritzel 20* in Draufsicht auf deren innere Stirnseiten 20si*. Die derart dicht gepackten Ritzel können axial gespannt werden, um während der Wärmebehandlung Verzug zu vermeiden.

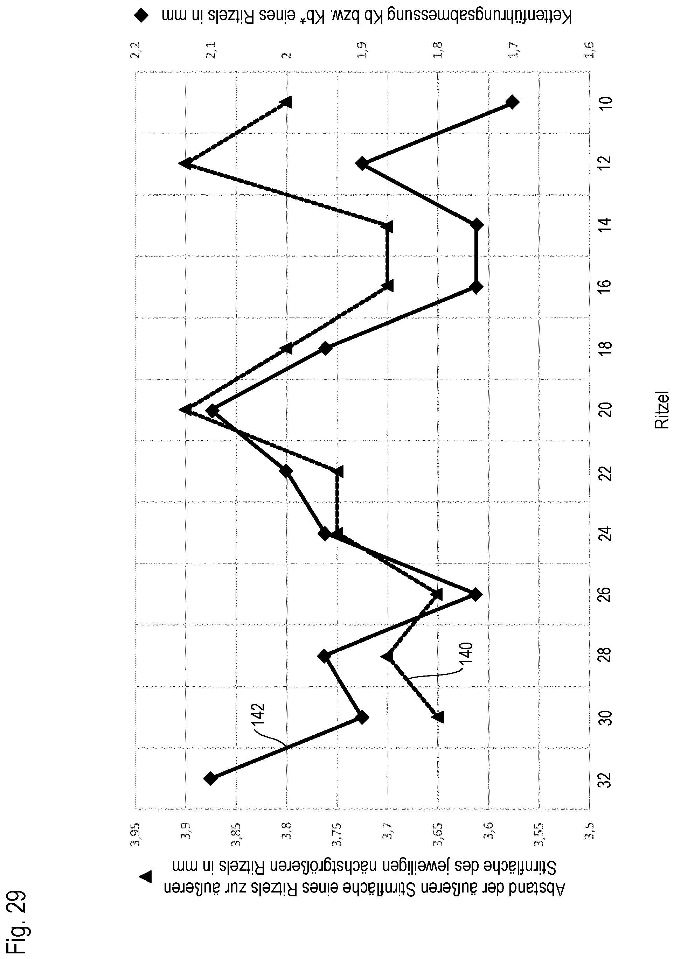

In Figur 29 ist ein erstes Diagramm dargestellt, welches die axialen Ritzelabstände unmittelbar benachbarter Ritzel der Ritzelkassette 1 zeigt und welches ein dem ersten Diagramm überlagertes zweites Diagramm zeigt, das für jedes Ritzel der Ritzelkassette 1 die Kettenführungsabmessung Kb eines Bezugszahns des jeweiligen Ritzels angibt.

In der Darstellung von Figur 29 sind längs der Ordinate von links nach rechts in absteigender Reihenfolge ihrer Größe die Ritzel 32 bis 10 der Ritzelkassette 1 durch ihr Bezugszeichen repräsentiert.

An der in Figur 29 linken Abszisse aufgetragen ist die Skala in Millimetern für den axialen Ritzelabstand, gemessen zwischen zwei äußeren axialen Stirnflächen unmittelbar axial benachbarter Ritzel, und zwar vom Ritzel der Notation zum nächst größeren benachbarten Ritzel hin. Für das größte Ritzel 32 der Ritzelkassette 1 ist dementsprechend kein Ritzelabstandswert eingetragen, da das Ritzel 32 kein größeres axial benachbartes Ritzel aufweist. Der dem Ritzel 30 zugeordnete Ritzelabstandswert ist der oben angegebene axiale Abstand zwischen der äußeren axialen Stirnfläche des Ritzels 30 zum nächst größeren Ritzel, also dem Ritzel 32. Für jedes weitere Ritzel ist ebenso der Abstand dieses Ritzels zum nächst größeren Ritzel angegeben. Die Kurve der Ritzelabstände ist in Figur 29 mit 140 bezeichnet. Die Abstandswerte sind durch Dreiecke gekennzeichnet und mit gestrichelter Linie verbunden.

An der in Figur 29 rechten Abszisse aufgetragen ist die Skala Millimetern für die Kettenführungsabmessung Kb eines Bezugszahns jedes in der Ordinate repräsentierten Ritzels angegeben. Die Kurve der Werte der Kettenführungsabmessungen ist in Figur 29 mit 142 bezeichnet. Die Werte der Kettenführungsabmessungen für die einzelnen Ritzel sind durch Rauten gekennzeichnet und mit durchgezogener Linie verbunden.

Zu erkennen ist, dass die Ritzelabstandswerte mit den Kettenführungsabmessungen sowie die Änderungen von Ritzeln Abstandswerten mit den Änderungen von Kettenführungsabmessungen von einem Ritzel zum benachbarten Ritzel qualitativ korrelieren.

Der Abstand von Ritzel 12 zu Ritzel 14 ist größer als der Abstand des Ritzels 10 zu Ritzel 12 bzw. des Ritzels 14 zu Ritzel 16, da am Ritzel 12 ein starker Schräglauf der Kette herrscht, welcher die Kette nach innen zieht. Dadurch droht die Kette bei zu geringem Ritzelabstand das Ritzel 16 zu berühren. Um einen solchen Kontakt bei aktivem Ritzel 14 auszuschließen, ist der Ritzelabstand zum Ritzel 16 größer gewählt als die Ritzelabstände der benachbarten Ritzel.

Am Ritzel 10 als dem kleinsten Ritzel ist der Kettenschräglauf zwar größer als bei für einen Ketteneingriff aktiviertem Ritzel 12. Allerdings können am kleinsten und damit axial ganz außenliegenden Ritzeln 10 wegen eines fehlenden außen benachbarten Ritzels die Zähne so gestaltet werden, dass sie die Kette axial nach außen drängen, was einen unerwünschten Kontakt der auf dem Ritzel 10 geführten Kette mit dem Ritzel 12 vermeidet.

Am Ritzel 16 ist der Schräglauf bereits betragsmäßig erheblich verringert, sodass bei mit dem Ritzel 16 kämmender Kette keine unerwünschte Berührung mit dem axial benachbarten nächstgrößeren Ritzel 18 zu befürchten ist.

Die Ritzel 24 bis 18, jeweils einschließlich, weisen die in den Figuren 9 bis 12 gezeigten Stabilisierungszähne mit nach axial innen versetzten inneren Zahnkontaktflächen auf. Hierdurch wird die Kette zumindest in Umfangsabschnitten axial nach innen verlagert, weshalb auch für die Ritzel 14 bis 18 größere Ritzelabschnitte zu ihrem jeweils nächstgrößeren Nachbarn gewählt sind als für Ritzel 26 bis 32 bzw. Ritzel 16 und 14.

An den größeren Ritzeln 32 bis einschließlich 26 wirkt der Kettenschräglauf nach axial außen, sodass hier der Kettenschräglauf die Kette eher axial vom benachbarten größeren Ritzel wegzieht. Da somit bei für einen Ketteneingriff aktiviertem Ritzel 30, 28 oder 26 ein Kontakt der Kette mit dem jeweils benachbarten nächstgrößeren Ritzel nicht zu befürchten ist, kann der Ritzelabstand dort kleiner gewählt werden.

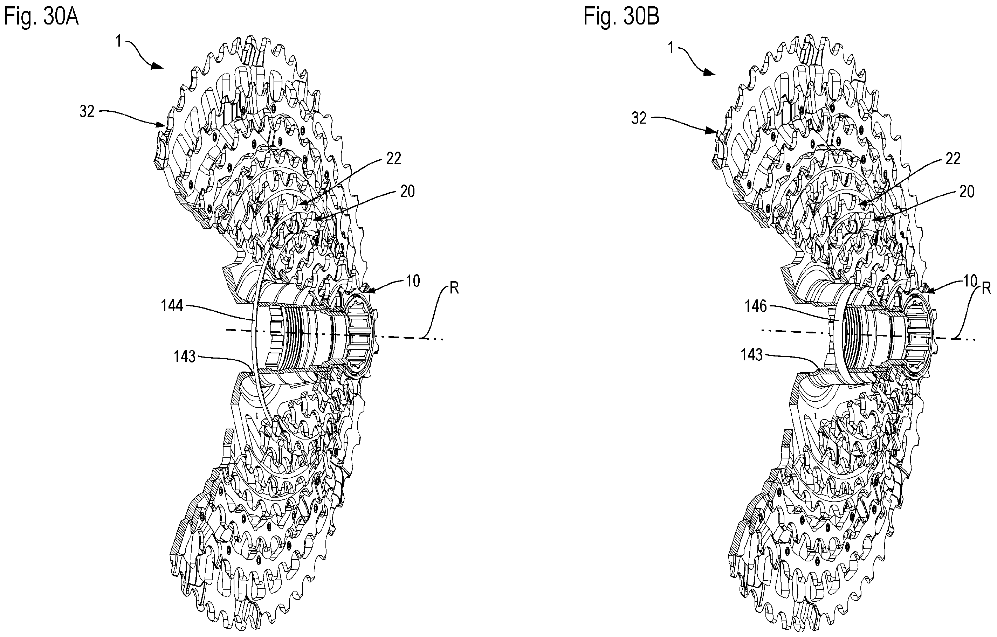

Die Figur 30A zeigt die in der vorliegenden Anmeldung diskutierte Ritzelkassette 1 montiert auf eine sogenannte "Locktube" 144, welche während der Lebensdauer des Ritzels diversen Montage- und Positionierungszwecken für Komponenten der Ritzelkassette dient.

Zur Vornahme bestimmter technischer Einstellungen, wie zum Beispiel zur Einstellung des sogenannten "Chain-Gap" zwischen Ritzelkassette und Kettenführungsrolle bzw. Schaltrolle eines mit der Ritzelkassette zusammenwirkenden hinteren Umwerfers 94 sowie zur Einstellung der Kettenspannung, ist der hintere Umwerfer 94 in eine vorbestimmte Referenzstellung zu verbringen, in welcher die in der Regel näher bei der Ritzelkassette gelegene Kettenführungsrolle 96 komplanar mit dem Referenzritzel angeordnet ist, sodass die am Fahrrad 71 umlaufende Fahrradkette 50 mit dem Referenzritzel in Eingriff ist.

Zur Vermeidung von Fehlbetätigungen und Fehleinstellungen ist es hilfreich, das Referenzritzel eindeutig zu kennzeichnen und eindeutig von außen wahrnehmbar zu machen. Dies ist insbesondere dann von Vorteil, wenn die Ritzelkassette, wie im vorliegenden Fall, 12 Ritzel oder mehr aufweist, sodass sich selbst der kundige Fachmann beim Abzählen von Ritzeln leicht verzählen kann.

Gemäß einer in Figur 30A gezeigten ersten Ausführungsform einer Kennzeichnung des Referenzritzels der Ritzelkassette 1 ist zwischen dem Referenzritzel, das ist vorliegend das Ritzel 20, und dem nächstgrößeren Ritzel 22 ein Band 144 gelegt, welches bevorzugt auf axial verlaufenden Verbindungsformationen aufliegt. Die Verbindungsformationen können die oben genannten Verbindungsstege 110 oder, falls die Verbindung zwischen den Ritzeln 20 und 22 durch Verbindungsstifte oder Verbindungsniete gebildet ist, eben jene Verbindungsstifte bzw. Verbindungsniete sein.

Bevorzugt ist das Band 144 aus einem elastischen Material, wie beispielsweise Gummi oder Kautschuk gebildet, sodass das Band 144 dauerhaft unter elastischer Spannung an den axial verlaufenden Verbindungsformationen anliegt. Das Band 144 ist bevorzugt in einer leicht wahrnehmbaren Farbe gestaltet, wie beispielsweise gelb, orange oder rot. In der Umgebung der metallischen Ritzelkassette 1 sind jedoch auch andere Farbtöne leicht wahrnehmbar, insbesondere wenn diese als Signal-Farbtöne mit gewisser Leuchtkraft ausgestaltet sind.

In Figur 30B ist eine zweite Option einer Kennzeichnung des Referenzritzels 20 dargestellt. Auch diese zweite Option verwendet ein optisch leicht wahrnehmbares Band 146, insbesondere aufgrund seiner Farbgebung. Abweichend von der Ausführungsform der Figur 30A wird dieses Band 146 allerdings von der Außenfläche der Locktube 143 getragen, mit welcher die Ritzelkassette 1 zu Montage- und Positionierungszwecken verbunden ist. Das Band 146 kann als elastisches Band mit im entspannten Zustand geringerem Durchmesser als die Locktube 143 reibschlüssig, unterstützt durch aus der eigenen Dehnung resultierende elastische Rückstellkräfte, an der Außenfläche der Locktube 143 gehalten sein. Um mit größerer Sicherheit eine axiale Verlagerung des Bandes 146 zu vermeiden, kann dieses in einer umlaufenden Nut der Locktube 143 aufgenommen sein oder/und kann durch Klebstoff an der Außenfläche der Locktube 143 gesichert sein.

Ein Vorteil dieser zweiten Ausführungsform liegt darin, dass die Bedienperson dann, wenn sie radial auf die Ritzelkassette 1 blickt und die Fahrradkette im Eingriff mit dem Referenzritzel 20 ist, dass Band 146 nicht oder kaum mehr sieht, da es, durch die Fahrradkette verdeckt, hinter der Kette verschwinden kann.

Anstelle der Verwendung eines Bandes 146 kann die Außenfläche der Locktube 143 einen farblich oder/und hinsichtlich seiner Oberflächenstruktur abweichend von der restlichen Locktube 143 gestalteten Ring aufweisen, sei es durch entsprechende Lackierung, durch entsprechende Eloxierung, durch entsprechende Gravur, insbesondere Lasergravur, Rändelung oder durch eine beliebige andere geeignete Oberflächenbehandlung der Locktube 143.

Diesen Ansatz verfolgend, kann das Referenzritzel selbst durch Oberflächenbehandlung optisch oder/und taktil von den übrigen Ritzeln der Ritzelkassette 1, die nicht Referenzritzel sind, unterscheidbar ausgestaltet sein.

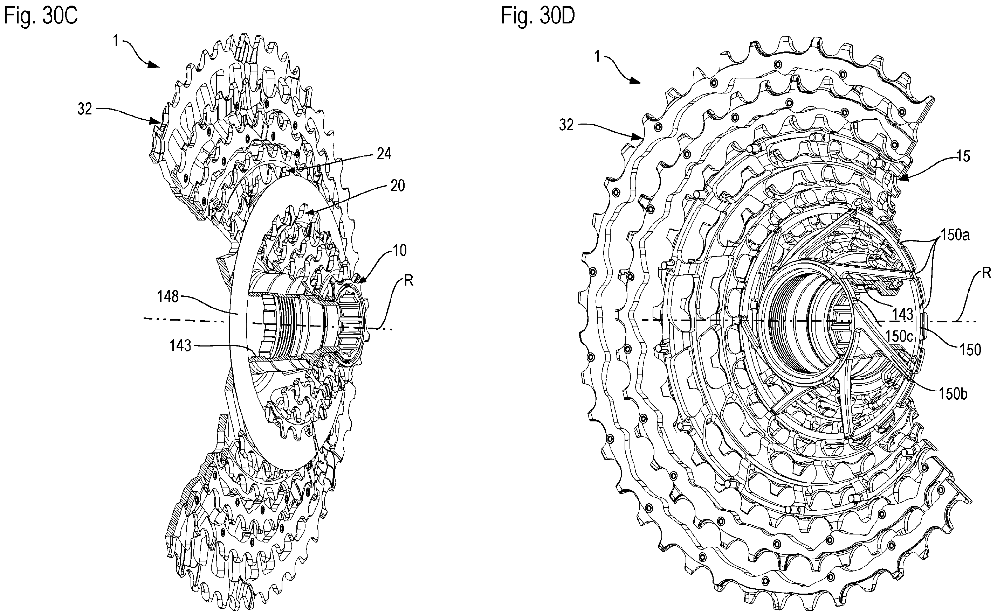

In Figur 30C ist eine dritte Option einer Kennzeichnung des Referenzritzels 20 an der Ritzelkassette 1 gezeigt. Hierbei ist eine, wiederum bevorzugt farblich deutlich abweichend von der übrigen Ritzelkassette 1 gestaltete, Ringscheibe 148 in dem Spaltraum zwischen dem Referenzritzel 20 und dem nächstgrößeren Ritzel 22 angeordnet. Die Ringscheibe 148 kann aus Papier oder Kunststoff gebildet sein.

Bevorzugt ist die Ringscheibe 148 radial geschlitzt, um ihre Anordnung an der und insbesondere ihre Entfernung von der Ritzelkassette 1 zu erleichtern.

Nähert man sich bei der Einstelltätigkeit mit der Fahrradkette dem Referenzritzel durch Herunterschalten von kleineren Ritzeln her, dann kann die Ringscheibe 148 bei entsprechend stabiler Ausbildung eine vorteilhafte körperliche Barriere bilden, die ein Herunterschalten der Fahrradkette über das Referenzritzel 20 hinweg verhindert oder zumindest erschwert. Das Referenzritzel 20 selbst ist in Figur 30C durch die Ringscheibe 148 verdeckt.

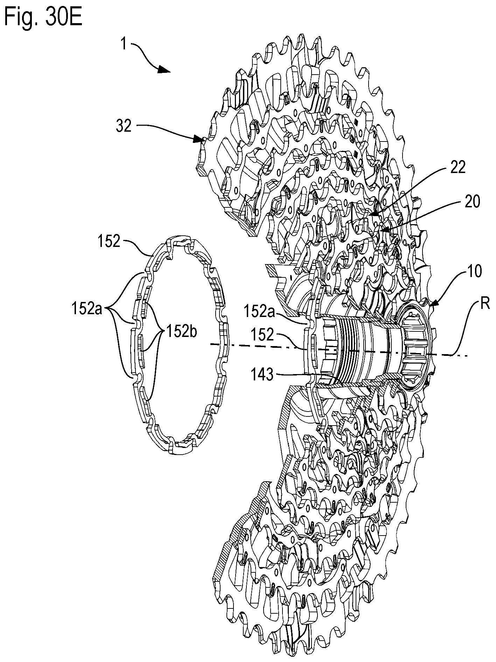

In Figur 30D ist eine vierte Option einer Kennzeichnung des Referenzritzels 20 dargestellt. Im Gegensatz zu den Figuren 30A bis 30C und 30E blickt der Betrachter von Figur 30D perspektivisch auf die Innenseite der Ritzelkassette 1.

Bei dieser vierten Ausführungsform ist ein optisch an der Ritzelkassette von radial außen wahrnehmbarer Ring 150 in dem Ritzeldom 15 angeordnet, wobei der Ring 150 Ausnehmungen 150a aufweisen kann, in welchen die Verbindungsstege 110 zwischen dem Referenzritzel 20 und dem nächstgrößeren Ritzel 22 formschlüssig eingreifen. Damit ist der Ring 150 relativ zur Ritzelachse R verdrehsicher an der Ritzelkassette 1 gehalten. Wie in den vorstehend beschriebenen Ausführungsformen ist auch der Ring 150 optisch, bevorzugt farblich, gegenüber der Ritzelkassette 1 hervorgehoben.

Der Ring 150 kann sich außerdem über Stützstreben 150b und einen inneren Stützring 150c an der Außenfläche der Locktube 143 abstützen.

Die fünfte Ausführungsform von Figur 30E zur Kennzeichnung des Referenzritzels 20 entspricht vom Grundprinzip im Wesentlichen der vierten Ausführungsform von Figur 30D, jedoch mit dem Unterschied, dass der Ring 152 der fünften Ausführungsform nicht für einen einstückig ausgebildeten Ritzeldom 15, sondern für gesondert voneinander ausgebildete und miteinander durch gesondert ausgebildete Verbindungsformationen, wie Verbindungsstifte, Verbindungsniete und dergleichen, verbundene Ritzel, insbesondere durch spanloses Umformen hergestelltes Ritzel, ausgebildet ist.

Der Ring 152 kann wiederum nach radial außen weisende Ausnehmungen 152a zur formschlüssigen Aufnahme axial verlaufenden Verbindungsformationen, wie Verbindungsstifte, Verbindungsniete und dergleichen, aufweisen. Darüber hinaus kann er Axialvorsprünge 152b aufweisen, welche an den radial inneren Rändern der einzelnen Ritzel, hier: des Referenzritzels 20 und des nächstgrößeren Ritzels 22 anliegen können, um den Ring 152 optimal in der Ritzelkassette zu positionieren. Der Ring 152 kann somit sowohl um die Ritzelachse R verdrehsicher als auch gegen radiale Verlagerung gesichert an der Ritzelkassette 1 aufgenommen sein.

Auch der Ring 152 ist bevorzugt durch farblich abgehobene Gestaltung sofort und ohne weiteres an der Ritzelkassette 1 erkennbar.

Der besseren Übersichtlichkeit wegen ist der Ring 152 in Figur 30E nicht nur in der Ritzelkassette 1 angeordnet, sondern zusätzlich noch einmal gesondert links neben der Ritzelkassette 1 abgebildet.

## Patentansprüche

1. Fahrrad-Ritzel (12 - 32) für eine Ritzelkassette (1), wobei das Ritzel (12 - 32) einen Ritzelgrundkörper (12z - 32z) aufweist, welcher sich um eine virtuelle Ritzelachse (R) erstreckt, um welche das Ritzel im bestimmungsgemäßen Betrieb an einem Fahrrad (71) drehbar ist,
wobei die Ritzelachse (R) eine axiale Richtung, zu ihr orthogonale radiale Richtungen und eine um sie umlaufende Umfangsrichtung definiert,
wobei das Ritzel eine Mehrzahl von in Umfangsrichtung mit Abstand voneinander angeordneten Ritzelzähnen für einen Eingriff mit einer Fahrrad-Rollenkette (50) aufweist,
wobei die Fahrrad-Rollenkette (50) längs ihrer Umlaufbahn in an sich bekannter Weise alternierend aufeinander folgende Innenlaschen- und Außenlaschen-Kettenglieder (54, 52) aufweist,
wobei das Ritzel (12 - 32) dazu ausgebildet ist, derart an einem Fahrrad (71) angeordnet zu werden, dass eine axial nach außen weisende äußere Stirnseite (12sa - 32sa) des Ritzels während einer durch das Ritzel (12 - 32) angetriebenen Vorwärtsfahrt des Fahrrads (71) bei axialer Draufsicht auf die äußere Stirnseite im Uhrzeigersinn dreht, und dass eine der äußeren Stirnseite entgegengesetzte, nach axial innen weisende innere Stirnseite (12si - 32si), bei axialer Draufsicht auf die innere Stirnseite im Gegenuhrzeigersinn dreht,
wobei die Ritzelzähne vom Ritzelgrundkörper (12z - 32z) nach radial außen abstehen,
wobei eine Mehrzahl von Ritzelzähnen jeweils eine axial nach außen weisende, zum Anlageeingriff mit einer Innenfläche einer ersten Kettenlasche ausgebildete äußere Zahnkontaktfläche und eine axial nach innen weisende, zum Anlageeingriff mit einer Innenfläche einer der ersten Kettenlasche axial gegenüberliegenden zweiten Kettenlasche ausgebildete innere Zahnkontaktfläche aufweist, wobei
i) das Ritzel (12 - 32) längs eines Abschnitts seines Umfangs im Bereich des Ritzelgrundkörpers (12z - 32z) und der Ritzelzähne einen Hochschaltbereich (34) mit einer axialen Hochschalt-Vertiefungsformation (36) in seiner äußeren Stirnseite aufweist,
wobei der Hochschaltbereich (34) dazu ausgebildet und angeordnet ist, an dem im Antriebsdrehsinn (D) um die Ritzelachse (R) rotierenden Ritzel einen Eingriffswechsel der Fahrrad-Rollenkette (50) vom Ritzel auf ein auf der Seite der äußeren Stirnseite gelegenes kleineres Ritzels (10 - 30) zu gestatten,
wobei der Hochschalt-Vertiefungsformation (36) wenigstens ein Abgabezahn (38) zugeordnet ist, welcher durch seine Gestalt, seinen Anordnungsort und seine Orientierung dazu ausgebildet ist, im Zusammenwirken mit der Hochschalt-Vertiefungsformation (36) während eines Hochschaltvorgangs der letzte Zahn (38) des Ritzels (12 - 32) zu sein, der zwischen aufeinander zu weisende Innenflächen eines Laschenpaares eines Kettengliedes (52) der Fahrrad-Rollenkette (50) eingreift,
oder/und
ii) das Ritzel (12 - 32) längs eines Abschnitts seines Umfangs im Bereich des Ritzelgrundkörpers (12z - 32z) und der Ritzelzähne einen Herunterschaltbereich (40) mit einer axialen Herunterschalt-Vertiefungsformation (42) in seiner äußeren Stirnseite (12sa - 32sa) aufweist,
wobei der Herunterschaltbereich (40) dazu ausgebildet und angeordnet ist, an dem im Antriebsdrehsinn (D) um die Ritzelachse (R) rotierenden Ritzel (12 - 32) einen Eingriffswechsel der Fahrrad-Rollenkette (50) von einem auf der Seite der äußeren Stirnseite gelegenen kleineren Ritzel (10 - 30) auf das Ritzel (12 - 32) zu gestatten,
wobei der Herunterschalt-Vertiefungsformation (42) wenigstens ein Fangzahn (44) zugeordnet ist, welcher durch seine Gestalt, seinen Anordnungsort und seine Orientierung dazu ausgebildet ist, im Zusammenwirken mit der Herunterschalt-Vertiefungsformation (42) während eines Herunterschaltvorgangs der erste Zahn (44) des Ritzels (12 - 32) zu sein, der zwischen aufeinander zu weisende Innenflächen eines Laschenpaares eines Kettengliedes (52) der Fahrrad-Rollenkette (50) eingreift,
wobei das Ritzel (12 - 32) eine Mehrzahl von Innenlaschen-Ritzelzähnen (12b - 18b, 22b - 32b, 20b', 20b", 39, 45) aufweist, welche jeweils aufgrund ihrer axialen Abmessung für einen Eingriff mit einem Innenlaschen-Kettenglied (54) der Fahrrad-Rollenkette (50) ausgebildet sind,
**dadurch gekennzeichnet, dass**
das Ritzel wenigstens einen Bezugszahn (B) aufweist, welcher unter den Innenlaschen-Ritzelzähnen (12b - 18b, 22b - 32b, 20b', 20b", 39, 45) der wenigstens eine Ritzelzahn mit der größten axialen Kettenführungsabmessung (Kb) ist,
wobei der Bezugszahn (B) eine außerhalb einer Vertiefungsformation (36, 42) gelegene äußere Zahnkontaktfläche (18ba, 20d, 22b'a, 24ba) als eine äußere Zahnkontakt-Bezugsfläche aufweist,
wobei die äußere Zahnkontakt-Bezugsfläche eine axiale Bezugsposition definiert,
wobei im Falle einer Ausbildung des wenigstens einen Abgabezahns (38) gemäß i) im Umfangserstreckungsbereich der Hochschalt-Vertiefungsformation (36) ein abgabeseitiger Stabilisierungszahn (39) angeordnet ist,
wobei der abgabeseitige Stabilisierungszahn (39) eine innere Zahnkontaktfläche (39i) aufweist, die einen größeren axialen Abstand von der axialen Bezugsposition hat als eine innere Zahnkontaktfläche (18bi, 20i, 22e, 24bi) des Bezugszahns (B)
oder/und
wobei im Falle einer Ausbildung des wenigstens einen Fangzahns (44) gemäß ii) im Umfangserstreckungsbereich der Herunterschalt-Vertiefungsformation (42) ein aufnahmeseitiger Stabilisierungszahn (45) angeordnet ist,
wobei der aufnahmeseitige Stabilisierungszahn (45) eine innere Zahnkontaktfläche (45i) aufweist, die einen größeren axialen Abstand von der axialen Bezugsposition hat als die innere Zahnkontaktfläche (18bi, 20i, 22e, 24bi) des Bezugszahns (B).

2. Fahrrad-Ritzel (12 - 32) für eine Ritzelkassette (1),
wobei das Ritzel (12 - 32) einen Ritzelgrundkörper (12z - 32z) aufweist, welcher sich um eine virtuelle Ritzelachse (R) erstreckt, um welche das Ritzel im bestimmungsgemäßen Betrieb an einem Fahrrad (71) drehbar ist,
wobei die Ritzelachse (R) eine axiale Richtung, zu ihr orthogonale radiale Richtungen und eine um sie umlaufende Umfangsrichtung definiert,
wobei das Ritzel eine Mehrzahl von in Umfangsrichtung mit Abstand voneinander angeordneten Ritzelzähnen für einen Eingriff mit einer Fahrrad-Rollenkette (50) aufweist,
wobei die Fahrrad-Rollenkette (50) längs ihrer Umlaufbahn in an sich bekannter Weise alternierend aufeinander folgende Innenlaschen- und Außenlaschen-Kettenglieder (54, 52) aufweist,
wobei das Ritzel (12 - 32) dazu ausgebildet ist, derart an einem Fahrrad (71) angeordnet zu werden, dass eine axial nach außen weisende äußere Stirnseite (12sa - 32sa) des Ritzels während einer durch das Ritzel (12 - 32) angetriebenen Vorwärtsfahrt des Fahrrads (71) bei axialer Draufsicht auf die äußere Stirnseite im Uhrzeigersinn dreht, und dass eine der äußeren Stirnseite entgegengesetzte, nach axial innen weisende innere Stirnseite (12si - 32si), bei axialer Draufsicht auf die innere Stirnseite im Gegenuhrzeigersinn dreht,
wobei die Ritzelzähne vom Ritzelgrundkörper (12z - 32z) nach radial außen abstehen,
wobei eine Mehrzahl von Ritzelzähnen jeweils eine axial nach außen weisende, zum Anlageeingriff mit einer Innenfläche einer ersten Kettenlasche ausgebildete äußere Zahnkontaktfläche und eine axial nach innen weisende, zum Anlageeingriff mit einer Innenfläche einer der ersten Kettenlasche axial gegenüberliegenden zweiten Kettenlasche ausgebildete innere Zahnkontaktfläche aufweist,
wobei
i) das Ritzel (12 - 32) längs eines Abschnitts seines Umfangs im Bereich des Ritzelgrundkörpers (12z - 32z) und der Ritzelzähne einen Hochschaltbereich (34) mit einer axialen Hochschalt-Vertiefungsformation (36) in seiner äußeren Stirnseite aufweist,
wobei der Hochschaltbereich (34) dazu ausgebildet und angeordnet ist, an dem im Antriebsdrehsinn (D) um die Ritzelachse (R) rotierenden Ritzel einen Eingriffswechsel der Fahrrad-Rollenkette (50) vom Ritzel auf ein auf der Seite der äußeren Stirnseite gelegenes kleineres Ritzels (10 - 30) zu gestatten,
wobei der Hochschalt-Vertiefungsformation (36) wenigstens ein Abgabezahn (38) zugeordnet ist, welcher durch seine Gestalt, seinen Anordnungsort und seine Orientierung dazu ausgebildet ist, im Zusammenwirken mit der Hochschalt-Vertiefungsformation (36) während eines Hochschaltvorgangs der letzte Zahn (38) des Ritzels (12 - 32) zu sein, der zwischen aufeinander zu weisende Innenflächen eines Laschenpaares eines Kettengliedes (52) der Fahrrad-Rollenkette (50) eingreift,
oder/und
ii) das Ritzel (12 - 32) längs eines Abschnitts seines Umfangs im Bereich des Ritzelgrundkörpers (12z - 32z) und der Ritzelzähne einen Herunterschaltbereich (40) mit einer axialen Herunterschalt-Vertiefungsformation (42) in seiner äußeren Stirnseite (12sa - 32sa) aufweist,
wobei der Herunterschaltbereich (40) dazu ausgebildet und angeordnet ist, an dem im Antriebsdrehsinn (D) um die Ritzelachse (R) rotierenden Ritzel (12 - 32) einen Eingriffswechsel der Fahrrad-Rollenkette (50) von einem auf der Seite der äußeren Stirnseite gelegenen kleineren Ritzel (10 - 30) auf das Ritzel (12 - 32) zu gestatten,
wobei der Herunterschalt-Vertiefungsformation (42) wenigstens ein Fangzahn (44) zugeordnet ist, welcher durch seine Gestalt, seinen Anordnungsort und seine Orientierung dazu ausgebildet ist, im Zusammenwirken mit der Herunterschalt-Vertiefungsformation (42) während eines Herunterschaltvorgangs der erste Zahn (44) des Ritzels (12 - 32) zu sein, der zwischen aufeinander zu weisende Innenflächen eines Laschenpaares eines Kettengliedes (52) der Fahrrad-Rollenkette (50) eingreift,
wobei das Ritzel (12 - 32) eine Mehrzahl von Innenlaschen-Ritzelzähnen (12b - 18b, 22b - 32b, 20b', 20b", 39, 45) aufweist, welche jeweils aufgrund ihrer axialen Abmessung für einen Eingriff mit einem Innenlaschen-Kettenglied (54) der Fahrrad-Rollenkette (50) ausgebildet sind,
**dadurch gekennzeichnet, dass**
das Ritzel wenigstens einen Bezugszahn (B; B*) aufweist, welcher unter den Innenlaschen-Ritzelzähnen (12b - 18b, 22b - 32b, 20b', 20b", 39, 45) der wenigstens eine Ritzelzahn mit der größten axialen Kettenführungsabmessung (Kb) ist,
wobei die äußere Zahnkontakt-Bezugsfläche (18ba, 20d, 22b'a, 24ba) des Bezugszahns (B; B*) eine axiale Bezugsposition definiert,
wobei im Falle einer Ausbildung des wenigstens einen Abgabezahns (38) gemäß i) im Umfangserstreckungsbereich der Hochschalt-Vertiefungsformation (36) ein abgabeseitiger Stabilisierungszahn (39) angeordnet ist,
wobei der axiale Abstand (RKb) der inneren Zahnkontaktfläche (39i) des im Umfangsbereich der Hochschalt-Vertiefungsformation (36) angeordneten abgabeseitigen Stabilisierungszahns (39) von der äußeren Zahnkontaktfläche (38a) des wenigstens einen Abgabezahns (38) nicht kleiner ist als die Kettenführungsabmessung (Kb) des Bezugszahns (B)
oder/und
wobei im Falle einer Ausbildung des wenigstens einen Fangzahns (44) gemäß ii) im Umfangserstreckungsbereich der Herunterschalt-Vertiefungsformation (42) ein aufnahmeseitiger Stabilisierungszahn (45) angeordnet ist,
wobei der axiale Abstand (RKb) der inneren Zahnkontaktfläche (45i) des im Umfangsbereich der Herunterschalt-Vertiefungsformation angeordneten aufnahmeseitigen Stabilisierungszahns (45) von der äußeren Zahnkontaktfläche (44a) des wenigstens einen Fangzahns (44) nicht kleiner ist als die Kettenführungsabmessung (Kb) des Bezugszahns (B).

3. Fahrrad-Ritzel (12 - 32) nach Anspruch 1 oder 2,
**dadurch gekennzeichnet, dass** der abgabeseitige Stabilisierungszahn (39) entgegen der Antriebsdrehrichtung (D) unmittelbar dem wenigstens einen Abgabezahn (38) benachbart ist oder/und dass der aufnahmeseitige Stabilisierungszahn (45) in Antriebsdrehrichtung (D) unmittelbar dem wenigstens einen Fangzahn (44) benachbart ist.

4. Fahrrad-Ritzel (12 - 32) nach einem der vorhergehenden Ansprüche,
**dadurch gekennzeichnet, dass** eine äußere Zahnkontaktfläche (39a) des abgabeseitigen Stabilisierungszahns (39) bezüglich der axialen Bezugsposition nach innen versetzt ist und einen größeren axialen Abstand von der axialen Bezugsposition hat als eine äußere Zahnkontaktfläche (38a) des wenigstens einen Abgabezahns (38) oder/und dass eine äußere Zahnkontaktfläche (45a) des aufnahmeseitigen Stabilisierungszahns (45) bezüglich der axialen Bezugsposition nach innen versetzt ist und einen größeren axialen Abstand von der axialen Bezugsposition hat als eine äußere Zahnkontaktfläche (44a) des wenigstens einen Fangzahns (44).

5. Fahrrad-Ritzel (12 - 32) nach einem der vorhergehenden Ansprüche,
**dadurch gekennzeichnet, dass** eine innere Zahnkontaktfläche (39i) des abgabeseitigen Stabilisierungszahns (39) einen größeren axialen Abstand von der axialen Bezugsposition hat als eine innere Zahnkontaktfläche (38i) des wenigstens einen Abgabezahns (38) oder/und dass eine innere Zahnkontaktfläche (45i) des aufnahmeseitigen Stabilisierungszahns (45) einen größeren axialen Abstand von der axialen Bezugsposition hat als eine innere Zahnkontaktfläche (44i) des wenigstens einen Fangzahns (44).

6. Fahrrad-Ritzel (12 - 32) nach einem der vorhergehenden Ansprüche,
**dadurch gekennzeichnet, dass** im Falle einer Ausbildung des wenigstens einen Abgabezahns (38) gemäß i) dem wenigstens einen Abgabezahn (38) in Antriebsdrehrichtung (D) unmittelbar benachbart ein abgabeseitiger Mobilisierungszahn (18b', 20b', 22b', 24b', 32b') angeordnet ist, wobei der axiale Abstand einer inneren Zahnkontaktfläche (18e, 44i, 32e, 24e) des abgabeseitigen Mobilisierungszahns (18b', 20b', 22b', 24b', 32b') von der axialen Bezugsposition kleiner oder gleich dem axialen Abstand der inneren Zahnkontaktfläche (18bi, 20i, 22e, 24bi) des Bezugszahns (B) von der axialen Bezugsposition ist und kleiner als der axiale Abstand der inneren Zahnkontaktfläche (39i) des abgabeseitigen Stabilisierungszahns (39) von der axialen Bezugsposition ist oder/und wobei im Falle einer Ausbildung des wenigstens einen Fangzahns (44) gemäß ii) wenigstens einen dem Fangzahn (44) entgegen der Antriebsdrehrichtung (D) unmittelbar benachbart ein aufnahmeseitiger Mobilisierungszahn (18b", 20b", 22b", 24b", 32b") angeordnet ist, wobei der axiale Abstand einer inneren Zahnkontaktfläche (18f, 38i, 22f, 24f) des aufnahmeseitigen Mobilisierungszahns (18b", 20b", 22b", 24b") von der axialen Bezugsposition kleiner oder gleich dem axialen Abstand der inneren Zahnkontaktfläche (18bi, 20i, 22e, 24bi) des Bezugszahns (B) von der axialen Bezugsposition ist und kleiner als der axiale Abstand der inneren Zahnkontaktfläche (45i) des aufnahmeseitigen Stabilisierungszahns (45) von der axialen Bezugsposition ist.

7. Fahrrad-Ritzel (12 - 32) nach Anspruch 6,
**dadurch gekennzeichnet, dass** der axiale Abstand der inneren Zahnkontaktfläche (18e, 44i, 32e, 24e) des abgabeseitigen Mobilisierungszahns (18b', 20b', 22b', 24b', 32b') von der axialen Bezugsposition kleiner ist als der axiale Abstand der inneren Zahnkontaktfläche (18bi, 20i, 22e, 24bi) des Bezugszahns (B) von der axialen Bezugsposition oder/und dass der axiale Abstand der inneren Zahnkontaktfläche (18f, 38i, 22f, 24f) des aufnahmeseitigen Mobilisierungszahns (18b", 20b", 22b", 24b") von der axialen Bezugsposition kleiner ist als der axiale Abstand der inneren Zahnkontaktfläche (18bi, 20i, 22e, 24bi) des Bezugszahns (B) von der axialen Bezugsposition.

8. Fahrrad-Ritzel (12 - 32) nach einem der vorhergehenden Ansprüche,
**dadurch gekennzeichnet, dass** die äußeren Zahnkontaktflächen (18aa, 18ba, 18b'a, 18b"a, 38a, 44a, 22aa, 22b'a, 22b"a, 24aa, 24ba, 24b'a, 24b"a) von einer Mehrzahl von außerhalb einer Vertiefungsformation gelegenen Ritzelzähnen (18a, 18b, 18b', 18b", 38, 44, 22a, 22b', 22b", 24a, 24b, 24b', 24b") an der axialen Bezugsposition gelegen sind.

9. Fahrrad-Ritzel (12 - 32) nach einem der vorhergehenden Ansprüche,
**dadurch gekennzeichnet, dass** der axiale Abstand der inneren Zahnkontaktfläche (39i) von der äußeren Zahnkontaktfläche (39a) des abgabeseitigen Stabilisierungszahns (39) größer ist als der axiale Abstand der inneren Zahnkontaktfläche (38i) von der äußeren Zahnkontaktfläche (38a) des wenigstens einen Abgabezahns (38) oder/und dass der axiale Abstand der inneren Zahnkontaktfläche (45i) von der äußeren Zahnkontaktfläche (45a) des aufnahmeseitigen Stabilisierungszahns (45) größer ist als der axiale Abstand der inneren Zahnkontaktfläche (44i) von der äußeren Zahnkontaktfläche (44a) des wenigstens einen Fangzahns (44).

10. Fahrrad-Ritzel (12 - 32) nach Anspruch 9,
**dadurch gekennzeichnet, dass** der axiale Abstand der inneren Zahnkontaktfläche (39i) von der äußeren Zahnkontaktfläche (39a) eines abgabeseitigen Stabilisierungszahns (39) zwischen dem 1,1-Fachen und dem 1,3-Fachen, vorzugsweise zwischen dem 1,12-Fachen und dem 1,2-Fachen, besonders bevorzugt zwischen dem 1,13-Fachen und dem 1,17-Fachen, die genannten Grenzwerte eingeschlossen, des axialen Abstands der inneren Zahnkontaktfläche (38i) von der äußeren Zahnkontaktfläche (38a) des wenigstens einen Abgabezahns (38) beträgt oder/und dass der axiale Abstand der inneren Zahnkontaktfläche (45i) von der äußeren Zahnkontaktfläche (45a) eines aufnahmeseitigen Stabilisierungszahns (45) zwischen dem 1,2-Fachen und dem 1,6-Fachen, vorzugsweise zwischen dem 1,2-Fachen und dem 1,5-Fachen, besonders bevorzugt zwischen dem 1,21-Fachen und dem 1,45-Fachen, die genannten Grenzwerte eingeschlossen, des axialen Abstands der inneren Zahnkontaktfläche (44i) von der äußeren Zahnkontaktfläche (44a) des wenigstens einen Fangzahns (44) beträgt.

11. Fahrrad-Ritzel (12 - 32) nach einem der vorhergehenden Ansprüche, unter Einbeziehung des Anspruchs 6 oder 7,
**dadurch gekennzeichnet, dass** der axiale Abstand der inneren Zahnkontaktfläche (39i) von der äußeren Zahnkontaktfläche (39a) des abgabeseitigen Stabilisierungszahns (39) um zwischen dem 0,8-Fachen und dem 1,2-Fachen, vorzugsweise um zwischen dem 0,85-Fachen und dem 1,15-Fachen, besonders bevorzugt um zwischen dem 0,88-Fachen und dem 1,13-Fachen, die genannten Grenzwerte eingeschlossen, größer ist als der axiale Abstand der inneren Zahnkontaktfläche (18e, 44i, 32e, 24e) von der äußeren Zahnkontaktfläche (18b'a, 20b'a, 22b'a, 24b'a) des abgabeseitigen Mobilisierungszahns (18b', 20b', 22b', 24b', 32b') oder/und dass der axiale Abstand der inneren Zahnkontaktfläche (45i) von der äußeren Zahnkontaktfläche (45a) des aufnahmeseitigen Stabilisierungszahns (45) um zwischen dem 1,0-Fachen und dem 1,4-Fachen, vorzugsweise um zwischen dem 1,0-Fachen und dem 1,37-Fachen, besonders bevorzugt um zwischen dem 1,0-Fachen und dem 1,35-Fachen, die genannten Grenzwerte eingeschlossen, größer ist als der axiale Abstand der inneren Zahnkontaktfläche (18f, 38i, 22f, 24f) von der äußeren Zahnkontaktfläche (18b"a, 20b"a, 22b"a, 24b"a) des aufnahmeseitigen Mobilisierungszahns (18b", 20b", 22b", 24b").

12. Fahrrad-Ritzel (12 - 32) nach einem der vorhergehenden Ansprüche,
**dadurch gekennzeichnet, dass** der axiale Abstand der inneren Zahnkontaktfläche (38i) von der äußeren Zahnkontaktfläche (38a) des wenigstens einen Abgabezahns (38) größer ist als der axiale Abstand der inneren Zahnkontaktfläche (44i) von der äußeren Zahnkontaktfläche (44a) des Fangzahns (44).

13. Fahrrad-Ritzel (12 - 32) nach Anspruch 12,
**dadurch gekennzeichnet, dass** der axiale Abstand der inneren Zahnkontaktfläche (38i) von der äußeren Zahnkontaktfläche (38a) des Abgabezahns (38) das 1,02-Fache bis das 1,15-Fache, vorzugsweise das 1,03-Fache bis das 1,12-Fache, besonders bevorzugt das 1,04-Fache bis das 1,11-Fache, die genannten Grenzwerte eingeschlossen, des axialen Abstands der inneren Zahnkontaktfläche (44i) von der äußeren Zahnkontaktfläche (44a) des wenigstens einen Fangzahns (44) beträgt.

14. Fahrrad-Ritzel (12 - 32) nach einem der vorhergehenden Ansprüche,
**dadurch gekennzeichnet, dass** der axiale Abstand der äußeren Zahnkontaktfläche (39a) des abgabeseitigen Stabilisierungszahns (39) von der axialen Bezugsposition nicht kleiner, vorzugsweise größer, ist als der axiale Abstand der äußeren Zahnkontaktfläche (45a) des aufnahmeseitigen Stabilisierungszahns (45) von der axialen Bezugsposition.

15. Fahrrad-Ritzel (12 - 32) nach einem der vorhergehenden Ansprüche,
**dadurch gekennzeichnet, dass** der axiale Abstand der inneren Zahnkontaktfläche (39i) des abgabeseitigen Stabilisierungszahns (39) von der axialen Bezugsposition sich vom axialen Abstand der inneren Zahnkontaktfläche (45i) des aufnahmeseitigen Stabilisierungszahns (45) von der axialen Bezugsposition um nicht mehr als 10 %, vorzugsweise um nicht mehr als 5 %, jeweils bezogen auf den größeren der beiden Abstände, besonders bevorzugt nicht unterscheidet.

16. Fahrrad-Ritzel (12 - 32) nach einem der vorhergehenden Ansprüche,
**dadurch gekennzeichnet, dass** das Ritzel (12 - 18, 22 - 32) eine gerade Anzahl an Ritzelzähnen aufweist, wobei das Ritzel wenigstens einen Ritzelzahn (18a, 22a, 24a) aufweist, dessen axiale Abmessung zwischen seiner inneren und seiner äußeren Zahnkontaktfläche (18aa, 18ai, 22aa, 22ai, 24aa, 24ai) größer ist als die lichte Weite (LWi) von Innenlaschen-Kettengliedern (54) der Fahrrad-Rollenkette (50).

17. Antriebsanordnung (82), umfassend ein Fahrrad-Ritzel (12 - 32) nach einem der vorhergehenden Ansprüche und eine Fahrrad-Rollenkette (50), wobei die Fahrrad-Rollenkette (50) längs ihrer Umlaufbahn alternierend Innenlaschen-Kettenglieder (54) mit einer geringeren lichten Weite (LWi) zwischen ihren parallelen Innenlaschen und Außenlaschen-Kettenglieder (52) mit einer größeren lichten Weite (LWa) zwischen ihren parallelen Außenlaschen aufweist.

18. Antriebsanordnung (82) nach Anspruch 17,
**dadurch gekennzeichnet, dass**
i. das Fahrrad-Ritzel (12 - 32) den abgabeseitigen Stabilisierungszahn (39) aufweist, wobei der axiale Abstand der inneren Zahnkontaktfläche (39i) des abgabeseitigen Stabilisierungszahns (39) von der äußeren Zahnkontaktfläche (38a) des wenigstens einen Abgabezahns (38) nicht kleiner ist, vorzugsweise größer ist, als die lichte Weite (LWi) eines Innenlaschen-Kettenglieds der mit dem Ritzel kooperierenden Fahrrad-Rollenkette (50),
oder/und dass
ii. das Fahrrad-Ritzel (12 - 32) den aufnahmeseitigen Stabilisierungszahn (45) aufweist, wobei der axiale Abstand der inneren Zahnkontaktfläche (45i) des aufnahmeseitigen Stabilisierungszahns (45) von der äußeren Zahnkontaktfläche (44a) des wenigstens einen Fangzahns (44) nicht kleiner ist, vorzugsweise größer ist, als die lichte Weite (LWi) eines Innenlaschen-Kettenglieds der mit dem Ritzel kooperierenden Fahrrad-Rollenkette (50).

## Claims

1. Bicycle pinion (12 - 32) for a pinion cassette (1),
wherein the pinion (12 - 32) has a pinion main body (12z - 32z) which extends around a virtual pinion axis (R) about which the pinion is rotatable during intended operation on a bicycle (71),
wherein the pinion axis (R) defines an axial direction, radial directions orthogonal with respect thereto, and a circumferential direction encircling said axial direction,
wherein the pinion has a multiplicity of pinion teeth, which are arranged spaced apart from one another in the circumferential direction, for engaging with a bicycle roller chain (50),
wherein, in a manner known per se, the bicycle roller chain (50) has inner link plate and outer link plate chain links (54, 52) which follow one another in alternating fashion along the circulating path of said bicycle roller chain,
wherein the pinion (12 - 32) is designed to be arranged on a bicycle (71) such that an axially outwardly pointing outer face side (12sa - 32sa) of the pinion rotates clockwise as seen in an axial plan view of the outer face side during forwards travel, driven by the pinion (12 - 32), of the bicycle (71), and such that an axially inwardly pointing inner face side (12si - 32si), which is situated opposite the outer face side, rotates anticlockwise as seen in an axial plan view of the inner face side,
wherein the pinion teeth protrude radially outwardly from the pinion main body (12z - 32z),
wherein a multiplicity of pinion teeth.has in each case one axially outwardly pointing outer tooth contact surface, which is designed for abutting engagement with an inner surface of a first chain link plate, and an axially inwardly pointing inner tooth contact surface, which is designed for abutting engagement with an inner surface of a second chain link plate which is situated axially opposite the first chain link plate, wherein
i) the pinion (12 - 32) has, along a section of its circumference in the region of the pinion main body (12z - 32z) and of the pinion teeth, an upshift region (34) with an axial upshift depression formation (36) in its outer face side,
wherein the upshift region (34) is designed and arranged to allow, on the pinion rotating in the drive direction of rotation (D) about the pinion axis (R), a changeover of engagement of the bicycle roller chain (50) from the pinion to a smaller pinion (10 - 30) situated on the side of the outer face side,
wherein the upshift depression formation (36) is assigned at least one release tooth (38) which, by way of its design, the location of its arrangement and its orientation, is designed to, in interaction with the upshift depression formation (36) during an upshift operation, be the final tooth (38) of the pinion (12 - 32) that engages between inner surfaces, which point towards one another, of a link plate pair of a chain link (52) of the bicycle roller chain (50),
and/or
ii) the pinion (12 - 32) has, along a section of its circumference in the region of the pinion main body (12z - 32z) and of the pinion teeth, a downshift region (40) with an axial downshift depression formation (42) in its outer face side (12sa - 32sa),
wherein the downshift region (40) is designed and arranged to allow, on the pinion (12 - 32) rotating in the drive direction of rotation (D) about the pinion axis (R), a changeover of engagement of the bicycle roller chain (50) from a smaller pinion (10 - 30) situated on the side of the outer face side to the pinion (12 - 32),
wherein the downshift depression formation (42) is assigned at least one catching tooth (44) which, by way of its design, the location of its arrangement and its orientation, is designed to, in interaction with the downshift depression formation (42) during a downshift operation, be the first tooth (44) of the pinion (12 - 32) that engages between inner surfaces, which point towards one another, of a link plate pair of a chain link (52) of the bicycle roller chain (50),
wherein the pinion (12 - 32) has a multiplicity of inner link plate pinion teeth (12b - 18b, 22b - 32b, 20b', 20b", 39, 45) that are each designed, owing to their axial dimensions, for engagement with an inner link plate chain link (54) of the bicycle roller chain (50),
**characterized in that**
the pinion has at least one reference tooth (B) which, among the inner link plate pinion teeth (12b - 18b, 22b - 32b, 20b', 20b", 39, 45), is the at least one pinion tooth with the largest axial chain-guiding dimension (Kb),
wherein the reference tooth (B) has an outer tooth contact surface (18ba, 20d, 22b'a, 24ba), situated outside a depression formation (36, 42), as an outer tooth contact reference surface,
wherein the outer tooth contact reference surface defines an axial reference position,
wherein, in the case of the at least one release tooth (38) being formed as per i), a release-side stabilizing tooth (39) is arranged in the circumferential region of extent of the upshift depression formation (36),
wherein the release-side stabilizing tooth (39) has an inner tooth contact surface (39i) which has a greater axial spacing to the axial reference position than an inner tooth contact surface (18bi, 20i, 22e, 24bi) of the reference tooth (B)
and/or
wherein, in the case of the at least one catching tooth (44) being formed as per ii), a receipt-side stabilizing tooth (45) is arranged in the circumferential region of extent of the downshift depression formation (42),
wherein the receipt-side stabilizing tooth (45) has an inner tooth contact surface (45i) which has a greater axial spacing to the axial reference position than the inner tooth contact surface (18bi, 20i, 22e, 24bi) of the reference tooth (B).

2. Bicycle pinion (12 - 32) for a pinion cassette (1), wherein the pinion (12 - 32) has a pinion main body (12z - 32z) which extends around a virtual pinion axis (R) about which the pinion is rotatable during intended operation on a bicycle (71),
wherein the pinion axis (R) defines an axial direction, radial directions orthogonal with respect thereto, and a circumferential direction encircling said axial direction,
wherein the pinion has a multiplicity of pinion teeth, which are arranged spaced apart from one another in the circumferential direction, for engaging with a bicycle roller chain (50),
wherein, in a manner known per se, the bicycle roller chain (50) has inner link plate and outer link plate chain links (54, 52) which follow one another in alternating fashion along the circulating path of said bicycle roller chain,
wherein the pinion (12 - 32) is designed to be arranged on a bicycle (71) such that an axially outwardly pointing outer face side (12sa - 32sa) of the pinion rotates clockwise as seen in an axial plan view of the outer face side during forwards travel, driven by the pinion (12 - 32), of the bicycle (71), and such that an axially inwardly pointing inner face side (12si - 32si), which is situated opposite the outer face side, rotates anticlockwise as seen in an axial plan view of the inner face side,
wherein the pinion teeth protrude radially outwardly from the pinion main body (12z - 32z),
wherein a multiplicity of pinion teeth has in each case one axially outwardly pointing outer tooth contact surface, which is designed for abutting engagement with an inner surface of a first chain link plate, and an axially inwardly pointing inner tooth contact surface, which is designed for abutting engagement with an inner surface of a second chain link plate which is situated axially opposite the first chain link plate,
wherein
i) the pinion (12 - 32) has, along a section of its circumference in the region of the pinion main body (12z - 32z) and of the pinion teeth, an upshift region (34) with an axial upshift depression formation (36) in its outer face side,
wherein the upshift region (34) is designed and arranged to allow, on the pinion rotating in the drive direction of rotation (D) about the pinion axis (R), a changeover of engagement of the bicycle roller chain (50) from the pinion to a smaller pinion (10 - 30) situated on the side of the outer face side,
wherein the upshift depression formation (36) is assigned at least one release tooth (38) which, by way of its design, the location of its arrangement and its orientation, is designed to, in interaction with the upshift depression formation (36) during an upshift operation, be the final tooth (38) of the pinion (12 - 32) that engages between inner surfaces, which point towards one another, of a link plate pair of a chain link (52) of the bicycle roller chain (50),
and/or
ii) the pinion (12 - 32) has, along a section of its circumference in the region of the pinion main body (12z - 32z) and of the pinion teeth, a downshift region (40) with an axial downshift depression formation (42) in its outer face side (12sa - 32sa),
wherein the downshift region (40) is designed and arranged to allow, on the pinion (12 - 32) rotating in the drive direction of rotation (D) about the pinion axis (R), a changeover of engagement of the bicycle roller chain (50) from a smaller pinion (10 - 30) situated on the side of the outer face side to the pinion (12 - 32),
wherein the downshift depression formation (42) is assigned at least one catching tooth (44) which, by way of its design, the location of its arrangement and its orientation, is designed to, in interaction with the downshift depression formation (42) during a downshift operation, be the first tooth (44) of the pinion (12 - 32) that engages between inner surfaces, which point towards one another, of a link plate pair of a chain link (52) of the bicycle roller chain (50),
wherein the pinion (12 - 32) has a multiplicity of inner link plate pinion teeth (12b - 18b, 22b - 32b, 20b', 20b", 39, 45) that are each designed, owing to their axial dimensions, for engagement with an inner link plate chain link (54) of the bicycle roller chain (50),
**characterized in that**
the pinion has at least one reference tooth (B; B*) which, among the inner link plate pinion teeth (12b - 18b, 22b - 32b, 20b', 20b", 39, 45), is the at least one pinion tooth with the largest axial chain-guiding dimension (Kb),
wherein the outer tooth contact reference surface (18ba, 20d, 22b'a, 24ba) of the reference tooth (B; B*) defines an axial reference position,
wherein, in the case of the at least one release tooth (38) being formed as per i), a release-side stabilizing tooth (39) is arranged in the circumferential region of extent of the upshift depression formation (36),
wherein the axial spacing (RKb) of the inner tooth contact surface (39i) of the release-side stabilizing tooth (39) arranged in the circumferential region of the upshift depression formation (36) to the outer tooth contact surface (38a) of the at least one release tooth (38) is not less than the chain-guiding dimension (Kb) of the reference tooth (B)
and/or
wherein, in the case of the at least one catching tooth (44) being formed as per ii), a receipt-side stabilizing tooth (45) is arranged in the circumferential region of extent of the downshift depression formation (42),
wherein the axial spacing (RKb) of the inner tooth contact surface (45i) of the receipt-side stabilizing tooth (45) arranged in the circumferential region of the downshift depression formation to the outer tooth contact surface (44a) of the at least one catching tooth (44) is not less than the chain-guiding dimension (Kb) of the reference tooth (B).

3. Bicycle pinion (12 - 32) according to Claim 1 or 2, **characterized in that** the release-side stabilizing tooth (39) is directly adjacent to the at least one release tooth (38) counter to the drive direction of rotation (D) and/or **in that** the receipt-side stabilizing tooth (45) is directly adjacent to the at least one catching tooth (44) in the drive direction of rotation (D).

4. Bicycle pinion (12 - 32) according to any one of the preceding claims,
**characterized in that** an outer tooth contact surface (39a) of the release-side stabilizing tooth (39) is offset inwardly with respect to the axial reference position and has a greater axial spacing to the axial reference position than an outer tooth contact surface (38a) of the at least one release tooth (38), and/or **in that** an outer tooth contact surface (45a) of the receipt-side stabilizing tooth (45) is offset inwardly with respect to the axial reference position and has a greater axial spacing to the axial reference position than an outer tooth contact surface (44a) of the at least one catching tooth (44).

5. Bicycle pinion (12 - 32) according to any one of the preceding claims,
**characterized in that** an inner tooth contact surface (39i) of the release-side stabilizing tooth (39) has a greater axial spacing to the axial reference position than an inner tooth contact surface (38i) of the at least one release tooth (38), and/or **in that** an inner tooth contact surface (45i) of the receipt-side stabilizing tooth (45) has a greater axial spacing to the axial reference position than an inner tooth contact surface (44i) of the at least one catching tooth (44).

6. Bicycle pinion (12 - 32) according to any one of the preceding claims,
**characterized in that**, in the case of the at least one release tooth (38) being formed as per i), a release-side mobilizing tooth (18b', 20b', 22b', 24b', 32b') is arranged directly adjacent to the at least one release tooth (38) in the drive direction of rotation (D), wherein the axial spacing of an inner tooth contact surface (18e, 44i, 32e, 24e) of the release-side mobilizing tooth (18b', 20b', 22b', 24b', 32b') to the axial reference position is less than or equal to the axial spacing of the inner tooth contact surface (18bi, 20i, 22e, 24bi) of the reference tooth (B) to the axial reference position and less than the axial spacing of the inner tooth contact surface (39i) of the release-side stabilizing tooth (39) to the axial reference position, and/or wherein, in the case of the at least one catching tooth (44) being formed as per ii), a receipt-side mobilizing tooth (18b", 20b", 22b", 24b", 32b") is arranged directly adjacent to the at least one catching tooth (44) counter to the drive direction of rotation (D), wherein the axial spacing of an inner tooth contact surface (18f, 38i, 22f, 24f) of the receipt-side mobilizing tooth (18b", 20b", 22b", 24b") to the axial reference position is less than or equal to the axial spacing of the inner tooth contact surface (18bi, 20i, 22e, 24bi) of the reference tooth (B) to the axial reference position and less than the axial spacing of the inner tooth contact surface (45i) of the receipt-side stabilizing tooth (45) to the axial reference position.

7. Bicycle pinion (12 - 32) according to Claim 6,
**characterized in that** the axial spacing of the inner tooth contact surface (18e, 44i, 32e, 24e) of the release-side mobilizing tooth (18b', 20b', 22b', 24b', 32b') to the axial reference position is less than the axial spacing of the inner tooth contact surface (18bi, 20i, 22e, 24bi) of the reference tooth (B) to the axial reference position, and/or **in that** the axial spacing of the inner tooth contact surface (18f, 38i, 22f, 24f) of the receipt-side mobilizing tooth (18b", 20b", 22b", 24b") to the axial reference position is less than the axial spacing of the inner tooth contact surface (18bi, 20i, 22e, 24bi) of the reference tooth (B) to the axial reference position.

8. Bicycle pinion (12 - 32) according to any one of the preceding claims,
**characterized in that** the outer tooth contact surfaces (18aa, 18ba, 18b'a, 18b"a, 38a, 44a, 22aa, 22b'a, 22b"a, 24aa, 24ba, 24b'a, 24b"a) of a multiplicity of pinion teeth (18a, 18b, 18b', 18b", 38, 44, 22a, 22b', 22b", 24a, 24b, 24b', 24b") situated outside a depression formation are situated at the axial reference position.

9. Bicycle pinion (12 - 32) according to any one of the preceding claims,
**characterized in that** the axial spacing of the inner tooth contact surface (39i) to the outer tooth contact surface (39a) of the release-side stabilizing tooth (39) is greater than the axial spacing of the inner tooth contact surface (38i) to the outer tooth contact surface (38a) of the at least one release tooth (38), and/or **in that** the axial spacing of the inner tooth contact surface (45i) to the outer tooth contact surface (45a) of the receipt-side stabilizing tooth (45) is greater than the axial spacing of the inner tooth contact surface (44i) to the outer tooth contact surface (44a) of the at least one catching tooth (44).

10. Bicycle pinion (12 - 32) according to Claim 9,
**characterized in that** the axial spacing of the inner tooth contact surface (39i) to the outer tooth contact surface (39a) of a release-side stabilizing tooth (39) is between 1.1 times and 1.3 times, preferably between 1.12 times and 1.2 times, particularly preferably between 1.13 times and 1.17 times, inclusive of the stated boundary values, the axial spacing of the inner tooth contact surface (38i) to the outer tooth contact surface (38a) of the at least one release tooth (38), and/or **in that** the axial spacing of the inner tooth contact surface (45i) to the outer tooth contact surface (45a) of a receipt-side stabilizing tooth (45) is between 1.2 times and 1.6 times, preferably between 1.2 times and 1.5 times, particularly preferably between 1.21 times and 1.45 times, inclusive of the stated boundary values, the axial spacing of the inner tooth contact surface (44i) to the outer tooth contact surface (44a) of the at least one catching tooth (44).

11. Bicycle pinion (12 - 32) according to any one of the preceding claims, incorporating Claim 6 or 7,
**characterized in that** the axial spacing of the inner tooth contact surface (39i) to the outer tooth contact surface (39a) of the release-side stabilizing tooth (39) is greater, by between 0.8 times and 1.2 times, preferably by between 0.85 times and 1.15 times, particularly preferably by between 0.88 times and 1.13 times, inclusive of the stated boundary values, than the axial spacing of the inner tooth contact surface (18e, 44i, 32e, 24e) to the outer tooth contact surface (18b'a, 20b'a, 22b'a, 24b'a) of the release-side mobilizing tooth (18b', 20b', 22b', 24b', 32b'), and/or **in that** the axial spacing of the inner tooth contact surface (45i) to the outer tooth contact surface (45a) of the receipt-side stabilizing tooth (45) is greater, by between 1.0 times and 1.4 times, preferably by between 1.0 times and 1.37 times, particularly preferably by between 1.0 times and 1.35 times, inclusive of the stated boundary values, than the axial spacing of the inner tooth contact surface (18f, 38i, 22f, 24f) to the outer tooth contact surface (18b"a, 20b"a, 22b"a, 24b"a) of the receipt-side mobilizing tooth (18b", 20b", 22b", 24b").

12. Bicycle pinion (12 - 32) according to any one of the preceding claims,
**characterized in that** the axial spacing of the inner tooth contact surface (38i) to the outer tooth contact surface (38a) of the at least one release tooth (38) is greater than the axial spacing of the inner tooth contact surface (44i) to the outer tooth contact surface (44a) of the catching tooth (44).

13. Bicycle pinion (12 - 32) according to Claim 12,
**characterized in that** the axial spacing of the inner tooth contact surface (38i) to the outer tooth contact surface (38a) of the release tooth (38) is 1.02 times to 1.15 times, preferably 1.03 times to 1.12 times, particularly preferably 1.04 times to 1.11 times, inclusive of the stated boundary values, the axial spacing of the inner tooth contact surface (44i) to the outer tooth contact surface (44a) of the at least one catching tooth (44).

14. Bicycle pinion (12 - 32) according to any one of the preceding claims,
**characterized in that** the axial spacing of the outer tooth contact surface (39a) of the release-side stabilizing tooth (39) to the axial reference position is not less than, preferably is greater than, the axial spacing of the outer tooth contact surface (45a) of the receipt-side stabilizing tooth (45) to the axial reference position.

15. Bicycle pinion (12 - 32) according to any one of the preceding claims,
**characterized in that** the axial spacing of the inner tooth contact surface (39i) of the release-side stabilizing tooth (39) to the axial reference position differs by no more than 10%, preferably by no more than 5%, in each case based on the greater of the two spacings, particularly preferably does not differ, from the axial spacing of the inner tooth contact surface (45i) of the receipt-side stabilizing tooth (45) to the axial reference position.

16. Bicycle pinion (12 - 32) according to any one of the preceding claims,
**characterized in that** the pinion (12 - 18, 22 - 32) has an even number of pinion teeth, wherein the pinion has at least one pinion tooth (18a, 22a, 24a) whose axial dimension between its inner and its outer tooth contact surface (18aa, 18ai, 22aa, 22ai, 24aa, 24ai) is larger than the clear width (LWi) of inner link plate chain links (54) of the bicycle roller chain (50).

17. Drive arrangement (82) comprising a bicycle pinion (12 - 32) according to any one of the preceding claims and a bicycle roller chain (50), wherein the bicycle roller chain (50) has, in alternation along its circulating path, inner link plate chain links (54) with a relatively small clear width (LWi) between their parallel inner link plates and outer link plate chain links (52) with a relatively large clear width (LWa) between their parallel outer link plates.

18. Drive arrangement (82) according to Claim 17,
**characterized in that**
i. the bicycle pinion (12 - 32) has the release-side stabilizing tooth (39), wherein the axial spacing of the inner tooth contact surface (39i) of the release-side stabilizing tooth (39) to the outer tooth contact surface (38a) of the at least one release tooth (38) is not less than, preferably is greater than, the clear width (LWi) of an inner link plate chain link of the bicycle roller chain (50) that cooperates with the pinion,
or/and **in that**
ii. the bicycle pinion (12 - 32) has the receipt-side stabilizing tooth (45), wherein the axial spacing of the inner tooth contact surface (45i) of the receipt-side stabilizing tooth (45) to the outer tooth contact surface (44a) of the at least one catching tooth (44) is not less than, preferably is greater than, the clear width (LWi) of an inner link plate chain link of the bicycle roller chain (50) that cooperates with the pinion.

## Revendications

1. Pignon (12 à 32) de bicyclette pour une cassette de pignons (1), le pignon (12 à 32) présentant un corps de base (12z à 32z) de pignon qui s'étend autour d'un axe de pignon virtuel (R) autour duquel le pignon est apte à tourner sur une bicyclette (71) dans le cadre d'un fonctionnement normal,
l'axe de pignon (R) définissant une direction axiale, des directions radiales orthogonales à lui et une direction circonférentielle autour de lui,
le pignon présentant une pluralité de dents de pignon espacées les unes des autres dans la direction circonférentielle pour un engrènement avec une chaîne à rouleaux (50) de bicyclette,
la chaîne à rouleaux (50) de bicyclette présentant, le long de son développement, des maillons de chaîne à plaquettes intérieures et des maillons de chaîne à plaquettes extérieures (54, 52) qui se succèdent de manière alternée, de manière connue en soi,
le pignon (12 à 32) étant conçu pour être monté sur une bicyclette (71) de telle sorte qu'une face frontale extérieure (12sa à 32sa) du pignon, orientée axialement vers l'extérieur, tourne dans le sens des aiguilles d'une montre lorsque la bicyclette (71) est propulsée vers l'avant par le pignon (12 à 32), en vue axiale de la face frontale extérieure, et qu'une face frontale intérieure (12si à 32si), opposée à la face frontale extérieure et orientée axialement vers l'intérieur tourne dans le sens inverse des aiguilles d'une montre en vue axiale de la face frontale intérieure,
les dents du pignon faisant saillie radialement vers l'extérieur du corps de base (12z à 32z) du pignon,
une pluralité de dents de pignon présentant chacune une surface extérieure de contact de dent, orientée axialement vers l'extérieur et conçue pour venir en engrènement avec une surface intérieure d'une première plaquette de chaîne, et une surface intérieure de contact de dent, orientée axialement vers l'intérieur et conçue pour venir en engrènement avec une surface intérieure d'une deuxième plaquette de chaîne axialement opposée à la première plaquette de chaîne,
i) le pignon (12 à 32) présente, le long d'une partie de sa circonférence dans la zone du corps de base (12z à 32z) du pignon et des dents du pignon, une zone (34) de passage d'une vitesse supérieure avec une formation axiale en renfoncement (36) de passage d'une vitesse supérieure dans sa face frontale extérieure,
la zone (34) de passage d'une vitesse supérieure étant conçue et agencée de manière à permettre un changement d'engrènement de la chaîne à rouleaux (50) de bicyclette du pignon vers un pignon plus petit (10 à 30) situé du côté de la face frontale extérieure, lorsque le pignon tourne dans le sens de rotation d'entraînement (D) autour de l'axe de pignon (R),
au moins une dent de libération (38) étant associée à la formation axiale en renfoncement (36) de passage d'une vitesse supérieure, laquelle est conçue, par sa forme, son emplacement et son orientation, pour être la dernière dent (38) du pignon (12 à 32) en interaction avec la formation axiale en renfoncement (36) de passage d'une vitesse supérieure pendant une opération de passage d'une vitesse supérieure, qui vient en engrènement entre les surfaces intérieures tournées l'une vers l'autre d'une paire de plaquettes d'un maillon de chaîne (52) de la chaîne à rouleaux (50) de bicyclette,
ou/et
ii) le pignon (12 à 32) présente, le long d'une partie de sa circonférence dans la zone du corps de base (12z à 32z) du pignon et des dents du pignon, une zone (40) de passage d'une vitesse inférieure avec une formation axiale en renfoncement (42) de passage d'une vitesse inférieure dans sa face frontale extérieure (12sa à 32sa),
la zone (40) de passage d'une vitesse inférieure étant conçue et agencée de manière à permettre un changement d'engrènement de la chaîne à rouleaux (50) de bicyclette autour du pignon (12 à 32) tournant autour de l'axe de pignon (R) dans le sens de rotation d'entraînement (D), du petit pignon (10 à 30) situé du côté de la face frontale extérieure au pignon (12 à 32),
la formation axiale en renfoncement (42) de passage d'une vitesse inférieure étant associée à au moins une dent d'engrènement (44), laquelle est conçue par sa forme, son emplacement et son orientation pour être, en interaction avec la formation en renfoncement (42) de passage d'une vitesse inférieure, pendant une opération de passage d'une vitesse inférieure, la première dent (44) du pignon (12 à 32) qui vient en engrènement entre les surfaces intérieures tournées l'une vers l'autre d'une paire de plaquettes d'un maillon de chaîne (52) de la chaîne à rouleaux (50) de la bicyclette,
le pignon (12 à 32) présentant une pluralité de dents de pignon (12b à 18b, 22b à 32b, 20b', 20b", 39, 45) pour plaquettes intérieures qui, en raison de leur dimension axiale, sont chacune conçues pour un engrènement avec un maillon de chaîne (54) à plaquettes intérieures de la chaîne à rouleaux (50) de bicyclette,
**caractérisé en ce que**
le pignon présente au moins une dent de référence (B), qui est, parmi les dents de pignon (12b à 18b, 22b à 32b, 20b', 20b", 39, 45) pour plaquettes intérieures, ladite au moins une dent de pignon qui présente la plus grande dimension axiale de guidage de chaîne (Kb),
la dent de référence (B) présentant une surface de contact de dent extérieure (18ba, 20d, 22b'a, 24ba) située à l'extérieur d'une formation en renfoncement (36, 42) en tant que surface de contact de dent extérieure de référence,
la surface de contact de dent extérieure de référence définissant une position axiale de référence,
dans le cas où ladite au moins une dent de libération (38) est conçue selon i), une dent de stabilisation (39) côté libération est agencée dans la zone d'extension périphérique de la formation en renfoncement (36) de passage d'une vitesse supérieure,
la dent de stabilisation (39) côté libération présentant une surface intérieure (39i) de contact de dent qui est à une distance axiale plus grande de la position axiale de référence qu'une surface intérieure (18bi, 20i, 22e, 24bi) de contact de dent de la dent de référence (B)
ou/et
dans le cas où ladite au moins une dent d'engrènement (44) est conçue selon ii), une dent de stabilisation (45) côté réception est agencée dans la zone d'extension périphérique de la formation en renfoncement (42) de passage d'une vitesse inférieure,
la dent de stabilisation (45) côté réception présentant une surface intérieure (45i) de contact de dent, qui est plus éloignée de la position axiale de référence que la surface intérieure (18bi, 20i, 22e, 24bi) de contact de dent de la dent de référence (B).

2. Pignon (12 à 32) de bicyclette pour une cassette de pignons (1),
le pignon (12 à 32) présentant un corps de base (12z à 32z) de pignon qui s'étend autour d'un axe de pignon virtuel (R) autour duquel le pignon est apte à tourner sur une bicyclette (71) dans le cadre d'un fonctionnement normal,
l'axe de pignon (R) définissant une direction axiale, des directions radiales orthogonales à lui et une direction circonférentielle autour de lui,
le pignon présentant une pluralité de dents de pignon espacées les unes des autres dans la direction circonférentielle pour un engrènement avec une chaîne à rouleaux (50) de bicyclette,
la chaîne à rouleaux (50) de bicyclette présentant, le long de son développement, des maillons de chaîne à plaquettes intérieures et des maillons de chaîne à plaquettes extérieures (54, 52) qui se succèdent de manière alternée, de manière connue en soi,
le pignon (12 à 32) étant conçu pour être monté sur une bicyclette (71) de telle sorte qu'une face frontale extérieure (12sa à 32sa) du pignon, orientée axialement vers l'extérieur, tourne dans le sens des aiguilles d'une montre lorsque la bicyclette (71) est propulsée vers l'avant par le pignon (12 à 32), en vue axiale de la face frontale extérieure, et qu'une face frontale intérieure (12si à 32si), opposée à la face frontale extérieure et orientée axialement vers l'intérieur tourne dans le sens inverse des aiguilles d'une montre en vue axiale de la face frontale intérieure,
les dents du pignon faisant saillie radialement vers l'extérieur du corps de base (12z à 32z) du pignon,
une pluralité de dents de pignon présentant chacune une surface extérieure de contact de dent, orientée axialement vers l'extérieur et conçue pour venir en engrènement avec une surface intérieure d'une première plaquette de chaîne, et une surface intérieure de contact de dent, orientée axialement vers l'intérieur et conçue pour venir en engrènement avec une surface intérieure d'une deuxième plaquette de chaîne axialement opposée à la première plaquette de chaîne,
dans lequel
i) le pignon (12 à 32) présente, le long d'une partie de sa circonférence dans la zone du corps de base (12z à 32z) du pignon et des dents du pignon, une zone (34) de passage d'une vitesse supérieure avec une formation axiale en renfoncement (36) de passage d'une vitesse supérieure dans sa face frontale extérieure,
la zone (34) de passage d'une vitesse supérieure étant conçue et agencée de manière à permettre un changement d'engrènement de la chaîne à rouleaux (50) de bicyclette du pignon vers un pignon plus petit (10 à 30) situé du côté de la face frontale extérieure, lorsque le pignon tourne dans le sens de rotation d'entraînement (D) autour de l'axe de pignon (R),
au moins une dent de libération (38) étant associée à la formation axiale en renfoncement (36) de passage d'une vitesse supérieure, laquelle est conçue, par sa forme, son emplacement et son orientation, pour être la dernière dent (38) du pignon (12 à 32) en interaction avec la formation axiale en renfoncement (36) de passage d'une vitesse supérieure pendant une opération de passage d'une vitesse supérieure, qui vient en engrènement entre les surfaces intérieures tournées l'une vers l'autre d'une paire de plaquettes d'un maillon de chaîne (52) de la chaîne à rouleaux (50) de bicyclette,
ou/et
ii) le pignon (12 à 32) présente, le long d'une partie de sa circonférence dans la zone du corps de base (12z à 32z) du pignon et des dents du pignon, une zone (40) de passage d'une vitesse inférieure avec une formation axiale en renfoncement (42) de passage d'une vitesse inférieure dans sa face frontale extérieure (12sa à 32sa),
la zone (40) de passage d'une vitesse inférieure étant conçue et agencée de manière à permettre un changement d'engrènement de la chaîne à rouleaux (50) de bicyclette autour du pignon (12 à 32) tournant autour de l'axe de pignon (R) dans le sens de rotation d'entraînement (D), du petit pignon (10 à 30) situé du côté de la face frontale extérieure au pignon (12 à 32),
la formation axiale en renfoncement (42) de passage d'une vitesse inférieure étant associée à au moins une dent d'engrènement (44), laquelle est conçue par sa forme, son emplacement et son orientation pour être, en interaction avec la formation en renfoncement (42) de passage d'une vitesse inférieure, pendant une opération de passage d'une vitesse inférieure, la première dent (44) du pignon (12 à 32) qui vient en engrènement entre les surfaces intérieures tournées l'une vers l'autre d'une paire de plaquettes d'un maillon de chaîne (52) de la chaîne à rouleaux (50) de la bicyclette,
le pignon (12 à 32) présentant une pluralité de dents de pignon (12b à 18b, 22b à 32b, 20b', 20b'', 39, 45) pour plaquettes intérieures qui, en raison de leur dimension axiale, sont chacune conçues pour un engrènement avec un maillon de chaîne (54) à plaquettes intérieures de la chaîne à rouleaux (50) de bicyclette,
**caractérisé en ce que**
le pignon présente au moins une dent de référence (B ; B*), qui est, parmi les dents de pignon (12b à 18b, 22b à 32b, 20b', 20b", 39, 45) pour plaquettes intérieures, ladite au moins une dent de pignon qui présente la plus grande dimension axiale de guidage de chaîne (Kb),
la surface extérieure de référence (18ba, 20d, 22b'a, 24ba) de contact de dent de la dent de référence (B ; B*) définissant une position axiale de référence,
dans le cas où ladite au moins une dent de libération (38) est conçue selon i), une dent de stabilisation (39) côté libération est agencée dans la zone d'extension périphérique de la formation en renfoncement (36) de passage d'une vitesse supérieure,
la distance axiale (RKb) entre la surface intérieure (39i) de contact de dent de la dent de stabilisation (39) côté libération agencée dans la zone périphérique de la formation en renfoncement (36) de passage d'une vitesse supérieure et la surface extérieure (38a) de contact de dents de ladite au moins une dent de libération (38) n'étant pas inférieure à la dimension (Kb) de guidage de chaîne de la dent de référence (B),
ou/et
dans le cas où ladite au moins une dent d'engrènement (44) est conçue selon ii), une dent de stabilisation (45) côté réception est agencée dans la zone d'extension périphérique de la formation en renfoncement (42) de passage d'une vitesse inférieure,
la distance axiale (RKb) entre la surface intérieure (45i) de contact de dent de la dent de stabilisation (45) côté réception agencée dans la zone périphérique de la formation en renfoncement de passage d'une vitesse inférieure et la surface extérieure (44a) de contact de dents de ladite au moins une dent d'engrènement (44) n'étant pas inférieure à la dimension (Kb) de guidage de chaîne de la dent de référence (B).

3. Pignon (12 à 32) de bicyclette selon la revendication 1 ou la revendication 2,
**caractérisé en ce que** la dent de stabilisation (39) côté libération est directement adjacente à ladite au moins une dent de libération (38) dans le sens inverse du sens de rotation d'entraînement (D) et/ou **en ce que** la dent de stabilisation (45) côté réception est directement adjacente à ladite au moins une dent d'engrènement (44) dans le sens de rotation d'entraînement (D).

4. Pignon (12 à 32) de bicyclette selon l'une des revendications précédentes,
**caractérisé en ce qu'**une surface extérieure (39a) de contact de dent de la dent de stabilisation (39) côté libération est décalée vers l'intérieur par rapport à la position de référence axiale et présente une distance axiale plus grande par rapport à la position de référence axiale qu'une surface extérieure (38a) de contact de dent de ladite au moins une dent de libération (38) et/ou **en ce qu'**une surface extérieure (45a) de contact de dent de la dent de stabilisation (45) côté réception est décalée vers l'intérieur par rapport à la position axiale de référence et présente une distance axiale plus grande par rapport à la position axiale de référence qu'une surface extérieure (44a) de contact de dent de ladite au moins une dent d'engrènement (44).

5. Pignon (12 à 32) de bicyclette selon l'une des revendications précédentes,
**caractérisé en ce qu'**une surface intérieure (39i) de contact de dent de la dent de stabilisation (39) côté libération présente une distance axiale plus grande par rapport à la position axiale de référence qu'une surface intérieure (38i) de contact de dent de ladite au moins une dent de libération (38) et/ou **en ce qu'**une surface intérieure (45i) de contact de dent de la dent de stabilisation (45) côté réception présente une distance axiale plus grande par rapport à la position axiale de référence qu'une surface intérieure (44i) de contact de dent de ladite au moins une dent d'engrènement (44).

6. Pignon (12 à 32) de bicyclette selon l'une des revendications précédentes,
**caractérisé en ce que**, dans le cas d'une configuration de ladite au moins une dent de libération (38) selon i), une dent de mobilisation (18b', 20b', 22b', 24b', 32b') côté libération est agencée directement de façon adjacente à ladite au moins une dent de libération (38) dans le sens de rotation d'entraînement (D), la distance axiale entre une surface intérieure (18e, 44i, 32e, 24e) de contact de dent de la dent de mobilisation (18b', 20b', 22b', 24b', 32b') côté libération et la position axiale de référence étant inférieure ou égale à la distance axiale entre la surface intérieure (18bi, 20i, 22e, 24bi) de contact de dent de la dent de référence (B) par rapport à la position axiale de référence et inférieure à la distance axiale entre la surface intérieure (39i) de contact de dent de la dent de stabilisation (39) côté libération et la position axiale de référence, et/ou, dans le cas où au moins une dent d'engrènement (44) est conçue selon ii), au moins une dent de mobilisation (18b", 20b", 22b", 24b", 32b'') côté réception est agencée de façon directement adjacente à la dent d'engrènement (44) dans le sens inverse au sens de rotation d'entraînement (D), la distance axiale entre une surface intérieure (18f, 38i, 22f, 24f) de contact de dent de la dent de mobilisation (18b", 20b'', 22b", 24b") côté réception de la position axiale de référence est inférieure ou égale à la distance axiale entre la surface intérieure (18bi, 20i, 22e, 24bi) de contact de dent de la dent de référence (B) et la position axiale de référence et inférieure à la distance axiale entre la surface intérieure (45i) de contact de dent de la dent de stabilisation (45) côté réception et la position axiale de référence.

7. Pignon (12 à 32) de bicyclette selon la revendication 6,
**caractérisé en ce que** la distance axiale entre la surface intérieure (18e, 44i, 32e, 24e) de contact de dent de la dent de mobilisation (18b', 20b', 22b', 24b', 32b') côté libération et la position axiale de référence est inférieure à la distance axiale entre la surface intérieure (18bi, 20i, 22e, 24bi) de contact de dent de la dent de référence (B) par rapport à la position axiale de référence ou/et **en ce que** la distance axiale de la surface intérieure (18f, 38i, 22f, 24f) de contact de dent de la dent de mobilisation (18b" , 20b", 22b'', 24b'') côté réception de la position axiale de référence est plus petite que la distance axiale entre la surface intérieure (18bi, 20i, 22e, 24bi) de contact de dent de la dent de référence (B) et la position axiale de référence.

8. Pignon (12 à 32) de bicyclette selon l'une des revendications précédentes,
**caractérisé en ce que** les surfaces extérieures (18aa, 18ba, 18b'a, 18b"a, 38a, 44a, 22aa, 22b'a, 22b"a, 24aa, 24ba, 24b'a, 24b"a) de contact de dents sont situées dans la position axiale de référence par une pluralité de dents de pignon (18a, 18b, 18b',18b", 38, 44, 22a, 22b', 22b'', 24a, 24b, 24b', 24b") situées à l'extérieur d'une formation en renfoncement.

9. Pignon (12 à 32) de bicyclette selon l'une des revendications précédentes,
**caractérisé en ce que** la distance axiale entre la surface intérieure (39i) de contact de dent et la surface extérieure (39a) de contact de dent de la dent de stabilisation (39) côté libération est supérieure à la distance axiale entre la surface intérieure (38i) de contact de dent et la surface extérieure (38a) de contact de dent de ladite au moins une dent de libération (38) et/ou **en ce que** la distance axiale entre la surface intérieure (45i) de contact de dent de la surface extérieure (45a) de contact de dent de la dent de stabilisation (45) côté réception est supérieure à la distance axiale de la surface intérieure (44i) de contact de dent de la surface extérieure (44a) de contact de dent de ladite au moins une dent d'engrènement (44).

10. Pignon (12 à 32) de bicyclette selon la revendication 9,
**caractérisé en ce que** la distance axiale entre la surface intérieure (39i) de contact de dent et la surface extérieure (39a) de contact de dent d'une dent de stabilisation (39) côté libération est comprise entre 1,1 fois et 1,3 fois, de préférence entre 1,12 fois et 1,2 fois, de manière particulièrement préférée, entre 1,13 fois et 1,17 fois, les valeurs limites mentionnées étant incluses, la distance axiale entre la surface intérieure (38i) de contact de dent et la surface extérieure (38a) de contact de dent de ladite au moins une dent de libération (38), ou/et **en ce que** la distance axiale entre la surface intérieure (45i) de contact de dent et la surface extérieure (45a) de contact de dent d'une dent de stabilisation (45) côté réception est comprise entre 1,2 fois et 1,6 fois, de préférence entre 1,2 fois et 1,5 fois, de manière particulièrement préférée, entre 1,21 fois et 1,45 fois, les valeurs limites mentionnées étant incluses, la distance axiale entre la surface intérieure (44i) de contact de dent et la surface extérieure (44a) de contact de dent de ladite au moins une dent d'engrènement (44).

11. Pignon (12 à 32) de bicyclette selon l'une des revendications précédentes, en incluant la revendication 6 ou la revendication 7,
**caractérisé en ce que** la distance axiale entre la surface intérieure (39i) de contact de dent et la surface extérieure (39a) de contact de dent de la dent de stabilisation (39) côté libération est entre 0,8 fois et 1,2 fois, de préférence entre 0,85 fois et 1,15 fois, de manière particulièrement préférée, entre 0,88 fois et 1,13 fois, les valeurs limites mentionnées étant incluses, plus grande que la distance axiale de la surface intérieure (18e, 44i, 32e, 24e) de contact de dent de la surface extérieure (18b'a, 20b'a, 22b'a, 24b'a) de contact de dent de la dent de mobilisation (18b', 20b', 22b', 24b', 32b') côté libération, ou/et **en ce que** la distance axiale entre la surface intérieure (45i) de contact de dent et la surface extérieure (45a) de contact de dent de la dent de stabilisation (45) côté réception est entre 1,0 fois et 1,4 fois, de préférence entre 1,0 fois et 1,37 fois, de manière particulièrement préférée entre 1,0 fois et 1,35 fois, les valeurs limites mentionnées étant incluses, plus grande que la distance axiale entre la surface intérieure (18f, 38i, 22f, 24f) de contact de dent et la surface extérieure (18b"a, 20b''a, 22b''a, 24b"a) de dent de la dent de mobilisation (18b", 20b", 22b", 24b'') côté réception.

12. Pignon (12 à 32) de bicyclette selon l'une des revendications précédentes,
**caractérisé en ce que** la distance axiale entre la surface intérieure (38i) de contact de dent et la surface extérieure (38a) de contact de dent de ladite au moins une dent de libération (38) est supérieure à la distance axiale entre la surface intérieure (44i) de contact de dent et la surface extérieure (44a) de contact de dent de la dent d'engrènement (44).

13. Pignon (12 à 32) de bicyclette selon la revendication 12,
**caractérisé en ce que** la distance axiale entre la surface intérieure (38i) de contact de dent et la surface extérieure (38a) de contact de dent de la dent de libération (38) est entre 1,02 fois et 1,15 fois, de préférence entre 1,03 fois et 1,12 fois, de manière particulièrement préférée entre 1,04 fois et 1,11 fois, les valeurs limites mentionnées étant incluses, la distance axiale entre la surface intérieure (44i) de contact de dent et la surface extérieure (44a) de contact de dent de ladite au moins une dent d'engrènement (44).

14. Pignon (12 à 32) de bicyclette selon l'une des revendications précédentes,
**caractérisé en ce que** la distance axiale entre la surface extérieure (39a) de contact de dent de la dent de stabilisation (39) côté libération et la position axiale de référence n'est pas inférieure, mais est de préférence supérieure, à la distance axiale entre la surface extérieure (45a) de contact de dent de la dent de stabilisation (45) côté réception et la position axiale de référence.

15. Pignon (12 à 32) de bicyclette selon l'une des revendications précédentes,
**caractérisé en ce que** la distance axiale entre la surface intérieure (39i) de contact de dent de la dent de stabilisation (39) côté libération et la position axiale de référence ne diffère pas de plus de 10 %, de préférence de plus de 5 %, chaque fois pour ce qui est la plus grande des deux distances, de la distance axiale entre la surface intérieure (45i) de contact de dent de la dent de stabilisation (45) côté réception et la position axiale de référence, et, de façon préférée, ne diffère pas.

16. Pignon (12 à 32) de bicyclette selon l'une des revendications précédentes,
**caractérisé en ce que** le pignon (12 à 18, 22 à 32) présente un nombre pair de dents de pignon, le pignon présentant au moins une dent (18a, 22a, 24a) de pignon dont la dimension axiale entre ses surfaces de contact de dent intérieures et extérieures (18aa, 18ai, 22aa, 22ai, 24aa, 24ai) est supérieure à la largeur intérieure (LWi) des maillons de chaîne à plaques intérieures (54) de la chaîne à rouleaux (50) de bicyclette.

17. Dispositif d'entraînement (82) comprenant un pignon (12 à 32) de bicyclette selon l'une des revendications précédentes et une chaîne à rouleaux (50) de bicyclette, la chaîne à rouleaux (50) de bicyclette présentant, le long de son développement, en alternance des maillons de chaîne (54) à plaquettes intérieures ayant une plus faible largeur intérieure (LWi) entre leurs plaquettes intérieures parallèles et des maillons de chaîne (52) à plaquettes extérieures de plus grande largeur intérieure (LWa) entre leurs plaquettes extérieures parallèles.

18. Dispositif d'entraînement (82) selon la revendication 17,
**caractérisé en ce que**
i. le pignon (12 à 32) de bicyclette présente la dent de stabilisation (39) côté libération, la distance axiale entre la surface intérieure (39i) de contact de dent de la dent de stabilisation (39) côté libération et la surface extérieure (38a) de contact de dent de ladite au moins une dent de libération (38) n'étant pas inférieure, mais de préférence supérieure, à la largeur intérieure (LWi) d'un maillon de chaîne à plaquettes intérieures de la chaîne à rouleaux (50) de bicyclette coopérant avec le pignon,
ou/et **en ce que**
ii. le pignon (12 à 32) de bicyclette présente la dent de stabilisation côté réception (45), la distance axiale entre la surface intérieure (45i) de contact de dent de la dent de stabilisation (45) côté réception et la surface de contact extérieure (44a) de ladite au moins une dent d'engrènement (44) n'étant pas inférieure, mais étant de préférence supérieure, à la largeur intérieure (LWi) d'un maillon de chaine à plaquettes intérieures de la chaîne à rouleaux (50) de bicyclette coopérant avec le pignon.
